(19) 

Europäisches Patentamt
European Patent Office
Office européen des brevets

(11) **EP 4 369 631 A1**

(12) **EUROPEAN PATENT APPLICATION**
published in accordance with Art. 153(4) EPC

(43) Date of publication:
**15.05.2024 Bulletin 2024/20**

(21) Application number: **22852086.2**

(22) Date of filing: **29.07.2022**

(51) International Patent Classification (IPC):
***H04B 7/185*** (2006.01)

(52) Cooperative Patent Classification (CPC):
**H04B 7/185; H04W 12/03; H04W 12/041;**
**H04W 12/0431**

(86) International application number:
**PCT/CN2022/109226**

(87) International publication number:
**WO 2023/011373 (09.02.2023 Gazette 2023/06)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **31.07.2021 CN 202110878362**
**30.09.2021 CN 202111166937**

(71) Applicant: **Huawei Technologies Co., Ltd.**
**Longgang**
**Shenzhen, Guangdong 518129 (CN)**

(72) Inventors:
• **YAO, Chuting**
 **Shenzhen, Guangdong 518129 (CN)**
• **XU, Haibo**
 **Shenzhen, Guangdong 518129 (CN)**
• **QIAN, Feng**
 **Shenzhen, Guangdong 518129 (CN)**
• **LI, Zhenzhou**
 **Shenzhen, Guangdong 518129 (CN)**
• **YU, Xiaoyong**
 **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **TRANSMISSION METHOD AND SYSTEM, AND RELATED DEVICE**

(57)    This application discloses a transmission method, a system, and a related apparatus. A sending device may generate an authentication code A based on sending time information and original data. The sending device may send, to a receiving device in a first transmission system, a data packet including the authentication code A. After receiving the data packet, the receiving device may generate an authentication code B based on receiving time information and the data packet, and the receiving device may determine a receiving status of the data packet based on the authentication code B.

FIG. 8A

**(Cont. next page)**

Receiving device

Data packet

| Packet header | Encrypted data |

Encrypted data    Specified key

Specified decryption algorithm

Concatenated data

| Authentication code A | Original data |

Receiving time of the data packet

| Original data | Information B |
Plaintext

Specified key

Specified authentication algorithm

CONT. FROM FIG. 8A

Authentication code A

Authentication code B

TO FIG. 8C          TO FIG. 8C          TO FIG. 8C

FIG. 8B

CONT. FROM FIG. 8B          CONT. FROM FIG. 8B          CONT. FROM FIG. 8B

Whether the authentication code A is the same as the authentication code B?

Same

Different

Generate a success application receipt

Information B

Subtract a preset minimum time granularity

| Original data | Information C |
Plaintext

Specified key

Specified authentication algorithm

Authentication code A

Authentication code C

Whether the authentication code A is the same as the authentication code C?

Same

Different

Generate a failure application receipt

Generate a success application receipt

FIG. 8C

**Description**

This application claims priority to Chinese Patent Application No. 202110878362.0, filed with the China National Intellectual Property Administration on July 31, 2021 and entitled "SECURE TRANSMISSION SOLUTION", and to Chinese Patent Application No. 202111166937.2, filed with the China National Intellectual Property Administration on September 30, 2021 and entitled "TRANSMISSION METHOD, SYSTEM, AND RELATED APPARATUS", which are incorporated herein by reference in their entireties.

**TECHNICAL FIELD**

This application relates to the field of satellite communication, and in particular, to a transmission method, a system, and a related apparatus.

**BACKGROUND**

A satellite communication service may be used for positioning and communication in areas where mobile communication is unavailable or cannot be implemented, or where a communication system is damaged, such as oceans, deserts, grasslands, or uninhabited areas. At present, a satellite communication system does not provide civil terminals with a secure transmission mechanism for use. To securely transmit data between a terminal and a satellite, a communication protocol needs to be designed specific for civil service and device features and features of the satellite communication system.

Although there is a mature secure transmission mechanism in a cellular network, steps of the secure transmission mechanism in the cellular network are complex, and a large quantity of air interface resources are required for signaling exchange. The satellite communication system cannot support the secure transmission mechanism in the cellular network due to a long delay and limited air interface resources.

**SUMMARY**

This application discloses a transmission method, a system, and a related apparatus. A sending device may generate an authentication code A based on information A and original data. The sending device may send, to a receiving device in a first transmission system, a data packet including the authentication code A. After receiving the data packet, the receiving device may generate an authentication code B based on information B and the data packet. The receiving device may determine a receiving status of the data packet based on the authentication code B. The information A is sending time information and the information B is receiving time information, or the information A is context information A and the information B is context information B. In this way, after the receiving device receives a repeatedly sent data packet, the receiving device cannot parse the data packet, so that problems of repeated processing and charging do not occur.

According to a first aspect, this application provides a transmission method, including:

a first device generates a first authentication code based on first information, a first key, and first data, where the first information is sending time information or first context information; the first device generates a first data packet based on the first authentication code and the first data; and the first device sends the first data packet to a second device in a first transmission system.

In a possible implementation, before the first device generates the first authentication code based on the first information, the first key, and the first data, the method further includes: the first device obtains the first key, where the first key is obtained by the first device through negotiation with the second device in a second transmission system, and the first transmission system is different from the second transmission system.

In a possible implementation, before the first device generates the first authentication code based on the first information, the first key, and the first data, the method further includes: the first device establishes a communication connection to a fourth device; and the first device obtains the first key through the fourth device.

In a possible implementation, the first key is a key preset by the first device.

In a possible implementation, the second transmission system is a cellular transmission system or a wireless local area network WLAN transmission system, and the first transmission system is a satellite transmission system.

In a possible implementation, the first device obtains the first key by negotiating with the second device by using a generic bootstrapping architecture GBA procedure in the second transmission system.

In a possible implementation, that the first device sends the first data packet to a second device in a first transmission system specifically includes:

after processing the first data packet into at least one second data packet at a message data convergence protocol MDCP layer of the first device and/or a satellite link control SLC layer of the first device, sending the at least one second data packet to the second device through a third device.

In a possible implementation, the sending time information indicates time at which the first device sends the first data packet.

In a possible implementation, the time at which the first device sends the first data packet is time at which an application AP layer of the first device sends the first data packet to the message data convergence protocol MDCP layer, or is time estimated by the first device for sending the first data packet to the second device.

In a possible implementation, the first device obtains the sending time information through positioning timing.

In a possible implementation, the first data includes packaged first data and the first authentication code.

In a possible implementation, a format of sending time of a data packet is universal time coordinated UTC or Greenwich mean time GMT.

In a possible implementation, a specified time granularity of the sending time of the data packet includes any one of a year, a month, a day, an hour, a minute, or a second. The first device and the second device update the specified time granularity through negotiation in the second transmission system.

In a possible implementation, the first device obtains the sending time information through the fourth device.

In a possible implementation, the first device obtains the first information based on the sending time information and a specified time granularity in a preset coding manner.

In a possible implementation, after the first device sends the first data packet, the method further includes: the first device receives a first application layer receipt sent by the second device, where the first application layer receipt indicates a status of receiving the first data packet by the second device.

In a possible implementation, the first information is the first context information, and the first context information indicates information about a quantity of first data packets successfully sent by the first device, information about a quantity of application receipts successfully received by the first device, or a count value or a sequence number of the first data packet sent by the first device.

In a possible implementation, the first data packet further includes first indication information, and the first indication information indicates a first message ID of the first data packet, or the first indication information indicates a first count value or a first sequence number of the first data packet.

In a possible implementation, an AP layer of the first device associates the first message ID, the first count value, or the first sequence number with the first data packet, and the first device adds a preset value to a value of the first message ID, the first count value, or the first sequence number.

In a possible implementation, the first data packet further includes third indication information, and the third indication information indicates that the first data packet is a newly transmitted data packet or a retransmitted data packet.

In a possible implementation, when a value of the third indication information is a first value, the third indication information indicates that the first data packet is a newly transmitted data packet; or when a value of the third indication information is a second value, the third indication information indicates that the first data packet is a retransmitted data packet.

In a possible implementation, before the first device generates the first authentication code based on the first information, the first key, and the first data, the method further includes:

the first device obtains an initial value of the first information in the second transmission system; or
the first device obtains an initial value of the first information through the fourth device.

In a possible implementation, after the first device sends the first data packet, the method further includes: the first device receives a first application layer receipt sent by the second device, where the first application layer receipt indicates a status of receiving the first data packet by the second device.

In a possible implementation, after the first device receives the first application layer receipt sent by the second device, the method further includes: the first device adds a preset value to a value of the first information, where an adjusted value of the first information is different from the value of the first information.

In a possible implementation, after the first device receives the first application layer receipt sent by the second device, the method further includes: when the first application receipt indicates that the second device fails to receive the first data packet, the first device adjusts the value of the first information to the initial value.

In a possible implementation, after the first device adjusts the value of the first information to the initial value, the method further includes: the first device sends third information to the second device, where a value of the third information is the same as the adjusted value of the first information.

In a possible implementation, after the first device receives the first application layer receipt sent by the second device, the method further includes: when the first application receipt indicates that the first data packet is successfully sent, the first device displays success prompt information, where the success prompt information prompts a user that a message corresponding to the first data packet is successfully sent.

In a possible implementation, after the first device receives the first application layer receipt sent by the second device, the method further includes: when the first application receipt indicates that the first data packet fails to be sent, the first device displays failure prompt information, where the failure prompt information prompts a user that a message corresponding to the first data packet fails to be sent.

In a possible implementation, after the first device receives the first application layer receipt sent by the second device, the method further includes: when the first application receipt includes second message ID information, the first device displays success prompt information, where the success prompt information prompts a user that a data packet indicated by the second message ID information is successfully sent.

In a possible implementation, that the application layer of the first device generates a first data packet based on the first authentication code and the first data specifically includes: the application layer of the first device encrypts the first authentication code and the first data based on the first key, to generate the first data packet, where the first data packet includes an encrypted first authentication code and encrypted first data.

In a possible implementation, the application layer of the first device encrypts the first data based on the first key, to generate the first data packet, where the first data packet includes encrypted first data.

In a possible implementation, after the first device sends the first data packet to the second device in the first transmission system, the method further includes: the first device receives second application receipt information in the second transmission system, where the second application receipt information indicates a status of sending the first data packet by the first device in the first transmission system.

In a possible implementation, after the first device sends the first data packet to the second device in the first transmission system, the method further includes: the first device displays sending prompt information, where the sending prompt information prompts the user that the first device has sent the first data packet to the second device.

According to a second aspect, this application provides a transmission method, including: a second device receives, in a first transmission system, a first data packet sent by a first device; the second device generates a second authentication code based on second information, a first key, and the first data packet, where the second information is receiving time information or second context information; and the second device determines a receiving status of the first data packet based on the second authentication code.

In a possible implementation, before the second device generates the second authentication code based on the second information, the first key, and the first data packet, the method further includes: the second device obtains the first key, where the first key is obtained by the second device through negotiation with the first device in a second transmission system, and the second transmission system is different from the first transmission system.

In a possible implementation, the second transmission system is a cellular transmission system or a WLAN transmission system, and the first transmission system is a satellite transmission system.

In a possible implementation, the second device obtains the first key by negotiating with the first device by using a generic bootstrapping architecture GBA procedure in the second transmission system.

In a possible implementation, the first key is a key preset by the first device.

In a possible implementation, that a second device receives a first data packet in a first transmission system specifically includes: the second device receives, in the first transmission system, the first data packet sent by a third device.

In a possible implementation, the second device determines a first authentication code based on the first data packet.

In a possible implementation, the receiving time information indicates receiving time of the first data packet.

In a possible implementation, before the second device generates the second authentication code based on the second information, the first key, and the first data packet, the method further includes: the second device receives the second information sent by the third device.

In a possible implementation, before the second device generates the second authentication code based on the second information, the first key, and the first data packet, the method further includes: the second device receives third information sent by the third device; and the second device generates the second information based on the third information.

In a possible implementation, the second context information indicates information about a quantity of first data packets successfully received by the second device, or a count value or a sequence value of the first data packet received by the second device.

In a possible implementation, the first data packet includes first indication information, and the first indication information indicates a first message ID/a first sequence number/a first count value of the first data packet.

In a possible implementation, the first data packet includes third indication information, and the third indication information indicates that the first data packet is a newly transmitted data packet/a retransmitted data packet.

In a possible implementation, before the second device generates the second authentication code based on the second information, the first key, and the first data packet, the method further includes: the second device obtains an initial value of the second information in the second transmission system.

In a possible implementation, that the second device determines a receiving status of the first data packet based on the second authentication code specifically includes: the second device determines the receiving status of the first data packet based on whether the first authentication code is the same as the second authentication code.

In a possible implementation, that the second device compares the first authentication code with the second authentication code specifically includes: when the first authentication code is the same as the second authentication code, the second device determines that the first data packet is successfully received;

when the first authentication code is different from the second authentication code, the second device determines that the first data packet fails to be received; or

when the first authentication code is different from the second authentication code, the second device updates the second information and generates an updated second authentication code based on updated second information, and the second device compares the updated second authentication code with the first authentication code to determine the receiving status of the first data packet.

In a possible implementation, when the updated second authentication code is the same as the first authentication code, the second device determines that the first data packet is successfully received, and the second device adds a preset value to a value of the updated second information.

In a possible implementation, when the updated second authentication code is the same as the first authentication code, the second device generates and sends, to the first device, a first application receipt including second indication information, where the second indication information indicates a message ID of a latest successfully received data packet.

In a possible implementation, when the updated second authentication code is the same as the first authentication code, the second device generates and sends, to the first device, a first application receipt indicating that the first data packet is successfully sent.

In a possible implementation, when the updated second authentication code is different from the first authentication code, the second device generates and sends, to the first device, a first application receipt indicating that the first data packet fails to be received.

In a possible implementation, that the second device compares the first authentication code with the second authentication code specifically includes: when the first authentication code is the same as the second authentication code, the second device determines that the first data packet is successfully received;

when the first authentication code is different from the second authentication code, the second device determines that the first data packet fails to be received; or

when the first authentication code is different from the second authentication code, the second device updates the second information and generates a temporary authentication code based on updated second information, and the second device compares the temporary authentication code with the first authentication code to determine the receiving status of the first data packet.

When the temporary authentication code is the same as the first authentication code, the second device generates and sends, to the first device, a first application receipt including second indication information, where the second indication information indicates a message ID of a latest successfully received data packet; or when the temporary authentication code is different from the first authentication code, the second device generates and sends, to the first device, a first application receipt indicating that the first data packet fails to be received.

In a possible implementation, after the second device determines that the first data packet is successfully received, the method further includes:

recording information about time at which the first data packet is successfully received;
recording a message ID corresponding to the first data packet; and/or
the second device adds a preset value to a value of the second information, where an adjusted value of the second information is different from the value of the second information.

In a possible implementation, that the second device compares a third authentication code with the first authentication code specifically includes: when the third authentication code is the same as the first authentication code, the second device determines that the first data packet is successfully received, and generates a first application layer receipt indicating that the first data packet is successfully received; or when the third authentication code is different from the first authentication code, the second device determines that the first data packet fails to be received, and generates a first application layer receipt indicating that the first data packet fails to be received.

In a possible implementation, that the second device compares a third authentication code with the first authentication code specifically includes: when the third authentication code is the same as the first authentication code, the second device determines that the first data packet fails to be received, and generates a first application layer receipt indicating that the first data packet fails to be received, where the first application layer receipt includes a message ID corresponding to a successfully received data packet; or when the third authentication code is different from the first authentication code, the second device determines that the first data packet fails to be received, and generates a first application layer receipt indicating that the first data packet fails to be received.

In a possible implementation, after the second device determines the receiving status of the first data packet based on the second authentication code, the method further includes: when the second device determines, based on the second authentication code, that the first data packet is successfully received, the second device sends a first application receipt to the first device, where the first application receipt indicates that the first data packet is successfully received.

In a possible implementation, after the second device determines the receiving status of the first data packet based on the second authentication code, the method further includes: when the second device determines, based on the second authentication code, that the first data packet fails to be received, the second device sends a first application receipt to the first device, where the first application receipt further includes a second message ID, and the second message ID indicates a message ID corresponding to a latest successfully transmitted data packet.

In a possible implementation, after the second device determines the receiving status of the first data packet based on the second authentication code, the method further includes: when the second device determines, based on the second authentication code, that the first data packet fails to be received, the second device sends a first application receipt to the first device, where the first application receipt indicates that the first data packet fails to be received.

In a possible implementation, when the second device determines, based on the second authentication code, that the first data packet is successfully received, the method further includes: the second device adds a preset value to a value of the second information, where an adjusted value of the second information is different from the value of the second information.

In a possible implementation, when the second device determines, based on the second authentication code, that the first data packet fails to be received, the method further includes: the second device adjusts a value of the second information to a preset value.

In a possible implementation, when the second device determines, based on the second authentication code, that the first data packet fails to be received, the method further includes: the second device receives the third information sent by the first device; and the second device adjusts a value of the second information to a value of the third information.

In a possible implementation, after the second device determines the receiving status of the first data packet based on the second authentication code, the method further includes: the second device sends second application receipt information to the first device in the second transmission system, where the second application receipt information indicates a status of receiving the first data packet by the second device in the first transmission system.

According to a third aspect, this application provides a transmission method, including:

a third device receives at least one second data packet sent by a first device;
the third device generates a first data packet based on the at least one second data packet; and
the third device sends the first data packet to a second device.

In a possible implementation, the third device sends second information or fourth information to the second device, where the second information or the fourth information is receiving time information.

In a possible implementation, the receiving time information indicates corresponding time at which the third device receives the 1st data packet in the at least one second data packet.

According to a fourth aspect, this application provides a transmission method, including:

a first device receives a third data packet in a first transmission system; and
the first device generates a third authentication code based on fifth information and the third data packet, where the fifth information is sending time information or fifth context information; and the first device determines a receiving status of the third data packet based on the third authentication code.

In a possible implementation, that the first device generates a third authentication code based on fifth information and the third data packet further includes: the first device further generates the third authentication code based on the fifth information, the third data packet, and a first key.

In a possible implementation, before the first device generates the third authentication code based on the fifth information, the first key, and the third data packet, the method further includes: the first device obtains the first key, where the first key is obtained by the first device through negotiation with a second device in a second transmission system, and the first transmission system is different from the second transmission system.

In a possible implementation, before the first device generates the first authentication code based on the first information, the first key, and the first data, the method further includes: the first device establishes a communication connection to a fourth device; and the first device obtains the first key through the fourth device.

In a possible implementation, the first key is a key preset by the first device.

In a possible implementation, the first transmission system is a satellite transmission system, and the second transmission system is a non-satellite transmission system.

In a possible implementation, the second transmission system is a cellular transmission system or a wireless local area network WLAN transmission system.

In a possible implementation, the first device obtains the first key by negotiating with the second device by using a generic bootstrapping architecture (Generic Bootstrapping Architecture, GBA) procedure in the second transmission system.

In a possible implementation, the first device determines a fourth authentication code based on the third data packet.

In a possible implementation, that a first device receives a third data packet in a first transmission system specifically includes: the first device receives at least one fourth data packet sent by a third device; and a satellite link control SLC layer of the first device and/or a message data convergence protocol MDCP layer of the first device process/processes the at least one fourth data packet into the third data packet.

In a possible implementation, the sixth information is the receiving time information.

In a possible implementation, the receiving time information indicates time at which the first device receives the third data packet.

In a possible implementation, the time at which the first device receives the third data packet is time at which the first device receives the $1^{st}$ fourth data packet in the at least one fourth data packet.

In a possible implementation, the first device obtains the fifth information through positioning timing.

In a possible implementation, the first device obtains the fifth information based on the receiving time information and a specified time granularity in a preset coding manner.

In a possible implementation, the fifth information is the fifth context information, and the fifth context information indicates information about a quantity of third data packets successfully received by the first device, or a count value or a sequence number of the third data packet received by the first device.

In a possible implementation, the third data packet includes sixth indication information, and the sixth indication information indicates a fourth message ID/a fourth sequence number/a fourth count value of the third data packet.

In a possible implementation, the third data packet includes fourth indication information, and the fourth indication information indicates that the third data packet is a newly transmitted data packet or a retransmitted data packet.

In a possible implementation, before the first device generates the third authentication code based on the fifth information, the first key, and the third data packet, the method further includes: the first device obtains an initial value of the fifth information in the second transmission system.

In a possible implementation, that the first device determines a receiving status of the third data packet based on the third authentication code specifically includes: the first device determines the receiving status of the third data packet based on whether the third authentication code is the same as the fourth authentication code.

In a possible implementation, that the first device determines the receiving status of the third data packet based on whether the third authentication code is the same as the fourth authentication code specifically includes:

when the third authentication code is the same as the fourth authentication code, the first device determines that the third data packet is successfully received;
when the third authentication code is different from the fourth authentication code, the first device determines that the third data packet fails to be received; or
when the third authentication code is different from the fourth authentication code, the first device generates temporary information based on the fifth information and generates a temporary authentication code based on the temporary information, and the first device compares the third authentication code with the temporary authentication code to determine the receiving status of the third data packet.

When the fourth authentication code is the same as the temporary authentication code, the first device generates and sends, to the second device, a third application receipt including fifth indication information; or when the fourth authentication code is different from the temporary authentication code, the first device generates and sends, to the second device, a failure application receipt.

In a possible implementation, when the third authentication code is different from the fourth authentication code, the first device updates a value of the fifth information and generates an updated third authentication code based on updated fifth information, and the first device compares the updated third authentication code with the fourth authentication code to determine the receiving status of the third data packet.

In a possible implementation, when the updated third authentication code is the same as the fourth authentication code, the first device generates and sends, to the second device, a third application receipt including fifth indication information; or when the updated third authentication code is different from the fourth authentication code, the first device generates and sends, to the second device, a third application receipt indicating that the third data packet fails to be sent.

In a possible implementation, when the updated third authentication code is the same as the fourth authentication code, the first device generates and sends, to the second device, a third application receipt indicating that the third data packet is successfully sent.

In a possible implementation, when the updated third authentication code is the same as the fourth authentication code, the first device adds a preset value to a value of the updated fifth information.

In a possible implementation, an indication application receipt includes the fifth indication information, and a value of the fifth indication information is the same as a value of sixth indication information of a latest successfully received data packet.

In a possible implementation, after the first device determines that the third data packet is successfully received, the method further includes:

recording information about time at which the third data packet is successfully received;
recording a message ID corresponding to the third data packet; and/or
adding a preset value to a value of the fifth information, where an adjusted value of the fifth information is different from the value of the fifth information.

In a possible implementation, after the first device determines the receiving status of the third data packet based on the third authentication code, the method further includes: the first device sends a third application receipt to the second device, where the third application receipt indicates the receiving status of the third data packet.

In a possible implementation, after the first device determines the receiving status of the first data packet based on the third authentication code, the method further includes: when the first device determines that the receiving status of the third data packet is correct receiving, the first device adds a preset value to a value of the fifth information, where an adjusted value of the fifth information is different from the value of the fifth information.

In a possible implementation, after the first device determines the receiving status of the first data packet based on the third authentication code, the method further includes: when the first device determines that the receiving status of the third data packet is failed receiving, the first device updates a value of the fifth information to a preset value. Optionally, the preset value is the initial value.

In a possible implementation, the method further includes: the first device receives seventh information sent by the second device; and the first device updates the value of the fifth information to a value of the seventh information based on the seventh information.

In a possible implementation, after the first device determines that the third data packet is successfully received, the method further includes: the first device displays third data.

In a possible implementation, after the first device determines the receiving status of the third data packet based on the third authentication code, the method further includes:
the first device sends third application receipt information to the second device in the second transmission system, where the third application receipt information indicates a status of receiving the third data packet by the second device in the first transmission system.

According to a fifth aspect, this application provides a transmission method, including: a second device generates a fourth authentication code based on sixth information and first data, where the sixth information is sending time information or sixth context information; an application AP layer of the second device generates a third data packet based on the fourth authentication code and the first data; and the second device sends the third data packet to a first device in a first transmission system.

In a possible implementation, that a second device generates a fourth authentication code based on sixth information and first data further includes: the second device generates the fourth authentication code based on the sixth information, a first key, and the first data.

In a possible implementation, before the second device generates the fourth authentication code based on the sixth information, the first key, and the first data, the method further includes:
the second device obtains the first key, where the first key is obtained by the first device through negotiation with the second device in a second transmission system, and the first transmission system is different from the second transmission system.

In a possible implementation, the first key is a preset key.

In a possible implementation, the second device obtains the first key by negotiating with the first device by using a generic bootstrapping architecture (Generic Bootstrapping Architecture, GBA) procedure in the second transmission system.

In a possible implementation, that the second device sends the third data packet to a first device in a first transmission system specifically includes: the second device sends the third data packet to the first device through a third device.

In a possible implementation, the sixth information indicates the sending time information.

In a possible implementation, the sending time information indicates time at which the fourth authentication code is generated or time at which the second device sends the third data packet.

In a possible implementation, the time at which the second device sends the third data packet is time at which the second device delivers the third data packet to the third device, or is time estimated by the second device for sending the third data packet to the first device.

In a possible implementation, after obtaining the third data packet through packaging, the second device adds the fourth authentication code to the third data packet.

In a possible implementation, a format of the generation time of the fourth authentication code is universal time coordinated UTC or Greenwich mean time GMT.

In a possible implementation, a minimum time granularity of the generation time of the fourth authentication code includes any one of a year, a month, a day, an hour, a minute, or a second.

In a possible implementation, the second device obtains the sixth information based on the sending time information and a specified time granularity in a specified encoding manner.

In a possible implementation, before the second device generates the fourth authentication code based on the sixth information, the first key, and the first data, the method further includes: the second device obtains the sixth information through the third device.

In a possible implementation, before the second device generates the fourth authentication code based on the sixth information, the first key, and the first data, the method further includes: the second device receives eighth information sent by the third device; and the second device generates the sixth information based on the eighth information.

Optionally, the second device receives the sixth information sent by the third device.

In a possible implementation, the sixth information is the sixth context information, and the sixth context information indicates information about a quantity of third data packets successfully sent by the second device, information about a quantity of application receipts successfully received by the second device, or a count value or a sequence value of the third data packet sent by the second device.

In a possible implementation, the method further includes: the second device obtains an initial value of the sixth information in the second transmission system; or the second device resets the sixth information to a preset value in the second transmission system.

In a possible implementation, the third data packet further includes sixth indication information, and the sixth indication information indicates a fourth message ID of the third data packet, or the sixth indication information indicates a fourth count value or a fourth sequence number of the third data packet.

In a possible implementation, when the sixth indication information indicates the fourth count value or the fourth sequence number of the third data packet, the method further includes: the application layer of the second device associates the fourth count value or the fourth sequence number with the third data packet, and the second device adds a preset value to a value of the fourth count value or the fourth sequence number.

In a possible implementation, the third data packet further includes fourth indication information, and the fourth indication information indicates new transmission/retransmission information of the third data packet.

In a possible implementation, that an application AP layer of the second device generates a third data packet based on the fourth authentication code and the first data specifically includes: the application layer of the second device encrypts the fourth authentication code and the first data based on the first key, to generate the third data packet, where the third data packet includes an encrypted fourth authentication code and encrypted first data.

In a possible implementation, after the second device sends the third data packet, the method further includes: the second device receives a third application layer receipt sent by the first device, where the third application layer receipt indicates a status of receiving the third data packet by the first device.

In a possible implementation, after the second device receives the third application layer receipt sent by the first device, the method further includes: the second device adds a preset value to a value of the sixth information, where an adjusted value of the sixth information is different from the value of the sixth information.

In a possible implementation, the second device receives fourth application receipt information in the second transmission system, where the fourth application receipt information indicates a status of sending the third data packet by the second device in the first transmission system; and
the second device updates a sending status based on the second application receipt information.

In a possible implementation, the second device deletes the successfully sent third data packet.

According to a sixth aspect, this application provides a transmission method, including:

a third device receives a third data packet sent by a second device;

the third device generates at least one fourth data packet based on the third data packet; and

the third device sends the at least one fourth data packet to a first device.

In a possible implementation, before the third device receives the third data packet sent by the second device, the method further includes: the third device sends second information or fourth information to the second device, where the second information or the fourth information is time information.

According to a seventh aspect, this application provides a transmission method, including:

a first device generates a first authentication code based on first information, a first key, and first data, where the first information is sending time information or first context information; the first device generates a first data packet based on the first authentication code and the first data; and the first device sends the first data packet to a second device in a first transmission system.

In a possible implementation, before the first device generates the first authentication code based on the first information, the first key, and the first data, the method further includes: the first device obtains the first key, where the first key is obtained by the first device through negotiation with the second device in a second transmission system, and the first transmission system is different from the second transmission system.

In a possible implementation, before the first device generates the first authentication code based on the first information, the first key, and the first data, the method further includes: the first device establishes a communication connection to a fourth device; and the first device obtains the first key through the fourth device.

In a possible implementation, the first key is a key preset by the first device.

In a possible implementation, the second transmission system is a cellular transmission system or a wireless local area network WLAN transmission system, and the first transmission system is a satellite transmission system.

In a possible implementation, the first device obtains the first key by negotiating with the second device by using a generic bootstrapping architecture GBA procedure in the second transmission system.

In a possible implementation, the sending time information indicates time at which the first authentication code is generated, or indicate time at which the first device sends the first data packet.

In a possible implementation, the time at which the first device sends the first data packet is time at which an application AP layer of the first device sends the first data packet to a message data convergence protocol MDCP layer, or is time estimated by the first device for sending the first data packet to the second device.

In a possible implementation, the first device obtains the sending time information through positioning timing.

In a possible implementation, the first data includes packaged first data and the first authentication code.

In a possible implementation, a format of sending time of a data packet is universal time coordinated UTC or Greenwich mean time GMT.

In a possible implementation, a specified time granularity of the sending time of the data packet includes any one of a year, a month, a day, an hour, a minute, or a second. The first device and the second device update the specified time granularity through negotiation in the second transmission system.

In a possible implementation, the first device obtains the sending time information through the fourth device.

In a possible implementation, the first device obtains the first information based on the sending time information and a specified time granularity in a preset coding manner.

In a possible implementation, after the first device sends the first data packet, the method further includes:

the first device receives a first application layer receipt sent by the second device, where the first application layer receipt indicates a status of receiving the first data packet by the second device.

In a possible implementation, the first information is the first context information, and the first context information indicates information about a quantity of first data packets successfully sent by the first device, information about a quantity of application receipts successfully received by the first device, or a count value or a sequence number of the first data packet sent by the first device.

In a possible implementation, the first data packet further includes first indication information, and the first indication information indicates a first message ID of the first data packet, or the first indication information indicates a first count value or a first sequence number of the first data packet.

In a possible implementation, an AP layer of the first device associates the first message ID, the first count value, or the first sequence number with the first data packet, and the first device adds a preset value to a value of the first message ID, the first count value, or the first sequence number.

In a possible implementation, the first data packet further includes third indication information, and the third indication information indicates that the first data packet is a newly transmitted data packet or a retransmitted data packet.

In a possible implementation, when a value of the third indication information is a first value, the third indication information indicates that the first data packet is a newly transmitted data packet; or when a value of the third indication information is a second value, the third indication information indicates that the first data packet is a retransmitted data packet.

In a possible implementation, before the first device generates the first authentication code based on the first information, the first key, and the first data, the method further includes:

> the first device obtains an initial value of the first information in the second transmission system; or
> the first device obtains an initial value of the first information through the fourth device.

In a possible implementation, after the first device sends the first data packet, the method further includes: the first device receives a first application layer receipt sent by the second device, where the first application layer receipt indicates a status of receiving the first data packet by the second device.

In a possible implementation, after the first device receives the first application layer receipt sent by the second device, the method further includes: the first device adds a preset value to a value of the first information, where an adjusted value of the first information is different from the value of the first information.

In a possible implementation, after the first device receives the first application layer receipt sent by the second device, the method further includes: when the first application receipt indicates that the second device fails to receive the first data packet, the first device adjusts the value of the first information to the initial value.

In a possible implementation, after the first device adjusts the value of the first information to the initial value, the method further includes: the first device sends third information to the second device, where a value of the third information is the same as the adjusted value of the first information.

In a possible implementation, after the first device receives the first application layer receipt sent by the second device, the method further includes: when the first application receipt indicates that the first data packet is successfully sent, the first device displays success prompt information, where the success prompt information prompts a user that a message corresponding to the first data packet is successfully sent.

In a possible implementation, after the first device receives the first application layer receipt sent by the second device, the method further includes: when the first application receipt indicates that the first data packet fails to be sent, the first device displays failure prompt information, where the failure prompt information prompts a user that a message corresponding to the first data packet fails to be sent.

In a possible implementation, after the first device receives the first application layer receipt sent by the second device, the method further includes: when the first application receipt includes second message ID information, the first device displays success prompt information, where the success prompt information prompts a user that a data packet indicated by the second message ID information is successfully sent.

In a possible implementation, that the application layer of the first device generates a first data packet based on the first authentication code and the first data specifically includes: the application layer of the first device encrypts the first authentication code and the first data based on the first key, to generate the first data packet, where the first data packet includes an encrypted first authentication code and encrypted first data.

In a possible implementation, the application layer of the first device encrypts the first data based on the first key, to generate the first data packet, where the first data packet includes encrypted first data.

In a possible implementation, after the first device sends the first data packet to the second device in the first transmission system, the method further includes: the first device receives second application receipt information in the second transmission system, where the second application receipt information indicates a status of sending the first data packet by the first device in the first transmission system.

In a possible implementation, after the first device sends the first data packet to the second device in the first transmission system, the method further includes: the first device displays sending prompt information, where the sending prompt information prompts the user that the first device has sent the first data packet to the second device.

According to an eighth aspect, this application provides a transmission method, including: a second device receives, in a first transmission system, a first data packet sent by a first device; the second device generates a second authentication code based on second information, a first key, and the first data packet, where the second information is receiving time information or second context information; and the second device determines a receiving status of the first data packet based on the second authentication code.

In a possible implementation, before the second device generates the second authentication code based on the second information, the first key, and the first data packet, the method further includes: the second device obtains the first key, where the first key is obtained by the second device through negotiation with the first device in a second transmission system, and the second transmission system is different from the first transmission system.

In a possible implementation, the second transmission system is a cellular transmission system or a WLAN transmission system, and the first transmission system is a satellite transmission system.

In a possible implementation, the second device obtains the first key by negotiating with the first device by using a generic bootstrapping architecture GBA procedure in the second transmission system.

In a possible implementation, the first key is a key preset by the first device.

In a possible implementation, that a second device receives a first data packet in a first transmission system specifically includes: a satellite link control SLC layer of the second device receives at least one second data packet sent by the first device; and a message data convergence protocol MDCP layer of the second device and/or the satellite link control layer SLC layer of the first device obtain/obtains the first data packet based on the at least one second data packet.

In a possible implementation, the second device determines a first authentication code based on the first data packet.

In a possible implementation, the receiving time information indicates receiving time of the first data packet.

In a possible implementation, before the second device generates the second authentication code based on the second information, the first key, and the first data packet, the method further includes: the second device obtains the receiving time of the first data packet at the MDCP layer/the SLC layer; and the second device generates the second information based on the receiving time of the first data packet at the MDCP layer/the SLC layer.

In a possible implementation, before the second device generates the second authentication code based on the second information, the first key, and the first data packet, the method further includes: the second device obtains the receiving time of the first data packet at the MDCP layer/the SLC layer; the second device determines that the receiving time of the first data packet is eighth information, and uploads the eighth information to an AP layer; and the second device generates the second information based on the eighth information at the AP layer.

In a possible implementation, the second context information indicates information about a quantity of first data packets successfully received by the second device, or a count value or a sequence value of the first data packet received by the second device.

In a possible implementation, the first data packet includes first indication information, and the first indication information indicates a first message ID/a first sequence number/a first count value of the first data packet.

In a possible implementation, the first data packet includes third indication information, and the third indication information indicates that the first data packet is a newly transmitted data packet/a retransmitted data packet.

In a possible implementation, before the second device generates the second authentication code based on the second information, the first key, and the first data packet, the method further includes: the second device obtains an initial value of the second information in the second transmission system.

In a possible implementation, that the second device determines a receiving status of the first data packet based on the second authentication code specifically includes: the second device determines the receiving status of the first data packet based on whether the first authentication code is the same as the second authentication code.

In a possible implementation, that the second device compares the first authentication code with the second authentication code specifically includes: when the first authentication code is the same as the second authentication code, the second device determines that the first data packet is successfully received;

when the first authentication code is different from the second authentication code, the second device determines that the first data packet fails to be received; or
when the first authentication code is different from the second authentication code, the second device updates the second information and generates a temporary authentication code based on updated second information, and the second device compares the temporary authentication code with the first authentication code to determine the receiving status of the first data packet.

When the temporary authentication code is the same as the first authentication code, the second device generates and sends, to the first device, a first application receipt including second indication information, where the second indication information indicates a message ID of a latest successfully received data packet; or when the temporary authentication code is different from the first authentication code, the second device generates and sends, to the first device, a first application receipt indicating that the first data packet fails to be received.

In a possible implementation, after the second device determines that the first data packet is successfully received, the method further includes:

recording information about time at which the first data packet is successfully received;
recording a message ID corresponding to the first data packet; and/or
the second device adds a preset value to a value of the second information, where an adjusted value of the second information is different from the value of the second information.

In a possible implementation, that the second device compares a third authentication code with the first authentication code specifically includes: when the third authentication code is the same as the first authentication code, the second device determines that the first data packet is successfully received, and generates a first application layer receipt indicating that the first data packet is successfully received; or when the third authentication code is different from the first authentication code, the second device determines that the first data packet fails to be received, and generates a first application layer receipt indicating that the first data packet fails to be received.

In a possible implementation, that the second device compares a third authentication code with the first authentication code specifically includes: when the third authentication code is the same as the first authentication code, the second device determines that the first data packet fails to be received, and generates a first application layer receipt indicating that the first data packet fails to be received, where the first application layer receipt includes a message ID corresponding to a successfully received data packet; or when the third authentication code is different from the first authentication code, the second device determines that the first data packet fails to be received, and generates a first application layer receipt indicating that the first data packet fails to be received.

In a possible implementation, after the second device determines the receiving status of the first data packet based on the second authentication code, the method further includes: when the second device determines, based on the second authentication code, that the first data packet is successfully received, the second device sends a first application receipt to the first device, where the first application receipt indicates that the first data packet is successfully received.

In a possible implementation, after the second device determines the receiving status of the first data packet based on the second authentication code, the method further includes: when the second device determines, based on the second authentication code, that the first data packet fails to be received, the second device sends a first application receipt to the first device, where the first application receipt further includes a second message ID, and the second message ID indicates a message ID corresponding to a latest successfully transmitted data packet.

In a possible implementation, after the second device determines the receiving status of the first data packet based on the second authentication code, the method further includes: when the second device determines, based on the second authentication code, that the first data packet fails to be received, the second device sends a first application receipt to the first device, where the first application receipt indicates that the first data packet fails to be received.

In a possible implementation, when the second device determines, based on the second authentication code, that the first data packet is successfully received, the method further includes: the second device adds a preset value to a value of the second information, where an adjusted value of the second information is different from the value of the second information.

In a possible implementation, when the second device determines, based on the second authentication code, that the first data packet fails to be received, the method further includes: the second device adjusts a value of the second information to a preset value.

In a possible implementation, when the second device determines, based on the second authentication code, that the first data packet fails to be received, the method further includes: the second device receives third information sent by the first device; and the second device adjusts a value of the second information to a value of the third information.

In a possible implementation, after the second device determines the receiving status of the first data packet based on the second authentication code, the method further includes: the second device sends second application receipt information to the first device in the second transmission system, where the second application receipt information indicates a status of receiving the first data packet by the second device in the first transmission system.

According to a ninth aspect, this application provides a transmission method, including:

a first device receives a third data packet in a first transmission system; and
the first device generates a third authentication code based on fifth information and the third data packet, where the fifth information is sending time information or fifth context information; and the first device determines a receiving status of the third data packet based on the third authentication code.

In a possible implementation, that the first device generates a third authentication code based on fifth information and the third data packet further includes: the first device further generates the third authentication code based on the fifth information, the third data packet, and a first key.

In a possible implementation, before the first device generates the third authentication code based on the fifth information, the first key, and the third data packet, the method further includes: the first device obtains the first key, where the first key is obtained by the first device through negotiation with a second device in a second transmission system, and the first transmission system is different from the second transmission system.

In a possible implementation, before the first device generates the first authentication code based on the first information, the first key, and the first data, the method further includes: the first device establishes a communication connection to a fourth device; and the first device obtains the first key through the fourth device.

In a possible implementation, the first key is a key preset by the first device.

In a possible implementation, the first transmission system is a satellite transmission system, and the second transmission system is a non-satellite transmission system.

In a possible implementation, the second transmission system is a cellular transmission system or a wireless local area network WLAN transmission system.

In a possible implementation, the first device obtains the first key by negotiating with the second device by using a generic bootstrapping architecture (Generic Bootstrapping Architecture, GBA) procedure in the second transmission system.

In a possible implementation, the first device determines a fourth authentication code based on the third data packet.

In a possible implementation, that a first device receives a third data packet in a first transmission system specifically includes: the first device receives at least one fourth data packet sent by the second device; and a satellite link control SLC layer of the first device and/or a message data convergence protocol MDCP layer of the first device process/processes the at least one fourth data packet into the third data packet.

In a possible implementation, the sixth information is the receiving time information.

In a possible implementation, the receiving time information indicates time at which the first device receives the third data packet.

In a possible implementation, the time at which the first device receives the third data packet is time at which the first device receives the 1st fourth data packet in the at least one fourth data packet.

In a possible implementation, the first device obtains the fifth information through positioning timing.

In a possible implementation, the first device obtains the fifth information based on the receiving time information and a specified time granularity in a preset coding manner.

In a possible implementation, the fifth information is the fifth context information, and the fifth context information indicates information about a quantity of third data packets successfully received by the first device, or a count value or a sequence number of the third data packet received by the first device.

In a possible implementation, the third data packet includes sixth indication information, and the sixth indication information indicates a fourth message ID/a fourth sequence number/a fourth count value of the third data packet.

In a possible implementation, the third data packet includes fourth indication information, and the fourth indication information indicates that the third data packet is a newly transmitted data packet or a retransmitted data packet.

In a possible implementation, before the first device generates the third authentication code based on the fifth information, the first key, and the third data packet, the method further includes: the first device obtains an initial value of the fifth information in the second transmission system.

In a possible implementation, that the first device determines a receiving status of the third data packet based on the third authentication code specifically includes: the first device determines the receiving status of the third data packet based on whether the third authentication code is the same as the fourth authentication code.

In a possible implementation, that the first device determines the receiving status of the third data packet based on whether the third authentication code is the same as the fourth authentication code specifically includes:

when the third authentication code is the same as the fourth authentication code, the first device determines that the third data packet is successfully received;
when the third authentication code is different from the fourth authentication code, the first device determines that the third data packet fails to be received; or
when the third authentication code is different from the fourth authentication code, the first device generates temporary information based on the second information and generates a temporary authentication code based on the temporary information, and the first device compares the third authentication code with the temporary authentication code to determine the receiving status of the third data packet.

When the fourth authentication code is the same as the temporary authentication code, the first device generates and sends, to the second device, an indication application receipt; or when the fourth authentication code is different from the temporary authentication code, the first device generates and sends, to the second device, a failure application receipt.

In a possible implementation, the indication application receipt includes fifth indication information, and a value of the fifth indication information is the same as a value of sixth indication information of a latest successfully received data packet.

In a possible implementation, after the first device determines that the third data packet is successfully received, the method further includes:

recording information about time at which the third data packet is successfully received;
recording a message ID corresponding to the third data packet; and/or
adding a preset value to a value of the fifth information, where an adjusted value of the fifth information is different from the value of the fifth information.

In a possible implementation, after the first device determines the receiving status of the third data packet based on the third authentication code, the method further includes: the first device sends a third application receipt to the second device, where the third application receipt indicates the receiving status of the third data packet.

In a possible implementation, after the first device determines the receiving status of the first data packet based on the third authentication code, the method further includes: when the first device determines that the receiving status of the third data packet is correct receiving, the first device adds a preset value to a value of the fifth information, where an adjusted value of the fifth information is different from the value of the fifth information.

In a possible implementation, after the first device determines the receiving status of the first data packet based on the third authentication code, the method further includes: when the first device determines that the receiving status of the third data packet is failed receiving, the first device updates a value of the fifth information to a preset value. Optionally, the preset value is the initial value.

In a possible implementation, the method further includes: the first device receives seventh information sent by the second device; and the first device updates the value of the fifth information to a value of the seventh information based on the seventh information.

In a possible implementation, after the first device determines that the third data packet is successfully received, the method further includes: the first device displays third data.

In a possible implementation, after the first device determines the receiving status of the third data packet based on the third authentication code, the method further includes:

the first device sends third application receipt information to the second device in the second transmission system, where the third application receipt information indicates a status of receiving the third data packet by the second device in the first transmission system.

According to a tenth aspect, this application provides a transmission method, including:

a second device generates a fourth authentication code based on sixth information and first data, where the sixth information is sending time information or sixth context information; an application AP layer of the second device generates a third data packet based on the fourth authentication code and the first data; and the second device sends the third data packet to a first device in a first transmission system.

In a possible implementation, that a second device generates a fourth authentication code based on sixth information and first data further includes: the second device generates the fourth authentication code based on the sixth information, a first key, and the first data.

In a possible implementation, before the second device generates the fourth authentication code based on the sixth information, the first key, and the first data, the method further includes:

the second device obtains the first key, where the first key is obtained by the first device through negotiation with the second device in a second transmission system, and the first transmission system is different from the second transmission system.

In a possible implementation, the first key is a preset key.

In a possible implementation, the second device obtains the first key by negotiating with the first device by using a generic bootstrapping architecture (Generic Bootstrapping Architecture, GBA) procedure in the second transmission system.

In a possible implementation, that the second device sends the third data packet to a first device in a first transmission system specifically includes: the second device sends the third data packet to the first device through a third device.

In a possible implementation, the sixth information indicates the sending time information.

In a possible implementation, the sending time information indicates time at which the fourth authentication code is generated or time at which the second device sends the third data packet.

In a possible implementation, the time at which the second device sends the third data packet is time at which the second device delivers the third data packet to the third device, or is time estimated by the second device for sending the third data packet to the first device.

In a possible implementation, after obtaining the third data packet through packaging, the second device adds the fourth authentication code to the third data packet.

In a possible implementation, a format of the generation time of the fourth authentication code is universal time coordinated UTC or Greenwich mean time GMT.

In a possible implementation, a minimum time granularity of the generation time of the fourth authentication code includes any one of a year, a month, a day, an hour, a minute, or a second.

In a possible implementation, the second device obtains the sixth information based on the sending time information and a specified time granularity in a specified encoding manner.

In a possible implementation, before the second device generates the fourth authentication code based on the sixth information, the first key, and the first data, the method further includes: the second device obtains the sixth information through the third device.

In a possible implementation, before the second device generates the fourth authentication code based on the sixth information, the first key, and the first data, the method further includes: an MDCP layer/an SLC layer of the second device obtains eighth information; and the second device generates the sixth information based on the eighth information at the AP layer.

Optionally, the second device generates the sixth information at the MDCP layer/the SLC layer.

In a possible implementation, the sixth information is the sixth context information, and the sixth context information indicates information about a quantity of third data packets successfully sent by the second device, information about a quantity of application receipts successfully received by the second device, or a count value or a sequence value of the third data packet sent by the second device.

In a possible implementation, the method further includes: the second device obtains an initial value of the sixth information in the second transmission system; or the second device resets the sixth information to a preset value in the second transmission system.

In a possible implementation, the third data packet further includes sixth indication information, and the sixth indication information indicates a fourth message ID of the third data packet, or the sixth indication information indicates a fourth count value or a fourth sequence number of the third data packet.

In a possible implementation, when the sixth indication information indicates the fourth count value or the fourth sequence number of the third data packet, the method further includes: the application layer of the second device associates the fourth count value or the fourth sequence number with the third data packet, and the second device adds a preset value to a value of the fourth count value or the fourth sequence number.

In a possible implementation, the third data packet further includes fourth indication information, and the fourth indication information indicates new transmission/retransmission information of the third data packet.

In a possible implementation, that an application AP layer of the second device generates a third data packet based on the fourth authentication code and the first data specifically includes: the application layer of the second device encrypts the fourth authentication code and the first data based on the first key, to generate the third data packet, where the third data packet includes an encrypted fourth authentication code and encrypted first data.

In a possible implementation, after the second device sends the third data packet, the method further includes: the second device receives a third application layer receipt sent by the first device, where the third application layer receipt indicates a status of receiving the third data packet by the first device.

In a possible implementation, after the second device receives the third application layer receipt sent by the first device, the method further includes: the second device adds a preset value to a value of the sixth information, where an adjusted value of the sixth information is different from the value of the sixth information.

In a possible implementation, the second device receives fourth application receipt information in the second transmission system, where the fourth application receipt information indicates a status of sending the third data packet by the second device in the first transmission system; and

the second device updates a sending status based on the second application receipt information.

In a possible implementation, the second device deletes the successfully sent third data packet.

According to an eleventh aspect, this application provides a transmission method, including:

a sending device generates an authentication code A based on information A and original data, where the information A is sending time information or context information A; the sending device obtains a data packet based on the authentication code A and the original data; and the sending device sends the data packet to a receiving device in a first transmission system.

In a possible implementation, that a sending device generates an authentication code A based on information A and original data specifically includes: the sending device generates the authentication code A based on the information A, a specified key, and the original data.

In a possible implementation, the sending device obtains the specified key by negotiating with the receiving device in a second transmission system.

In a possible implementation, the first transmission system is different from the second transmission system.

In a possible implementation, the specified key is a key preset by the sending device.

In a possible implementation, the second transmission system is a cellular transmission system or a wireless local area network WLAN transmission system, and the first transmission system is a satellite transmission system.

In a possible implementation, the sending device obtains the specified key by negotiating with the receiving device by using a generic bootstrapping architecture GBA procedure in the second transmission system.

In a possible implementation, the information A is the sending time information, and the information A indicates sending time of the data packet.

In a possible implementation, time at which the sending device sends the data packet is time at which an application AP layer of the sending device sends the data packet to a message data convergence protocol MDCP layer, or is time estimated by the sending device for sending the data packet to the receiving device.

In a possible implementation, the information A is the context information A, and the information A indicates information about a quantity of sent data packets, or a sequence number or a count value of the data packet.

In a possible implementation, the data packet further includes a message ID field A, and the message ID field A is used to identify the data packet.

In a possible implementation, the data packet further includes a sequence number field A, and the sequence number field A is used to identify the data packet and further indicates the information A.

In a possible implementation, the sending device associates a sequence number A with the data packet, and generates the sequence number field Abased on the sequence number A.

In a possible implementation, the sending device associates a message ID with the data packet, and generates the message ID field Abased on the message ID.

In a possible implementation, the data packet further includes a retransmission indication field, and the retransmission indication field indicates that the data packet is a retransmitted data packet or a newly transmitted data packet.

In a possible implementation, the sending device encrypts the original data and the authentication code A by using the specified key, and then adds packet header information in front of encrypted original data and an encrypted authentication code A, to obtain the data packet. The packet header information includes an encryption indication field, and the encryption indication field indicates an encryption algorithm used by the sending device.

In a possible implementation, after the sending device sends the data packet to the receiving device in the first transmission system, the method further includes: the sending device adds a preset value to the sequence number A; and the sending device adjusts a value of the context information A based on an adjusted sequence number A.

In a possible implementation, that the sending device adjusts a value of the context information A based on an adjusted sequence number A specifically includes: the sending device determines a value of a hyper frame number A based on the adjusted sequence number A, and adjusts the value of the context information A based on the adjusted sequence number A and the hyper frame number A.

In a possible implementation, the sending device is a terminal, and the receiving device is a satellite network device.

In a possible implementation, the sending device is a satellite network device, and the receiving device is a terminal.

In a possible implementation, after the sending device sends the data packet to the receiving device in the first transmission system, the method further includes: after receiving a success application receipt sent by the receiving device, the sending device adds a preset value to a value of the context information A, where the success application receipt indicates that the receiving device successfully receives the data packet.

In a possible implementation, when the sending device is a terminal, after the sending device sends the data packet to the receiving device in the first transmission system, the method further includes: after the sending device receives the success application receipt sent by the receiving device, the sending device displays success prompt information, where the success prompt information prompts a user that the data packet is successfully sent.

In a possible implementation, when the sending device is a satellite network device, after the sending device sends the data packet to the receiving device in the first transmission system, the method further includes: after the sending device receives the success application receipt sent by the receiving device, the sending device deletes the data packet in a memory.

In a possible implementation, after the sending device sends the data packet to the receiving device in the first transmission system, the method further includes: after receiving a failure application receipt sent by the receiving device, the sending device adds a preset value to a value of the context information A, where the failure application receipt indicates that the receiving device fails to receive the data packet.

In a possible implementation, after the sending device sends the data packet to the receiving device in the first transmission system, the method further includes: after receiving a failure application receipt sent by the receiving device, the sending device adjusts a value of the context information A to a preset value.

In a possible implementation, after the sending device adjusts the value of the context information A to the preset value, the method further includes: the sending device sends the value of the context information A to the receiving device.

In a possible implementation, after the sending device sends the data packet to the receiving device in the first transmission system, the method further includes: after the sending device receives a failure application receipt sent by the receiving device, the sending device negotiates with the receiving device about a value of the context information A in the second transmission system.

In a possible implementation, when the sending device is a terminal, after the sending device sends the data packet to the receiving device in the first transmission system, the method further includes: after the sending device receives the failure application receipt sent by the receiving device, the sending device displays failure prompt information, where the failure prompt information prompts a user that the data packet fails to be sent.

In a possible implementation, after the sending device sends the data packet to the receiving device in the first transmission system, the method further includes: after the sending device receives an indication application receipt sent by the receiving device, the sending device adds a preset value to a value of the context information A, where the indication application receipt indicates that the current data packet fails to be sent, the indication application receipt includes a message ID field B, and the message ID field B indicates a latest successfully sent data packet.

In a possible implementation, when the sending device is a terminal, after the sending device sends the data packet to the receiving device in the first transmission system, the method further includes: after the sending device receives the indication application receipt sent by the receiving device, the sending device displays success prompt information and failure prompt information, where the success prompt information prompts a user that the data packet indicated by the message ID field B is successfully sent, and the failure prompt information prompts the user that the current data packet fails to be sent.

In a possible implementation, when the sending device is a terminal, after the sending device sends the data packet to the receiving device in the first transmission system, the method further includes: the sending device displays sending prompt information, where the sending prompt information prompts the user that the sending device has sent the data packet to the receiving device.

In a possible implementation, after the sending device sends the data packet to the receiving device in the first transmission system, the method further includes: after receiving, in the second transmission system, a set application receipt sent by the receiving device, the sending device determines, based on the set application receipt, a receiving status of the data packet sent in the first transmission system.

According to a twelfth aspect, this application provides a transmission method, including: a receiving device receives, in a first transmission system, a data packet sent by a sending device; the receiving device generates an authentication code B based on information B and the data packet, where the information B is receiving time information or context information B; and the receiving device determines a receiving status of the data packet based on the authentication code B.

In a possible implementation, that the receiving device generates an authentication code B based on information B and original data specifically includes: the receiving device generates the authentication code B based on the information B, a specified key, and the original data.

In a possible implementation, the receiving device obtains the specified key by negotiating with the sending device in a second transmission system.

In a possible implementation, the first transmission system is different from the second transmission system.

In a possible implementation, the specified key is a key preset by the receiving device.

In a possible implementation, the second transmission system is a cellular transmission system or a wireless local area network WLAN transmission system, and the first transmission system is a satellite transmission system.

In a possible implementation, the receiving device obtains the specified key by negotiating with the sending device by using a generic bootstrapping architecture GBA procedure in the second transmission system.

In a possible implementation, the information B is the receiving time information, and the information B indicates receiving time of the data packet.

In a possible implementation, time at which the receiving device receives the data packet is time at which a satellite link control SLC layer of the receiving device receives the first satellite link control protocol data unit SLC PDU of the data packet.

In a possible implementation, the information B is the context information B, and the information B indicates information about a quantity of received data packets, or a sequence number or a count value of the data packet.

In a possible implementation, the data packet further includes a sequence number field A, and the sequence number field A is used to identify the data packet and further indicates the context information B.

In a possible implementation, the receiving device determines a value of the context information B based on the sequence number field A and a stored sequence number B.

In a possible implementation, that the receiving device determines a value of the context information B based on the sequence number field A and a stored sequence number B specifically includes: the receiving device determines a value of a hyper frame number B based on the sequence number field A and a value of the sequence number B; and the receiving device obtains the context information B based on the sequence number field A and the hyper frame number B.

In a possible implementation, when a value of the sequence number field A is less than or equal to the value of the sequence number B, the receiving device adds a preset value to the value of the hyper frame number B.

In a possible implementation, the receiving device concatenates the hyper frame number B and the sequence number field A, to obtain the context information B.

In a possible implementation, after obtaining the context information B, the receiving device may adjust the value of the sequence number B to the value of the sequence number field A.

In a possible implementation, the data packet further includes a message ID field A, and the message ID field A is used to identify the data packet.

In a possible implementation, the receiving device is a satellite network device, and the sending device is a terminal.

In a possible implementation, the receiving device is a terminal, and the sending device is a satellite network device.

In a possible implementation, the receiving device obtains an authentication code A based on the data packet.

In a possible implementation, that the receiving device determines a receiving status of the data packet based on the authentication code B specifically includes: the receiving device compares the authentication code A with the authentication code B to determine the receiving status of the data packet.

In a possible implementation, that the receiving device compares the authentication code A with the authentication code B to determine the receiving status of the data packet specifically includes: when the authentication code B is the same as the authentication code A, the receiving device determines that the data packet is successfully received.

In a possible implementation, after the receiving device determines that the data packet is successfully received, the method further includes: the receiving device generates a success application receipt, where the success application receipt indicates that the receiving device successfully receives the data packet; and the receiving device sends the success application receipt to the sending device.

In a possible implementation, the data packet includes the message ID field A; and after the receiving device determines that the data packet is successfully received, the method further includes: the receiving device adjusts a value of a message ID field B to a value of the message ID field A.

In a possible implementation, when the receiving device is a terminal, after the receiving device determines that the data packet is successfully received, the method further includes: the receiving device displays the original data.

In a possible implementation, when the receiving device is a satellite network device, after the receiving device determines that the data packet is successfully received, the method further includes: the receiving device sends the original data to an electronic device in the second transmission system through the second transmission system.

In a possible implementation, that the receiving device compares the authentication code A with the authentication code B to determine the receiving status of the data packet specifically includes: when the authentication code B is different from the authentication code A, the receiving device determines that the data packet fails to be received.

In a possible implementation, after the receiving device determines that the data packet fails to be received, the method further includes: the receiving device generates a failure application receipt, where the failure application receipt indicates that the receiving device fails to receive the data packet; and the receiving device sends the failure application receipt to the sending device.

In a possible implementation, after the receiving device determines that the data packet fails to be received, the method further includes: the receiving device generates an indication application receipt based on a message ID field B, where the indication application receipt indicates that the receiving device fails to receive the data packet, and the message ID field B indicates a latest data packet successfully received by the receiving device; and the receiving device sends the indication application receipt to the sending device.

In a possible implementation, when the authentication code B is different from the authentication code A, after the receiving device determines that the data packet fails to be received, the method further includes: the receiving device generates information C based on the information B and generates an authentication code C based on the information C; and the receiving device determines, based on the authentication code C, whether the sending device does not receive a latest success application receipt.

In a possible implementation, when the authentication code C is the same as the authentication code A, that is, the receiving device determines that the sending device does not receive the latest sent success application receipt, the receiving device sends a success application receipt to the sending device.

In a possible implementation, when the authentication code C is different from the authentication code A, the receiving device sends a failure application receipt to the sending device.

In a possible implementation, the data packet further includes a retransmission indication field, and the retransmission indication field indicates that the data packet is a retransmitted data packet or a newly transmitted data packet.

In a possible implementation, when the authentication code B is different from the authentication code A, after the receiving device determines that the data packet fails to be received, the method further includes: the receiving device determines that the data packet includes a retransmission indication field indicating that the data packet is a newly transmitted data packet, and the receiving device generates and sends, to the sending device, a failure application receipt.

In a possible implementation, when the authentication code B is different from the authentication code A, after the receiving device determines that the data packet fails to be received, the method further includes: the receiving device determines that the data packet includes a retransmission indication field indicating that the data packet is a retransmitted data packet; the receiving device generates information C based on the information B and generates an authentication code C based on the information C; and the receiving device determines, based on the authentication code C, whether the sending device does not receive a latest success application receipt.

In a possible implementation, when the authentication code C is the same as the authentication code A, that is, the receiving device determines that the sending device does not receive the latest sent success application receipt, the receiving device sends a success application receipt to the sending device.

In a possible implementation, when the authentication code C is different from the authentication code A, the receiving device sends a failure application receipt to the sending device.

In a possible implementation, the receiving device sends, in the second transmission system, a set application receipt to the sending device, where the set application receipt indicates a status of receiving the data packet of the sending device by the receiving device in the first transmission system.

According to a thirteenth aspect, this application provides a satellite communication system, including a sending device and a receiving device.

The sending device is configured to generate an authentication code A based on information A and original data, where the information A is sending time information or context information A.

The sending device is further configured to obtain a data packet based on the authentication code A and the original data.

The sending device is further configured to send the data packet to the receiving device in a first transmission system.

The receiving device is configured to receive, in the first transmission system, the data packet sent by the sending device.

The receiving device is further configured to generate an authentication code B based on the information B and the data packet, where the information B is receiving time information or context information B.

The receiving device is further configured to determine a receiving status of the data packet based on the authentication code B.

In a possible implementation, this application provides a communication apparatus, including one or more processors, one or more memories, and a transceiver. The transceiver and the one or more memories are coupled to the one or more processors, the one or more memories are configured to store computer program code, the computer program code includes computer instructions, and when the one or more processors execute the computer instructions, the communication apparatus is enabled to perform the method according to either of the eleventh aspect or the twelfth aspect.

In a possible implementation, the communication apparatus is a terminal or a satellite network device.

In a possible implementation, this application provides a computer-readable storage medium. The computer-readable storage medium stores instructions, and when the instructions are run on a computer, the computer is enabled to perform the method according to either of the eleventh aspect or the twelfth aspect.

In a possible implementation, this application provides a chip or a chip system. The chip or the chip system is applied to a terminal and includes a processing circuit and an interface circuit. The interface circuit is configured to receive code instructions and transmit the code instructions to the processing circuit. The processing circuit is configured to run the code instructions to perform the method according to either of the eleventh aspect or the twelfth aspect.

According to a fourteenth aspect, this application provides a communication apparatus, including one or more processors, one or more memories, and a transceiver. The transceiver and the one or more memories are coupled to the one or more processors, the one or more memories are configured to store computer program code, the computer program code includes computer instructions, and when the one or more processors execute the computer instructions, the communication apparatus is enabled to perform the method in any one of the first aspect, the fourth aspect, the seventh aspect, or the ninth aspect or the possible implementations of the first aspect, the fourth aspect, the seventh aspect, or the ninth aspect.

The communication apparatus may be a terminal or a device in another product form.

According to a fifteenth aspect, this application provides a communication apparatus, including one or more processors, one or more memories, and a transceiver. The transceiver and the one or more memories are coupled to the one or more processors, the one or more memories are configured to store computer program code, the computer program code includes computer instructions, and when the one or more processors execute the computer instructions, the communication apparatus is enabled to perform the method in any one of the second aspect, the fifth aspect, the eighth aspect, or the tenth aspect or the possible implementations of the second aspect, the fifth aspect, the eighth aspect, or the tenth aspect.

The communication apparatus may be a satellite network device, or any network element or a combination of a plurality of network elements in the satellite network device.

According to a sixteenth aspect, this application provides a communication apparatus, including one or more processors, one or more memories, and a transceiver. The transceiver and the one or more memories are coupled to the one or more processors, the one or more memories are configured to store computer program code, the computer program code includes computer instructions, and when the one or more processors execute the computer instructions, the communication apparatus is enabled to perform the method in any one of the third aspect or the sixth aspect or the possible implementations of the third aspect or the sixth aspect.

The communication apparatus may be any network element or a combination of a plurality of network elements in a satellite network device.

According to a seventeenth aspect, this application provides a computer storage medium, including computer instructions. When the computer instructions are run on a computer, the computer is enabled to perform the method in any one of the first aspect, the fourth aspect, the seventh aspect, or the ninth aspect or the possible implementations of the first aspect, the fourth aspect, the seventh aspect, or the ninth aspect.

According to an eighteenth aspect, this application provides a computer storage medium, including computer instructions. When the computer instructions are run on a computer, the computer is enabled to perform the method in any one of the second aspect, the fifth aspect, the eighth aspect, or the tenth aspect or the possible implementations of the second aspect, the fifth aspect, the eighth aspect, or the tenth aspect.

According to a nineteenth aspect, this application provides a computer storage medium, including computer instructions. When the computer instructions are run on a computer, the computer is enabled to perform the method in any one of the third aspect or the sixth aspect or the possible implementations of the third aspect or the sixth aspect.

According to a twentieth aspect, this application provides a computer program product. When the computer program product runs on a computer, the computer is enabled to perform the method in any one of the first aspect, the fourth aspect, the seventh aspect, or the ninth aspect or the possible implementations of the first aspect, the fourth aspect, the seventh aspect, or the ninth aspect.

According to a twenty-first aspect, this application provides a computer program product. When the computer program product runs on a computer, the computer is enabled to perform the method in any one of the second aspect, the fifth aspect, the eighth aspect, or the tenth aspect or the possible implementations of the second aspect, the fifth aspect, the eighth aspect, or the tenth aspect.

According to a twenty-second aspect, this application provides a computer program product. When the computer program product runs on a computer, the computer is enabled to perform the method in any one of the third aspect or the sixth aspect or the possible implementations of the third aspect or the sixth aspect.

According to a twenty-third aspect, this application provides a chip or a chip system. The chip or the chip system is applied to a terminal and includes a processing circuit and an interface circuit. The interface circuit is configured to receive code instructions and transmit the code instructions to the processing circuit. The processing circuit is configured to run the code instructions to perform the method in any one of the first aspect, the fourth aspect, the seventh aspect, or the ninth aspect or the possible implementations of the first aspect, the fourth aspect, the seventh aspect, or the ninth aspect.

## BRIEF DESCRIPTION OF DRAWINGS

FIG. 1A is a schematic diagram of a satellite communication system according to an embodiment of this application;
FIG. 1B is a schematic diagram of another satellite communication system according to an embodiment of this application;
FIG. 2A(1) and FIG. 2A(2) are a schematic diagram of a protocol encapsulation architecture of inbound data in a satellite communication system according to an embodiment of this application;
FIG. 2B(1) and FIG. 2B(2) are a schematic diagram of a protocol parsing architecture of inbound data in a satellite communication system according to an embodiment of this application;
FIG. 3A(1) to FIG. 3A(3) are a schematic diagram of a protocol encapsulation architecture of outbound data in a satellite communication system according to an embodiment of this application;
FIG. 3B(1) to FIG. 3B(3) are a schematic diagram of a protocol parsing architecture of outbound data in a satellite communication system according to an embodiment of this application;
FIG. 4 is a schematic diagram of an authentication verification procedure during inbound transmission in a satellite communication system according to an embodiment of this application;
FIG. 5 is a flowchart of a method for obtaining a specified key according to an embodiment of this application;
FIG. 6 is a schematic diagram of a replay attack scenario according to an embodiment of this application;
FIG. 7A and FIG. 7B are a schematic diagram of a processing procedure of a transmission method according to an embodiment of this application;
FIG. 8A to FIG. 8C are a schematic diagram of a processing procedure of another transmission method according to an embodiment of this application;
FIG. 9 is a schematic diagram of an inbound transmission procedure according to an embodiment of this application;
FIG. 10 is a schematic diagram of an outbound transmission procedure according to an embodiment of this application;
FIG. 11A and FIG. 11B are a schematic diagram of a processing procedure of another transmission method according to an embodiment of this application;

FIG. 12 is a schematic diagram of another inbound transmission procedure according to an embodiment of this application;

FIG. 13 is a schematic diagram of another outbound transmission procedure according to an embodiment of this application;

FIG. 14 is a schematic diagram of a transmission procedure according to an embodiment of this application;

FIG. 15A to FIG. 15H are schematic diagrams of a group of interfaces according to an embodiment of this application;

FIG. 16A is a schematic diagram of another transmission procedure according to an embodiment of this application;

FIG. 16B is a schematic diagram of another transmission procedure according to an embodiment of this application;

FIG. 17A is a schematic diagram of another transmission procedure according to an embodiment of this application;

FIG. 17B is a schematic diagram of another transmission procedure according to an embodiment of this application;

FIG. 17C is a schematic diagram of another transmission procedure according to an embodiment of this application;

FIG. 18A to FIG. 18C are schematic diagrams of another group of interfaces according to an embodiment of this application;

FIG. 19 is a schematic diagram of another transmission procedure according to an embodiment of this application;

FIG. 20 is a schematic diagram of an interface according to an embodiment of this application;

FIG. 21A and FIG. 21B are a schematic diagram of a processing procedure of another transmission method according to an embodiment of this application;

FIG. 22A and FIG. 22B are a schematic diagram of another inbound transmission procedure according to an embodiment of this application;

FIG. 23A and FIG. 23B are a schematic diagram of another outbound transmission procedure according to an embodiment of this application;

FIG. 24A and FIG. 24B are a schematic diagram of another transmission procedure according to an embodiment of this application;

FIG. 25A to FIG. 25D are schematic diagrams of another group of interfaces according to an embodiment of this application;

FIG. 26 is a schematic diagram of another transmission procedure according to an embodiment of this application;

FIG. 27A and FIG. 27B are schematic diagrams of another group of interfaces according to an embodiment of this application;

FIG. 28A and FIG. 28B are a schematic diagram of another transmission procedure according to an embodiment of this application;

FIG. 29 is a schematic diagram of an interface according to an embodiment of this application;

FIG. 30A and FIG. 30B are a schematic diagram of another transmission procedure according to an embodiment of this application;

FIG. 31A and FIG. 31B are schematic diagrams of another group of interfaces according to an embodiment of this application;

FIG. 32 is a schematic diagram of another inbound transmission procedure according to an embodiment of this application;

FIG. 33 is a schematic diagram of another outbound transmission procedure according to an embodiment of this application;

FIG. 34 is a schematic diagram of another transmission procedure according to an embodiment of this application;

FIG. 35A and FIG. 35B are a schematic diagram of another transmission procedure according to an embodiment of this application;

FIG. 36A and FIG. 36B are a schematic diagram of another inbound transmission procedure according to an embodiment of this application;

FIG. 37A and FIG. 37B are a schematic diagram of another outbound transmission procedure according to an embodiment of this application;

FIG. 38 is a schematic diagram of another transmission procedure according to an embodiment of this application;

FIG. 39 is a schematic diagram of another transmission procedure according to an embodiment of this application;

FIG. 40 is a schematic diagram of another transmission procedure according to an embodiment of this application;

FIG. 41 is a schematic diagram of another transmission procedure according to an embodiment of this application;

FIG. 42 is a schematic diagram of a hardware structure according to an embodiment of this application; and

FIG. 43A and FIG. 43B are schematic diagrams of another group of interfaces according to an embodiment of this application.

## DESCRIPTION OF EMBODIMENTS

The following clearly describes technical solutions in embodiments of this application in detail with reference to the accompanying drawings. In description of embodiments of this application, "/" means "or" unless otherwise specified. For example, A/B may represent A or B. In this specification, "and/or" describes only an association relationship for describing associated objects and indicates that three relationships may exist. For example, A and/or B may indicate the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In description of embodiments of this application, "a plurality of means two or more unless otherwise specified.

The following describes a satellite communication system 10 according to an embodiment of this application.

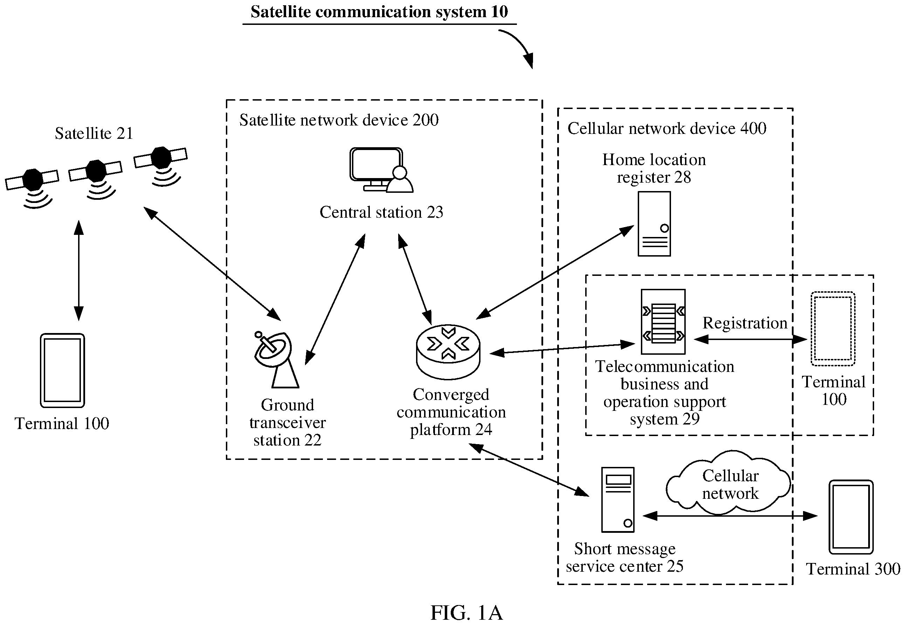

As shown in FIG. 1A, the satellite communication system 10 may include but is not limited to a terminal 100, a satellite 21, a satellite network device 200, a cellular network device 400, a terminal 300, and the like.

The terminal 100 in a satellite network may send a satellite message to the terminal 300 in a cellular network. Specifically, the terminal 100 may first send a satellite message to the satellite 21. The satellite 21 performs only relay, and may directly forward, to the satellite network device 200 on the ground, the satellite message sent by the terminal 100. The satellite network device 200 may parse, according to a satellite communication protocol, the satellite message forwarded by the satellite 21, and forward, to the cellular network device 400, message content parsed out from the satellite message. The cellular network device 400 may forward the message content to the terminal 300 by using a conventional cellular communication network.

The terminal 300 in the cellular network may also send a satellite message to the terminal 100 in the satellite network. In an outbound process, the terminal 300 may send an SMS message to a short message service center 25 over a conventional cellular communication network. The short message service center 25 may forward the SMS message of the terminal 300 to the satellite network device 200. The satellite network device 200 may relay the SMS message of the terminal 300 to the terminal 100 by using the satellite 21.

Optionally, the satellite communication system 10 may further include an emergency rescue platform and an emergency rescue center. The satellite network device 200 may send, to the emergency rescue center by using the emergency rescue platform, a satellite message that is of an emergency rescue type and that is sent by the terminal 100.

The satellite network device 200 may include but is not limited to a ground transceiver station 22, a central station 23, and a converged communication platform 24. The ground transceiver station 22 may include one or more devices each having a sending function and one or more devices each having a receiving function, or may include one or more devices each having a sending function and a receiving function. This is not limited herein. The ground transceiver station 22 may be configured to perform a data processing function of the satellite network device 200 at a physical (physical layer protocol, PHY) layer. The central station 23 may be configured to perform a data processing function of the satellite network device 200 at a satellite link control (satellite link control protocol, SLC) layer and a message data convergence protocol (message data convergence protocol, MDCP) layer. The converged communication platform 24 may be configured to perform a data processing function at an application (application layer protocol, AP) layer. The converged communication platform 24 may also be referred to as a converged communication gateway 24.

The cellular network device 400 may include but is not limited to the short message service center (short message service center, SMSC) 25, a home location register (home location register, HLR) 28, a telecommunication business and operation support system (business & operation support system, BOSS) 29, a bootstrapping server (bootstrapping server function, BSF) 41, and a home subscriber server (home subscriber server, HSS) 42. The bootstrapping server 41 and the home subscriber server 42 are not shown in FIG. 1A.

The short message service center 25 may be configured to forward, to a terminal in the cellular network, data sent by the satellite network device 200, or may be configured to forward data in the cellular network to the satellite network device 200.

The telecommunication business and operation support system 29 may be configured to perform terminal registration. The telecommunication business and operation support system 29 may allocate a corresponding personal identity (identity, ID) number or the like to a terminal (for example, the terminal 100) during registration. The ID number may be a mobile number of the terminal.

The bootstrapping server 41 may be configured to receive service requests of the terminal 100 and the satellite network device 200. The bootstrapping server 41 may be further configured to store authentication parameters obtained from the home subscriber server 42. The authentication parameters may include but are not limited to a random (random, RAND), an authentication token (authentication token, AUTN), an expected response (expected response, XRES), a cipher key (cipher key, CK), and an integrity key (integrity key, IK). The bootstrapping server 41 may further generate a session key _network application function (session key _network application function, Ks_NAF) based on the authentication parameters. The bootstrapping server 41 may further send the Ks_NAF to the satellite network device 200. The bootstrapping server 41 may further send some authentication parameters (the RAND and the AUTN) to the terminal 100.

The home location register 28 and/or the home subscriber server 42 may be configured to generate the authentication parameters and send the authentication parameters to the bootstrapping server 41. The RAND and the AUTN may be used by the terminal 100 to calculate the CK, the IK, and a response (response, RES). The XRES in the authentication parameters may be used by the satellite network device 200 to authenticate whether the terminal 100 is a valid terminal. Only when the satellite network device 200 determines that the XRES is the same as the RES, the satellite network device 200 determines that the terminal 100 is a valid terminal (authentication performed by the satellite network device 200 succeeds), and the satellite network device 200 and the terminal 100 may encrypt/decrypt communication data by using the Ks_NAF. The CK and the IK in the authentication parameters may be used to calculate the Ks_NAF.

It should be noted that the Ks_NAF is a specified key (also referred to as a first key) in the following embodiments of this application. The specified key may be used to encrypt/decrypt data. Optionally, the specified key may be further used to generate an authentication code.

It should be noted that a process in which the terminal 100 sends data to the satellite network device 200 is inbound. A process in which the satellite network device 200 sends data to the terminal 100 is outbound.

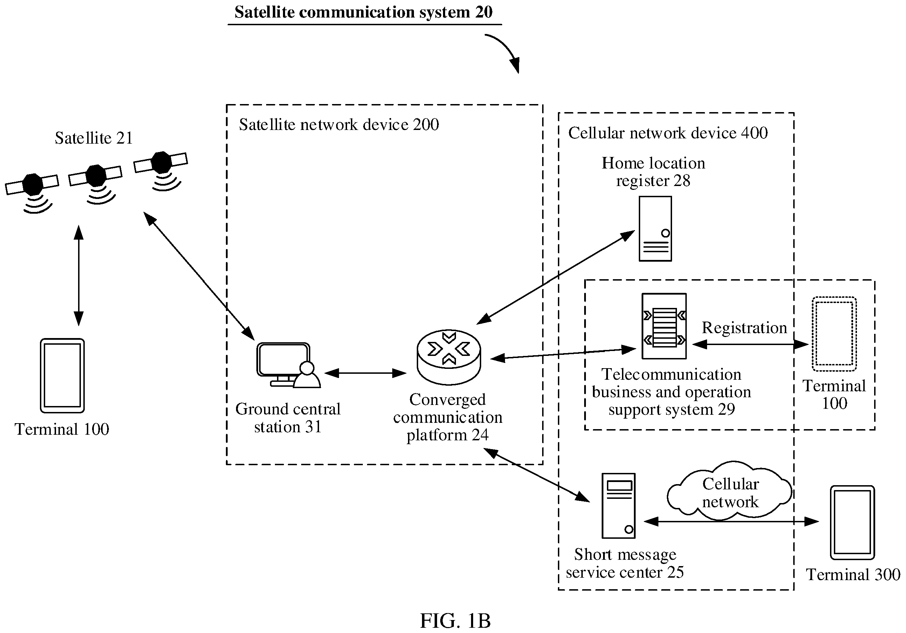

In a possible implementation, the ground transceiver station 22 and the central station 23 may be a same device. For example, the device may be a ground central station 31 in a satellite communication system 20 shown in FIG. 1B. The ground central station 31 may be configured to perform a data processing function of a satellite network device 200 at a physical layer, a satellite link control layer, and a message data convergence protocol layer.

In a possible implementation, a sending device and a receiving device may obtain a specified key in a second transmission system. The sending device may obtain an authentication code A based on the specified key and original data, and send, to the receiving device in a first transmission system, a data packet including the authentication code A. The receiving device may generate an authentication code B based on the specified key and the data packet. The receiving device may determine a receiving status of the data packet based on the authentication code B. In this way, the sending device and the receiving device can update and obtain the specified key by using an abundant supply of air interface resources of a cellular network, thereby saving an air interface resource that is of a satellite network and that is required for negotiating about the specified key. The sending device and the receiving device may alternatively transmit the authentication code and the original data together, to reduce interaction steps required for authentication, thereby further saving an air interface resource of the satellite network.

It should be noted that the first transmission system may be a satellite transmission system (also referred to as a satellite network or a satellite communication system), for example, the foregoing satellite communication system 10. In some embodiments, the first transmission system may be a BeiDou network transmission system. It should be further noted that the second transmission system is a transmission system that is not the first transmission system. For example, the second transmission system may be a cellular transmission system (also referred to as a cellular network), or the second transmission system may be a wireless local area network (wireless local area network, WLAN) transmission system. This is not limited in embodiments of this application.

In the following embodiments of this application, a satellite network and a cellular network are used as an example to describe a transmission method.

The following describes a protocol architecture of inbound data in a satellite communication system 10 according to an embodiment of this application.

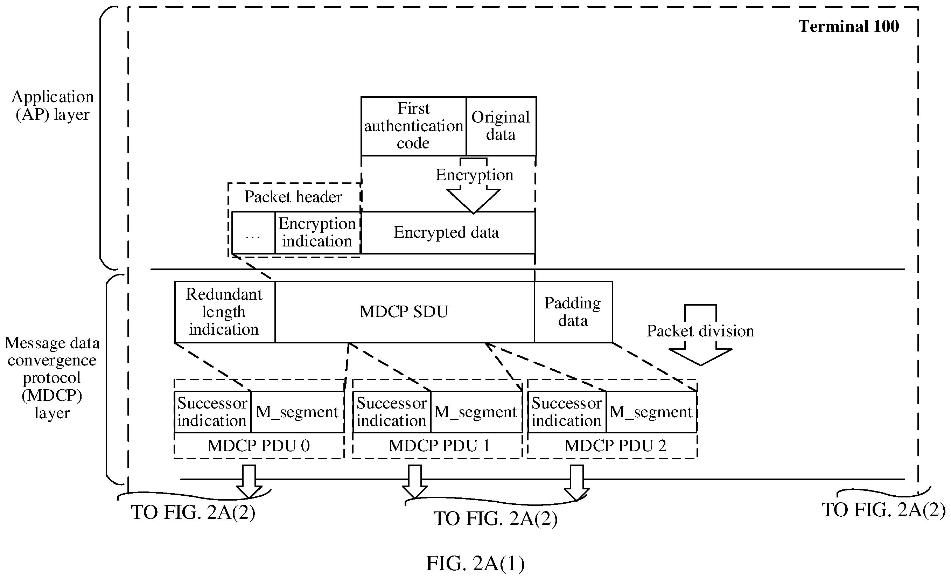

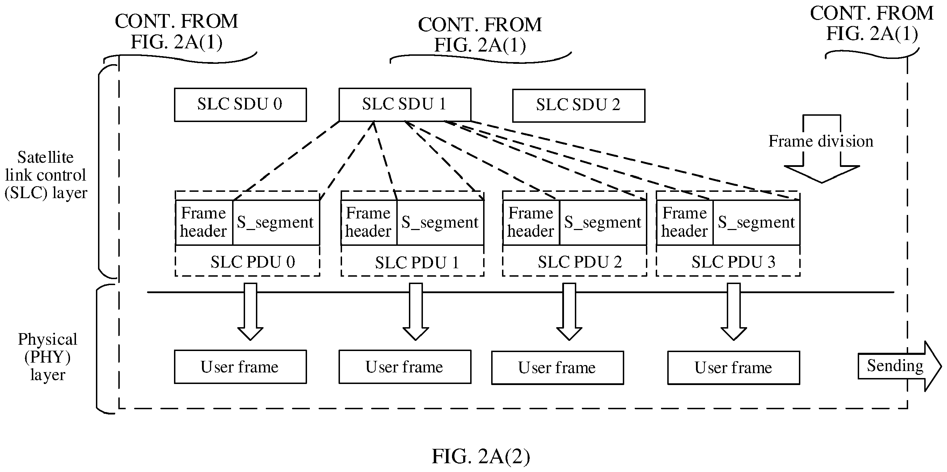

FIG. 2A(1) and FIG. 2A(2) are a schematic diagram of a protocol encapsulation architecture of inbound data in a satellite communication system 10 according to an embodiment of this application.

As shown in FIG. 2A(1) and FIG. 2A(2), transmission protocol layers in a terminal 100 may be divided into an application layer, a message data convergence protocol layer, a satellite link control layer, and a physical layer.

When the terminal 100 sends data to a satellite network device 200, a working procedure of transmission protocols in the terminal 100 may be as follows:

At the AP layer, the terminal 100 generates a first data packet. The first data packet includes original data and a first authentication code generated based on a specified key and the original data. For example, the terminal 100 may generate the first authentication code based on the original data (also referred to as first data) and the specified key, concatenate the first authentication code and the original data together, and perform processing (for example, add a packet header), to obtain the first data packet. The original data may include but is not limited to data entered by a user, a receiving user quantity indication, a receiving user ID, location information of the terminal 100, a voice, an image, an animation, and the like.

In a possible implementation, the terminal 100 may encrypt, by using the specified key, the first authentication code and the original data that are concatenated together, to obtain encrypted data. The terminal 100 may add packet header information in front of the encrypted data, to obtain the first data packet. The packet header information may include but is not limited to an encryption indication field. The encryption indication field may indicate an encryption algorithm used by the terminal 100 to encrypt data.

Optionally, before the terminal 100 encrypts the first authentication code and the original data that are concatenated together, the terminal 100 may first compress the first authentication code and the original data that are concatenated together. It may be understood that the packet header information may further include a compression indication field. The compression indication field may indicate a compression algorithm used by the terminal 100 to compress data.

In a possible implementation, the terminal 100 may encrypt only the original data, to obtain encrypted data. The terminal 100 may add packet header information in front of the encrypted data, to obtain the first data packet. The packet header information may include but is not limited to an encryption indication field. Finally, the terminal 100 adds the first authentication code to the first data packet, to obtain the first data packet including the first authentication code and the encrypted data.

At the MDCP layer, the terminal 100 may obtain, through an inter-layer interface, the first data packet delivered by the AP layer, and use the first data packet as an MDCP SDU. At the MDCP layer, the terminal 100 may add padding (padding) data to a trailer of the MDCP SDU to a specified length, and add a redundant length indication field to the MDCP SDU. The redundant length indication field may indicate a length of the padding data. The terminal 100 may split an MDCP SDU to which the padding data and the redundant length indication field are added into one or more pieces of fixed-length MDCP segment data (M_segment), and add a successor indication field to a header of each piece of MDCP segment data, to obtain an MDCP PDU. In other words, the MDCP PDU includes M_segment and the successor indication field. The successor indication field may indicate a sequence of the current MDCP PDU in a plurality of MDCP PDUs in the same MDCP SDU, whether there is an MDCP PDU behind the current MDCP PDU, or whether the current MDCP PDU is a unique MDCP PDU in the MDCP SDU.

At the SLC layer, the terminal 100 may obtain, through an inter-layer interface, the MDCP PDUs delivered by the MDCP layer, and use the MDCP PDUs as SLC SDUs. At the SLC layer, the terminal 100 may segment the SLC SDU into one or more (for example, four) pieces of fixed-length SLC segment data (S_segment), and add frame header information (also referred to as frame format indication information) to a header of each S_segment, to obtain an SLC PDU. The frame header information may include but is not limited to a user ID field, a total frame quantity field, and a frame sequence number field. The user ID field may indicate a terminal (for example, the terminal 100) that generates the SLC PDU. The total frame quantity field may indicate a total quantity of SLC PDUs included in the SLC SDU to which the SLC PDU belongs. The frame sequence number field may indicate a sequence number of the SLC PDU in the SLC SDU to which the SLC PDU belongs.

It should be noted that herein, the SLC PDU may be referred to as a second data packet. That is, the terminal 100 may process the first data packet into at least one second data packet by using the MDCP layer and the SLC layer. Alternatively, the MDCP segment may be referred to as a second data packet, and the terminal 100 may process the first data packet into at least one second data packet by using the MDCP layer.

At the PHY layer, the terminal 100 may obtain, through an inter-layer interface, SLC PDUs delivered by the SLC layer. The terminal 100 may perform a sending processing (for example, encoding, modulation, and spreading) operation on the SLC PDUs, to obtain inbound data. Then, the terminal 100 may send the inbound data to a satellite 21, and the satellite 21 relays the inbound data to the satellite network device 200.

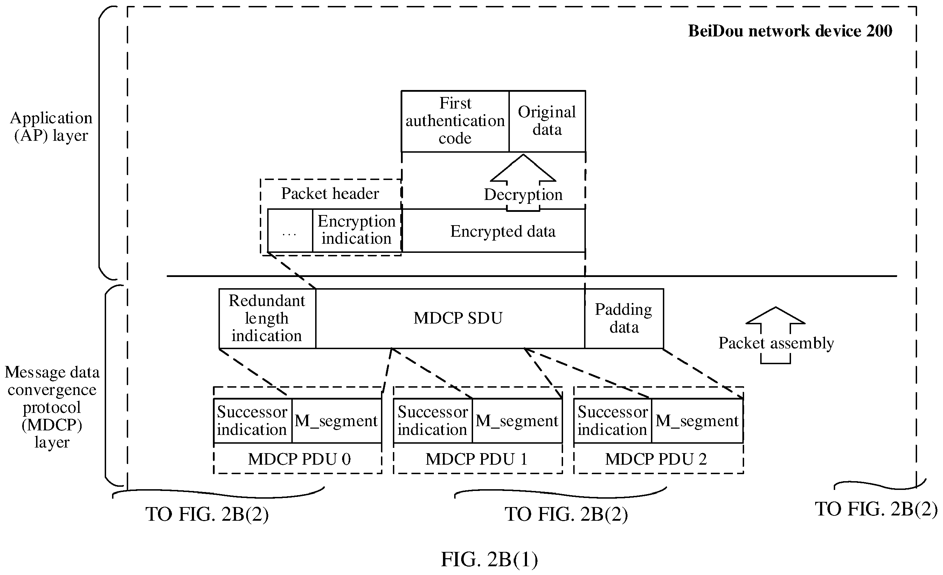

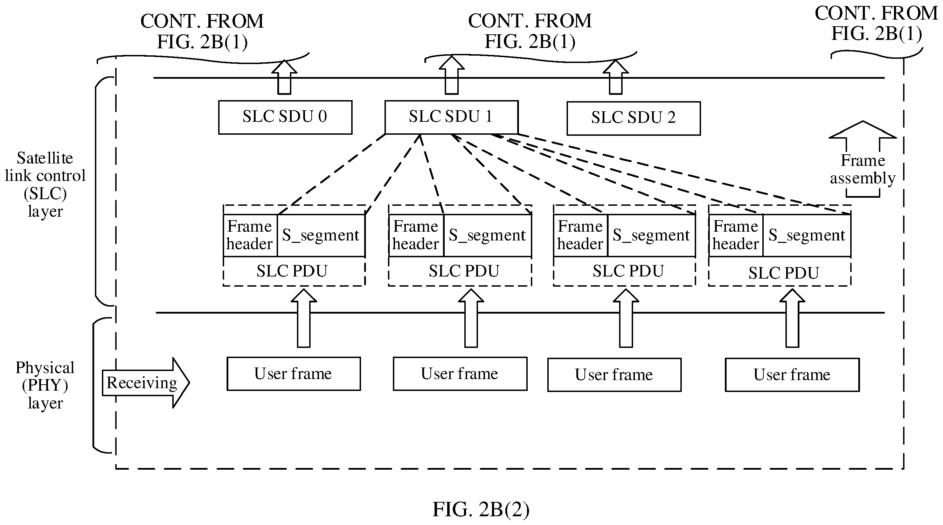

FIG. 2B(1) and FIG. 2B(2) are a schematic diagram of a protocol parsing architecture of inbound data in a satellite communication system 10 according to an embodiment of this application.

As shown in FIG. 2B(1) and FIG. 2B(2), transmission protocol layers in a satellite network device 200 may be divided into an application layer, a message data convergence protocol layer, a satellite link control layer, and a physical layer. The satellite network device 200 may include but is not limited to a ground transceiver station 22, a central station 23, and a converged communication platform 24. The ground transceiver station 22 may be configured to be responsible for protocol processing at the PHY layer. The central station 23 may be configured to be responsible for protocol processing at the SLC layer and the MDCP layer. The converged communication platform 24 may be configured to be responsible for protocol processing at the AP layer.

When the satellite network device 200 receives data sent by a terminal 100, a working procedure of a BeiDou packet transfer protocol in the satellite network device 200 may be as follows:

At the PHY layer, the satellite network device 200 may obtain inbound data sent by the terminal 100. The satellite network device 200 may deliver data obtained by performing a receiving processing (for example, despreading, demodulation, and decoding) operation on the inbound data to the SLC layer through an inter-layer interface, and use the data as SLC PDUs at the SLC layer.

At the SLC layer, the satellite network device 200 may concatenate, into one SLC SDU based on frame header information of the SLC PDUs, SLC PDUs belonging to a same SLC SDU of a same terminal. The satellite network device 200 may deliver the SLC SDU to the MDCP layer through an inter-layer interface, and use the SLC SDU as an MDCP PDU at the MDCP layer.

At the MDCP layer, the satellite network device 200 may concatenate, together in a receiving sequence, all MDCP PDUs belonging to a same MDCP SDU, and remove padding data and a redundant length indication field from the concatenated MDCP PDUs, to obtain an MDCP SDU. The satellite network device 200 may deliver the MDCP SDU to the AP layer through an inter-layer interface, and use the MDCP SDU as a first data packet received at the AP layer. In this case, the SLC layer and the MDCP layer of the satellite network device 200 process the at least one second data packet (the SLC PDUs) to obtain the first data packet, or the MDCP layer of the satellite network device 200 processes at least one second data packet (the MDCP PDUs) to obtain the first data packet.

At the AP layer, the satellite network device 200 may generate a second authentication code based on a specified key and the first data packet, and determine a receiving status of the first data packet based on the second authentication code. Specifically, the satellite network device 200 may obtain original data in the first data packet, and then generate the second authentication code based on the specified key and the original data. The satellite network device 200 may obtain a first authentication code in the first data packet, and determine the receiving status of the first data packet by determining, through comparison, whether the first authentication code is the same as the second authentication code. When the first authentication code is the same as the second authentication code, the satellite network device 200 determines that the first data packet is successfully received. That is, the satellite network device 200 determines that the original data in the first data packet is data sent by the terminal 100, and the satellite network device 200 may perform a corresponding operation on the original data (for example, forward the original data to called user equipment in a cellular network). When the first authentication code is different from the second authentication code, the satellite network device 200 determines that the first data packet fails to be received. That is, the satellite network device 200 determines that the original data in the first data packet is not data sent by the terminal 100, and the satellite network device 200 may discard the first data packet.

In a possible implementation, the first data packet includes encrypted data, and the encrypted data includes an encrypted first authentication code and encrypted original data. The satellite network device 200 may determine, based on a packet header of the first data packet, an encryption algorithm used by the terminal 100. The satellite network device 100 may decrypt the first data packet based on the specified key and the encryption algorithm, to obtain the original data and the first authentication code. The satellite network device 200 may generate the second authentication code based on the specified key and the original data.

Optionally, after decrypting the encrypted data, the satellite network device 200 may obtain compressed data. After decompressing the compressed data, the satellite network device 200 obtains the first authentication code and the original data.

In a possible implementation, the first data packet includes encrypted data and the first authentication code. The satellite network device 200 may directly obtain the first authentication code in the first data packet. The satellite network device 200 may perform a decryption operation on the encrypted data based on the specified key and an encryption indication field in packet header information, to obtain the original data.

In this embodiment of this application, the foregoing protocol processing process is merely an example for description, and a specific protocol processing operation is not limited in this application.

The following describes a protocol architecture of outbound data in a satellite communication system 10 according to an embodiment of this application.

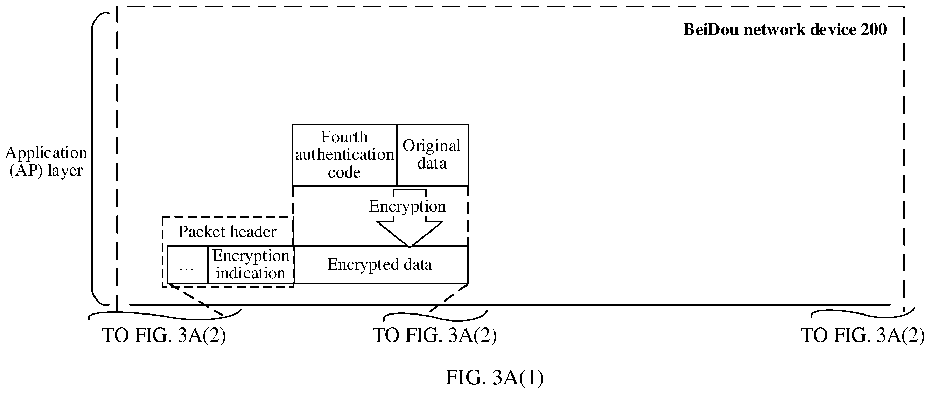

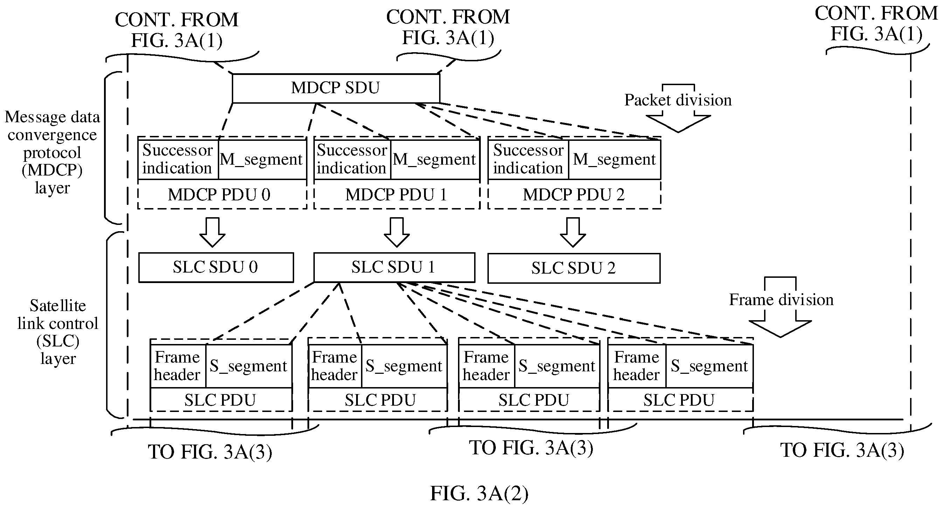

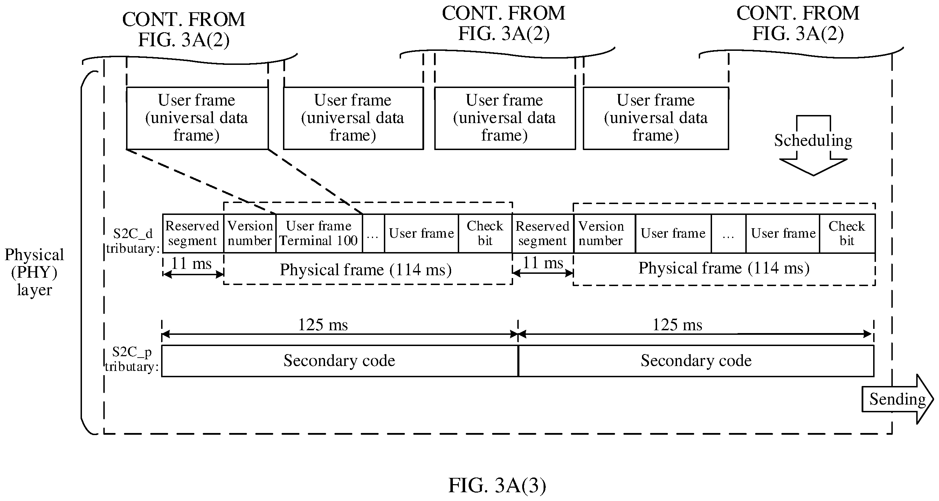

FIG. 3A(1) to FIG. 3A(3) are a schematic diagram of a protocol encapsulation architecture of outbound data in a satellite communication system 10 according to an embodiment of this application.

As shown in FIG. 3A(1) to FIG. 3A(3), transmission protocol layers in a satellite network device 200 may be divided into an application layer, a message data convergence protocol layer, a satellite link control layer, and a physical layer.

When the satellite network device 200 sends data to a terminal 100, a working procedure of a packet transfer protocol in the satellite network device 200 may be as follows:

At the AP layer, the satellite network device 200 generates a third data packet. The third data packet includes original data and a fourth authentication code. For example, the satellite network device 200 may generate the fourth authentication code based on the original data (also referred to as first data) and a specified key, concatenate the fourth authentication code and the original data, and perform processing (for example, add a packet header), to obtain the third data packet. The original data may include but is not limited to data, a text, a flag, a voice, an image, an animation, and the like that are sent by a third-party server (for example, a short message service center 25).

Optionally, the satellite network device 200 may generate the fourth authentication code based on only the original data.

In a possible implementation, the satellite network device 200 may encrypt, based on the specified key and an encryption algorithm, the original data and the fourth authentication code that are concatenated together, to obtain encrypted data. The satellite network device 200 may add a packet header in front of the encrypted data, to obtain the third data packet. The packet header may include but is not limited to an encryption indication field. The encryption indication field may indicate the encryption algorithm used by the satellite network device 200 to encrypt data.

Optionally, before encrypting the fourth authentication code and the original data that are concatenated together, the satellite network device 200 may first compress the fourth authentication code and the original data that are concatenated together. It may be understood that the packet header may further include a compression indication field. The compression indication field may indicate a compression algorithm used by the satellite network device 200 to compress data.

Further, optionally, the satellite network device 200 may compress the fourth authentication code and the original data that are concatenated together, to obtain compressed data. The satellite network device 200 may add the compression indication field in front of the compressed data, and then encrypt, by using the specified key, the compressed data to which the compression indication field is added, to obtain encrypted data.

In a possible implementation, the satellite network device 200 may encrypt only the original data, to obtain encrypted data. The satellite network device 200 may add packet header information in front of the encrypted data, to obtain the third data packet. The packet header information may include but is not limited to an encryption indication field. Finally, the satellite network device 200 adds the fourth authentication code to the third data packet, to obtain the third data packet including the first authentication code and the encrypted data.

At the MDCP layer, the satellite network device 200 may obtain, through an inter-layer interface, the third data packet delivered by the AP layer, and use the third data packet as an MDCP SDU. The satellite network device 200 may split the MDCP SDU into one or more pieces of MDCP segment data (M segment), and add a successor indication field to a header of each piece of MDCP segment data, to obtain an MDCP PDU. In other words, the MDCP PDU includes M_segment and the successor indication field. The successor indication field may indicate a sequence of the current MDCP PDU in the same MDCP SDU, for example, whether the current MDCP PDU is a unique PDU, whether there is an MDCP PDU behind the current MDCP PDU, or whether the current MDCP PDU is the first MDCP PDU.

For example, a data length of the successor indication field may occupy 2 bits (bit). A meaning of a value of the successor indication field may be as follows:

01: indicating that the MDCP PDU is a start MDCP PDU in a plurality of MDCP PDUs in the MDCP SDU;
10: indicating that the MDCP PDU is an intermediate MDCP PDU in the plurality of MDCP PDUs in the MDCP SDU, namely, another MDCP PDU other than the start MDCP PDU and the last MDCP PDU in the MDCP SDU;
11: indicating that the MDCP PDU is the last MDCP PDU in the plurality of MDCP PDUs in the MDCP SDU; and
00: indicating that the MDCP PDU is a unique MDCP PDU in the MDCP SDU.

It should be noted that the successor indication field is merely an example, and does not constitute a specific limitation on this embodiment of this application.

At the SLC layer, the satellite network device 200 may obtain, through an inter-layer interface, the MDCP PDUs delivered by the MDCP layer, and use the MDCP PDUs as SLC SDUs. The satellite network device 200 may segment the SLC SDU into one or more (for example, four) pieces of SLC segment data (S_segment), and add frame header information to a header of each S_segment, to obtain an SLC PDU. The frame header information may include but is not limited to a user ID field, a total frame quantity field, and a frame sequence number field. The user ID field may be used to identify a receiving device (for example, the terminal 100), and a value of the user ID field is an ID number of the receiving device. For detailed descriptions of the total frame quantity field and the frame sequence number field, refer to the foregoing embodiment in FIG. 3A(1) to FIG. 3A(3). Details are not described herein again. It should be noted that herein, the SLC PDU may be referred to as a fourth data packet. The satellite device 200 may process the third data packet into at least one fourth data packet at the MDCP layer and the SLC layer. Alternatively, the MDCP segment may be referred to as a fourth data packet, and the satellite device 200 may process the third data packet into at least one fourth data packet at the MDCP layer.

At the PHY layer, the satellite network device 200 may obtain, through an inter-layer interface, SLC PDUs delivered by the SLC layer, and use the SLC PDUs as user frames. The satellite network device 200 may concatenate user frames (also referred to as data frames) of one or more users together, and then add a frame header (for example, a version number) and a check bit, to obtain a physical frame. The satellite network device 200 may perform a sending processing (for example, encoding, modulation, and spreading) operation on the physical frame, to obtain encoded data of a message tributary (an S2C_d tributary). The satellite network device 200 may combine the encoded data of the S2C_d tributary and pilot data (also referred to as a secondary code) of a pilot tributary (an S2C_p tributary) into pilot encoded data, namely, outbound data, and sends the outbound data to a satellite 21. The satellite 21 relays the outbound data to one or more terminals. It may be understood that the pilot data of the S2C_p tributary is related to a satellite beam. When the satellite beam is known information, the pilot data of the S2C_p tributary is also known, and does not need to be decoded. The encoded data of the S2C_d tributary needs to be decoded.

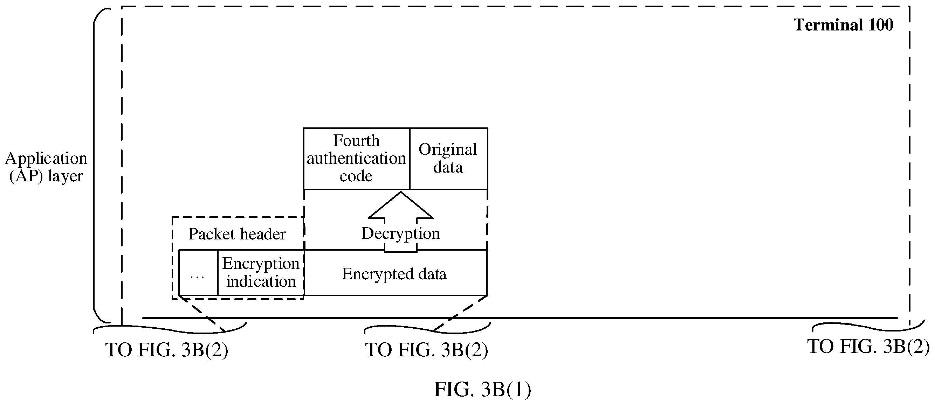

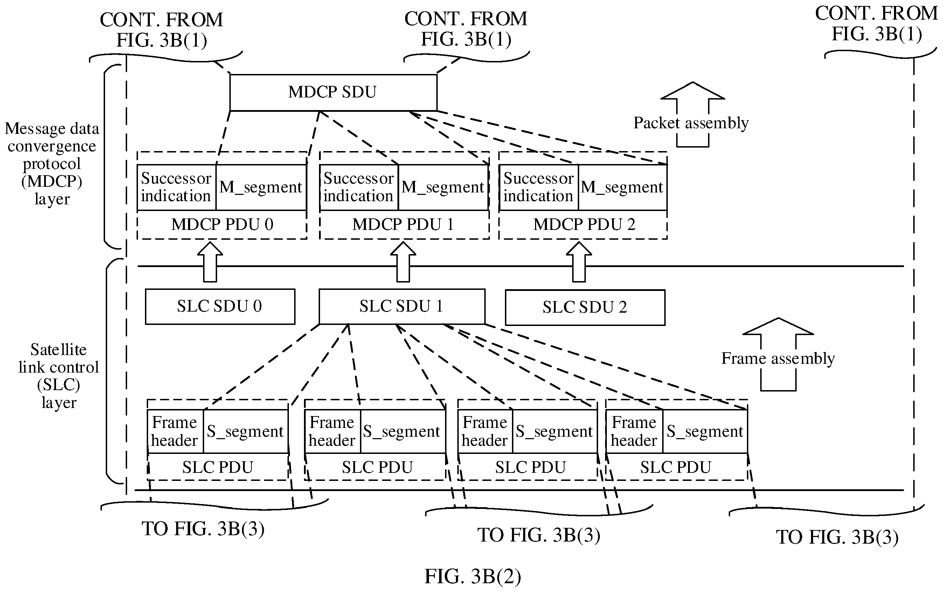

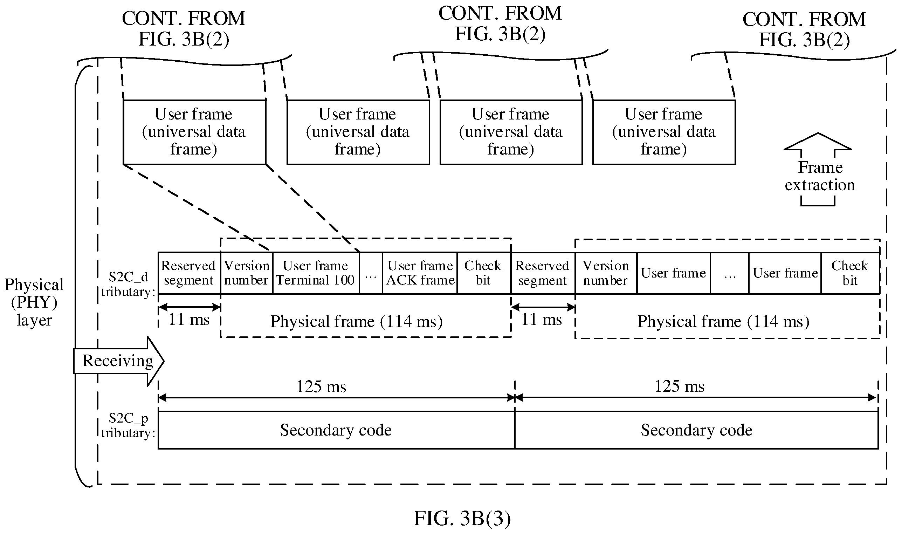

FIG. 3B(1) to FIG. 3B(3) are a schematic diagram of a protocol parsing architecture of outbound data in a satellite communication system 10 according to an embodiment of this application.

As shown in FIG. 3B(1) to FIG. 3B(3), transmission protocol layers in a terminal 100 may be divided into an application layer, a message data convergence protocol layer, a satellite link control layer, and a physical layer.

At the PHY layer, the terminal 100 may capture encoded data of an S2C_d tributary based on a secondary code that is of an S2C_p tributary and that is sent by a satellite network device 200. After capturing the encoded data of the S2C_d tributary, the terminal 100 may perform a receiving processing (for example, despreading, demodulation, and decoding) operation on the encoded data of the S2C_d tributary, to obtain a physical frame. The terminal 100 may extract, from the physical frame, user frames belonging to the terminal 100. The terminal 100 may deliver the user frames to the SLC layer through an inter-layer interface, and use the user frames as SLC PDUs at the SLC layer.

At the SLC layer, when the user frames received by the terminal 100 are universal data frames, the terminal 100 may concatenate, into one SLC SDU, SLC PDUs belonging to a same SLC SDU. The terminal 100 may deliver the SLC SDU to the MDCP layer through an inter-layer interface, and use the SLC SDU as an MDCP PDU at the MDCP layer. When the user frames received by the terminal 100 are ACK frames, the terminal 100 may retransmit data/send a next SLC SDU based on a value of a bitmap field.

At the MDCP layer, the terminal 100 may concatenate, into one MDCP SDU, one or more MDCP PDUs whose packet headers are removed. The terminal 100 may deliver the MDCP SDU to the AP layer through an inter-layer interface, and use the MDCP SDU as a third data packet received at the AP layer. In this case, the SLC layer and the MDCP layer of the terminal 100 process at least one fourth data packet (SLC PDU), to obtain the third data packet.

At the AP layer, the terminal 100 may generate a third authentication code based on a specified key and the third data packet, and determine a receiving status of the third data packet based on the third authentication code. Specifically, the terminal 100 may obtain original data in the third data packet, and then generate the third authentication code based on the specified key and the original data. The terminal 100 may obtain a fourth authentication code in the third data packet, and determine the receiving status of the third data packet by determining, through comparison, whether the fourth authentication code is the same as the third authentication code. When the fourth authentication code is the same as the third authentication code, the terminal 100 determines that the third data packet is successfully received. That is, the terminal 100 determines that the original data in the third data packet is data sent by the satellite network device 200, and the terminal 100 may perform a corresponding operation on the original data (for example, display the original data on a display screen of the terminal 100 in a form of an SMS message). When the fourth authentication code is different from the third authentication code, the terminal 100 determines that the third data packet fails to be received. That is, the terminal 100 determines that the original data in the third data packet is not data sent by the satellite network device 200, and the terminal 100 may discard the third data packet.

Optionally, the terminal 100 may generate the third authentication code based on only the original data in the third data packet.

In a possible implementation, the third data packet includes encrypted data, and the encrypted data includes an encrypted fourth authentication code and encrypted original data. The terminal 100 may determine, based on an encryption indication field of the third data packet, an encryption algorithm used by the satellite network device 200, and then decrypt the encrypted data based on the specified key and the encryption algorithm, to obtain the original data and the fourth authentication code. The terminal 100 may generate the third authentication code based on the specified key and the original data obtained through decryption.

Optionally, after decrypting the encrypted data, the terminal 100 may obtain compressed data. After decompressing the compressed data, the terminal 100 obtains the fourth authentication code and the original data.

In a possible implementation, the third data packet includes encrypted data and the fourth authentication code. The terminal 100 may directly extract the fourth authentication code in the third data packet. The terminal 100 may perform a decryption operation on the encrypted data based on the specified key and an encryption indication field in packet header information, to obtain the original data. Then, the terminal 100 obtains the third authentication code based on the original data and the specified key.

In this embodiment of this application, the foregoing protocol processing process is merely an example for description, and a specific protocol processing operation is not limited in this application.

The following describes a transmission method in a satellite communication system according to an embodiment of this application.

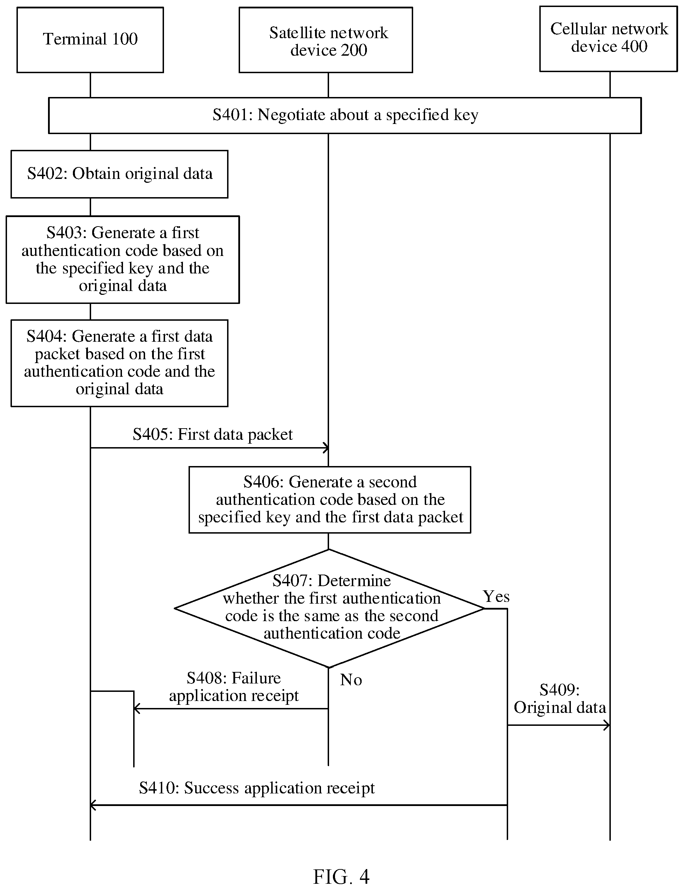

FIG. 4 is a schematic diagram of an authentication verification procedure during inbound transmission in a satellite communication system according to an embodiment of this application.

S401: A terminal 100, a satellite network device 200, and a cellular network device 400 negotiate about a specified key.

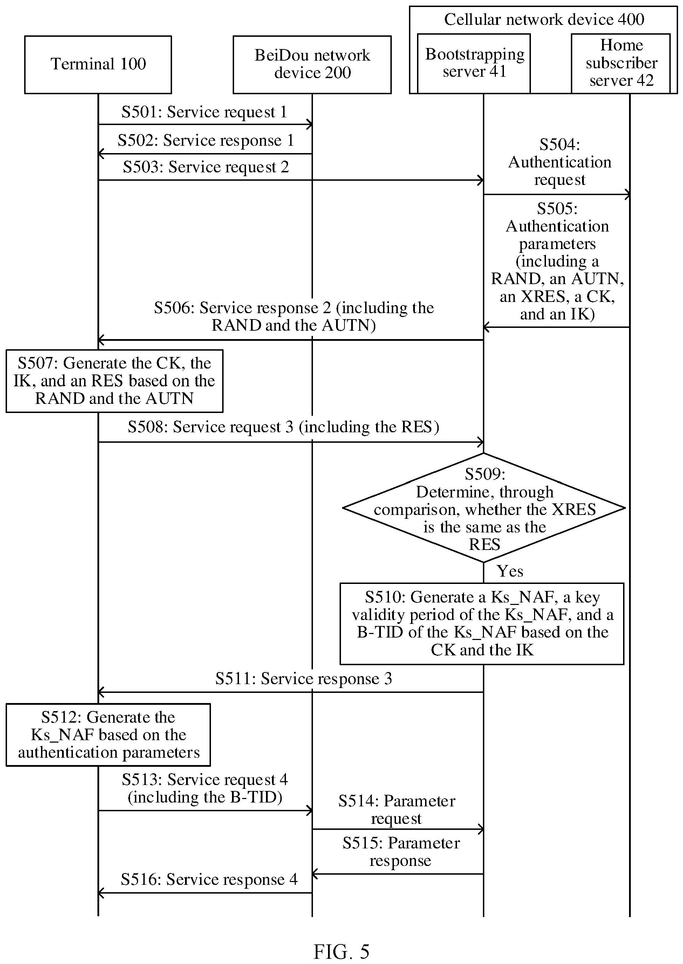

Specifically, for detailed descriptions of negotiating about the specified key, refer to the embodiment in FIG. 5. Details are not described herein again. After obtaining the specified key by using the cellular network device 400, the terminal 100 and the satellite network device 200 may store the specified key. The terminal 100 and the satellite network device 200 may encrypt/decrypt data by using the specified key.

In a possible implementation, the specified key obtained by the terminal 100 and the satellite network device 200 in a cellular network can be used within only preset time (for example, 15 days), and available time of the specified key may be referred to as a specified key validity period. After the specified key validity period ends, the terminal 100 and the satellite network device 200 need to return to the cellular network to update the specified key and the specified key validity period.

S402: The terminal 100 obtains original data.

The original data may include but is not limited to data (such as text data, image data, audio data, or video data) entered by a calling user (a user of the terminal 100), a called user quantity indication, a called user ID, location information of the terminal 100, and the like.

In some embodiments, after receiving first input of the calling user, the terminal 100 may obtain the original data in response to the first input, and send the original data to the satellite network device 200. In this embodiment of this application, the input may include but is not limited to a gesture, a voice, and the like. The gesture may include a gesture (for example, tapping) of directly touching a display screen of the terminal 100 and a floating gesture of not directly touching the display screen.

S403: The terminal 100 generates a first authentication code based on the specified key and the original data.

The terminal 100 may generate the first authentication code based on the specified key and the original data by using a specified algorithm. For example, the terminal 100 may obtain the first authentication code for the specified key and the original data by using algorithms approved by the State Password Administration Committee Office.

S404: The terminal 100 obtains a first data packet based on the first authentication code and the original data.

The terminal 100 may concatenate the first authentication code and the original data together, to obtain and encrypt, by using the specified key, the first authentication code and the original data that are concatenated together, to obtain encrypted data. The terminal 100 may add packet header information in front of the encrypted data, to obtain the first data packet. The packet header information may include but is not limited to an encryption indication field. The encryption indication field may indicate an encryption algorithm used by the terminal 100. A length of the encryption indication field may be 2 bits. For example, when a value of the encryption indication field is 00, the sending device is indicated not to use an encryption algorithm. When a value of the encryption indication field is 01, the sending device is indicated to use a hash algorithm in the algorithms approved by the State Password Administration Committee Office.

S405: The terminal 100 may send the first data packet to the satellite network device 200.

Specifically, for descriptions of a specific procedure in which the terminal 100 sends data to the satellite network device 200, refer to the foregoing embodiment in FIG. 2A(1) and FIG. 2A(2). Details are not described herein again. It should be noted that in a process in which the terminal 100 sends the first data packet to the satellite network device 200, the first data packet includes a user identifier. For example, frame header information added by the terminal 100 at an SLC layer may include a user ID field. The user ID field may be used to identify the terminal 100. A value of the user ID field is an ID number of the terminal 100. The ID number of the terminal 100 may indicate a parameter such as the specified key corresponding to the terminal 100.

S406: The satellite network device 200 may generate a second authentication code based on the specified key and the first data packet.

The satellite network device 200 may decrypt the first data packet by using the specified key, to obtain the first authentication code and the original data. The satellite network device 200 may determine, based on the encryption indication field in a packet header, the encryption algorithm used by the terminal 100. The satellite network device 200 may use the specified key to decrypt the encrypted data in the first data packet by using a decryption algorithm corresponding to the encryption algorithm, to obtain the first authentication code and the original data. For descriptions of a specific procedure in which the satellite network device 200 receives data from the terminal 100, refer to the foregoing embodiment in FIG. 2B(1) and FIG. 2B(2). Details are not described herein again.

The satellite network device 200 may generate the second authentication code based on the specified key and the original data by using a specified algorithm (for example, a grouping encryption algorithm). The specified algorithm used by the satellite network device 200 to generate the second authentication code is the same as the specified algorithm used by the terminal 100 to generate the authentication code.

S407: The satellite network device 200 determines whether the first authentication code is the same as the second authentication code.

The satellite network device 200 may determine a receiving status of the first data packet based on the second authentication code.

When the satellite network device 200 determines that the first authentication code is different from the second authentication code, the satellite network device 200 determines that the first data packet fails to be received, and may discard the first data packet. Optionally, the satellite network device 200 may perform step S408.

When the satellite network device 200 determines that the first authentication code is the same as the second authentication code, the satellite network device 200 determines that the first data packet is successfully received. Optionally, the satellite network device 200 may perform step S409.

S408: The satellite network device 200 sends a failure application receipt to the terminal 100.

When the satellite network device 200 determines that the first authentication code is different from the second authentication code, the satellite network device 200 may further generate the failure application receipt. The failure application receipt indicates that the satellite network device 200 fails to receive the first data packet. The satellite network device 200 may send the failure application receipt to the terminal 100.

S409: The satellite network device 200 may send the original data to the cellular network device 400.

The satellite network device 200 may send the original data to the cellular network device 400 (for example, a short message service center 25). The cellular network device 400 may forward the original data to a called user (for example, a terminal 300) in a specified format (for example, an SMS message). Optionally, the satellite network device 200 may further perform step S410.

S410: The satellite network device sends a success application receipt to the terminal 100.

When the satellite network device 200 determines that the first authentication code is the same as the second authentication code, the satellite network device 200 may further generate the success application receipt. The success application receipt indicates that the satellite network device 200 successfully receives the first data packet. The satellite network device 200 may send the success application receipt to the terminal 100.

The following describes a flowchart of a method for obtaining a specified key according to an embodiment of this application.

In a possible implementation, a terminal 100 and a satellite network device 200 may obtain a specified key through negotiation in a cellular network. In this way, the terminal 100 can also perform data encryption and decryption in a satellite network by using the specified key, and does not need to negotiate with the satellite network device about the specified key, thereby ensuring data security while saving an air interface resource of the satellite network device.

Specifically, the terminal 100 and the satellite network device 200 may obtain the specified key by using a generic bootstrapping architecture (generic bootstrapping architecture, GBA) procedure. For example, as shown in FIG. 5, specific steps in which the terminal 100 and the satellite network device 200 obtain the specified key are as follows:

S501: The terminal 100 sends a service request 1 to the satellite network device 200.

When the terminal 100 is in a cellular network, the terminal 100 may send the service request 1 to the satellite network device 200 in the cellular network. The service request 1 may include an identifier of the terminal 100, and the identifier is used to identify an identity of the terminal 100. For example, the service request 1 may be a hypertext transfer protocol get (hypertext transfer protocol GET, HTTP GET) request.

S502: The satellite network device 200 sends a service response 1 to the satellite network device 200.

After receiving the service request 1, after determining, based on the identifier of the terminal 100, that a specified key of the terminal 100 is not stored in the satellite network device 200 or the specified key of the terminal 100 has expired, the satellite network device 200 may send the service response 1 to the terminal 100. The service response 1 may indicate the terminal 100 to obtain a specified key by using a cellular network device 400.

S503: The terminal 100 sends a service request 2 to a bootstrapping server 41.

After receiving the service response 1, the terminal 100 may send the service request 2 to the bootstrapping server 41. The service request 2 may include the identifier of the terminal 100. The service request 2 may indicate the cellular network device 400 to send, to the terminal 100, parameters, such as a random RAND and an authentication token AUTN, required for generating the specified key. For example, the service request 2 may be a hypertext transfer protocol authentication and key agreement (authentication and key agreement, AKA) request.

S504: The bootstrapping server 41 sends an authentication request to a home subscriber server 42.

After receiving the service request 2, the bootstrapping server 41 may send the authentication request to the home subscriber server 42. The authentication request includes the identifier of the terminal 100. The authentication request may indicate the home subscriber server 42 to feed back authentication parameters of the terminal 100. For descriptions of the authentication parameters, refer to the foregoing embodiment shown in FIG. 1A. Details are not described herein again. For example, the authentication request may be a multimedia authentication request (multimedia authentication request, MAR).

S505: The home subscriber server 42 sends the authentication parameters (including the RAND, the AUTN, an XRES, a CK, and an IK) to the bootstrapping server 41.

After receiving the authentication request, the home subscriber server 42 may obtain the authentication parameters of the terminal 100 based on the identifier of the terminal 100. The home subscriber server 42 pre-stores the identifier of the terminal 100 and the CK and the IK that correspond to the identifier. The home subscriber server 42 may further obtain the random RAND by using a random generator. The home subscriber server 42 may generate the AUTN and the XRES based on the RAND, the IK, and the CK. The home subscriber server 42 may send the generated authentication parameters to the bootstrapping server 41. The identifier of the terminal 100 may include but is not limited to a mobile number, an IP multimedia private identity (IP multimedia private identity, IMPI), a temporary IP multimedia private identity (Temporary IP Multimedia Private Identity, TMPI), and the like of the terminal 100.

S506: The bootstrapping server 41 sends a service response 2 to the terminal 100.

After receiving the authentication parameters, the bootstrapping server 41 may send the service response 2 to the terminal 100. The service response 2 may include the RAND and the AUTN.

S507: The terminal 100 generates the CK, the IK, and an RES based on the RAND and the AUTN.

After receiving the RAND and the AUTN, the terminal 100 may obtain the CK, the IK, and the RES through calculation based on the RAND and the AUTN by using a SIM card. An algorithm used by the terminal 100 to generate the RES is the same as an algorithm used by the cellular network device 400 to generate the XRES.

S508: The terminal 100 sends a service request 3 (including the RES) to the bootstrapping server 41.

After generating the RES, the terminal 100 may send the service request 3 to the cellular network device 400. The service request 3 includes the RES. For example, the service request 3 may be an HTTP GET request whose header field includes the RES.

S509: The bootstrapping server 41 may determine, through comparison, whether the XRES is the same as the RES.

After receiving the service request 3 of the terminal 100, the bootstrapping server 41 may verify the identity of the terminal 100 by determining, through comparison, whether the RES is the same as the XRES. If the bootstrapping server 41 determines that the RES is the same as the XRES, the bootstrapping server 41 may perform step S510 and step S511.

S510: The bootstrapping server 41 may generate a Ks_NAF, a specified key validity period of the Ks_NAF, and a bootstrapping transaction identifier (bootstrapping transaction identifier, B-TID) of the Ks_NAF based on the CK and the IK.

The bootstrapping server 41 may obtain the Ks_NAF through calculation based on the CK and the IK by using an algorithm for generating the specified key. In addition, the bootstrapping server 41 may generate the B-TID and the specified key validity period that correspond to the Ks_NAF. The Ks_NAF is the specified key of the terminal 100, and may be used to encrypt/decrypt data during data transmission with the satellite network device 100. The B-TID may be used by the satellite network device 200 to obtain the Ks_NAF of the terminal 100 from the bootstrapping server 41. The specified key validity period may indicate validity time of the specified key (Ks_NAF).

S511: The bootstrapping server 41 may send a service response 3 to the terminal 100.

The service response 3 may include the specified key validity period and the B-TID. The service response 3 may indicate the terminal 100 to generate the specified key by using the parameters in the service response 2.

S512: The terminal 100 may generate the Ks_NAF based on the authentication parameters.

The terminal 100 may obtain the Ks_NAF through calculation based on the CK and the IK by using an algorithm for generating the specified key. The algorithm used by the terminal 100 to generate the specified key is the same as the algorithm used by the cellular network device 400. Within the specified key validity period, in a data transmission process, the terminal 100 may obtain the Ks_NAF (specified key) through calculation by using the authentication parameters, to perform a data encryption/decryption operation.

S513: The terminal 100 sends a service request 4 (including the B-TID) to the satellite network device 200.

After obtaining the Ks_NAF through calculation, the terminal 100 may send the service request 4 to the satellite network device 200. The service request 4 may include the B-TID. The service request 4 may indicate the satellite network device 200 to obtain the specified key of the terminal 100.

S514: The satellite network device 200 sends a parameter request to the bootstrapping server 41.

After receiving the service request 4, the satellite network device 200 may send the parameter request to the bootstrapping server 41. The parameter request may include the B-TID. For example, the parameter request may be a bootstrapping-info-request (bootstrapping-info-request, BIR).

S515: The bootstrapping server 41 sends a parameter response to the satellite network device 200.

The bootstrapping server 41 may send the parameter response to the satellite network device 200 based on the B-TID of the terminal 100. The parameter response may include the Ks_NAF of the terminal 100 and the specified key validity period. Optionally, the bootstrapping server 41 may generate only the B-TID and the specified key validity period in step S515, and then generate the specified key Ks_NAF after receiving the parameter request of the satellite network device 200.

S516: The satellite network device 200 sends a service response 4 to the terminal 100.

The satellite network device 200 may send the service response 4 to the terminal 100 after receiving the specified key returned by the bootstrapping server 41. The service response 4 may indicate that the terminal 100 and the satellite network device 200 can perform a data encryption/decryption operation within the specified key validity period by using the Ks_NAF stored by the terminal 100 and the satellite network device 200. It may be understood that the Ks_NAF is a specified key obtained by the terminal 100 and the satellite network device 200 by using the cellular network device 400.

In this way, the specified key is updated in the cellular network, and a validity period is preset for the specified key. In a satellite network, the terminal 100 and the satellite network device 200 can perform a data encryption/decryption operation by using the specified key within the validity period. This saves an air interface resource that is of a satellite communication system and that is required for negotiating about the specified key, and also reduces steps of generating the specified key.

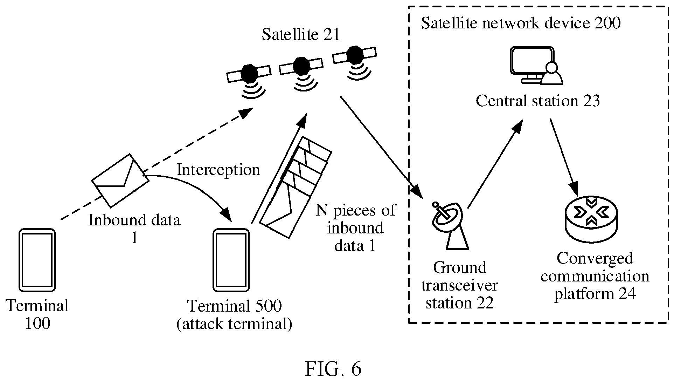

However, because a sending device and a receiving device generate authentication codes based on only original data, when the receiving device repeatedly receives a message of the sending device, the repeated message may be repeatedly parsed and processed, and the repeated message may be charged for a plurality of times. As shown in FIG. 6, when the sending device is a terminal 100 and the receiving device is a satellite network device 200, if an inbound message of the terminal 100 is intercepted by an attack terminal, and the inbound message is repeatedly sent to the satellite network device 200, a computing resource of the satellite network device 200 may be occupied, and a message fee of the terminal 100 may be repeatedly calculated.

Therefore, an embodiment of this application provides a transmission method. A sending device may generate an authentication code A based on information A and original data. The sending device may obtain a data packet based on the authentication code A and the original data. The sending device may send the data packet to a receiving device in a first transmission system. After receiving the data packet, the receiving device may generate an authentication code B based on the data packet and information B. The receiving device may determine a receiving status of the first data packet based on the authentication code B. The information A and the information B are information updated by the sending device and the receiving device based on transmission, for example, may be time information and updated with time, or may be information about quantities of received data packets and respectively updated by the sending device and the receiving device based on a quantity of sent data packets and a quantity of received data packets.

In this way, because an authentication code A in a repeatedly sent data packet is generated based on information A existing before an update, an authentication code B generated by a receiving device based on updated information B is different from the authentication code B in the repeatedly sent data packet. This indicates that the data packet may be forwarded by an invalid terminal. The receiving device determines that the data packet fails to be received, so that problems of repeated processing and charging do not occur.

In a possible implementation, information A of a sending device is sending time information, and information B of a receiving device is receiving time information. In this way, when a difference between sending time of the sending device and receiving time of the receiving device exceeds a preset minimum time granularity, the information A is different from the information B, that is, an authentication code A is different from an authentication code B. Therefore, the receiving device cannot parse a data packet sent by the sending device, so that problems of repeated processing and charging do not occur.

Specifically, a sending device may generate an authentication code A based on information A and original data. The sending device may send, to a receiving device in a first transmission system, a data packet including the authentication code A. The information A is sending time information. After receiving the data packet, the receiving device may generate an authentication code B based on information B and the data packet. The receiving device may determine a receiving status of the data packet based on the authentication code B. The information B is receiving time information. In this way, when an interval between time at which the sending device generates the authentication code and time at which the receiving device receives the data packet exceeds a minimum time granularity, the receiving device cannot parse the data packet, so that problems of repeated processing and charging do not occur.

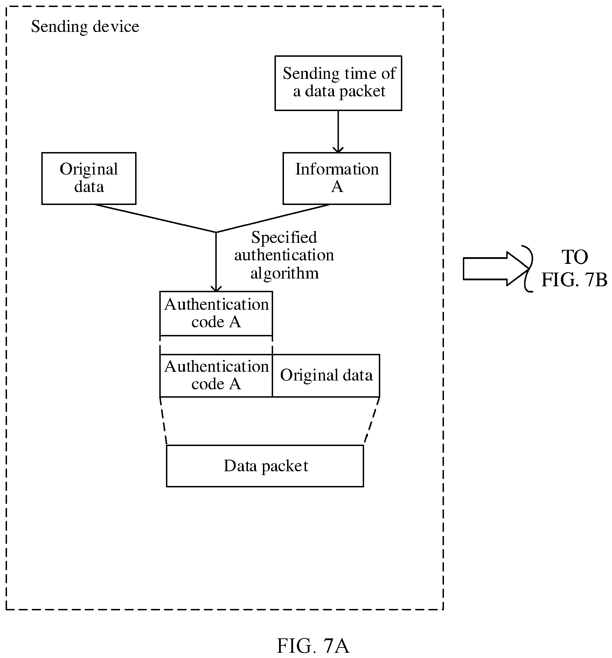

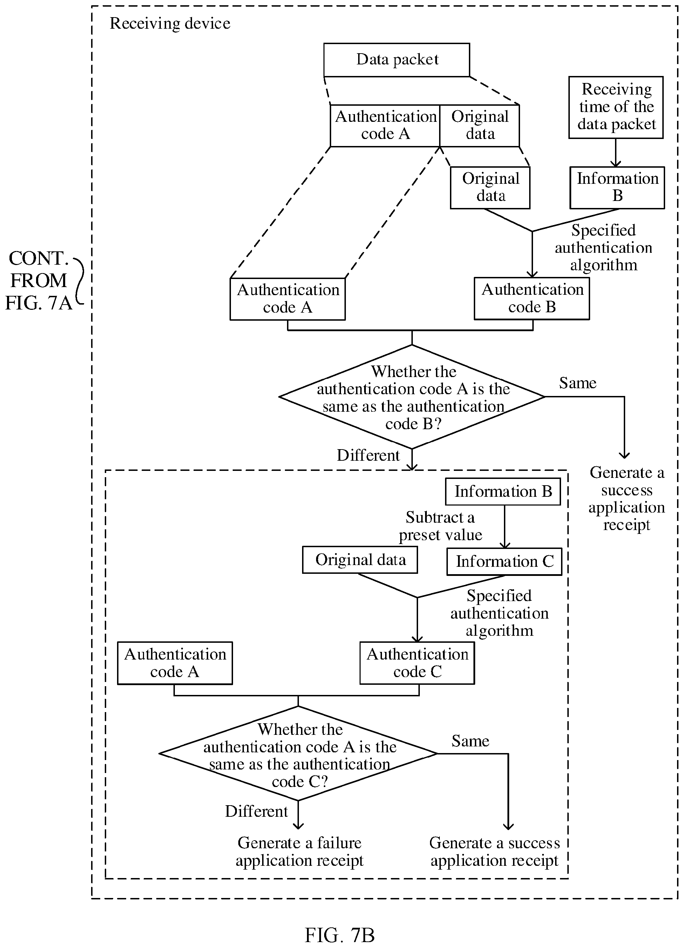

FIG. 7A and FIG. 7B are a schematic diagram of a processing procedure of a transmission method according to an embodiment of this application.

1. A sending device generates an authentication code A based on original data and information A.

The information A is sending time information, and the information A may indicate sending time of a data packet.

(1) The sending device obtains the sending time of the data packet.

In an inbound process, the sending time of the data packet may be any time in an entire period from time at which the sending device (a terminal 100) obtains the original data to time, at which the sending device generates the authentication code A, plus offset time (an offset for short). The time at which the terminal 100 obtains the original data may be time at which the terminal 100 receives input of a satellite message sent by a calling user. In this case, the original data includes data entered by the calling user. The time at which the terminal 100 generates the authentication code A may be current time obtained by the terminal 100 by running a program statement for obtaining the sending time of the first data packet (for example, by using a get current time function getCurrentTime()). The terminal 100 may determine the sending time of the data packet based on positioning timing of a satellite. Alternatively, the sending time of the first data packet may be represented as time at which the sending device (the terminal 100) delivers the first data packet to an MDCP layer at an AP layer. Alternatively, the sending time of the first data packet may be represented as time that is estimated by the sending device (the terminal 100) and at which the sending device (the terminal 100) sends the first data packet to a receiving device (a satellite network device 200).

In an outbound process, the sending time of the data packet may be any time in a period from time at which the sending device (the satellite network device 200) obtains the original data to time, at which the sending device generates the authentication code A, plus an offset. The time at which the satellite network device 200 obtains the original data may be time at which the satellite network device 200 receives a service request sent by the terminal 100, or the time at which the satellite network device 200 obtains the original data may be time at which the satellite network device 200 receives a message sent to the terminal 100, time at which the satellite network device 200 sends data to the terminal 100, or the time, at which the satellite network device 200 generates the authentication code A, plus the offset, and is used to estimate time at which an SLC layer, an MDCP layer, or a physical layer of the satellite network device 200 sends data. The time at which the satellite network device 200 generates the authentication code A may be current time obtained by the satellite network device 200 by running a program statement for obtaining the sending time of the first data packet (for example, by a converged communication platform 24 in the satellite network device 200 by using a get current time function getCurrentTime()). A ground transceiver station 22 or a central station 23 in the satellite network device 200 may determine the sending time of the data packet based on a satellite 21.

Optionally, in the outbound process, the satellite network device 200 may obtain scheduling time of the data packet based on an outbound data volume and an outbound air interface resource, and the satellite network device 200 may estimate outbound time of the data packet based on the scheduling time of the data packet. That is, the sending time of the data packet of the satellite network device 200 may be the estimated outbound time of the data packet. For example, the converged communication platform 24 in the satellite network device 200 receives schedulable time indicated by the ground transceiver station 22 or the central station 23.

In some embodiments, the sending time of the data packet may be represented as time at which the sending device delivers the data packet to the MDCP layer at an AP layer.

(2) The sending device generates the information A based on the sending time of the data packet.

After obtaining the sending time of the data packet, the sending device may encode the time based on a preset or configured minimum time granularity, to obtain the information A. For example, a time value in front of the preset minimum time granularity in the sending time of the data packet may be extracted, and encoding (for example, binary-decimal encoding or decimal-to-binary conversion) may be performed on the time value, to obtain the information A. For inbound transmission, the sending device, namely, the terminal 100, may encode the time based on a preset minimum time granularity or a minimum time granularity configured for the terminal 100 in a cellular network or a WLAN or in a satellite network, to obtain the information A. For outbound transmission, the sending device, namely, the satellite network device 200, generates the information A. For example, the converged communication platform 24 in the satellite network device 200 performs encoding based on time provided by the ground transceiver station 22 or the central station 23 and a preset or configured minimum time granularity, to generate the information A. For another example, the ground transceiver station or the central station in the satellite network device 200 performs encoding based on the time and a preset or configured minimum time granularity, to obtain the information A, and then notifies the converged communication platform 24 of the information A.

The preset or configured minimum time granularity may be a minute, half a minute, half an hour, or the like. This is not limited in this application.

For example, the sending time of the data packet is 2021-08-25 17:23:51. When the minimum time granularity is a minute, a time value that may be obtained by the sending device through extraction based on the preset minimum time granularity is 202108251723.

For another example, when the minimum time granularity is half a minute, a time value that may be obtained by the sending device through extraction based on the preset minimum time granularity is as follows: For example, the sending device may record, as 0.0 minutes, time that does not exceed 30s, and record, as 0.5 minutes, time that exceeds 30s. In this case, the time value obtained based on the sending time of the data packet is 202108251723.5. For another example, the sending device may record, as 00 seconds, time that does not exceed 30s, and record, as 30 seconds, time that exceeds 30s. In this case, the time value obtained based on the sending time of the data packet is 20210825172330. For another example, the sending device may directly encode a time value in front of a minute to obtain binary data, and then add 1-bit data at the end of the obtained binary data, to indicate the first half minute or the last half minute (for example, 0 represents 1s to 30s, and 1 represents 31s to 60s). For another example, the sending device may divide a value of the sending time of the data packet by a minimum granularity, to obtain an integer value, where the integer value is a time value obtained by the sending device. In this case, the time value obtained by the sending device based on the sending time is 404216503446. It may be understood that actual sending time of the data packet is a product of the time value and a value of the minimum time granularity. In this way, time information may be identified by using an integer quantity of minimum granularities.

For example, when an encoding manner of the sending device is 8421 encoding in the binary-decimal encoding, the sending device may learn, in the 8421 encoding manner based on a time value 202108251723, that a value of the information A is 0010 0000 0010 0001 0000 1000 0010 0101 0001 0111 0010 0011. When an encoding manner of the sending device is the decimal-to-binary conversion manner, the sending device may learn, through conversion based on a time value 202108251723, that a value of the information A is 10111100001110100101110010111001001011.

It should be noted that the foregoing value of the preset minimum time granularity and selection of the encoding manner are merely examples. This is not specifically limited in this application.

In a possible implementation, the sending device may alternatively obtain a time value of one or more specific time granularities in the sending time of the data packet, and then perform encoding, to obtain the information A. For example, when the sending time of the data packet is 2021-08-25 17:23:51, and the specific time granularities include a month, a minute, and an hour, a time value obtained by the sending device is 082317. (3) The sending device obtains the authentication code A based on the information A and the original data.

The sending device may obtain the authentication code A through calculation based on the information A and the original data by using a specified algorithm (for example, an SM3 hash algorithm).

Optionally, the sending device may obtain the authentication code A through calculation based on the information A, the original data, and a key by using the specified algorithm.

2. The sending device obtains the data packet based on the original data and the authentication code A.

The sending device may concatenate the authentication code A and the original data together, to obtain the data packet.

Optionally, the sending device may add packet header information in front of the authentication code A and the original data that are concatenated together, to obtain the data packet. The packet header information may include a service type indication and the like. The service type indication may indicate a service type (for example, a data packet for sending a message to user equipment in a cellular network, or a data packet for requesting data from the satellite network device 200) of the data packet.

In a possible implementation, the data packet may further include identification information used to identify the data packet, and the identification information may include but is not limited to a message ID field, a count value field, or a sequence number field of the data packet. The identifier may be used by the receiving device to identify the sent data packet. For example, the identification information may be added to an application receipt to indicate a receiving status of the data packet. The sending device may determine, by using the identification information in the application receipt, the receiving status of the data packet corresponding to the identification information.

3. The receiving device obtains the authentication code A and the original data based on the data packet.

After the receiving device receives the data packet sent by the sending device, the receiving device may obtain the authentication code A and the original data from the data packet. For descriptions of sending the data packet by the sending device and receiving the data packet by the receiving device during inbound, refer to the foregoing embodiments shown in FIG. 2A(1) and FIG. 2A(2) and FIG. 2B(1) and FIG. 2B(2). For descriptions of sending the data packet by the sending device and receiving the data packet by the receiving device during outbound, refer to the foregoing embodiments shown in FIG. 3A(1) to FIG. 3A(3) and FIG. 3B(1) to FIG. 3B(3). Details are not described herein again. It should be noted that the sending device may process the data packet into at least one sub data packet at an MDCP layer and an SLC layer, or the sending device may process the data packet into at least one sub data packet at the MDCP layer. In the inbound process, the data packet may be considered as the foregoing first data packet in FIG. 2A(1) and FIG. 2A(2) or FIG. 2B(1) and FIG. 2B(2), and the sub data packet may be considered as the foregoing second data packet in FIG. 2A(1) and FIG. 2A(2) or FIG. 2B(1) and FIG. 2B(2). In the outbound process, the data packet may be considered as the foregoing third data packet in FIG. 3A(1) to FIG. 3A(3) or FIG. 3B(1) to FIG. 3B(3), and the sub data packet may be considered as the foregoing fourth data packet in FIG. 3A(1) to FIG. 3A(3) or FIG. 3B(1) to FIG. 3B(3).

4. The receiving device obtains information B.

The information B is receiving time information, and the information B may indicate receiving time of the data packet.

(1) The receiving device obtains the receiving time of the data packet.

The receiving time of the data packet may be time at which the receiving device obtains the $1^{st}$ sub data packet of the data packet, time at which the receiving device obtains the first sub data packet of the data packet minus an offset value, or any time in a period from the time at which the receiving device obtains the first sub data packet of the data packet minus the offset value to time at which the receiving device generates the authentication code B. The offset value may be set through configuration or based on a transmission delay (for example, 540 ms) or a processing delay.

In a specific case, the receiving time may be recorded by using an SLC layer and transferred to an AP layer by using an MDCP layer. The receiving device may record, at the SLC layer, time at which each SLC PDU (sub data packet) is received. When concatenating at least one SLC PDU at the SLC layer based on frame header information to obtain an SLC SDU, the receiving device may record earliest receiving time in receiving time of the at least one SLC PDU as receiving time of the SLC SDU, and upload the SLC SDU and the receiving time corresponding to the SLC SDU to the MDCP layer. After receiving, at the MDCP layer, the SLC SDU and the receiving time corresponding to the SLC SDU that are uploaded from the SLC layer, the receiving device may use the SLC SDU as an MDCP PDU at the MDCP layer. The receiving device may determine, based on a successor indication field, whether the current MDCP PDU is the first MDCP PDU in at least one MDCP PDU. For example, the successor indication field is 00 or 01. When the successor field indicates that data of the MDCP PDU is the first segment of a corresponding MDCP SDU, or the successor indication field indicates that data of the MDCP PDU is all data of a corresponding MDCP SDU, the receiving device reserves receiving time corresponding to the MDCP PDU, and uses the receiving time as receiving time of the MDCP SDU. The receiving device may upload the MDCP SDU and the receiving time of the MDCP SDU to the AP layer at the MDCP layer. The receiving device may use the MDCP SDU as the data packet at the AP layer. The receiving time corresponding to the MDCP SDU is the time at which the receiving device obtains the $1^{st}$ sub data packet of the data packet.

In another specific case, the receiving time may be recorded by using an SLC layer and transferred to an AP layer by using an MDCP layer. An obtaining manner is the same as that in the foregoing case, and details are not described herein again. An offset value is subtracted from time uploaded from the SLC layer. The offset value may be set through configuration or based on a transmission delay (for example, 540 ms).

In another specific case, the receiving time may be recorded by using an MDCP layer and transferred to an AP layer. The receiving device records, at the MDCP layer, time at which the first MDCP PDU is received. The MDCP layer may perform time recording based on a successor indication. For example, a successor indication field is 00 or 01. When the successor field indicates that data of the MDCP PDU is the first segment of a corresponding MDCP SDU, or the successor indication field indicates that data of the MDCP PDU is all data of a corresponding MDCP SDU, the receiving device reserves the receiving time corresponding to the MDCP PDU, and the receiving device uses the receiving time as receiving time of the MDCP SDU. The receiving device submits the receiving time to the AP layer. The receiving device may use the MDCP SDU as the data packet at the AP layer. The receiving time corresponding to the MDCP SDU is the time at which the receiving device obtains the 1st sub data packet of the data packet.

In another specific case, the receiving time may be recorded by using an MDCP layer and transferred to an AP layer. An obtaining manner is the same as that in the foregoing case, and details are not described herein again. An offset value is subtracted from time uploaded from the MDCP layer. The offset value may be set through configuration or based on a transmission delay (for example, 540 ms) or a processing delay.

In another specific case, the receiving time may be time at which an AP layer receives an MDCP SDU or time at which packet assembly of the MDCP SDU submitted from an MDCP layer is completed.

In another specific case, the receiving time may be time, at which an AP layer receives an MDCP SDU, minus an offset value, or time, at which packet assembly of the MDCP SDU submitted from the MDCP layer is completed, minus an offset value. The offset value may be set through configuration or based on a transmission delay (for example, 540 ms) or a processing delay. In another specific case, the receiving time may be current time obtained by running, when the receiving device calculates the authentication code B, a program statement for obtaining the sending time of the data packet (for example, by using a get current time function getCurrentTime()).

In another specific case, the receiving time may be current time, obtained by running, when the receiving device calculates the authentication code B, a program statement for obtaining the sending time of the data packet (for example, by using a get current time function getCurrentTime()), minus an offset value. The offset value may be set through configuration based on a transmission delay (for example, 540 ms) or a processing delay.

For inbound transmission, the receiving device is the satellite network device 200. The converged communication platform 24 in the satellite network device 200 bears processing of the AP layer, the ground transceiver station 22 or the central station 23 bears processing of the SLC layer and processing of the MDCP layer, and the converged communication platform 24 may request time information from the ground transceiver station 22 or the central station 23.

For outbound transmission, the receiving device is the terminal device 100.

(2) The receiving device generates the information B based on the receiving time of the data packet.

After obtaining the receiving time of the data packet, the receiving device may encode the time based on a preset or configured minimum time granularity, to obtain the information B. For example, a time value in front of the preset minimum time granularity in the receiving time of the data packet may be extracted, and encoding (for example, binary-decimal encoding or decimal-to-binary conversion) may be performed on the time value, to obtain the information B. For outbound transmission, the receiving device, namely, the terminal 100, may encode the time based on a preset minimum time granularity or a minimum time granularity configured for the terminal 100 in a cellular network or in a satellite network, to obtain the information B. For inbound transmission, the receiving device, namely, the satellite network device 200, generates the information B. For example, the converged communication platform 24 in the satellite network device 200 performs encoding based on receiving time information that is of the data packet and that is provided by the ground transceiver station 22 or the central station 23 and a preset or configured minimum time granularity, to generate the information B. For another example, the ground transceiver station or the central station in the satellite network device 200 performs encoding based on the recorded time and a preset or configured minimum time granularity, to obtain the information B, and then transmits the information B to the converged communication platform 24.

The preset minimum time granularity may be a minute, half a minute, half an hour, or the like. This is not limited in this application.

It should be noted that the minimum time granularity and an encoding manner used by the receiving device to generate the information B based on the receiving time of the data packet are the same as those used by the sending device to generate the information A. That is, for descriptions of generating the information B by the receiving device, refer to the foregoing descriptions of generating the information A by the sending device. Details are not described herein.

In a possible implementation, the receiving device may alternatively extract a time value of one or more specific time granularities in the receiving time of the data packet, and then perform encoding, to obtain the information B.

In a possible implementation, after obtaining the receiving time of the MDCP SDU at the MDCP layer, the receiving device may use the receiving time of the MDCP SDU as the receiving time of the data packet, generate the information B at the MDCP layer based on the receiving time of the data packet, and upload the MDCP SDU and the information B to the AP layer at the MDCP layer.

In a possible implementation, after obtaining the receiving time of the SLC SDU at the SLC layer, the receiving device may use the receiving time of the SLC SDU as the receiving time of the data packet, generate the information B at the SLC layer based on the receiving time of the data packet and minimum granularity information and upload the information B to the MDCP layer, and upload the MDCP SDU and the information B to the AP layer at the MDCP layer.

5. The receiving device generates the authentication code B based on the information B and the data packet.

The receiving device may obtain the authentication code B through calculation based on the information B and the original data in the data packet by using a specified algorithm (for example, the SM3 hash algorithm). The specified algorithm of the receiving device is the same as the specified algorithm of the sending device. For example, the sending device may add a specified algorithm indication to a packet header of the data packet, where the specified algorithm indication may indicate the specified algorithm used by the sending device; and the receiving device may determine, based on the specified algorithm indication in the received data packet, the specified algorithm indication used by the sending device. For another example, the sending device and the receiving device may negotiate about a used specified algorithm in a cellular network.

6. The receiving device determines the receiving status of the data packet based on the authentication code B.

The receiving device may determine the receiving status of the data packet by determining, through comparison, whether the authentication code A is the same as the authentication code B.

(1) When the authentication code B is the same as the authentication code A, the receiving device determines that the data packet is successfully received. The receiving device may perform a corresponding processing operation on the original data. For example, when the receiving device is the terminal 100, the receiving device may display the original data. When the receiving device is the satellite network device 200, the receiving device may forward the original data to user equipment (for example, a terminal 300) in a cellular network. Optionally, the receiving device may further generate a success application receipt and send the success application receipt to the sending device. The success application receipt may indicate that the receiving device successfully receives the data packet.

(2) When the authentication code B is different from the authentication code A, the receiving device may obtain information C based on the information B. Specifically, the receiving device may subtract a preset value (for example, 1) from the information B, to obtain the information C. The receiving device may obtain an authentication code C based on the information C and the original data by using a specified authentication algorithm. For example, on a basis that time corresponding to the information B is 2021-09-23 18:00, time corresponding to the information C obtained by subtracting the preset value is 2021-09-23 17:59. The authentication code C is generated based on time information corresponding to the information C. The receiving device may determine, through comparison, whether the authentication code C is the same as the authentication code A.

(3) When the authentication code A is the same as the authentication code C, the receiving device may determine that the data packet is successfully received. Optionally, the receiving device may further generate and send, to the sending device, a success application receipt. The success application receipt may indicate that the receiving device successfully receives the data packet.

(4) When the authentication code A is different from the authentication code C, the receiving device may determine that the data packet fails to be received. Optionally, the receiving device may further generate and send, to the sending device, a failure application receipt. The failure application receipt may indicate that the receiving device fails to receive the data packet. In this embodiment, first, the authentication code A may be compared with the authentication code B; and then, when the authentication code A is different from the authentication code B, the information C may be generated, and the authentication code A may be compared with the authentication code C. Alternatively, first, the information B and the information C may be generated, and then the authentication code B and the authentication code C may be generated; and then, the authentication code B and the authentication code C may be compared with the authentication code A. If either of the authentication code B or the authentication code C is the same as the authentication code A, it indicates that the data packet is successfully received. Optionally, a receiving success application receipt may be fed back. If neither of the authentication code B and the authentication code C is the same as the authentication code A, a sending failure application receipt is fed back.

In some embodiments, after obtaining the receiving time of the data packet, the receiving device may obtain a receiving time set based on the receiving time of the data packet. The receiving device may obtain the first time value in the receiving time set based on the receiving time of the data packet and the preset minimum time granularity, and then the receiving device subtracts 1 from the first time value to obtain the second time value, and subtract 1 from the second time value to obtain the third time value. By analogy, the receiving device may obtain a receiving time set including n time values. n is a positive integer. The receiving device may perform encoding based on each time value in the receiving time set, to obtain an information B set. The receiving device may perform calculation on each value in the information B set and the original data by using a specified authentication algorithm, to obtain an authentication code set. The receiving device may determine the receiving status of the data packet by comparing a value in the authentication code set with the authentication code A. Provided that one value in the authentication code set is the same as the authentication code A, the receiving device determines that the data packet is successfully received. When no value in the authentication code set is the same as the authentication code A, the receiving device determines that the data packet fails to be received.

In a possible implementation, before obtaining the data packet, the sending device may encrypt the authentication code A and the original data by using a specified key. The sending device may further add, to the data packet, packet header information including an encryption indication field. After receiving the data packet sent by the sending device, the receiving device may decrypt the data packet based on the encryption indication field and the specified key, to obtain the authentication code A and the original data. In this way, the sending device and the receiving device can ensure data security through data encryption.

Formats of the sending time of the data packet and the receiving time of the data packet are universal time coordinated (universal time coordinated, UTC), Greenwich mean time (greenwich mean time, GMT), Beijing time, Eastern Pacific time, Western Pacific time, or the like. This is not limited in this embodiment.

It should be noted that, usually, a difference between the sending time of the data packet of the sending device and the receiving time of the data packet of the receiving device does not exceed the preset minimum time granularity, that is, the receiving device may successfully receive the data packet sent by the sending device.

In a possible implementation, information A of a sending device is sending time information, and information B of a receiving device is receiving time information. The sending device may generate an authentication code A based on the information A, a specified key, and original data, and then generate a data packet based on the authentication code A and the original data. The receiving device may generate an authentication code B based on the information B, a specified key, and the data packet. In this way, problems of repeated processing and charging do not occur. In addition, because both the sending device and the receiving device generate the authentication codes based on respective stored specified keys, the receiving device may further verify, by using the authentication codes, whether the specified keys of the two parties are the same, to verify validity of the sending device.

A terminal 100 and a satellite network device 200 may obtain a specified key through negotiation by using a cellular network, as shown in FIG. 5. Alternatively, a terminal 100 and a satellite network device 200 may preset a same specified key.

In some embodiments, a terminal 100 may obtain a specified key by using an intermediate device. The intermediate device and a satellite network device 200 may first obtain the specified key through negotiation by using a cellular network (for example, for a procedure in which the intermediate device and the satellite network device 200 obtain the specified key through negotiation, refer to the procedure, in which the terminal 100 and the satellite network device 200 obtain the specified key through negotiation, shown in FIG. 5). The intermediate device may establish a communication connection (for example, a Bluetooth connection, a Wi-Fi connection, or a sidelink (sidelink) connection) to the terminal 100. The intermediate device may send the specified key to the terminal 100 through the communication connection.

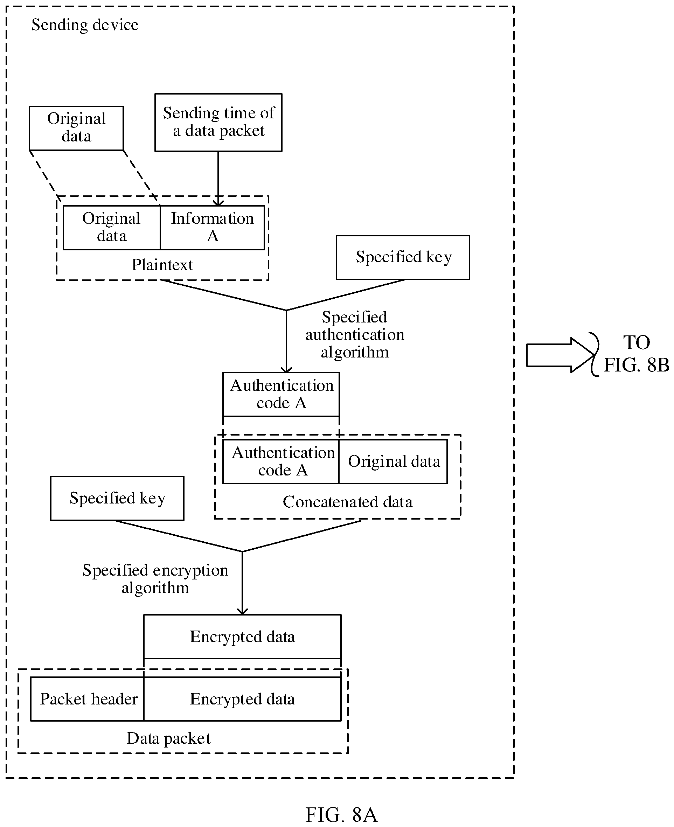

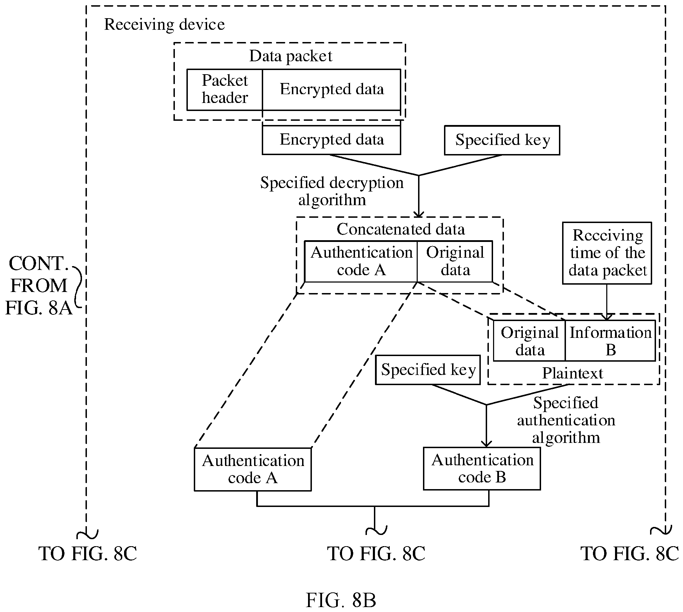

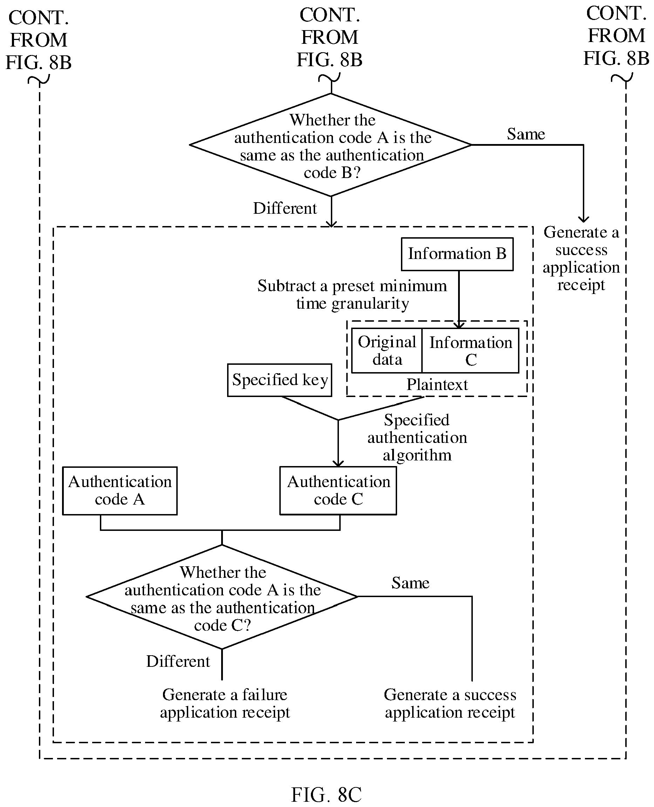

Further, to ensure data transmission security, the sending device may concatenate the authentication code A and the original data together, to obtain concatenated data. Then, the sending device uses the specified key to encrypt the concatenated data by using a specified encryption algorithm, to obtain encrypted data. The sending device may add packet header information in front of the encrypted data. The packet header information includes an encryption indication field. The encryption indication field may indicate the specified encryption algorithm (for example, an SM3 hash algorithm) used by the sending device. The receiving device may decrypt the encrypted data in the data packet based on the encryption indication field and the specified key, to obtain the authentication code A and the original data. Then, the receiving device generates the authentication code B based on the original data, the information B, and the specified key. This is shown in FIG. 8A to FIG. 8C. In this way, because the sending device encrypts the data and then sends the encrypted data to the receiving device, data security can be further ensured.

The following describes an inbound procedure of a transmission method according to an embodiment of this application.

A terminal 100 may generate a first authentication code based on first information, a specified key, and first data (also referred to as original data). The first information is sending time information. The terminal 100 may obtain a first data packet based on the first authentication code, the specified key, and the first data. The terminal 100 may send the first data packet to a satellite network device 200. After receiving the first data packet, the satellite network device 200 may generate a second authentication code based on second information, the specified key, and the first data packet. The second information is receiving time information. The satellite network device 200 may determine a receiving status of the first data packet based on the second authentication code. In this way, when the satellite network device 200 receives the repeatedly sent first data packet, because the second information has been updated with time, a generated authentication code is different from the first authentication code in the first data packet. Therefore, the satellite network device 200 determines that the first data packet fails to be received, so that a problem of repeatedly receiving a same data packet does not occur.

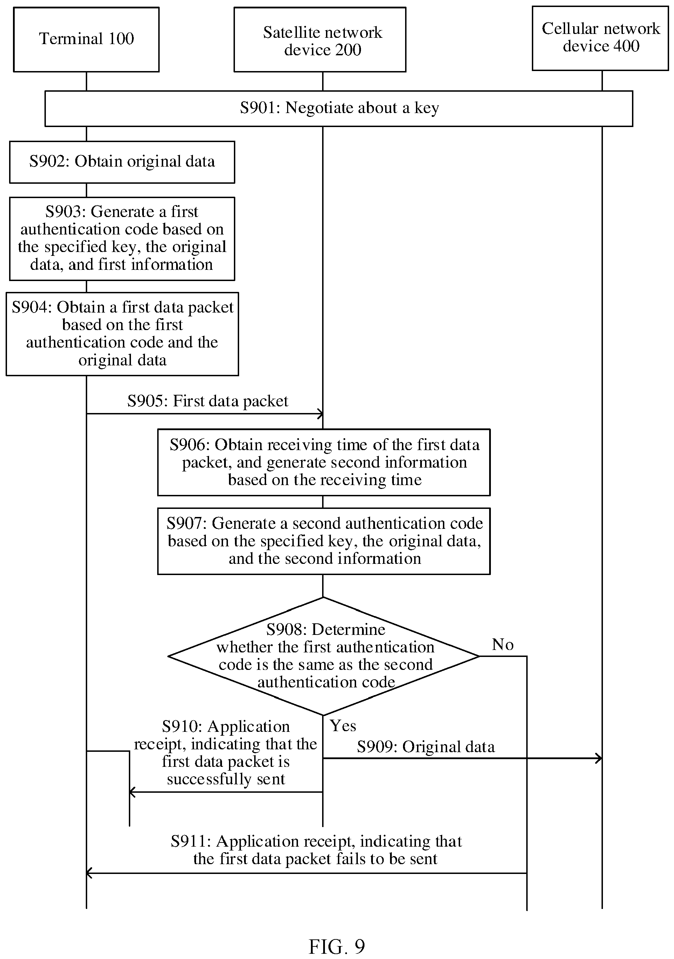

FIG. 9 is a schematic diagram of an inbound transmission procedure according to an embodiment of this application.

S901: A terminal 100, a satellite network device 200, and a cellular network device 400 negotiate about a key.

For descriptions of negotiating about the key by the terminal 100, the satellite network device 200, and the cellular network device 400, refer to the foregoing embodiment shown in FIG. 5. Details are not described herein again. After negotiating about the key, both the terminal 100 and the satellite network device 200 store the specified key.

S902: The terminal 100 obtains original data.

After the terminal 100 receives input of a satellite message sent by a user, the terminal 100 may generate, in response to the input, the original data based on content of the satellite message entered by the user. Alternatively, after the terminal 100 receives an indication of a user, for example, when the user wants to initiate a query on a mailbox, or wants to obtain other information from a network, the terminal 100 may generate the original data based on a user request. The original data may include but is not limited to a receiving user quantity indication, a receiving user ID number, data (for example, text data, picture data, or audio data) entered by the user, location information of the terminal 100, and the like.

S903: The terminal 100 generates a first authentication code based on the specified key, the original data, and first information.

First, the terminal 100 may obtain sending time of a first data packet. The sending time of the first data packet may be any time in a period from time at which the terminal 100 obtains the original data to time at which the terminal 100 generates the first authentication code. The time at which the terminal 100 obtains the original data may be time at which the terminal 100 receives input of a satellite message sent by a calling user. In this case, the original data includes data entered by the calling user. The time at which the terminal 100 generates the first authentication code may be current time obtained by the terminal 100 by running a program statement for obtaining the sending time of the first data packet (for example, by using a get current time function getCurrentTime()). The terminal 100 may determine the sending time of the data packet based on positioning timing of a satellite.

In some embodiments, the sending time of the first data packet may be represented as time at which the terminal 100 delivers the first data packet to an MDCP layer at an AP layer.

In some other embodiments, the sending time of the first data packet may be represented as time that is estimated by the terminal 100 and at which the terminal 100 sends the first data packet to the satellite network device 200.

Specifically, for obtaining the sending time of the first data packet by the terminal 100, refer to the foregoing embodiment shown in FIG. 7A and FIG. 7B. Details are not described herein again.

Then, the terminal 100 generates the first information based on the sending time of the first data packet. After obtaining the sending time of the first data packet, the terminal 100 may extract a time value in front of a preset minimum time granularity in the sending time of the first data packet, and perform encoding (for example, binary-decimal encoding or decimal-to-binary conversion) on the time value, to obtain the first information. The preset minimum time granularity may be a minute, half a minute, half an hour, or the like. This is not limited in this application. Specifically, for descriptions of generating the first information by the terminal 100, refer to the foregoing embodiment shown in FIG. 7A and FIG. 7B. Details are not described herein again.

Finally, the terminal 100 generates the first authentication code based on the specified key, the original data, and the first information. The terminal 100 may obtain the first authentication code through calculation based on the first information, the specified key, and the original data by using a specified algorithm (for example, an SM3 hash algorithm).

For example, the specified algorithm used by the terminal 100 may be a hash-based message authentication code (hash-based message authentication code, HMAC) algorithm based on the SM3 hash algorithm. A calculation formula of an HMAC is as follows:

$$HMAC=F\{SM3\{(k+\oplus opad)\|SM3[(k+\oplus ipad)\|(text\|context)]\}\}$$

SM3 is a hash algorithm. k+ may be obtained based on the specified key. A length of k+ may be 64 bytes. 16 most significant bytes are the specified key, and 48 following bytes are all 0. opad is a byte 0x5C repeated 64 times, and ipad is a byte 0x36 repeated 64 times. text is the original data, and context is the first information. $\oplus$ is an exclusive OR symbol, and $\|$ is a concatenation symbol. A length of output of the SM3 algorithm is 32 bytes. F is a function for extracting data of the first 16 bits from a most significant bit to a least significant bit of input. Output (the HMAC) of F is the first authentication code. A length of the first authentication code is 16 bits.

S904: The terminal 100 may obtain the first data packet based on the first authentication code and the original data.

The terminal 100 may concatenate the first authentication code and the original data together, to obtain the first data packet. Optionally, the terminal 100 may further add packet header information in front of the first authentication code and the original data that are concatenated together, to obtain the first data packet. The packet header information may include but is not limited to a service type indication and the like. The service type indication may indicate a service type (for example, a data packet for sending a message to user equipment in a cellular network, or a data packet for requesting data from the satellite network device 200) of the first data packet.

In a possible implementation, the terminal 100 may further encrypt, by using the specified key, the first authentication code and the original data that are concatenated together, to obtain the first data packet. For specific descriptions, refer to the foregoing embodiment shown in FIG. 8A to FIG. 8C. Details are not described herein again.

S905: The terminal 100 sends the first data packet to the satellite network device 200.

In a possible implementation, after sending the first data packet to the receiving device, the terminal 100 may display sending prompt information, for example, display "Sent". The sending prompt information may be used to prompt the user that the terminal 100 has sent the first data packet to the satellite network device 200. The sending prompt information may further include a mark icon. The mark icon may be used to trigger (for example, through tapping) display of an information explanation, for example, "Sent!". Display of an operation suggestion (for example, the message has been sent to the receiving device, and it is not determined whether the message reaches the receiving device) may be triggered through tapping. A form of the sending prompt information is not limited, and may be a text, a picture, an animation, or the like.

Specifically, the terminal 100 may process the first data packet into at least one second data packet (SLC PDU or MDCP PDU) at the MDCP layer and an SLC layer or the MDCP layer, and then send the at least one second data packet to the satellite network device 200. For specific descriptions of obtaining, by the terminal 100, the at least one second data packet and sending the at least one second data packet to the satellite network device 200, refer to the foregoing embodiments shown in FIG. 2A(1) and FIG. 2A(2) and FIG. 7A and FIG. 7B. Details are not described herein again.

S906: The satellite network device 200 obtains receiving time of the first data packet, and generates second information based on the receiving time.

Specifically, the satellite network device 200 may obtain the receiving time of the first data packet in a plurality of manners. For example, when receiving the at least one second data packet at an SLC layer, the satellite network device 200 may record receiving time of each of the at least one second data packet. The satellite network device 200 may concatenate, at the SLC layer based on frame header information of second data packets, second data packets belonging to one SLC SDU, to obtain an SLC SDU. The satellite network device 200 may determine, through comparison, a sequence of receiving time of the second data packets included in the SLC SDU, and use earliest receiving time as receiving time of the SLC SDU. The satellite network device 200 may upload the SLC SDU and the receiving time of the SLC SDU to an MDCP layer at the SLC layer. The satellite network device 200 may use the SLC SDU as an MDCP PDU at the MDCP layer, and obtain an MDCP SDU based on the MDCP PDU. The satellite network device 200 may determine the first MDCP PDU in the MDCP SDU by using successor indication fields of MDCP PDUs, and use, as receiving time of the MDCP SDU, receiving time of an SLC SDU corresponding to the first MDCP PDU. The satellite network device 200 may upload the MDCP SDU and the receiving time of the MDCP SDU to an AP layer at the MDCP layer. The satellite network device 100 may use the MDCP SDU as the first data packet and use the receiving time of the MDCP SDU as the receiving time of the first data packet at the AP layer. For detailed descriptions of obtaining the receiving time of the first data packet by the satellite network device 200, further refer to the foregoing embodiment shown in the inbound process in FIG. 7A and FIG. 7B. Details are not described herein again.

Specifically, for detailed descriptions of receiving the first data packet by the satellite network device 200, refer to the foregoing embodiments shown in FIG. 2B(1) and FIG. 2B(2) and FIG. 7A and FIG. 7B. Details are not described herein again.

After obtaining the receiving time (also referred to as fourth information) of the first data packet at the AP layer, the satellite network device 200 may generate the second information based on the fourth information and a preset or configured minimum time granularity. For specific descriptions of generating the second information by the satellite network device 200, refer to the foregoing embodiment, in which the receiving device generates the information B, shown in FIG. 7A and FIG. 7B. Details are not described herein again.

S907: The satellite network device 200 may generate a second authentication code based on the specified key, the original data, and the second information.

The satellite network device 200 may obtain the second authentication code through calculation based on the second information and the original data in the first data packet by using a specified algorithm (for example, the SM3 hash algorithm). The specified authentication algorithm of the satellite network device 200 is the same as the specified authentication algorithm of the terminal 100.

For example, when the specified authentication algorithm used by the terminal 100 may be a hash-based message authentication code (hash-based message authentication code, HMAC) algorithm based on the SM3 hash algorithm, the specified authentication algorithm used by the satellite network device 200 is also the HMAC algorithm based on SM3. An HMAC is calculated as follows:

$$HMAC=F\{SM3\{(k+\oplus opad)\|SM3[(k+\oplus ipad)\|(text\|context)]\}\}$$

SM3 is a hash algorithm. k+ may be obtained based on the specified key. A length of k+ may be 64 bytes. 16 most significant bytes are the specified key, and 48 following bytes are all 0. opad is a byte 0x5C repeated 64 times, and ipad is a byte 0x36 repeated 64 times. text is the original data, and context is the second information, $\oplus$ is an exclusive OR symbol, and $\|$ is a concatenation symbol. A length of output of the SM3 algorithm is 32 bytes. F is a function for extracting data of the first 16 bits from a most significant bit to a least significant bit of input. Output (the HMAC) of F is the second authentication code. A length of the second authentication code is 16 bits.

S908: The satellite network device 200 determines whether the first authentication code is the same as the second authentication code.

The satellite network device 200 may determine a receiving status of the first data packet by determining, through comparison, whether the first authentication code is the same as the second authentication code. When the first authentication code is the same as the second authentication code, the satellite network device 200 may perform step S909, and may further perform step S910. For detailed descriptions of the first authentication code, refer to the authentication code A in the foregoing embodiment shown in FIG. 7A and FIG. 7B. For detailed descriptions of the second authentication code, refer to the authentication code B or the authentication code C in the foregoing embodiment shown in FIG. 7A and FIG. 7B. Details are not described herein again.

When the first authentication code is different from the second authentication code, the satellite network device 200 may perform step S911.

S909: The satellite network device 200 sends the original data to the cellular network device 400.

The satellite network device 200 determines that the first authentication code is the same as the second authentication code, and determines that the first data packet is successfully received. The satellite network device 200 may perform a corresponding processing operation on the original data. For example, the satellite network device 200 may forward the original data to user equipment (for example, a terminal 300) in a cellular network.

Optionally, the satellite network device 200 may further record information about time at which the first data packet is successfully received. For example, the information about the time at which the first data packet is successfully received may be the second information corresponding to the second authentication code. The satellite network device 100 may record the second information, and forward the second information to a network element (for example, a short message service center) in the cellular network. The network element in the cellular network may record sending success time of an inbound message based on the received information about the time at which the first data packet is successfully received, to subsequently send transmission success time information to the terminal 100 in the cellular network, to update a sending status of information for which the terminal 100 fails to receive an application receipt in a satellite network.

S910: The satellite network device 200 sends an application receipt to the terminal 100, to indicate that the first data packet is successfully sent.

The satellite network device 200 may further generate a success application receipt (an application receipt indicating that the first data packet is successfully sent). The success application receipt may indicate that the satellite network device 200 successfully receives the data packet. The satellite network device 200 may send the success application receipt to the terminal 100.

S911: The satellite network device 200 sends an application receipt to the terminal 100, to indicate that the first data packet fails to be sent.

The satellite network device 200 determines that the first authentication code is different from the second authentication code, and determines that the first data packet fails to be received. The satellite network device 200 may delete the first data packet. The satellite network device 200 may further generate a failure application receipt (an application receipt indicating that the first data packet fails to be sent). The failure application receipt may indicate that the satellite network device 200 fails to receive the data packet. The satellite network device 200 may send the failure application receipt to the terminal 100.

In a possible implementation, after the satellite network device 200 determines that the first authentication code is different from the second authentication code, the satellite network device 200 may subtract a preset value (for example, 1) from a value of the second information, and then generate a new second authentication code based on adjusted second information, the specified key, and the original data.

The satellite network device 200 may determine, through comparison, whether the first authentication code is the same as the new second authentication code. When the first authentication code is the same as the new second authentication code, the satellite network device 200 may determine that the data packet is successfully received. The satellite network device 200 may further perform step S909 and step S910.

When the first authentication code is different from the new second authentication code, the satellite network device 200 may determine that the data packet fails to be received. The satellite network device 200 may further generate and send, to the terminal 100, a failure application receipt. The failure application receipt may indicate that the satellite network device 200 fails to receive the data packet.

In some embodiments, after receiving the failure application receipt, the terminal 100 may generate and send, to the satellite network device 200, a new first data packet.

Herein, the success application receipt and the failure application receipt may be collectively referred to as a first application receipt, and the first application receipt may include indication information, indicating, to the user, whether the data packet is successfully received.

In a possible implementation, after receiving an application receipt (including a failure application receipt or a success application receipt), the terminal 100 may display result prompt information (including success prompt information or failure prompt information) on a display screen. In this way, the user may determine a sending status of the first data packet by using the result prompt information, to avoid repeated sending of a successfully sent satellite message.

Specifically, the terminal 100 may display success prompt information after receiving a success application receipt (an application receipt indicating that the first data packet is successfully sent). The success prompt information may be used to prompt the user that the first data packet is successfully sent.

The terminal 100 may display failure prompt information after receiving a failure application receipt (an application receipt indicating that the first data packet fails to be sent). The failure prompt information may be used to prompt the user that the first data packet fails to be sent.

The following describes an outbound procedure of a transmission method according to an embodiment of this application.

A satellite network device 200 may generate a fourth authentication code based on sixth information and original data (also referred to as first data). The sixth information is sending time information. The satellite network device 200 may obtain a third data packet based on the fourth authentication code and the original data. The satellite network device 200 may send the third data packet to a terminal 100. After receiving the third data packet, the terminal 100 may generate a third authentication code based on fifth information and the third data packet. The fifth information is receiving time information. The terminal 100 may determine a receiving status of the third data packet based on the third authentication code. In this way, when the terminal 100 receives the repeatedly sent third data packet, because the fifth information has been updated with time, an authentication code generated based on fifth information is different from the fourth authentication code in the third data packet. Therefore, the terminal 100 determines that the third data packet fails to be received, so that a problem of receiving a repeated data packet does not occur.

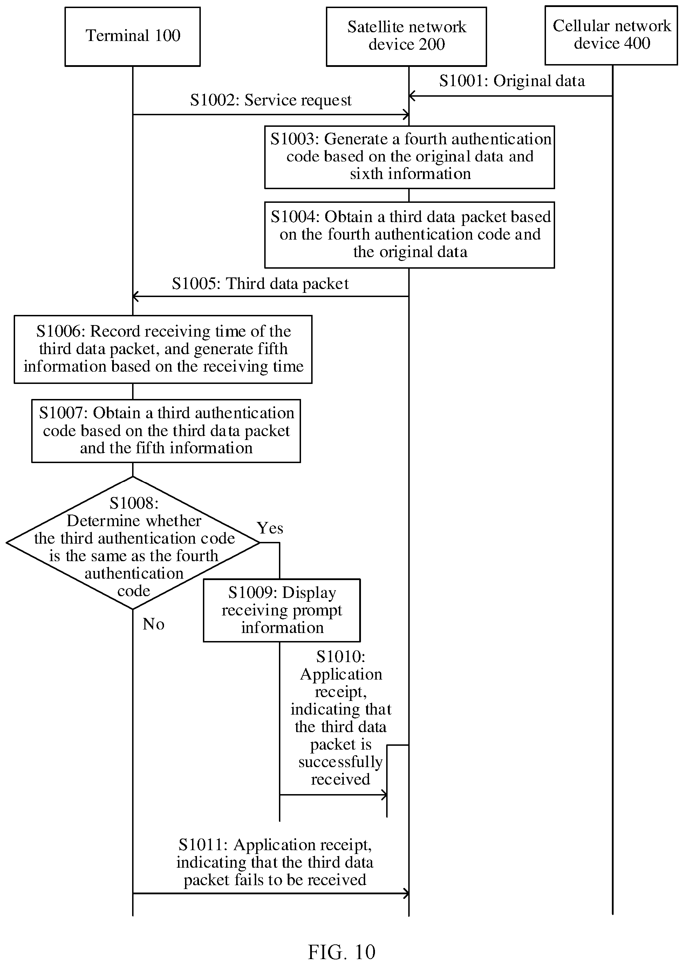

FIG. 10 is a schematic diagram of an outbound transmission procedure according to an embodiment of this application.

S1001: A satellite network device 200 receives original data sent by a cellular network device 400.

The satellite network device 200 receives the original data sent by a short message service center 25 in the cellular network device 400. The original data is data sent by a calling user (for example, a user of a terminal 300) in a cellular network to a called user (a user of a terminal 100) in a satellite network (where the data includes but is not limited to text data, picture data, and the like that are entered by the calling user). It should be noted that when forwarding, to the satellite network device 200, the data sent by the terminal 300 to the terminal 100, the cellular network device 400 may also forward an identifier (for example, an ID number or a mobile number of the terminal 100) of the called user to the satellite network device 200.

In some embodiments, the original data obtained by the satellite network device 200 may be data stored in a memory of the satellite network device 200. For example, the original data may be map data stored in the satellite network device 200.

In some other embodiments, the original data received by the satellite network device 200 may be data (for example, text data, image data, audio data, or video data) sent by a third-party server to the satellite network device 200.

S1002: Optionally, the satellite network device 200 receives a service request sent by the terminal 100.

The service request may be a request for downloading the original data. Herein, a receiving device of the original data is the terminal 100. After receiving the service request of the terminal 100, the satellite network device 200 may perform step S1003 to step 1005.

S1003: The satellite network device 200 generates a fourth authentication code based on the original data and sixth information.

First, the satellite network device 200 may obtain sending time of a third data packet. The sending time of the third data packet may be any time in an entire period from time at which the satellite network device 200 obtains the original data to time, at which the satellite network device 200 generates the fourth authentication code, plus an offset. The time at which the satellite network device 200 obtains the original data may be time at which the satellite network device 200 receives the service request sent by the terminal 100, time at which the satellite network device 200 receives the original data sent by the cellular network device 400, time at which the satellite network device 200 sends data to the terminal 100, or the time, at which the satellite network device 200 generates the fourth authentication code, minus the offset, and is used to estimate time at which an SLC layer, an MDCP layer, or a physical layer of the satellite network device 200 sends data. For example, the time at which the satellite network device 200 generates the fourth authentication code may be current time obtained by the satellite network device 200 by running a program statement for obtaining the sending time of the third data packet (for example, by using a get current time function getCurrentTime()).

In a possible implementation, the satellite network device 200 may determine the sending time (also referred to as eighth information) of the third data packet at the MDCP layer/the SLC layer (based on a central station 23 or a ground central station 31). Then, the satellite network device 200 generates the sixth information at an AP layer based on the eighth information and a minimum time granularity. Optionally, the satellite network device 200 may determine the sending time of the third data packet at the MDCP layer/the SLC layer, and generate the sixth information based on the sending time of the third data packet and the preset minimum time granularity and then upload the sixth information to the AP layer.

In some embodiments, the sending time of the third data packet may be represented as time at which the satellite network device 200 delivers the third data packet to the MDCP layer at the AP layer, namely, time at which a converged communication platform 24 delivers the third data packet to the central station 23 or the ground central station 31.

For obtaining the sending time of the third data packet by the satellite network device 200, refer to the procedure in the embodiment shown in FIG. 7A and FIG. 7B. Details are not described herein again.

Then, the satellite network device 200 generates the sixth information based on the sending time of the third data packet. After obtaining the sending time of the third data packet, the satellite network device 200 may encode the time based on a preset or configured minimum time granularity, to obtain the sixth information. For example, the satellite network device 200 may extract a time value in front of the preset or configured minimum time granularity in the sending time of the third data packet, and perform encoding (for example, binary-decimal encoding or decimal-to-binary conversion) on the time value, to obtain the sixth information. The preset or configured minimum time granularity may be a second, a minute, half a minute, half an hour, or the like. This is not limited in this application. Specifically, for descriptions of generating the sixth information by the satellite network device 200, refer to the foregoing embodiment shown in FIG. 7A and FIG. 7B. Details are not described herein again.

Finally, the satellite network device 200 generates the fourth authentication code based on the original data and the sixth information. Specifically, the satellite network device 200 may obtain the fourth authentication code through calculation based on the sixth information and the original data by using a specified algorithm (for example, an SM3 hash algorithm).

S1004: The satellite network device 200 obtains the third data packet based on the original data and the fourth authentication code.

The satellite network device 200 may concatenate the fourth authentication code and the original data together, to obtain the third data packet. Optionally, the satellite network device 200 may further add packet header information in front of the fourth authentication code and the original data that are concatenated together, to obtain the third data packet. The packet header information may include but is not limited to a service type indication and the like. The service type indication may indicate a service type (for example, a data packet for sending a satellite message to the terminal 100, or a data packet for sending, to the terminal 100, a quantity of satellite messages sent to the terminal 100) of the third data packet.

In a possible implementation, the terminal 100 may obtain the fourth authentication code based on a specified key, the sixth information, and the original data.

In a possible implementation, the terminal 100 may further encrypt, by using the specified key, the fourth authentication code and the original data that are concatenated together, to obtain the third data packet. For specific descriptions, refer to the foregoing embodiment shown in FIG. 8A to FIG. 8C. Details are not described herein again.

S1005: The satellite network device 200 sends the third data packet to the terminal 100.

Specifically, the satellite network device 200 may process the third data packet into at least one fourth data packet (SLC PDU) at the MDCP layer and the SLC layer, or the satellite network device 200 may process the third data packet into at least one fourth data packet (MDCP PDU) at the MDCP layer, and then send the at least one fourth data packet to the terminal 100. For specific descriptions of obtaining, by the satellite network device 200, the at least one fourth data packet and sending the at least one fourth data packet to the terminal 100, refer to the foregoing embodiment shown in FIG. 3A(1) to FIG. 3A(3). Details are not described herein again.

S1006: The terminal 100 obtains receiving time of the third data packet, and generates fifth information based on the receiving time.

The terminal 100 obtains the receiving time of the third data packet in a plurality of manners. For example, when receiving the at least one fourth data packet at an SLC layer, the terminal 100 may record receiving time of each of the at least one fourth data packet. The terminal 100 may concatenate, at the SLC layer based on frame header information of fourth data packets, fourth data packets belonging to one SLC SDU, to obtain an SLC SDU. The terminal 100 may determine, through comparison, a sequence of receiving time of the fourth data packets included in the SLC SDU, and use earliest receiving time as receiving time of the SLC SDU. The terminal 100 may upload the SLC SDU and the receiving time of the SLC SDU to an MDCP layer at the SLC layer. The terminal 100 may use the SLC SDU as an MDCP PDU at the MDCP layer, and obtain an MDCP SDU based on the MDCP PDU. The terminal 100 may determine the first MDCP PDU in the MDCP SDU by using successor indication fields of MDCP PDUs, and use, as receiving time of the MDCP SDU, receiving time of an SLC SDU corresponding to the first MDCP PDU. The terminal 100 may upload the MDCP SDU and the receiving time of the MDCP SDU to an AP layer at the MDCP layer. The satellite network device 100 may use the MDCP SDU as the third data packet and use the receiving time of the MDCP SDU as the receiving time of the third data packet at the AP layer. For other detailed descriptions of obtaining the receiving time of the third data packet by the terminal 100, refer to the descriptions of obtaining the receiving time of the data packet by the receiving device in the embodiment in FIG. 7A and FIG. 7B. Details are not described herein again.

Specifically, for detailed descriptions of receiving the third data packet by the satellite network device 100, refer to the foregoing embodiments shown in FIG. 2B(1) and FIG. 2B(2) and FIG. 7A and FIG. 7B. Details are not described herein again.

After obtaining the receiving time of the third data packet, the terminal 100 may generate the fifth information based on the receiving time of the third data packet and a preset or configured minimum time granularity. For specific descriptions of generating the fifth information by the terminal 100, refer to the foregoing embodiment shown in FIG. 7A and FIG. 7B. Details are not described herein again.

S1007: The terminal 100 obtains a third authentication code based on the third data packet and the fifth information.

The terminal 100 may obtain the third authentication code through calculation based on the fifth information and the original data in the third data packet by using a specified authentication algorithm (for example, an SM3 hash algorithm). The specified authentication algorithm of the satellite network device 200 is the same as the specified authentication algorithm of the terminal 100.

S 1008: The terminal 100 determines whether the third authentication code is the same as the fourth authentication code.

The terminal 100 may determine a receiving status of the third data packet by determining, through comparison, whether the third authentication code is the same as the fourth authentication code. When the third authentication code is the same as the fourth authentication code, the terminal 100 performs step S1009, and optionally, may further perform step S1010.

Optionally, the terminal 100 may further record information about time at which the third data packet is successfully received, for example, generate the fifth information corresponding to the third authentication code. The information about the time at which the third data packet is successfully received may be used by the terminal 100 to subsequently send transmission success time information to the satellite device 200 or a network element in a second transmission system when the terminal 100 accesses the second transmission system (for example, a cellular network or a WLAN), to update a sending status of information for which an application receipt fails to be received in a satellite network. This avoids a charging problem.

When the third authentication code is different from the fourth authentication code, the terminal 100 may perform step S1011.

S1009: The terminal 100 displays receiving prompt information.

The terminal 100 determines that the third authentication code is the same as the fourth authentication code, and determines that the third data packet is successfully received. The terminal 100 may perform a corresponding processing operation on the original data. For example, the terminal 100 may display the receiving prompt information. The receiving prompt information may be used to prompt the user that a satellite message sent by user equipment (for example, the terminal 300) in a cellular network is received. The receiving prompt information may include but is not limited to voice prompt information, text prompt information, vibration prompt information, and the like. For example, when the receiving prompt information is text prompt information, the receiving prompt information may be "Received a satellite message from the "terminal 300"". Optionally, the terminal 100 may further the display original data in the third data packet on a display screen.

S1010: The terminal 100 sends an application receipt to the satellite network device 200, to indicate that the third data packet is successfully received.

The terminal 100 may further generate a success application receipt (an application receipt indicating that the third data packet is successfully sent). The success application receipt may indicate that the terminal 100 successfully receives the data packet. The terminal 100 may send the success application receipt to the satellite network device 200.

In some embodiments, after receiving the success application receipt, the satellite network device 200 may delete the original data in the third data packet.

S1011: The terminal 100 sends an application receipt to the satellite network device 200, to indicate that the third data packet fails to be received.

The terminal 100 determines that the third authentication code is different from the fourth authentication code, and determines that the third data packet fails to be received. The terminal 100 may delete the third data packet. The terminal 100 may further generate a failure application receipt (an application receipt indicating that the third data packet fails to be sent). The failure application receipt may indicate that the terminal 100 fails to receive the data packet. The terminal 100 may send the failure application receipt to the satellite network device 200.

In a possible implementation, after the terminal 100 determines that the third authentication code is different from the fourth authentication code, the terminal 100 may subtract a preset value (for example, 1) from a value of the fifth information, and then generate a new third authentication code based on adjusted fifth information and the original data.

The receiving device may determine, through comparison, whether the fourth authentication code is the same as the new third authentication code. When the fourth authentication code is the same as the new third authentication code, the terminal 100 may determine that the data packet is successfully received. The terminal 100 may further perform step S1010.

When the fourth authentication code is different from the new third authentication code, the terminal 100 may determine that the data packet fails to be received. The terminal 100 may further generate and send, to the satellite network device 200, a failure application receipt. The failure application receipt may indicate that the terminal 100 fails to receive the data packet.

In some embodiments, after receiving the failure application receipt, the satellite network device 200 may generate and send, to the terminal 100, a new third data packet.

Herein, the success application receipt and the failure application receipt may be collectively referred to as a third application receipt, and the third application receipt may include indication information, indicating, to the user, whether the data packet is successfully received.

This application is not limited to the foregoing embodiments, and further provides the following embodiments. It should be noted that the following embodiments may be used in mutual combination with the foregoing embodiments.

In a possible implementation, information A of a sending device is context (context) information A, and the context information A may indicate information about a quantity of sent data packets. The information about the quantity of sent data packets is information about a quantity of data packets successfully sent by the sending device. Information B of a receiving device is context information B, and the context information B may indicate information about a quantity of received data packets. The information about the quantity of received data packets is information about a quantity of data packets successfully received by the receiving device (information about a quantity of generated success application receipts). An initial value of the information A is the same as an initial value of the information B. In this way, after successfully parsing, based on the information B, a data packet generated by the sending device based on the information A, the receiving device may update a value of the information B. After the receiving device receives the repeatedly sent data packet, because a value of updated information B is different from a value of the information A existing before an update, that is, an authentication code A is different from an authentication code B, the receiving device cannot parse the data packet sent by the sending device, so that problems of repeated processing and charging do not occur.

It should be noted that before the sending device sends the data packet to the receiving device, the sending device and the receiving device may obtain context information. Context information of the sending device may be referred to as the context information A, namely, the information A. Context information of the receiving device may be referred to as the context information B, namely, the information B.

In a possible implementation, the quantity of data packets successfully sent by the sending device may be a quantity of success application receipts received by the sending device.

The following describes several manners in which a terminal 100 and a satellite network device 200 obtain context information. Specific descriptions are as follows:

(1) The terminal 100 and the satellite network device 200 may obtain the context information when obtaining a specified key through negotiation by using a cellular network. For example, the terminal 100, the satellite network device 200, and a cellular network device 400 may perform step S501 to step S515 shown in FIG. 5. After the satellite network device 200 receives a parameter response (including the specified key) sent by a bootstrapping server 41, the satellite network device 200 may set context information of the satellite network device 200. For example, an initial value of the context information of the satellite network device 200 may be X. Then, the satellite network device 200 may send a service response 4 to the terminal 100. The service response 4 may indicate that the terminal 100 and the satellite network device 200 can perform a data encryption/decryption operation within a specified key validity period by using the specified key stored by the terminal 100 and the satellite network device 200. The service response 4 may further include the context information of the satellite network device 200. After receiving the service response 4, the terminal 100 may set an initial value of context information of the terminal 100 to X based on the service response 4. It should be noted that, provided that a value of the context information of the satellite network device 200 is the same as a value of the context information of the terminal 100, even if the initial value of the context information is any value, receiving results of the sending device and the receiving device are not affected.

(2) The terminal 100 may obtain a specified key and an initial value of context information by using an intermediate device. The intermediate device and the satellite network device 200 may first obtain the specified key, context information of the satellite network device 200, and the context information of the terminal 100 through negotiation in a cellular network by using the foregoing operations. The intermediate device may establish a communication connection (for example, a Bluetooth connection) to the terminal 100. The intermediate device may send the specified key and the context information of the terminal 100 to the terminal 100 through the communication connection.

(3) Initial values of information A of the terminal 100 and information B of the satellite network device 200 are preset specified values.

(4) An initial value of information A of the terminal 100 is a data value configured by the satellite network device 200 for the terminal 100.

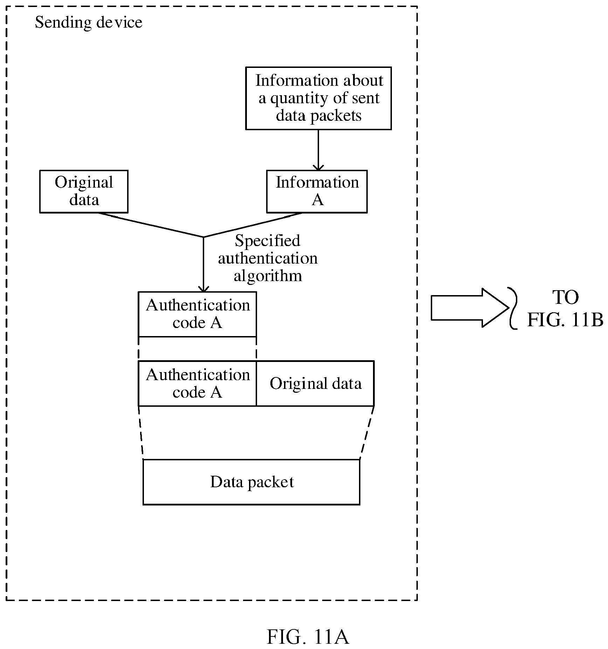

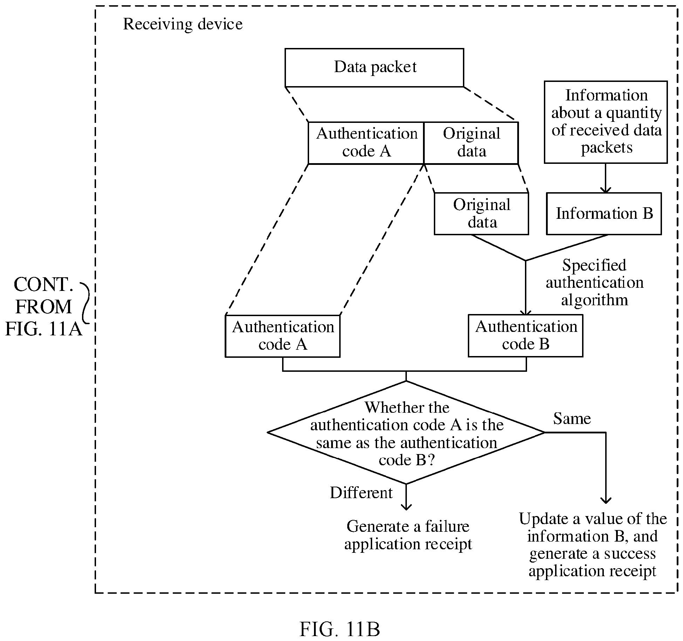

FIG. 11A and FIG. 11B are a schematic diagram of a processing procedure of a transmission method according to an embodiment of this application.

1. A sending device generates an authentication code A based on original data and information A.

The information A is context information A, and the information A may indicate information about a quantity of sent data packets. The information about the quantity of sent data packets is information about a quantity of data packets successfully sent by the sending device. Herein, information about a quantity of success application receipts received by the sending device may indicate the information about the quantity of data packets successfully sent by the sending device. That is, after receiving a success application receipt, the sending device may add a preset value to a value of the information A. It should be noted that an increment of the information A is related to the quantity of data packets successfully sent by the sending device.

The sending device may obtain the authentication code A based on the information A and the original data. For detailed descriptions of obtaining the authentication code A by the sending device, refer to the foregoing embodiment shown in FIG. 7A and FIG. 7B. Details are not described herein again.

In a possible implementation, the sending device may generate the authentication code A based on the information A, a specified key, and the original data, and then generate a data packet based on the authentication code A and the original data. A receiving device may generate an authentication code B based on information B, the specified key, and the data packet. In this way, validity of the sending device can be verified by using the specified key, thereby ensuring transmission security.

2. The sending device obtains the data packet based on the original data and the authentication code A.

The sending device may concatenate the authentication code A and the original data together, to obtain the data packet.

Optionally, the sending device may add packet header information in front of the authentication code A and the original data that are concatenated together, to obtain the data packet. The packet header information may include a service type indication and the like. The service type indication may indicate a service type of the data packet.

In a possible implementation, the sending device may concatenate the authentication code A and the original data together, to obtain concatenated data. Then, the sending device uses the specified key to encrypt the concatenated data by using a specified algorithm, to obtain encrypted data. The sending device may add packet header information in front of the encrypted data. The packet header information includes an encryption indication field. The encryption indication field may indicate the specified algorithm (for example, an SM3 hash algorithm) used by the sending device. In this way, because the sending device encrypts the data and then sends the encrypted data to the receiving device, data security can be further ensured.

The sending device may send the data packet to the receiving device. For descriptions of sending the data packet by the sending device to the receiving device during inbound, refer to the foregoing embodiment shown in FIG. 2A(1) and FIG. 2A(2). For descriptions of sending the data packet by the sending device to the receiving device during outbound, refer to the foregoing embodiment shown in FIG. 3A(1) to FIG. 3A(3). Details are not described herein again.

In a possible implementation, when the sending device is a terminal 100, after the sending device sends the data packet to the receiving device, the sending device may display sending prompt information. The sending prompt information may be used to prompt a user that the sending device has sent a satellite message to the receiving device.

3. The receiving device obtains the authentication code A and the original data based on the data packet.

After the receiving device receives the data packet sent by the sending device, the receiving device may obtain the authentication code A and the original data from the data packet. For descriptions of receiving the data packet by the receiving device during inbound, refer to the foregoing embodiment shown in FIG. 2B(1) and FIG. 2B(2). For descriptions of receiving the data packet by the receiving device during outbound, refer to the foregoing embodiment shown in FIG. 3B(1) to FIG. 3B(3). Details are not described herein again.

In a possible implementation, the data packet includes the encryption indication field and the encrypted data. The receiving device may decrypt the encrypted data in the data packet based on the encryption indication field and the specified key, to obtain the authentication code A and the original data.

4. The receiving device generates the authentication code B based on the information B and the data packet.

The receiving device may obtain the authentication code B through calculation based on the information B and the original data in the data packet by using a specified algorithm (for example, the SM3 hash algorithm). The specified algorithm of the receiving device is the same as the specified algorithm of the sending device. For example, the sending device may add a specified algorithm indication to a packet header of the data packet, where the specified algorithm indication may indicate the specified algorithm used by the sending device; and the receiving device may determine, based on the specified algorithm indication in the received data packet, the specified algorithm indication used by the sending device. For another example, the sending device and the receiving device may negotiate about a used specified algorithm in a cellular network.

In a possible implementation, when the sending device generates the authentication code A based on the original data, the information A, and the specified key, the receiving device may generate the authentication code B based on the original data, the information B, and the specified key. The sending device and the receiving device may preset parameters required for generating the authentication codes.

5. The receiving device determines a receiving status of the data packet based on the authentication code B.

The receiving device may determine the receiving status of the data packet by determining, through comparison, whether the authentication code A is the same as the authentication code B.

(1) When the authentication code B is the same as the authentication code A, the receiving device determines that the data packet is successfully received. The receiving device may perform a corresponding processing operation on the original data. For specific descriptions, refer to the embodiment in FIG. 7A and FIG. 7B.

The receiving device may update a value of the information B. Specifically, the receiving device may add a preset value to the value of the information B.

The receiving device may further generate a success application receipt and send the success application receipt to the sending device. The success application receipt may indicate that the receiving device successfully receives the data packet.

(2) When the authentication code B is different from the authentication code A, the receiving device may determine that the data packet fails to be received. The receiving device may further generate and send, to the sending device, a failure application receipt. The failure application receipt may indicate that the receiving device fails to receive the data packet.

6. The sending device determines a sending status of the data packet based on an application receipt.

The sending device may determine the sending status of the data packet based on the application receipt.

(1) When the application receipt received by the sending device is a success application receipt indicating that the receiving device successfully receives the data packet, the sending device may determine that the data packet is successfully sent. The sending device may add a preset value to a value of the information A. The preset value added in the sending device is the same as the preset value added in the receiving device.

In some embodiments, when the sending device is the terminal 100, after receiving the success application receipt, the sending device may display success prompt information. The success prompt information may be used to prompt the user that the data packet is successfully sent. It should be noted that only after receiving the success application receipt, the sending device can determine that the data packet is successfully sent.

(2) When the application receipt received by the sending device is a failure application receipt indicating that the receiving device fails to receive the data packet, the sending device may determine that the data packet fails to be sent.

Optionally, the sending device may retransmit the data packet that fails to be sent.

In some embodiments, when the sending device is the terminal 100, after receiving the failure application receipt, the sending device may display failure prompt information. The failure prompt information may be used to prompt the user that the data packet fails to be sent.

The following describes an inbound procedure of a transmission method according to an embodiment of this application.

A terminal 100 may generate a first authentication code based on first information, a specified key, and first data (also referred to as original data). The first information is first context information, and the first context information indicates information about a quantity of sent data packets. The terminal 100 may obtain a first data packet based on the first authentication code, the specified key, and the original data. The terminal 100 may send the first data packet to a satellite network device 200. After receiving the first data packet, the satellite network device 200 may generate a second authentication code based on second information, the specified key, and the first data packet. The second information is second context information, and the second context information indicates information about a quantity of received data packets. The satellite network device 200 may determine a receiving status of the first data packet based on the second authentication code. In this way, when successfully receiving the first data packet sent by the terminal 100, the satellite network device 200 may update a value of the second information. When the satellite network device 200 repeatedly receives the first data packet, because updated second information is different from the second information existing before the update, an authentication code generated by the satellite network device 200 based on the updated second information is different from the first authentication code in the first data packet. Therefore, the satellite network device 200 determines that the first data packet fails to be received, so that a problem of repeatedly receiving a same data packet does not occur.

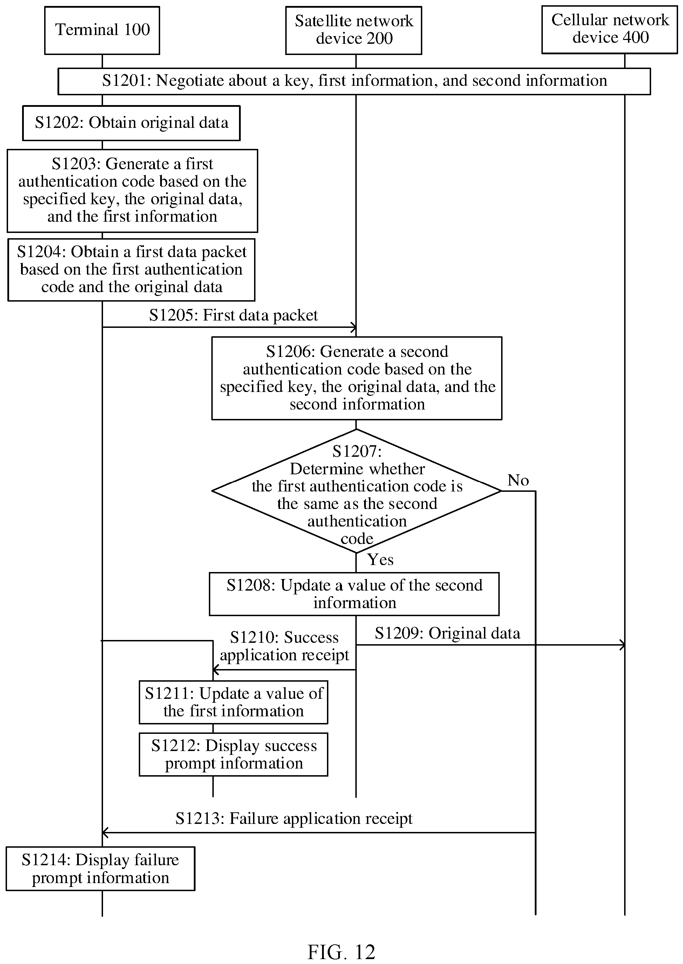

FIG. 12 is a schematic diagram of an inbound transmission procedure according to an embodiment of this application.

S1201: A terminal 100, a satellite network device 200, and a cellular network device 400 negotiate about a key, first information, and second information.

For descriptions of negotiating about the key, the first information, and the second information by the terminal 100, the satellite network device 200, and the cellular network device 400, refer to the foregoing embodiment shown in FIG. 11A and FIG. 11B. Details are not described herein again. After negotiating about the key, both the terminal 100 and the satellite network device 200 store the specified key. The terminal 100 stores the first information. The satellite network device 200 stores the second information. An initial value of the first information is the same as an initial value of the second information.

S1202: The terminal 100 obtains original data.

S1203: The terminal 100 generates a first authentication code based on the specified key, the original data, and the first information.

The terminal 100 may obtain the first authentication code through calculation based on the stored first information, the specified key, and the original data by using a specified authentication algorithm (for example, an SM3 hash algorithm).

S1204: The terminal 100 may obtain a first data packet based on the first authentication code and the original data.

In a possible implementation, the terminal 100 may further encrypt, by using the specified key, the first authentication code and the original data that are concatenated together, to obtain the first data packet.

S1205: The terminal 100 sends the first data packet to the satellite network device 200.

In a possible implementation, after sending the first data packet to the receiving device, the terminal 100 may display sending prompt information, for example, display "Sent". The sending prompt information may be used to prompt a user that the terminal 100 has sent the first data packet to the satellite network device 200. The sending prompt information may further include a mark icon. The mark icon may be used to trigger (for example, through tapping) display of an information explanation, for example, "Sent!". Display of an operation suggestion (for example, the message has been sent to the receiving device, and it is not determined whether the message reaches the receiving device) may be triggered through tapping. A form of the sending prompt information is not limited, and may be a text, a picture, an animation, or the like.

S1206: The satellite network device 200 may generate a second authentication code based on the specified key, the original data, and the second information.

S1207: The satellite network device 200 determines whether the first authentication code is the same as the second authentication code.

The satellite network device 200 may determine a receiving status of the first data packet by determining, through comparison, whether the first authentication code is the same as the second authentication code. When the first authentication code is the same as the second authentication code, the satellite network device 200 may perform step S1208 to step S1210.

When the first authentication code is different from the second authentication code, the satellite network device 200 may perform step S1213.

S1208: The satellite network device 200 updates a value of the second information.

The satellite network device 200 may add a preset value to the value of the second information. For example, when the value of the second information is 0 and the preset value is 1, an updated value of the second information is 1.

S1209: The satellite network device 200 sends the original data to the cellular network device 400.

S1210: The satellite network device 200 sends a success application receipt to the terminal 100.

S1211: The terminal 100 updates a value of the first information.

After receiving the success application receipt sent by the satellite network device 200, the terminal 100 may add a preset value to the value of the first information. The preset value added for the first information is the same as the preset value added for the second information, in other words, an updated value of the first information is the same as the updated value of the second information. Optionally, the terminal 100 may further perform step S1212.

S1212: The terminal 100 displays success prompt information.

The terminal 100 displays the success prompt information. The success prompt information prompts the user that the first data packet is successfully sent.

S1213: The satellite network device 200 sends a failure application receipt to the terminal 100.

Optionally, after receiving the failure application receipt, the terminal 100 may further perform step S1214.

S1214: The terminal 100 displays failure prompt information.

The terminal 100 displays the failure prompt information. The failure prompt information prompts the user that the first data packet fails to be sent.

For specific descriptions of step S1202 to step S1206, step S1209, step S1210, and step S1212, refer to the foregoing embodiment shown in FIG. 9. Details are not described herein again.

The following describes an outbound procedure of a transmission method according to an embodiment of this application.

A satellite network device 200 may generate a fourth authentication code based on sixth information and first data (also referred to as original data). The sixth information is sixth context information, and the sixth context information indicates information about a quantity of sent data packets. The satellite network device 200 may obtain a third data packet based on the fourth authentication code and the original data. The satellite network device 200 may send the third data packet to a terminal 100. After receiving the third data packet, the terminal 100 may generate a third authentication code based on fifth information and the third data packet. The fifth information is fifth context information, and the fifth context information indicates information about a quantity of received data packets. The terminal 100 may determine a receiving status of the third data packet based on the third authentication code. In this way, when successfully receiving the third data packet sent by the satellite network device 200, the terminal 100 may update a value of the fifth information. When the terminal 100 repeatedly receives the third data packet, because updated fifth information is different from the fifth information existing before the update, an authentication code generated by the terminal 100 based on the updated fifth information is different from the fourth authentication code in the third data packet. Therefore, the terminal 100 determines that the third data packet fails to be received, so that a problem of repeatedly receiving a same data packet does not occur.

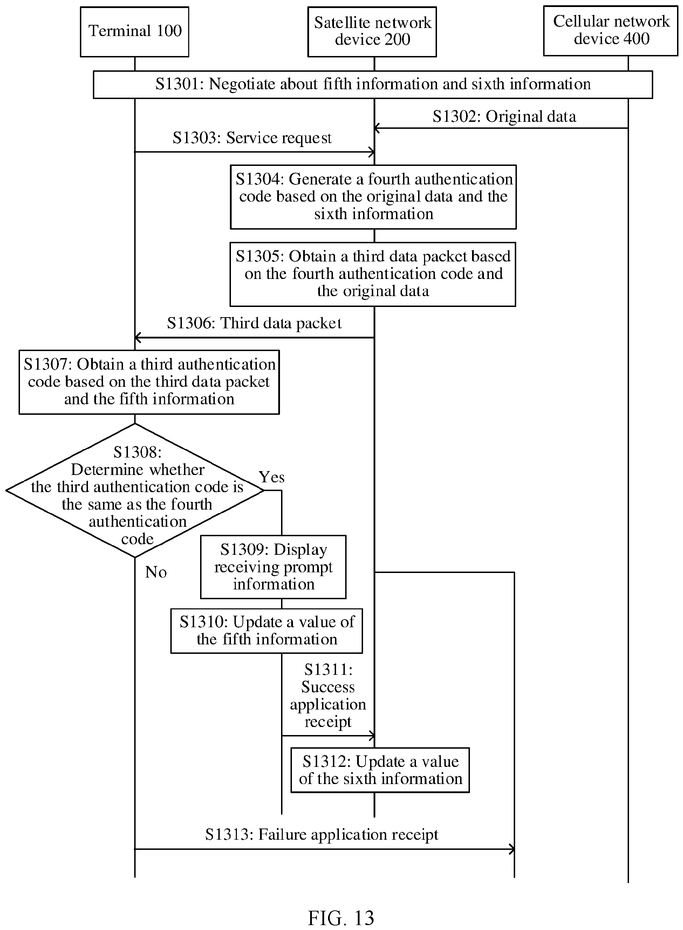

FIG. 13 is a schematic diagram of an outbound transmission procedure according to an embodiment of this application.

S1301: A terminal 100, a satellite network device 200, and a cellular network device 400 negotiate about fifth information and sixth information.

The terminal 100 and the satellite network device 200 may obtain respective context information when obtaining a key through negotiation by using the cellular network device 400 in a cellular network. For specific descriptions, refer to the foregoing embodiment shown in FIG. 11A and FIG. 11B. Details are not described herein again. Alternatively, the terminal 100 and the satellite network device 200 may establish a communication connection in a cellular network, and obtain respective context information through negotiation. The terminal 100 stores the fifth information. The satellite network device 200 stores the sixth information. An initial value of the fifth information is the same as an initial value of the sixth information.

S1302: The satellite network device 200 receives original data sent by the cellular network device 400.

S1303 : The satellite network device 200 receives a service request sent by the terminal 100.

S1304: The satellite network device 200 generates a fourth authentication code based on the original data and the sixth information.

The satellite network device 200 may generate the fourth authentication code based on the stored sixth information and the original data.

S1305: The satellite network device 200 obtains a third data packet based on the original data and the fourth authentication code.

S1306: The satellite network device 200 sends the third data packet to the terminal 100.

S1307: The terminal 100 obtains a third authentication code based on the third data packet and the fifth information.

S1308: The terminal 100 determines whether the third authentication code is the same as the fourth authentication code.

The terminal 100 may determine a receiving status of the third data packet by determining, through comparison, whether the third authentication code is the same as the fourth authentication code. When the third authentication code is the same as the fourth authentication code, the terminal 100 may perform step S1309 to step S1311.

When the third authentication code is different from the fourth authentication code, the terminal 100 may perform step S1313.

S1309: The terminal 100 displays receiving prompt information.

S1310: The terminal 100 updates a value of the fifth information.

The terminal 100 may add a preset value to the value of the fifth information. For example, when the value of the fifth information is 0 and the preset value is 1, an updated value of the fifth information is 1.

S1311: The terminal 100 sends a success application receipt to the satellite network device 200.

S1312: The satellite network device 200 updates a value of the sixth information.

After receiving the success application receipt sent by the terminal 100, the satellite network device 200 may add a preset value to the value of the sixth information. The preset value added for the sixth information is the same as the preset value added for the fifth information, in other words, an updated value of the sixth information is the same as the updated value of the fifth information.

S1313: The terminal 100 sends a failure application receipt to the satellite network device 200.

For specific descriptions of step S1302 to step S1306, step S1308, step S1309, step S1311, and step S1313, refer to the foregoing embodiment shown in FIG. 10. Details are not described herein again.

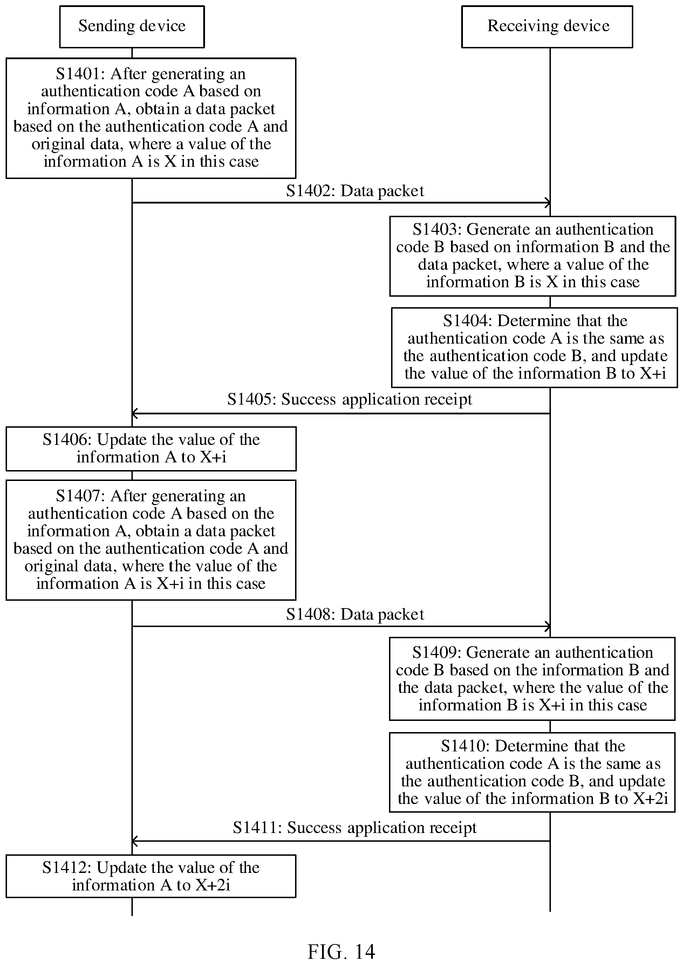

FIG. 14 is a schematic diagram of a transmission procedure according to an embodiment of this application.

S1401: After generating an authentication code A based on information A, a sending device obtains a data packet based on the authentication code A and original data, where a value of the information A is X in this case.

Specifically, for detailed descriptions of generating, by the sending device, the authentication code A and obtaining the data packet, refer to the foregoing embodiment shown in FIG. 11A and FIG. 11B. Details are not described herein again.

S1402: The sending device sends the data packet to a receiving device.

Specifically, for detailed descriptions of sending the data packet by the sending device to the receiving device, refer to the foregoing embodiments shown in FIG. 2A(1) and FIG. 2A(2) and FIG. 3A(1) to FIG. 3A(3). Details are not described herein again.

S1403: The receiving device generates an authentication code B based on information B and the data packet, where a value of the information B is X in this case.

Specifically, for detailed descriptions of generating the authentication code B by the receiving device, refer to the foregoing embodiment shown in FIG. 11A and FIG. 11B. Details are not described herein again.

S1404: The receiving device determines that the authentication code A is the same as the authentication code B, and updates the value of the information B to X+i.

The receiving device determines that the authentication code A is the same as the authentication code B, and determines that the data packet is successfully received. The receiving device may add i to the value of the information B, that is, update the value of the information B to X+i.

S1405: The receiving device sends a success application receipt to the sending device.

After determining that the data packet is successfully received, the receiving device may generate the success application receipt, and send the success application receipt to the sending device. The success application receipt may indicate that the receiving device successfully receives the data packet.

S1406: The sending device updates the value of the information A to X+i.

After receiving the success application receipt, the sending device may determine that the data packet is successfully sent. The sending device may add i to the value of the information A, that is, update the value of the information A to X+i. The sending device and the receiving device perform updating by using a same value of i.

S1407: After generating an authentication code A based on the information A, the sending device may obtain a data packet based on the authentication code A and original data, where the value of the information A is X+i in this case.

S1408: The sending device sends the data packet to the receiving device.

S1409: The receiving device generates an authentication code B based on the information B and the data packet, where the value of the information B is X+i in this case.

S1410: The receiving device determines that the authentication code A is the same as the authentication code B, and updates the value of the information B to X+2i.

The receiving device determines that the authentication code A is the same as the authentication code B, and determines that the data packet is successfully received. The receiving device may add i to the value of the information B, that is, update the value of the information B to X+2i.

S1411: The receiving device sends a success application receipt to the sending device.

After determining that the data packet is successfully received, the receiving device may generate the success application receipt, and send the success application receipt to the sending device. The success application receipt may indicate that the receiving device successfully receives the data packet.

S1412: The sending device updates the value of the information A to X+2i.

After receiving the success application receipt, the sending device may determine that the data packet is successfully sent. The sending device may add i to the value of the information A, that is, update the value of the information A to X+2i. The sending device and the receiving device perform updating by using the same value of i.

In this way, the sending device and the receiving device can synchronously update and maintain respective context information, so that the sending device and the receiving device can transmit a data packet, and the receiving device is prevented from repeatedly processing a repeatedly sent data packet.

The following specifically describes a transmission method according to this application with reference to an application scenario.

In some inbound application scenarios, after receiving first input of a user, a terminal 100 may send a satellite message (a data packet) to a satellite network device 200 and display sending prompt information. The sending prompt information may be used to prompt the user that the terminal 100 has sent the satellite message to the satellite network device 200. After receiving an application receipt, the terminal 100 may display result prompt information. The result prompt information may be used to prompt the user that the satellite message is successfully sent or fails to be sent. In this way, the user of the terminal 100 can determine a sending status of the satellite message, and resend the satellite message when the satellite message fails to be sent.

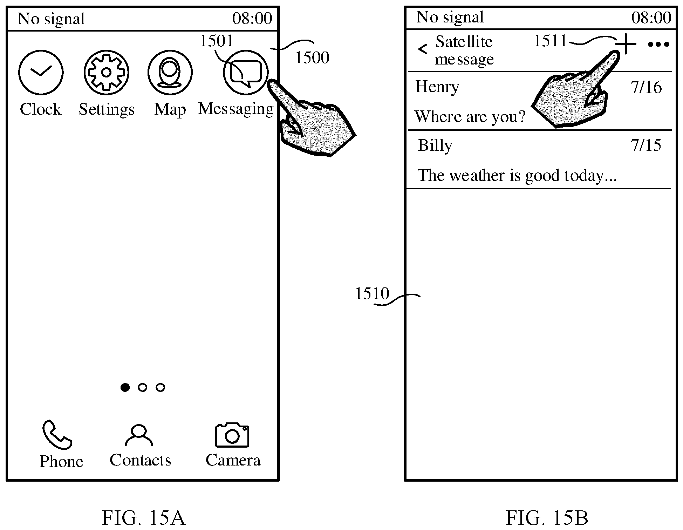

For example, as shown in FIG. 15A, the terminal 100 may display a desktop 1500. The desktop 1500 may include a plurality of application icons (for example, a Clock application icon and a Messaging application icon 1501). The Messaging application icon 1501 may be used to trigger display of a Messaging application interface (for example, a Messaging application interface 1510 shown in FIG. 15B). Optionally, a status bar including icons such as a time identifier icon and a signal identifier icon may be further displayed at the top of the desktop 1500. The signal identifier icon may be used to prompt the user that the terminal 100 is in a scenario in which no network is available, that is, a scenario in which a communication connection cannot be established to a second transmission system. Optionally, a plurality of tray icons (such as a Phone application icon, a Contacts application icon, and a Camera application icon) may be displayed below the plurality of application icons, and the tray icons remain displayed during page switching. Optionally, the Messaging application icon 1501 may be a tray icon, and is displayed below a plurality of application icons.

After the terminal 100 detects input (for example, tapping) of the user for the Messaging application icon 1501, the terminal 100 may further display the Messaging application interface 1510 shown in FIG. 15B. As shown in FIG. 15B, the Messaging application interface 1510 may include a message overview display area and a title bar. The message overview display area may be used to display messages sent and received by the terminal 100. The title bar may include but is not limited to a return control, a new message control 1511, and the like. The return control may be used to trigger the terminal 100 to display the desktop 1500. The new message control 1511 may be used to trigger the terminal 100 to create a new satellite message. Optionally, the foregoing status bar may be further displayed at the top of the Messaging application interface 1510.

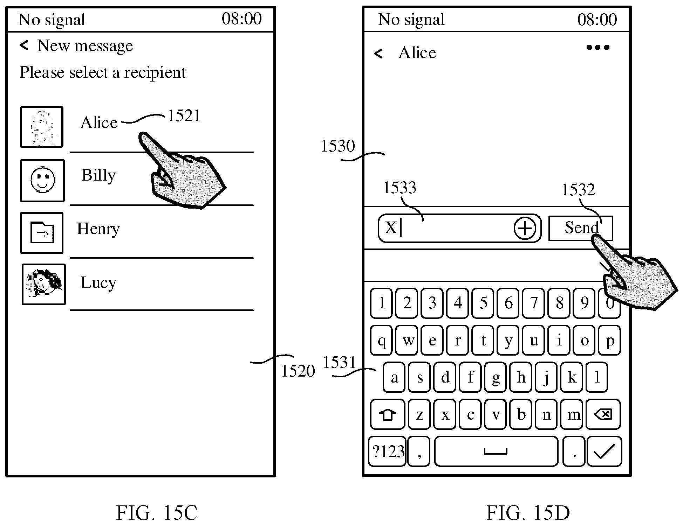

After the terminal 100 detects input (for example, tapping) of the user for the new message control 1511, the terminal 100 may further display a contact interface 1520 shown in FIG. 15C. As shown in FIG. 15C, the contact interface 1520 may include at least one contact icon (the contact icon may include but is not limited to a name, a mobile number, and the like of a contact). The at least one contact icon may include a contact icon 1521. The contact icon 1521 may be used to trigger the terminal 100 to determine an ID number of a recipient.

After the terminal 100 detects input (for example, tapping) of the user for the contact icon 1521, the terminal 100 may display a message detail interface 1530 shown in FIG. 15D. As shown in FIG. 15D, the message detail interface 1530 may include but is not limited to a message editing field 1533, a sending control 1532, and a keyboard area 1531. The message editing field 1533 may be used to display data entered by the user by using the keyboard area 1531. The keyboard area 1531 may be used to receive input of the user to trigger the terminal 100 to display corresponding data. The sending control 1532 may be used to: after receiving input of the user, trigger the terminal 100 to send data in the message editing field 1533 to the recipient. For example, the message editing field 1533 may display text information "X" entered by the user. It should be noted that content displayed in the message editing field 1533 is content entered by the user. Herein, in this embodiment of this application, the content entered by the user is written as "X" merely for better describing the embodiment, and this description does not constitute a limitation on the content entered by the user.

It should be noted that, because the terminal 100 is located in a first transmission system, the terminal 100 needs to send the satellite message to a called user (for example, a terminal 300) by using the satellite network device 200. In the descriptions of this embodiment of this application, provided that the satellite network device 200 successfully receives the data packet sent by the terminal 100, the message is successfully sent to the called user by default.

The terminal 100 receives input of the user for the sending control 1532 shown in FIG. 15D, and in response to the input, the terminal 100 may send, to the satellite network device 200, a data packet including original data (data displayed in the message editing field 1533) entered by the user. Specifically, for detailed descriptions of sending the data packet by the terminal 100 to the satellite network device 200, refer to step S1401 and step S1402 in FIG. 14. For detailed descriptions of receiving and processing the data packet by the satellite network device 200, refer to step S1403 and step S1404 in FIG. 14.

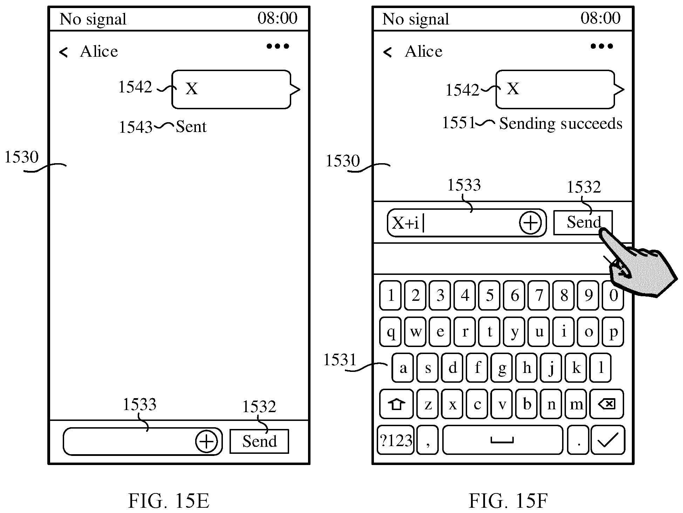

When the terminal 100 receives the input of the user for the sending control 1532 shown in FIG. 15D, in response to the input, the terminal 100 may further display a message detail interface 1530 shown in FIG. 15E. The message detail interface 1530 may include but is not limited to a message editing field 1533, a message box 1542, and a sending prompt 1543. The message box 1542 may be used to display content of the satellite message that has been sent by the terminal 100 to the satellite network device 200. Herein, the message box 1542 displays "X". The sending prompt 1543 may be used to prompt the user that the terminal 100 has sent, to the satellite network device 200, the content displayed in the message box 1542. The sending prompt 1543 may include but is not limited to text prompt information.

For example, the sending prompt 1543 may be a character string "Sent". For specific descriptions of the message detail interface 1530, refer to the embodiment shown in FIG. 15D. Details are not described herein again.

Then, after receiving a success application receipt, the terminal 100 may display success prompt information 1551 shown in FIG. 15F. The success prompt information 1551 may be used to prompt the user that the terminal 100 successfully sends the content in the message box 1542 to the recipient. The success prompt information 1551 may include but is not limited to text prompt information. For example, the success prompt information 1551 may be text prompt information "Sending succeeds". For descriptions of sending the success application receipt by the satellite network device 200 to the terminal 100, refer to step S1405 in FIG. 14. After receiving the success application receipt, the terminal 100 may further update a value of first information to X+i. For specific descriptions of updating the first information by the terminal 100, refer to step S1406 in FIG. 14.

After updating the value of the first information, the terminal 100 may receive input of the user for a sending control 1532 shown in FIG. 15F, and in response to the input, the terminal 100 may send, to the satellite network device 200, a data packet including original data (data displayed in a message editing field 1533) entered by the user. The message editing field 1533 may display text information "X+i" entered by the user. Specifically, for detailed descriptions of sending the data packet by the terminal 100 to the satellite network device 200, refer to step S1407 and step S1408 in FIG. 14.

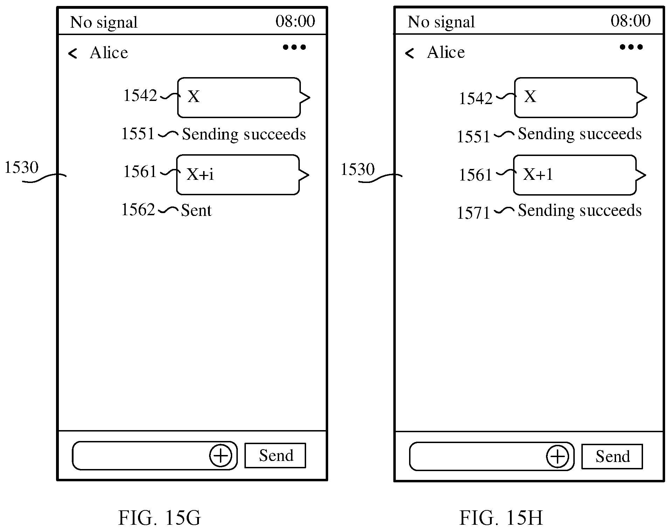

After the terminal 100 receives the input of the user for the sending control 1532 shown in FIG. 15F, the terminal 100 may further display a message box 1561 and a sending prompt 1562 shown in FIG. 15G. The message box 1561 may be used to display content of a satellite message that has been sent by the terminal 100 to the satellite network device 200. Herein, the message box 1561 displays "X+i". The sending prompt 1562 may be used to prompt the user that the terminal 100 has sent, to the satellite network device 200, the content displayed in the message box 1561. For specific descriptions of a message detail interface 1530, refer to the embodiment shown in FIG. 15D. Details are not described herein again.

After receiving a success application receipt, the terminal 100 may display success prompt information 1571 shown in FIG. 15H. The success prompt information 1571 may be used to prompt the user that the terminal 100 successfully sends the content in the message box 1561 to the recipient.

The following describes an abnormal case that may occur in embodiments of this application.

1. Abnormal case in which a data packet is lost.

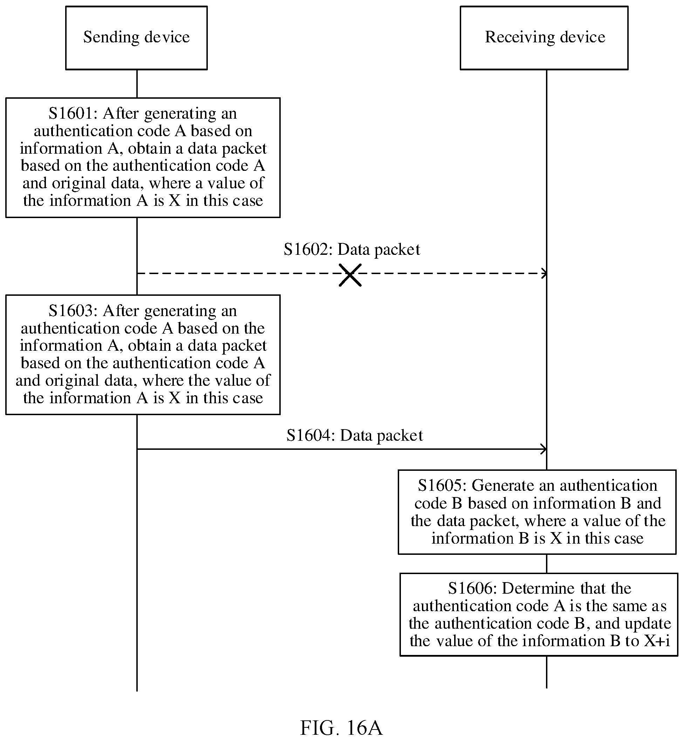

When a sending device sends a data packet to a receiving device, and the receiving device does not receive the data packet of the sending device, transmission of a next data packet between the sending device and the receiving device is not affected. Details are shown in FIG. 16A.

S1601: After generating an authentication code A based on information A, a sending device obtains a data packet based on the authentication code A and original data, where a value of the information A is X in this case.

S1602: The sending device fails to send the data packet to a receiving device.

The data packet is lost during sending, and therefore the receiving device cannot receive the data packet.

S1603: After generating an authentication code A based on the information A, the sending device may obtain a data packet based on the authentication code A and original data, where the value of the information A is X in this case.

The receiving device cannot receive the previous data packet sent by the sending device, and therefore does not update information B of the receiving device. In addition, the receiving device does not send a success application receipt to the sending device, and therefore the value of the information A of the sending device is still X.

S1604: The sending device sends the data packet to the receiving device.

S1605: The receiving device generates an authentication code B based on the information B and the data packet, where a value of the information B is X in this case.

S1606: The receiving device determines that the authentication code A is the same as the authentication code B, and updates the value of the information B to X+i.

The receiving device determines that the authentication code A is the same as the authentication code B, and determines that the data packet is successfully received. The receiving device may add i to the value of the information B, that is, update the value of the information B to X+i.

For specific descriptions of the foregoing steps, refer to the foregoing embodiment shown in FIG. 11A and FIG. 11B. Details are not described herein again.

In this way, when the sending device sends a data packet to the receiving device, the data packet is lost in a sending process, and therefore the receiving device cannot receive the data packet. However, because neither context information of the sending device nor context information of the receiving device is updated, transmission of a subsequent data packet is not affected.

2. Abnormal case in which an application receipt is lost.

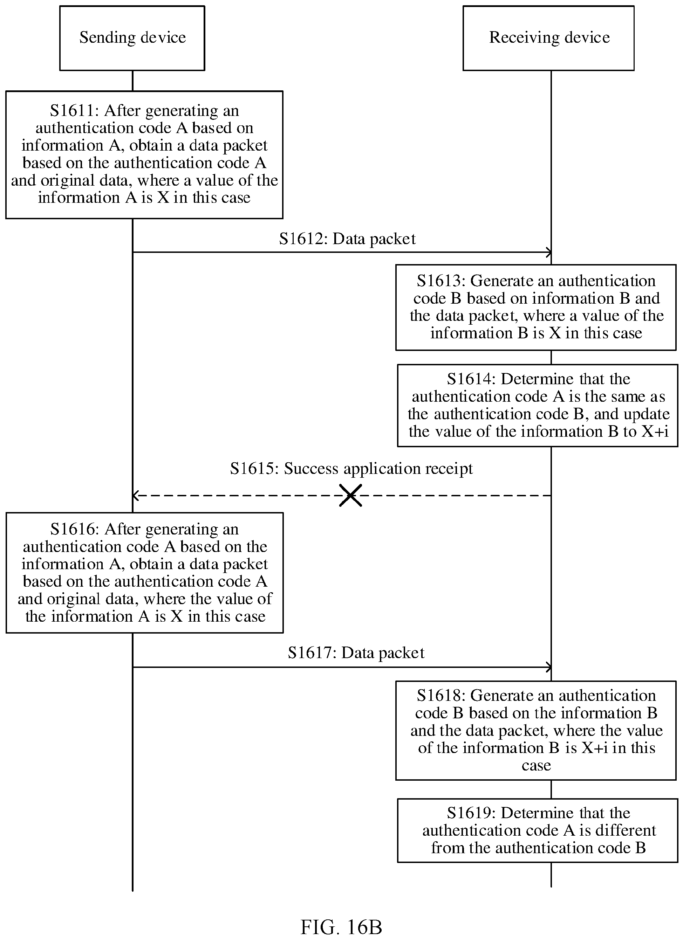

When a sending device sends a data packet to a receiving device, the receiving device successfully receives the data packet, and updates a value of information B. A success application receipt sent by the receiving device to the sending device is lost in a sending process, and therefore the sending device cannot receive the success application receipt, and does not update a value of information A. In this way, context information of the sending device is inconsistent with context information of the receiving device, affecting transmission of a subsequent data packet. Details are shown in FIG. 16B.

S1611: After generating an authentication code A based on information A, a sending device obtains a data packet based on the authentication code A and original data, where a value of the information A is X in this case.

S1612: The sending device sends the data packet to a receiving device.

S1613: The receiving device generates an authentication code B based on information B and the data packet, where a value of the information B is X in this case.

S1614: The receiving device determines that the authentication code A is the same as the authentication code B, and updates the value of the information B to X+i.

The receiving device determines that the authentication code A is the same as the authentication code B, and determines that the data packet is successfully received. The receiving device may add i to the value of the information B, that is, update the value of the information B to X+i.

S1615: The receiving device fails to send a success application receipt to the sending device.

The success application receipt is lost during sending, and therefore the sending device cannot receive the success application receipt.

S1616: After generating an authentication code A based on the information A, the sending device obtains a data packet based on the authentication code A and original data, where the value of the information A is X in this case.

The sending device cannot receive the success application receipt sent by the receiving device, and therefore cannot determine a sending status of the previous data packet, and cannot update the information A. Therefore, the value of the information A is still X.

S1617: The sending device sends the data packet to the receiving device.

S1618: The receiving device generates an authentication code B based on the information B and the data packet, where the value of the information B is X+i in this case.

S1619: The receiving device determines that the authentication code A is different from the authentication code B.

The receiving device determines that the authentication code A is different from the authentication code B, and determines that the data packet fails to be received.

For specific descriptions of the foregoing steps, refer to the foregoing embodiment shown in FIG. 11A and FIG. 11B. Details are not described herein again.

In this way, when the sending device sends a data packet to the receiving device, the receiving device successfully receives the data packet, and therefore updates the value of the information B, and sends a success application receipt to the sending device. However, the sending device fails to receive the success application receipt, and therefore the information A of the sending device is not updated. Therefore, the information A is different from the information B, affecting transmission of a subsequent data packet.

Therefore, to ensure that a sending device and a receiving device can further transmit a subsequent data packet after information A is inconsistent with information B, the sending device and the receiving device may reset values of respective context information. In this way, the sending device and the receiving device can continue to transmit a data packet.

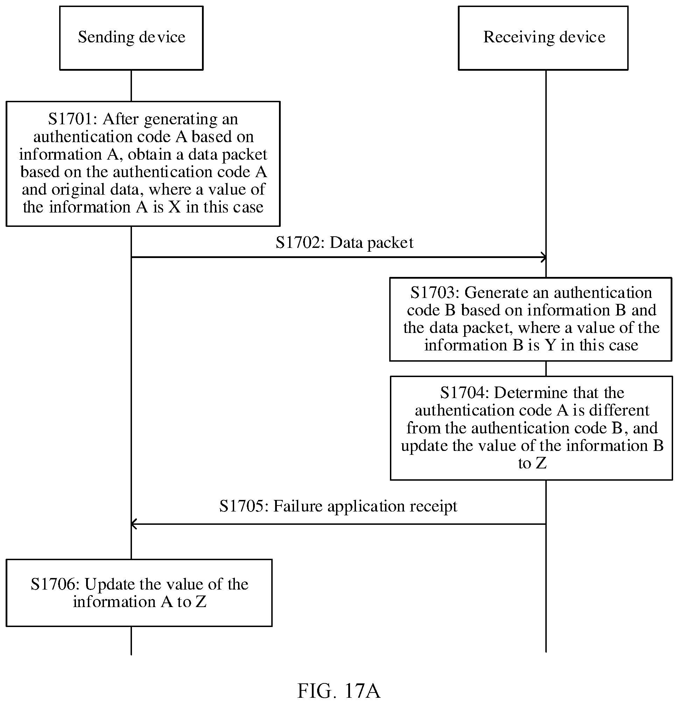

In a possible implementation, when determining that a data packet fails to be received, a receiving device may reset information B to a preset initial value. After receiving a failure application receipt, the sending device may also reset information A to the preset initial value. In this way, when the information A is not synchronized with the information B, values of the information A and the information B may be adjusted to a same value, so that the sending device and the receiving device can continue to transmit a data packet. For example, this is shown in FIG. 17A.

S1701: After generating an authentication code A based on information A, a sending device obtains a data packet based on the authentication code A and original data, where a value of the information A is X in this case.

S1702: The sending device sends the data packet to a receiving device.

S1703: The receiving device generates an authentication code B based on information B and the data packet, where a value of the information B is Y in this case.

X is different from Y

S 1704: The receiving device determines that the authentication code A is different from the authentication code B, and updates the value of the information B to Z.

The receiving device may determine a receiving status of the data packet by determining, through comparison, whether the authentication code A is the same as the authentication code B. The receiving device determines that the authentication code A is different from the authentication code B, and determines that the data packet fails to be received.

The receiving device may adjust the value of the information B to the preset initial value Z.

S1705: The receiving device sends a failure application receipt to the sending device.

After determining that the data packet fails to be received, the receiving device may generate an application receipt (the failure application receipt) indicating that the data packet fails to be received. The receiving device may send the failure application receipt to the sending device.

S 1706: The sending device updates the value of the information A to Z.

After receiving the failure application receipt, the sending device determines that the data packet fails to be sent, and updates the value of the information A to Z. Context information of the sending device and context information of the receiving device are adjusted to a same value.

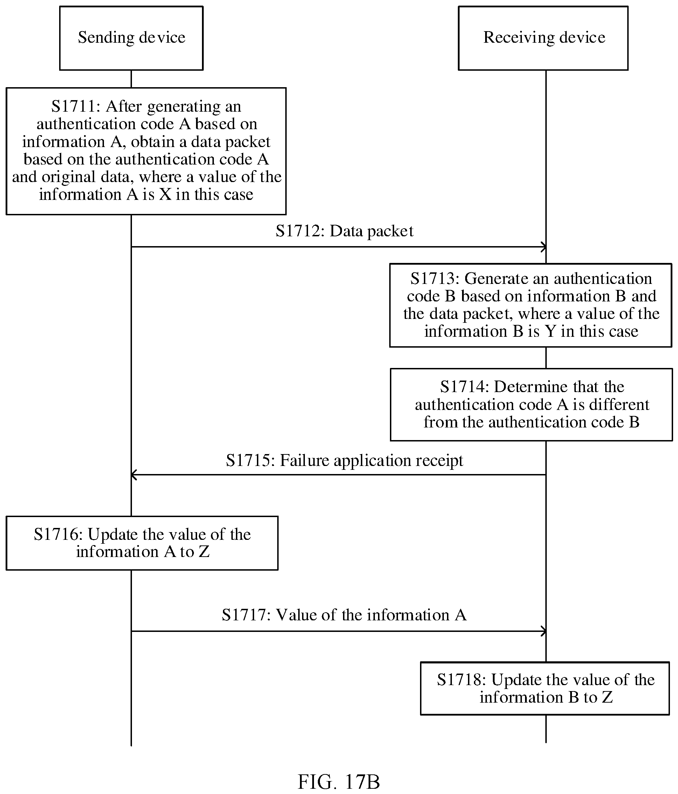

However, when the sending device does not receive the failure application receipt sent by the receiving device, the value of the information A is still different from the value of the information B. Therefore, in a possible implementation, when determining that a data packet fails to be received, a receiving device may merely send a failure application receipt to a sending device, and does not change a value of information B. After receiving the failure application receipt, the sending device may reset information A to a preset initial value. The sending device may further send the preset initial value to the receiving device, and the receiving device may adjust the value of the information B to the preset initial value after receiving the preset initial value. For example, this is shown in FIG. 17B.

S1711: After generating an authentication code A based on information A, a sending device obtains a data packet based on the authentication code A and original data, where a value of the information A is X in this case.

S1712: The sending device sends the data packet to a receiving device.

S1713: The receiving device generates an authentication code B based on information B and the data packet, where a value of the information B is Y in this case.

X is different from Y

S1714: The receiving device determines that the authentication code A is different from the authentication code B.

The receiving device may determine a receiving status of the data packet by determining, through comparison, whether the authentication code A is the same as the authentication code B. The receiving device determines that the authentication code A is different from the authentication code B, and determines that the data packet fails to be received.

S1715: The receiving device sends a failure application receipt to the sending device.

After determining that the data packet fails to be received, the receiving device may generate an application receipt (the failure application receipt) indicating that the data packet fails to be received. The receiving device may send the failure application receipt to the sending device.

S1716: The sending device updates the value of the information A to Z.

After receiving the failure application receipt, the sending device determines that the data packet fails to be sent, and updates the value of the information A to Z.

S1717: The sending device sends the value of the information A to the receiving device.

For example, the sending device may encapsulate the value of the information A as a data packet, and then send, to the receiving device, the data packet including the value of the information A.

That is, in an inbound process, after adjusting a value of first information to a preset value, a terminal 100 may send third information to a satellite network device 200. A value of the third information is the same as an adjusted value of the first information.

In an outbound process, after adjusting a value of sixth information to a preset value, the satellite network device 200 may send seventh information to the terminal 100. A value of the seventh information is the same as an adjusted value of the sixth information.

Optionally, the preset value is an initial value.

S1718: The receiving device updates the value of the information B to Z.

After receiving the value of the information A, the receiving device may adjust the value of the information B to be the same as the value of the information A, that is, adjust the value of the information B to the preset initial value Z.

However, when an attack terminal intercepts the preset initial value and repeatedly sends the preset initial value to the receiving device, the receiving device keeps resetting the value of the information B of the receiving device, and consequently the sending device and the receiving device cannot normally communicate with each other. In addition, because the reason why the information A is inconsistent with the information B is mostly that the sending device does not receive a success application receipt sent by the receiving device, the value of the information B is greater than the value of the information A by the preset value.

Therefore, in a possible implementation, after failing to receive a data packet, a receiving device does not adjust a value of information B, and a sending device may add a preset value to a value of information A after receiving a failure application receipt. In this way, after receiving the application receipt, the sending device may adjust the value of the information A, so that the information A is the same as the information B.

It should be noted that, herein, a quantity of data packets successfully sent by the sending device may be a sum of a quantity of success application receipts received by the sending device and a quantity of unreceived success application receipts determined by the sending device based on failure application receipts.

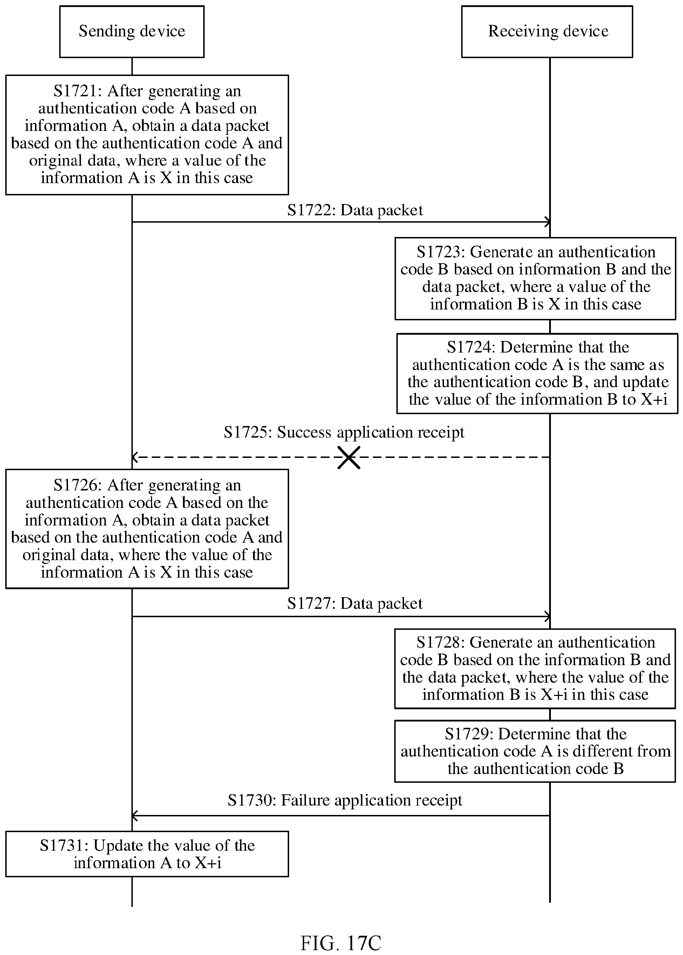

The following describes the foregoing possible implementation with reference to a scenario. Details are shown in FIG. 17C.

S1721: After generating an authentication code A based on information A, a sending device obtains a data packet based on the authentication code A and original data, where a value of the information A is X in this case.

S1722: The sending device sends the data packet to a receiving device.

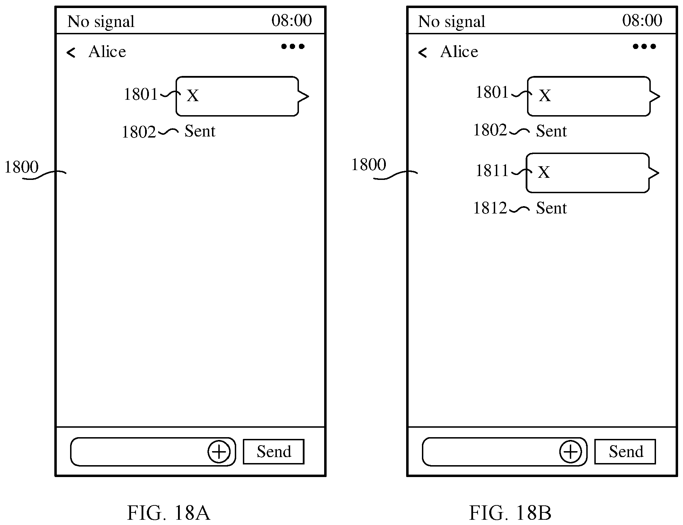

In an inbound process, the sending device is a terminal 100, and the receiving device is a satellite network device 200. After sending the data packet to the satellite network device 200, the terminal 100 may display a message detail interface 1800 shown in FIG. 18A. The message detail interface 1800 may include a message box 1801 and a sending prompt 1802. The message box 1801 may be used to display content of a satellite message that has been sent by the terminal 100 to the satellite network device 200. Herein, the message box 1801 displays message content, for example, "X". The sending prompt 1802 may be used to prompt a user that the terminal 100 has sent, to the satellite network device 200, the content displayed in the message box 1801. For specific descriptions of the message detail interface 1800, refer to the embodiment shown in FIG. 15D. Details are not described herein again. It should be noted that any content displayed in the message box described in this embodiment of this application is content entered by the user in a satellite message. Herein, in this embodiment of this application, the content is written as "X" merely for better describing the embodiment, and this description does not constitute a limitation on the content entered by the user.

S1723: The receiving device generates an authentication code B based on information B and the data packet, where a value of the information B is X in this case.

S1724: The receiving device determines that the authentication code A is the same as the authentication code B, and updates the value of the information B to X+i.

The receiving device determines that the authentication code A is the same as the authentication code B, and determines that the data packet is successfully received. The receiving device may add i to the value of the information B, that is, update the value of the information B to X+i.

S1725: The receiving device fails to send a success application receipt to the sending device.

The success application receipt is lost during sending, and therefore the sending device cannot receive the success application receipt.

S1726: After generating an authentication code A based on the information A, the sending device obtains a data packet based on the authentication code A and original data, where the value of the information A is X in this case.

The sending device cannot receive the success application receipt sent by the receiving device, and therefore cannot determine a sending status of the previous data packet, and cannot update the information A. Therefore, the value of the information A is still X.

S1727: The sending device sends the data packet to the receiving device.

In the inbound process, the sending device is the terminal 100, and the receiving device is the satellite network device 200. After sending the data packet to the satellite network device 200, the terminal 100 may display a message box 1811 and a sending prompt 1812 shown in FIG. 18B. The message box 1811 may be used to display content of a satellite message that has been sent by the terminal 100 to the satellite network device 200. Herein, the message box 1811 displays "X". The sending prompt 1812 may be used to prompt the user that the terminal 100 has sent, to the satellite network device 200, the content displayed in the message box 1811. For specific descriptions of a message detail interface 1800, refer to the embodiment shown in FIG. 15D. Details are not described herein again.

S1728: The receiving device generates an authentication code B based on the information B and the data packet, where the value of the information B is X+i in this case.

S1729: The receiving device determines that the authentication code A is different from the authentication code B.

The receiving device determines that the authentication code A is different from the authentication code B, and determines that the data packet fails to be received.

S1730: The receiving device sends a failure application receipt to the sending device.

S1731: The sending device updates the value of the information A to X+i.

After receiving the failure application receipt, the sending device may determine that the current data packet fails to be received. In addition, because the sending device sends only two data packets, the sending device may determine that the value of the information B is updated, that is, the sending device may determine that the receiving device successfully receives the previous data packet of the sending device. The sending device may determine that the previous data packet is successfully sent and the current data packet fails to be sent, and the sending device may add a preset value to the value of the information A, that is, adjust the value of the information A to X+i.

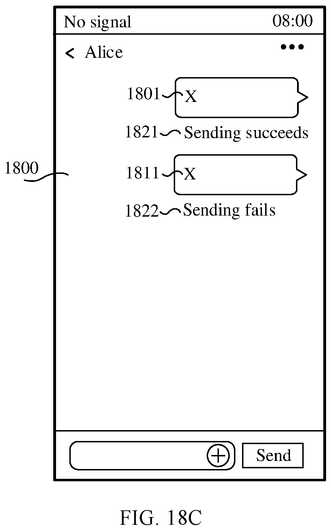

In the inbound process, the sending device is the terminal 100, and the receiving device is the satellite network device 200. After receiving the failure application receipt, the terminal 100 may display success prompt information 1821 and failure prompt information 1822 shown in FIG. 18C. The success prompt information 1821 may be used to prompt the user that the terminal 100 successfully sends the content in the message box 1801 to a recipient. The failure prompt information 1822 may be used to prompt the user that the terminal 100 fails to send the content in the message box 1811 to the recipient. The failure prompt information 1822 may include but is not limited to text prompt information. For example, the failure prompt information 1822 may include text prompt information "Sending fails".

It should be noted that only after receiving an application receipt, the terminal 100 displays result prompt information.

In this way, even if the failure application receipt is intercepted by an attack terminal, the sending device does not repeatedly update the value of the information A.

In some embodiments, when a data packet sent by a sending device is lost in a sending process, and a receiving device does not receive the data packet of the sending device, transmission of a next data packet between the sending device and the receiving device is not affected. The sending device may further determine, based on a success application receipt of the next sent data packet, that the previous data packet fails to be received.

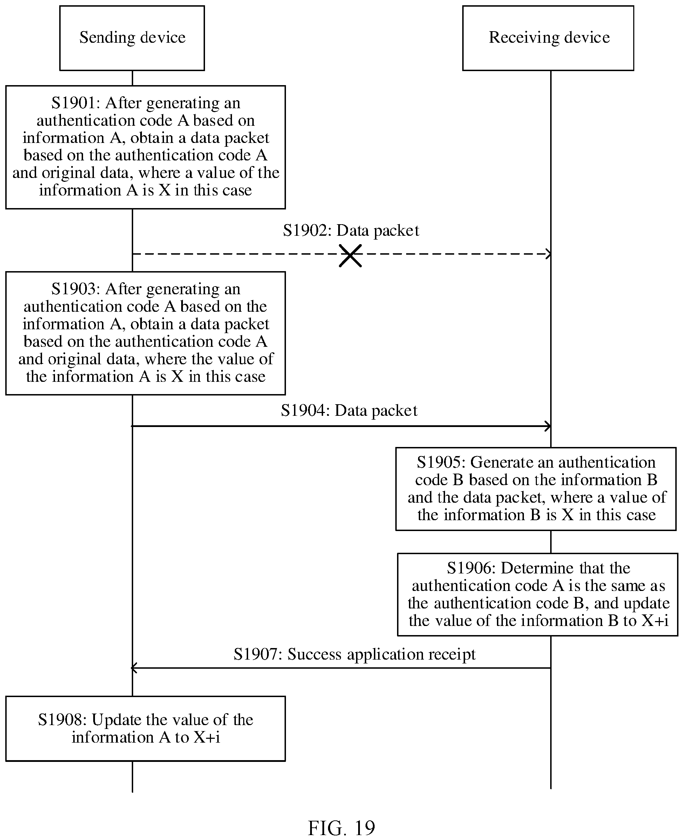

The following describes the foregoing possible implementation with reference to a scenario. Details are shown in FIG. 19.

S1901: After generating an authentication code A based on information A, a sending device obtains a data packet based on the authentication code A and original data, where a value of the information A is X in this case.

S1902: The sending device fails to send the data packet to a receiving device.

The data packet is lost during sending, and therefore the receiving device cannot receive the data packet.

In an inbound process, the sending device is a terminal 100, and the receiving device is a satellite network device 200. After sending the data packet to the satellite network device 200, the terminal 100 may display a message detail interface 1800 shown in FIG. 18A. For detailed descriptions of the message detail interface 1800, refer to the embodiment shown in FIG. 17C. Details are not described herein again.

S1903: After generating an authentication code A based on the information A, the sending device may obtain a data packet based on the authentication code A and original data, where the value of the information A is X in this case.

The receiving device cannot receive the previous data packet sent by the sending device, and therefore does not update information B of the receiving device. In addition, the receiving device does not send a success application receipt to the sending device, and therefore the value of the information A of the sending device is still X.

S1904: The sending device sends the data packet to the receiving device.

In the inbound process, the sending device is the terminal 100, and the receiving device is the satellite network device 200. After sending the data packet to the satellite network device 200, the terminal 100 may display a message box 1811 and a sending prompt 1812 shown in FIG. 18B. For detailed descriptions of the message box 1811 and the sending prompt 1812, refer to the embodiment shown in FIG. 17C. Details are not described herein again.

S1905: The receiving device generates an authentication code B based on the information B and the data packet, where a value of the information B is X in this case.

S1906: The receiving device determines that the authentication code A is the same as the authentication code B, and updates the value of the information B to X+i.

The receiving device determines that the authentication code A is the same as the authentication code B, and determines that the data packet is successfully received. The receiving device may add i to the value of the information B, that is, update the value of the information B to X+i.

S1907: The receiving device sends a success application receipt to the sending device.

S1908: The sending device updates the value of the information A to X+i.

After receiving the success application receipt, the sending device determines that the 2nd data packet is successfully sent. Because the sending device does not update the value of the information A when sending the 2nd data packet, the sending device may determine that the receiving device does not update the value of the information B, either, that is, the receiving device does not receive the 1st data packet. The sending device determines that the 1st data packet fails to be sent.

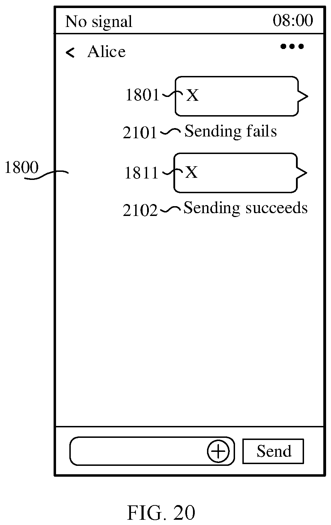

In the inbound process, the sending device is the terminal 100, and the receiving device is the satellite network device 200. After receiving the success application receipt, the terminal 100 may display failure prompt information 2101 and success prompt information 2102 shown in FIG. 20. The failure prompt information 2101 may be used to prompt a user that the terminal 100 fails to send content in a message box 1801 to a recipient. The success prompt information 2102 may be used to prompt the user that the terminal 100 successfully sends content in the message box 1811 to the recipient.

It should be noted that this application is not limited to the foregoing embodiments, and further provides the following embodiments. It should be noted that the following embodiments may be used in mutual combination with any one or more of the foregoing embodiments.

In some embodiments, if a sending device has sent at least two data packets before receiving a failure application receipt (the sending device does not receive an application receipt during sending of the at least two data packets), after receiving the failure application receipt, the sending device cannot determine which data packet in the at least two data packets is successfully sent.

Therefore, in a possible implementation, information A of a sending device is context (context) information A, and information B of a receiving device is context information B. The context information A may indicate information about a quantity of sent data packets. The information B of the receiving device is the context information B, and the context information B may indicate information about a quantity of received data packets. The sending device may add a message ID field A to a data packet. The message ID field A may be used to identify the data packet. The receiving device may determine a value of a message ID field B based on a message ID field A of a successfully received data packet. The receiving device may add the message ID field B to an application receipt. The message ID field B may be used to identify a latest successfully received data packet. The application receipt to which the message ID field B of the successfully received data packet is added may be referred to as an indication application receipt. In this way, when sending a plurality of data packets generated based on a same value of the context information A, the sending device can determine the successfully sent data packet by using the message ID field B in the application receipt.

A terminal 100 and a satellite network device 200 may obtain context information by using a cellular network, the terminal 100 may obtain context information by using an intermediate device, or the terminal 100 and the satellite network device 200 may preset context information. For detailed descriptions of obtaining the context information by the terminal 100 and the satellite network device 200, refer to the foregoing embodiments. Details are not described herein again.

It should be noted that in an inbound process, a success application receipt, a failure application receipt, and an indication application receipt may be collectively referred to as a first application receipt. In an outbound process, a success application receipt, a failure application receipt, and an indication application receipt may be collectively referred to as a third application receipt. It may be understood that, in the inbound process, if the satellite network device 200 generates only a success application receipt and a failure application receipt, the success application receipt and the failure application receipt may be collectively referred to as a first application receipt. In the outbound process, if the terminal 100 generates only a success application receipt and a failure application receipt, the success application receipt and the failure application receipt may be collectively referred to as a third application receipt.

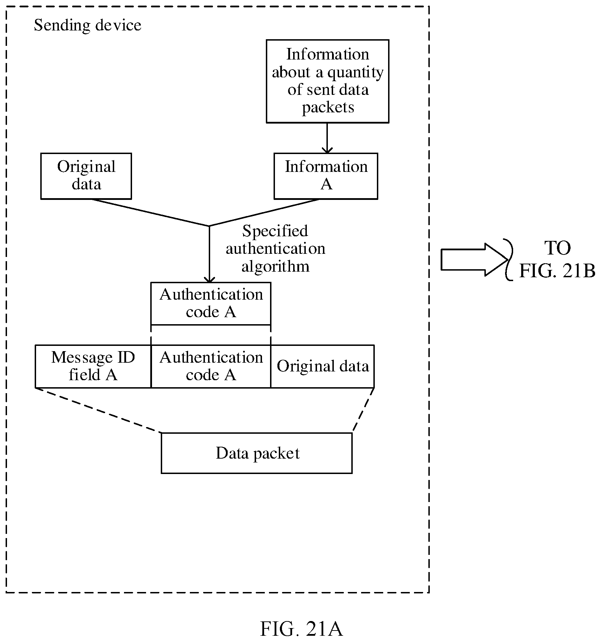

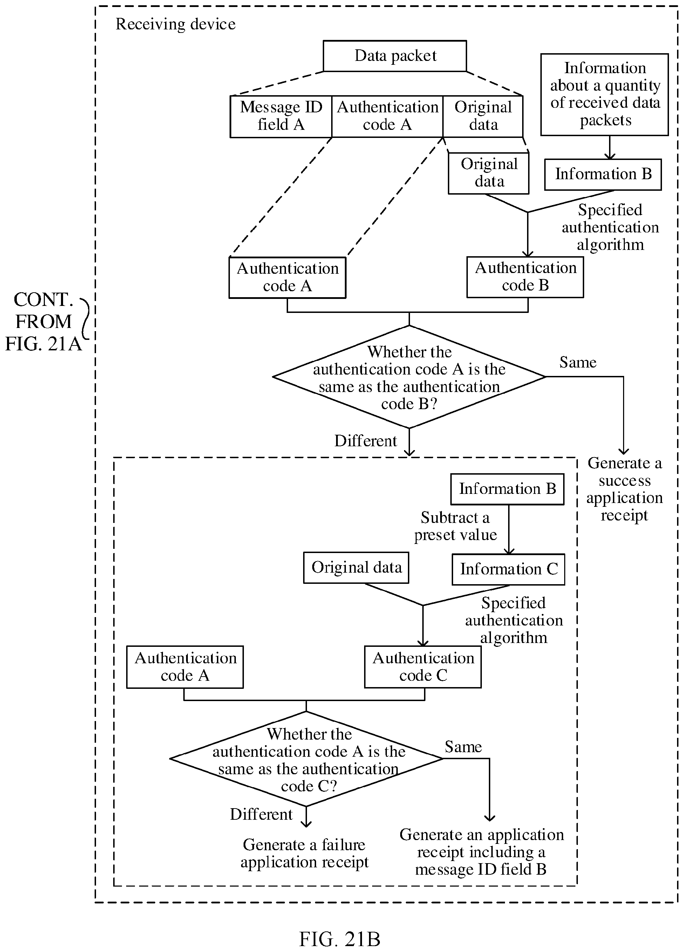

FIG. 21A and FIG. 21B are a schematic diagram of a processing procedure of a transmission method according to an embodiment of this application.

1. A sending device generates an authentication code A based on original data and context information A.

The context information A is context information A, and the context information A may indicate information about a quantity of sent data packets. The information about the quantity of sent data packets is information about a quantity of data packets successfully sent by the sending device. Herein, the information about the quantity of successfully sent data packets may be a sum of a preset offset value, a quantity of success application receipts received by the sending device, and a quantity of indication application receipts received by the sending device. The preset offset value is greater than or equal to 0. That is, after receiving a success application receipt/an indication application receipt, the sending device may add a preset value to a value of the context information A. It should be noted that an increment of the context information A is related to the quantity of data packets successfully sent by the sending device.

The sending device may obtain the authentication code A based on the context information A and the original data. For detailed descriptions of obtaining the authentication code A by the sending device, refer to the foregoing embodiment shown in FIG. 7A and FIG. 7B. Details are not described herein again.

In a possible implementation, the sending device may generate the authentication code A based on the context information A, a specified key, and the original data, and then generate a data packet based on the authentication code A and the original data. A receiving device may generate an authentication code B based on context information B, the specified key, and the data packet. In this way, validity of the sending device can be verified by using the specified key, thereby ensuring transmission security.

2. The sending device obtains the data packet based on a message ID field A, the original data, and the authentication code A.

The sending device may concatenate the message ID field A, the authentication code A, and the original data together, to obtain the data packet.

Specifically, the sending device may store a message ID. When the value of the context information A does not change, a value of the message ID may be updated with a data packet generated by the sending device. That is, the sending device may update the value of the message ID after generating a data packet based on the message ID field A corresponding to the message ID. After the value of the context information A changes, the sending device may reset the value of the message ID. In this way, when the value of the context information A does not change, because the message ID can identify different data packets, the sending device and the receiving device may distinguish between data packets by using message ID fields of the data packets. That is, when the sending device sends a plurality of data packets and does not receive a success application receipt, the receiving device may send a message ID of a latest successfully received data packet to the sending device, so that the sending device can determine a sending status of the plurality of data packets based on a value of the message ID.

For example, when a length of the message ID is 2 bits, the message ID may be "00", "01", "10", or "11". After generating, based on a message ID "00", a data packet 1 including a message ID field A "00", the sending device may send the data packet 1 to the receiving device, and update a value of the message ID to "01". After the sending device receives a success application receipt of the receiving device, the sending device may update the value of the context information A, and reset the value of the message ID to "00". Then, the sending device may generate and send, to the receiving device, a data packet 2 including a message ID field A "00".

After generating, based on a message ID "00", a data packet 1 including a message ID field A "00", the sending device may send the data packet 1 to the receiving device, and update a value of the message ID to "01". When the sending device does not receive an application receipt of the data packet 1 whose message ID field A is "00", the sending device may generate and send, to the receiving device, a data packet 2 including a message ID field A "01", and the sending device may further update the value of the message ID to "10". When the sending device does not receive an application receipt of the data packet 2 whose message ID field A is "01", the sending device may generate and send, to the receiving device, a data packet 3 including a message ID field A "10", and the sending device may further update the value of the message ID to "11". After the sending device receives an indication application receipt including a message ID field B "01", the sending device may determine that the data packets whose message ID fields A are "00" and "10" fail to be sent, and the data packet whose message ID field A is "01" is successfully sent. The sending device may update the value of the context information A and adjust the value of the message ID to "00".

Optionally, the sending device may add packet header information in front of the authentication code A and the original data that are concatenated together, to obtain the data packet. The packet header information may include the message ID field A and the like.

In a possible implementation, the sending device may concatenate the authentication code A and the original data together, to obtain concatenated data. Then, the sending device uses the specified key to encrypt the concatenated data by using a specified algorithm, to obtain encrypted data. The sending device may add packet header information in front of the encrypted data. The packet header information includes an encryption indication field and the message ID field A. The encryption indication field may indicate the specified algorithm (for example, an SM3 hash algorithm) used by the sending device. In this way, because the sending device encrypts the data and then sends the encrypted data to the receiving device, data security can be further ensured. Optionally, the sending device may concatenate the message ID field A, the authentication code A, and the original data together, and then perform encryption by using the specified key.

The sending device may send the data packet to the receiving device. For descriptions of sending the data packet by the sending device to the receiving device during inbound, refer to the foregoing embodiment shown in FIG. 2A(1) and FIG. 2A(2). For descriptions of sending the data packet by the sending device to the receiving device during outbound, refer to the foregoing embodiment shown in FIG. 3A(1) to FIG. 3A(3). Details are not described herein again.

In a possible implementation, when the sending device is a terminal 100, after the sending device sends the data packet to the receiving device, the sending device may display sending prompt information. The sending prompt information may be used to prompt a user that the sending device has sent a satellite message to the receiving device.

3. The receiving device obtains the message ID field A, the authentication code A, and the original data based on the data packet.

After the receiving device receives the data packet sent by the sending device, the receiving device may extract the message ID field A, the authentication code A, and the original data from the data packet. For descriptions of receiving the data packet by the receiving device during inbound, refer to the foregoing embodiment shown in FIG. 2B(1) and FIG. 2B(2). For descriptions of receiving the data packet by the receiving device during outbound, refer to the foregoing embodiment shown in FIG. 3B(1) to FIG. 3B(3). Details are not described herein again.

In a possible implementation, the data packet includes the encryption indication field and the encrypted data. The receiving device may decrypt the encrypted data in the data packet based on the encryption indication field and the specified key, to obtain the message ID field A, the authentication code A, and the original data.

4. The receiving device generates the authentication code B based on the context information B and the data packet.

The receiving device may obtain the authentication code B through calculation based on the context information B and the original data in the data packet by using a specified algorithm (for example, the SM3 hash algorithm). The specified algorithm of the receiving device is the same as the specified algorithm of the sending device. For example, the sending device may add a specified algorithm indication to a packet header of the data packet, where the specified algorithm indication may indicate the specified algorithm used by the sending device; and the receiving device may determine, based on the specified algorithm indication in the received data packet, the specified algorithm indication used by the sending device. For another example, the sending device and the receiving device may negotiate about a used specified algorithm in a cellular network.

In a possible implementation, when the sending device generates the authentication code A based on the original data, the context information A, and the specified key, the receiving device may generate the authentication code B based on the original data, the context information B, and the specified key. The sending device and the receiving device may preset parameters required for generating the authentication codes.

5. The receiving device determines a receiving status of the data packet based on the authentication code B.

The receiving device may determine the receiving status of the data packet by determining, through comparison, whether the authentication code A is the same as the authentication code B.

(1) When the authentication code B is the same as the authentication code A, the receiving device determines that the data packet is successfully received. The receiving device may perform a corresponding processing operation on the original data. For specific descriptions, refer to the embodiment in FIG. 7A and FIG. 7B.

The receiving device may determine a value of a message ID field B based on a value of the message ID field A, and may further update a value of the context information B. Specifically, the receiving device may add a preset value to the value of the context information B.

The receiving device may further generate a success application receipt and send the success application receipt to the sending device. The success application receipt may indicate that the receiving device successfully receives the data packet.

(2) When the authentication code B is different from the authentication code A, the receiving device may obtain information C based on the context information B. Specifically, the receiving device may subtract a preset value from a value of the context information B, to obtain the information C. The receiving device may obtain an authentication code C based on the information C and the original data by using a specified authentication algorithm. The receiving device may determine, through comparison, whether the authentication code C is the same as the authentication code A.

(3) When the authentication code A is the same as the authentication code C, the receiving device may determine that the data packet fails to be received. The receiving device may further generate and send, to the sending device, an indication application receipt. The indication application receipt includes a message ID field B, and the message ID field B may be used to identify a data packet latest successfully received by the receiving device. Because the authentication code C generated by the receiving device based on the information C is the same as the authentication code A, the receiving device may determine that the sending device does not update the value of the context information A, that is, the receiving device may determine that the sending device does not receive a success application receipt indicating the latest successfully received data packet. The receiving device may generate the indication application receipt indicating the latest successfully received data packet. The indication application receipt may further indicate, to the sending device, that the current data packet fails to be received.

In a possible implementation, when determining that the authentication code A is the same as the authentication code C, the receiving device may determine that the data packet is successfully received. The receiving device may add the preset value to the value of the context information B, and determine a value of a message ID field B based on the message ID field A of the current data packet. The receiving device may further generate and send, to the sending device, an indication application receipt. The indication application receipt may include a message ID field B of a latest successfully received data packet. The indication application receipt may indicate, to the sending device, that the current data packet and a data packet including a message ID field A that has a same value as the message ID field B are successfully received. The sending device may add the preset value to the value of the context information A twice based on the indication application receipt.

(4) When the authentication code A is different from the authentication code C, the receiving device may determine that the data packet fails to be received. The receiving device may further generate and send, to the sending device, a failure application receipt. The failure application receipt may indicate that the receiving device fails to receive the data packet.

For example, an application receipt may include but is not limited to a status code. The application receipt may indicate the receiving status of the data packet by using the status code. Each value of the status code may uniquely correspond to one status of receiving the data packet by the receiving device. For example, the status code of the application receipt and the receiving status corresponding to the status code are shown in Table 1.

**Table 1: Application receipt description**

| Status code | Description |
| --- | --- |
| 0000 | Receiving succeeds |

(continued)

| Status code | Description |
|---|---|
| 0001 | Decryption error |
| 0010 | Decoding error |
| 0011-1011 | Reserved |
| 1100 | Context information mismatch (mismatch), where a data packet with a message ID=00 is correctly transmitted |
| 1101 | Context information mismatch (mismatch), where a data packet with a message ID=01 is correctly transmitted |
| 1110 | Context information mismatch (mismatch), where a data packet with a message ID=10 is correctly transmitted |
| 1111 | Context information mismatch (mismatch), where a data packet with a message ID=11 is correctly transmitted |

For example, a length of the status code may be 4 bits. When the authentication code A is the same as the authentication code B, a value of the status code may be "0000", and the status code may indicate that the data packet is successfully received, that is, an application receipt including the status code "0000" is a success application receipt.

When the authentication code A is different from the authentication code B, the receiving device may generate the authentication code C. When the authentication code A is different from the authentication code C, a value of the status code may be "0001 ", and the status code may indicate that the receiving device fails to decrypt the data packet (for example, a decryption failure caused by a key error or a decryption failure caused by an authentication code error), that is, an application receipt including the status code "0001" is a failure application receipt.

When the authentication code A is the same as the authentication code C, the receiving device may determine that there is a mismatch between context information of the sending device and context information of the receiving device. The first two bits of the status code of the receiving device may be "11", and the last two bits of the status code may be the value of the message ID field B. When a value of the status code is "1100", the status code may indicate that a data packet whose value of a message ID field A is "00" and that is received by the receiving device is successfully received, that is, an application receipt including the status code "1100" is an indication application receipt. When a value of the status code is "1101", the status code may indicate that a data packet whose message ID field A is "01" and that is received by the receiving device is successfully received, that is, an application receipt including the status code "1101" is an indication application receipt. When a value of the status code is "1110", the status code may indicate that a data packet whose message ID field is "10" and that is received by the receiving device is successfully received, that is, an application receipt including the status code "1110" is an indication application receipt. When a value of the status code is "1111", the status code may indicate that a data packet whose message ID field is "11" and that is received by the receiving device is successfully received, that is, an application receipt including the status code "1111" is an indication application receipt.

It should be noted that after updating the value of the context information A, the sending device adjusts the value of the message ID associated with the data packet to "00". When the sending device does not receive an application receipt after sending a data packet whose message ID indication A is "00", the sending device may continue to send a data packet whose message ID is "01". If the sending device still does not receive an application receipt, the sending device may continue to send a data packet whose message ID is "10". After the sending device receives a success application receipt/an indication application receipt, the sending device may update the value of the context information A, and adjust the value of the message ID field to "00". The rest can be deduced from this.

For another example, when the receiving device fails to decode the data packet, and a value of the status code is "0010", the status code may indicate that the receiving device fails to decode the data packet (for example, a decoding failure caused by inconsistent encoding manners between the sending device and the receiving device), that is, an application receipt including the status code "0010" is a failure application receipt. Other values of the status code may be reserved values.

It should be noted that the foregoing descriptions of the status code are merely an example, the status code may be alternatively a data segment of another length, and the receiving status corresponding to the value of the status code is not limited to the foregoing described case. This is not limited in this application.

6. The sending device determines a sending status of the data packet based on an application receipt.

The sending device may determine the sending status of the data packet based on the application receipt.

(1) When the application receipt received by the sending device is a success application receipt indicating that the receiving device successfully receives the data packet, the sending device may determine that the data packet is successfully sent. The sending device may add a preset value to the value of the context information A. The preset value added in the sending device is the same as the preset value added in the receiving device.

In some embodiments, when the sending device is the terminal 100, after receiving the success application receipt, the sending device may display success prompt information. The success prompt information may be used to prompt the user that the data packet is successfully sent.

(2) When the application receipt received by the sending device is a failure application receipt indicating that the receiving device fails to receive the data packet, the sending device may determine that the data packet fails to be sent.

Optionally, the sending device may retransmit the data packet that fails to be sent.

In some embodiments, when the sending device is the terminal 100, after receiving the failure application receipt, the sending device may display failure prompt information. The failure prompt information may be used to prompt the user that the data packet fails to be sent.

(3) When the application receipt received by the sending device is an indication application receipt, the sending device may determine that the data packet fails to be sent.

The sending device may determine a latest successfully sent data packet based on a message ID field B in the indication application receipt. Specifically, the sending device may determine a message ID field A of the latest successfully sent data packet based on the message ID field B in the indication application receipt. The sending device may determine the latest successfully sent data packet based on the message ID field A.

The sending device may further add a preset value to the value of the context information A. Because the sending device may determine, based on the indication application receipt, that a success application receipt of a data packet that has been successfully sent is not received, the sending device may determine that a data packet has been previously successfully sent, and accordingly update the value of the context information A.

For example, after the sending device receives an application receipt including a status code "1100", the sending device may determine that a data packet whose message ID field is "00" is successfully sent, and the sending device may update the value of the context information A.

In some embodiments, when the sending device is the terminal 100, after receiving the indication application receipt, the sending device may display success prompt information and failure prompt information. The success prompt information may be used to prompt the user that the data packet indicated by the message ID field B is successfully sent. The failure prompt information may be used to prompt the user that the current data packet fails to be sent.

In a possible implementation, the indication application receipt may indicate that the data packet indicated by the message IDB is successfully sent, and may further indicate that the current data packet is successfully sent. After receiving the indication application receipt, the sending device may add the preset value to the value of the context information A twice. The sending device may further display success prompt information 1 and success prompt information 2. The success prompt information 1 may be used to prompt the user that the data packet identified by the message ID field B is successfully sent. The success prompt information 2 may be used to prompt the user that the current data packet is successfully sent.

The following describes an inbound procedure of a transmission method according to an embodiment of this application.

A terminal 100 may generate a first authentication code based on first information, a specified key, and original data. The first information is first context information, and may indicate information about a quantity of sent data packets. The terminal 100 may obtain a first data packet based on a first message ID, the first authentication code, the specified key, and the original data. The terminal 100 may send the first data packet to a satellite network device 200. After receiving the first data packet, the satellite network device 200 may generate a second authentication code based on second information, the specified key, and the first data packet. The second information is second context information, and indicates information about a quantity of received data packets. The satellite network device 200 may determine a receiving status of the first data packet based on the second authentication code. When the second authentication code is different from the first authentication code, the satellite network device 200 may generate a temporary authentication code. When the first authentication code is the same as the temporary authentication code, the satellite network device 200 may generate an indication application receipt. The indication application receipt includes a second message ID field, and the second message ID field indicates a latest data packet successfully received by the satellite network device 200. In this way, a problem that the receiving device repeatedly receives a same data packet does not occur, and a sending status of the data packet can be further determined after an application receipt is lost.

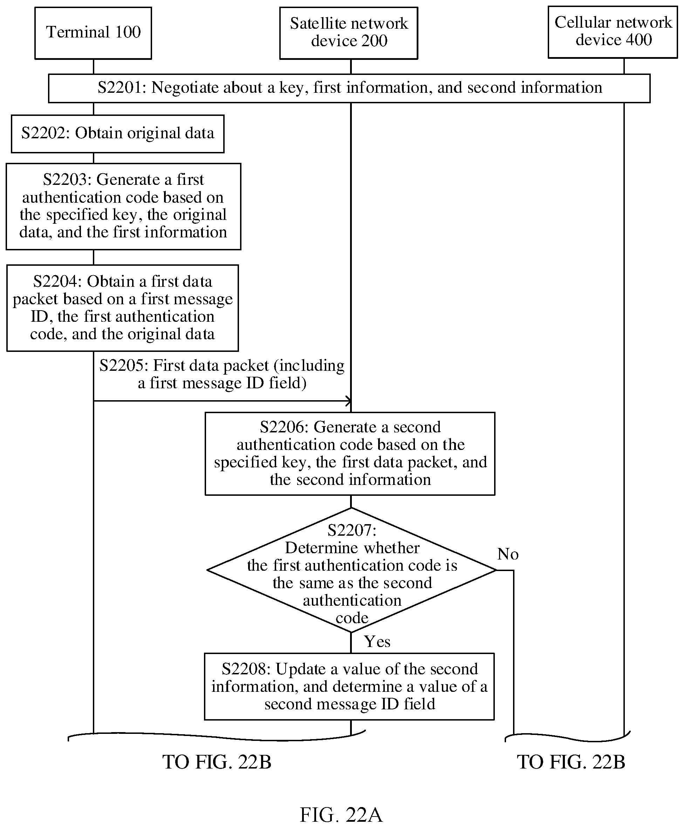

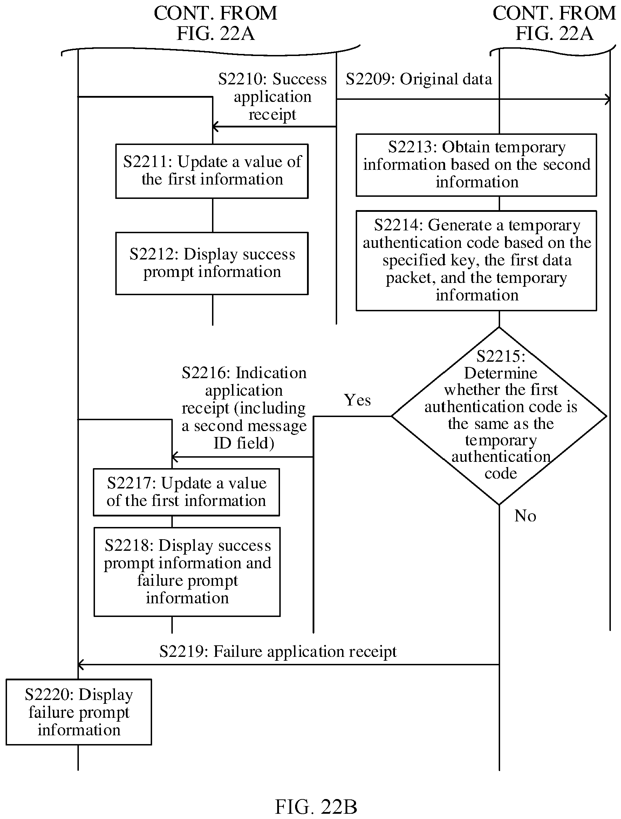

FIG. 22A and FIG. 22B are a schematic diagram of an inbound transmission procedure according to an embodiment of this application.

S2201: A terminal 100, a satellite network device 200, and a cellular network device 400 negotiate about a key, first information, and second information.

For descriptions of negotiating about the key, the first information, and the second information by the terminal 100, the satellite network device 200, and the cellular network device 400, refer to the foregoing embodiment shown in FIG. 11A and FIG. 11B. Details are not described herein again. After negotiating about the key, both the terminal 100 and the satellite network device 200 store the specified key. The terminal 100 stores the first information. The satellite network device 200 stores the second information. An initial value of the first information is the same as an initial value of the second information.

S2202: The terminal 100 obtains original data.

S2203: The terminal 100 generates a first authentication code based on the specified key, the original data, and the first information.

The terminal 100 may obtain the first authentication code through calculation based on the stored first information, the specified key, and the original data by using a specified authentication algorithm (for example, an SM3 hash algorithm).

S2204: The terminal 100 may obtain a first data packet based on a first message ID, the first authentication code, and the original data.

The terminal 100 may generate first indication information (also referred to as a first message ID field) based on the first message ID. The terminal 100 may concatenate the first message ID field, the first authentication code, and the original data, to obtain the first data packet.

In a possible implementation, the terminal 100 may further encrypt, by using the specified key, the first authentication code and the original data that are concatenated together, to obtain the first data packet. Optionally, the terminal 100 may encrypt, by using the specified key, the first message ID field, the first authentication code, and the original data that are concatenated together, to obtain the first data packet.

S2205: The terminal 100 sends the first data packet to the satellite network device 200, where the first data packet includes the first message ID field.

The terminal 100 may update a value of the first message ID after sending the first data packet to the satellite network device 200. For example, the terminal 100 may add a preset value to the value of the first message ID. An updated value of the first message ID is different from the value that is of the first message ID and that exists before the update.

In a possible implementation, after sending the first data packet to the receiving device, the terminal 100 may display sending prompt information. The sending prompt information may be used to prompt a user that the terminal 100 has sent the first data packet to the satellite network device 200.

S2206: The satellite network device 200 may generate a second authentication code based on the specified key, the original data, and the second information.

S2207: The satellite network device 200 determines whether the first authentication code is the same as the second authentication code.

The satellite network device 200 may determine a receiving status of the first data packet by determining, through comparison, whether the first authentication code is the same as the second authentication code. When the first authentication code is the same as the second authentication code, the satellite network device 200 may perform step S2208 to step S2210.

Optionally, the satellite network device 200 may further record and forward, to a network element (for example, a short message service center) in a cellular network, time at which the first data packet is successfully received or the first message ID. The time at which the first data packet is successfully received or the first message ID is used by the network element in the cellular network to record sending success time of an inbound message, to subsequently send the first message ID of transmission success to the terminal 100 in the cellular network, to update a sending status of information for which the terminal 100 fails to receive an application receipt in a satellite network.

When the first authentication code is different from the second authentication code, the satellite network device 200 may perform step S2213 to step S2215.

S2208: The satellite network device 200 updates a value of the second information, and determines a value of a second message ID.

The satellite network device 200 may add a preset value to the value of the second information. For example, when the value of the second information is 0 and the preset value is 1, an updated value of the second information is 1.

The satellite network device 200 may further determine a value of a second message ID field (also referred to as second indication information) based on the first message ID field of the data packet. The value of the second message ID field is the same as a value of the first message ID field.

S2209: The satellite network device 200 sends the original data to the cellular network device 400.

S2210: The satellite network device 200 sends a success application receipt to the terminal 100.

S2211: The terminal 100 updates a value of the first information.

After receiving the success application receipt sent by the satellite network device 200, the terminal 100 may add a preset value to the value of the first information. The preset value added for the first information is the same as the preset value added for the second information, in other words, an updated value of the first information is the same as the updated value of the second information. Optionally, the terminal 100 may further perform step S2212.

S2212: The terminal 100 displays success prompt information.

The terminal 100 displays the success prompt information. The success prompt information prompts the user that the first data packet is successfully sent.

S2213: The satellite network device 200 obtains temporary information based on the second information.

After determining that the first authentication code is different from the second authentication code, the satellite network device 200 may subtract a preset value from a value of the second information, to obtain the temporary information.

S2214: The satellite network device 200 generates a temporary authentication code based on the specified key, the original data, and the temporary information.

The satellite network device 200 may obtain the temporary authentication code through calculation based on the temporary information, the specified key, and the original data by using a specified authentication algorithm (for example, an SM3 hash algorithm).

S2215: The satellite network device 200 determines whether the first authentication code is the same as the temporary authentication code.

The satellite network device 200 may determine, through comparison, whether the first authentication code is the same as the temporary authentication code, to determine whether the first information of the terminal 100 is updated, that is, whether the terminal 100 receives a previous success application receipt. When the first authentication code is the same as the temporary authentication code, the satellite network device 200 may perform step S2216.

When the first authentication code is different from the temporary authentication code, the satellite network device 200 may perform step S2219.

S2216: The satellite network device 200 sends an indication application receipt (including a second message ID field) to the terminal 100.

The satellite network device 200 generates the indication application receipt. The indication application receipt includes second indication information (also referred to as the second message ID field), and the second message ID field may indicate a latest successfully received data packet.

S2217: The terminal 100 updates a value of the first information.

After receiving the indication application receipt sent by the satellite network device 200, the terminal 100 may add a preset value to the value of the first information. An updated value of the first information is the same as a current value of the second information. Optionally, the terminal 100 may further perform step S2218.

S2218: The terminal 100 displays success prompt information and failure prompt information.

The terminal 100 displays the success prompt information and the failure prompt information. The success prompt information prompts that the data packet indicated by a second message ID is successfully sent. The failure prompt information indicates that the first data packet indicated by the first message ID fails to be sent.

S2219: The satellite network device 200 sends a failure application receipt to the terminal 100.

Optionally, after receiving the failure application receipt, the terminal 100 may further perform step S2220.

S2220: The terminal 100 displays failure prompt information.

The terminal 100 displays the failure prompt information. The failure prompt information prompts the user that the first data packet fails to be sent.

For specific descriptions of step S2201 to step S2212, step S2216, and step S2220, refer to the foregoing embodiment shown in FIG. 12. Details are not described herein again.

The following describes an outbound procedure of another transmission method according to an embodiment of this application.

A satellite network device 200 may generate a fourth authentication code based on sixth information and original data. The sixth information is sixth context information, and indicates information about a quantity of sent data packets. The satellite network device 200 may obtain a third data packet based on a fourth message ID, the fourth authentication code, and the original data. The satellite network device 200 may send the third data packet to a terminal 100. After receiving the third data packet, the terminal 100 may generate a third authentication code based on fifth information and the third data packet. The fifth information is fifth context information, and indicates information about a quantity of received data packets. The terminal 100 may determine a receiving status of the third data packet based on the third authentication code. When the third authentication code is different from the fourth authentication code, the terminal 100 may generate a temporary authentication code. When determining that the fourth authentication code is the same as the temporary authentication code, the terminal 100 may generate an indication application receipt including a third message ID field. The third message ID field indicates a data packet latest successfully received by the terminal 100. In this way, a problem of repeatedly receiving a same data packet does not occur, and a sending status of the data packet can be further determined after an application receipt is lost.

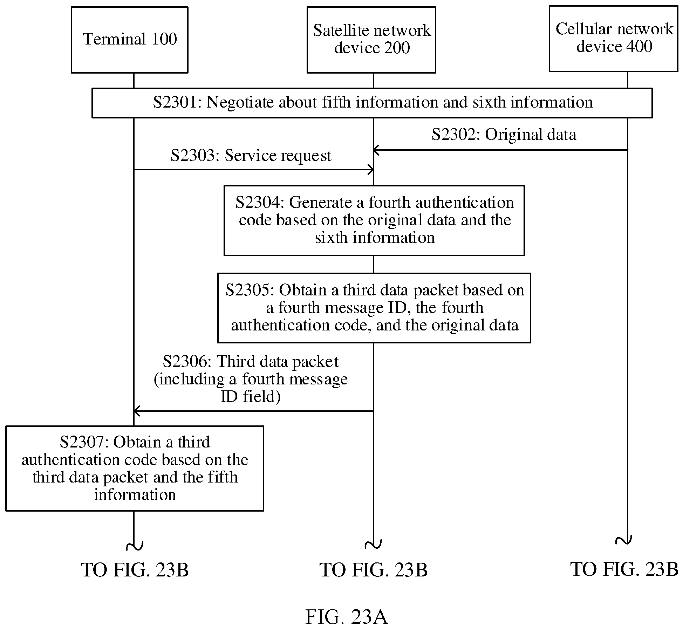

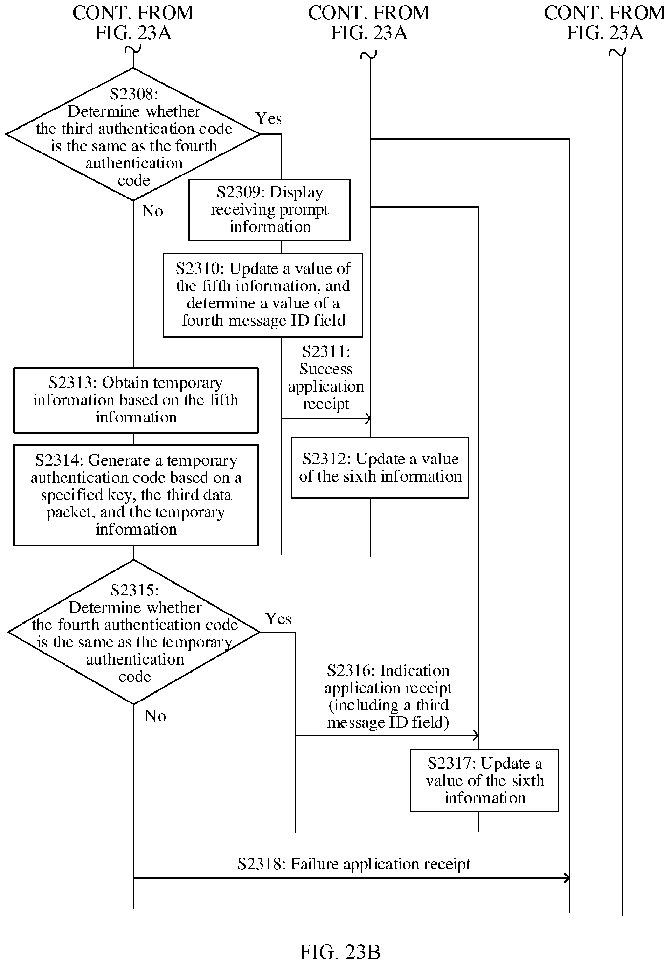

FIG. 23A and FIG. 23B are a schematic diagram of an outbound transmission procedure according to an embodiment of this application.

S2301: A terminal 100, a satellite network device 200, and a cellular network device 400 negotiate about fifth information and sixth information.

The terminal 100 stores the fifth information. The satellite network device 200 stores the sixth information. An initial value of the fifth information is the same as an initial value of the sixth information.

S2302: The satellite network device 200 receives original data sent by the cellular network device 400.

S2303: The satellite network device 200 receives a service request sent by the terminal 100.

S2304: The satellite network device 200 generates a fourth authentication code based on the original data and the sixth information.

The satellite network device 200 may generate the fourth authentication code based on the stored sixth information and the original data.

S2305: The satellite network device 200 obtains a third data packet based on a fourth message ID, the original data, and the fourth authentication code.

The fourth message ID indicates the third data packet. The satellite network device 200 may generate a fourth message ID field (also referred to as sixth indication information) based on the fourth message ID. The satellite network device 200 may concatenate the fourth message ID field, the fourth authentication code, and the original data, to obtain the third data packet.

S2306: The satellite network device 200 sends the third data packet to the terminal 100, where the third data packet includes the fourth message ID field.

S2307: The terminal 100 obtains a third authentication code based on the third data packet and the fifth information.

S2308: The terminal 100 determines whether the third authentication code is the same as the fourth authentication code.

The terminal 100 may determine a receiving status of the third data packet by determining, through comparison, whether the third authentication code is the same as the fourth authentication code. When the third authentication code is the same as the fourth authentication code, the terminal 100 may perform step S2309 to step S2311.

Optionally, the terminal 100 may further record time at which the third data packet is successfully received or the fourth message ID. The time at which the third data packet is successfully received or the fourth message ID may be used by the terminal 100 to subsequently send the fourth message ID of transmission success to the satellite device 200 or a network element in a second transmission system when the terminal 100 accesses the second transmission system (for example, a cellular network or a WLAN), to update a sending status of information for which an application receipt fails to be received in a satellite network. This avoids a charging problem.

When the third authentication code is different from the fourth authentication code, the terminal 100 may perform step S2313 to step S2315.

S2309: The terminal 100 displays receiving prompt information.

S2310: The terminal 100 updates a value of the fifth information, and determines a value of a third message ID field.

After determining that the third authentication code is the same as the fourth authentication code, the terminal 100 may update the value of the fifth information. The terminal 100 may add a preset value to the value of the fifth information. For example, when the value of the fifth information is 0 and the preset value is 1, an updated value of the fifth information is 1.

The terminal 100 may determine the value of the third message ID field (also referred to as fifth indication information) based on a value of the fourth message ID field. The value of the fourth message ID field is the same as the value of the third message ID field.

S2311: The terminal 100 sends a success application receipt to the satellite network device 200.

S2312: The satellite network device 200 updates a value of the sixth information.

After receiving the success application receipt sent by the terminal 100, the satellite network device 200 may add a preset value to the value of the sixth information. The preset value added for the sixth information is the same as the preset value added for the fifth information, in other words, an updated value of the sixth information is the same as the updated value of the fifth information.

S2313: The terminal 100 obtains temporary information based on the fifth information.

After determining that the third authentication code is different from the fourth authentication code, the terminal 100 may subtract a preset value from a value of the fifth information, to obtain the temporary information.

S2314: The terminal 100 generates a temporary authentication code based on a specified key, the original data, and the temporary information.

The terminal 100 may obtain the temporary authentication code through calculation based on the temporary information, the specified key, and the original data by using a specified authentication algorithm (for example, an SM3 hash algorithm).

S2315: The terminal 100 determines whether the fourth authentication code is the same as the temporary authentication code.

The terminal 100 may determine, through comparison, whether the fourth authentication code is the same as the temporary authentication code, to determine whether the sixth information of the satellite network device 200 is updated, that is, whether the satellite network device 200 receives a previous success application receipt. When the fourth authentication code is the same as the temporary authentication code, the terminal 100 may perform step S2316.

When the fourth authentication code is different from the temporary authentication code, the terminal 100 may perform step S2318.

S2316: The terminal 100 sends an indication application receipt (including a third message ID field) to the satellite network device 200.

The terminal 100 generates the indication application receipt. The indication application receipt includes the third message ID field, and the third message ID field indicates a latest successfully received data packet.

S2317: The satellite network device 200 updates a value of the sixth information.

After receiving the indication application receipt sent by the terminal 100, the satellite network device 200 may determine that the data packet indicated by a third message ID is successfully sent. The satellite network device 200 may add a preset value to the value of the sixth information. An updated value of the sixth information is the same as a current value of the fifth information.

S2318: The terminal 100 sends a failure application receipt to the satellite network device 200.

For specific descriptions of step S2301 to step S2312, step S2317, and step S2318, refer to the foregoing embodiment shown in FIG. 13. Details are not described herein again.

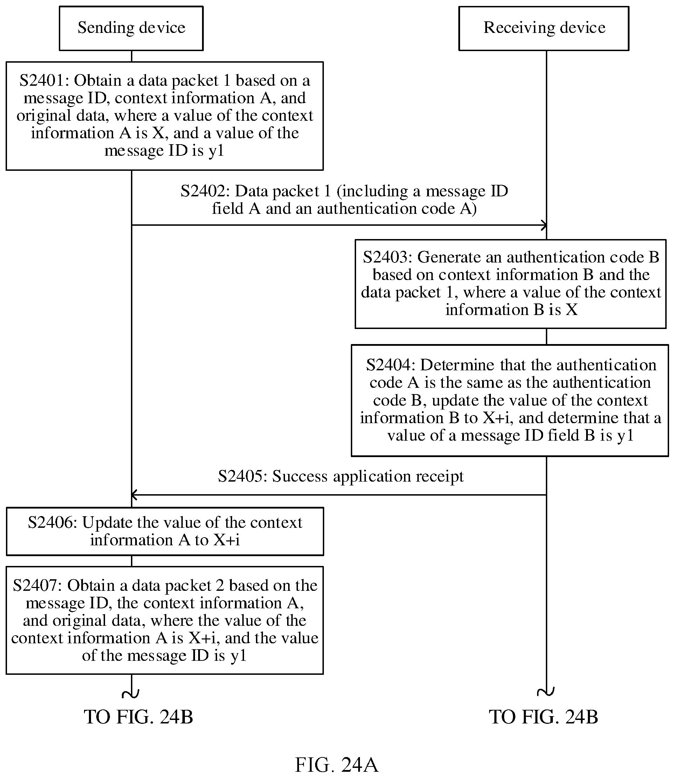

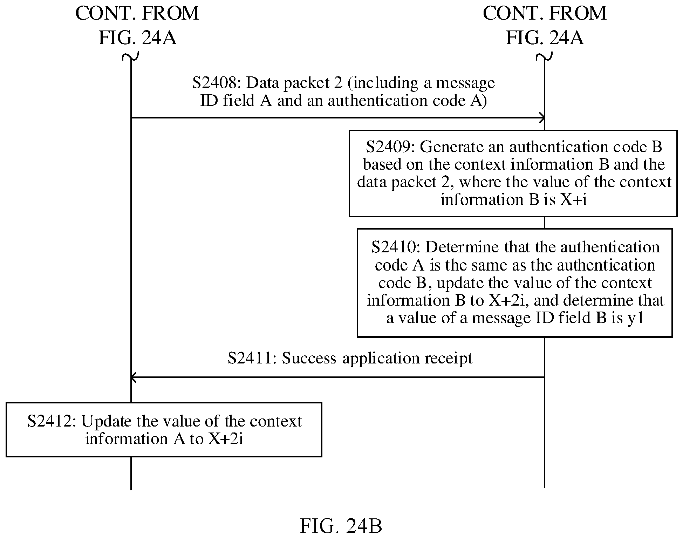

The following describes the foregoing possible implementation with reference to a scenario. Details are shown in FIG. 24A and FIG. 24B.

S2401: A sending device obtains a data packet 1 based on a message ID, context information A, and original data, where a value of the context information A is X, and a value of the message ID is y1.

The sending device may generate an authentication code A based on the context information A. The sending device may obtain a message ID field A based on the stored message ID. The sending device may obtain the data packet 1 based on the message ID field A, the original data, and the authentication code A.

S2402: The sending device sends the data packet 1 to a receiving device, where the data packet 1 includes the message ID field A and the authentication code A.

After sending the data packet 1 to the receiving device, the sending device may update the value of the message ID to y2. y1 is different from y2.

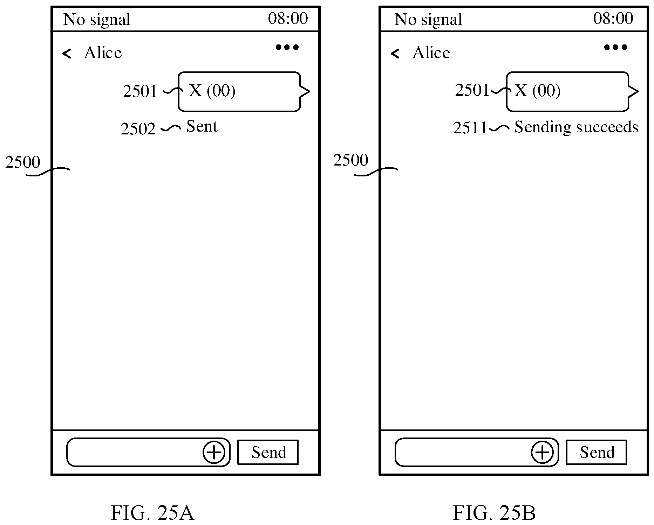

For example, when a length of the message ID is 2 bits, y1 may be "00", and y2 may be "01". In an inbound process, the sending device is a terminal 100, and the receiving device is a satellite network device 200. After sending the data packet 1 including a message ID field A "00" to the satellite network device 200, the terminal 100 may display a message detail interface 2500 shown in FIG. 25A. The message detail interface 2500 may include a message box 2501 and a sending prompt 2502. The message box 2501 may be used to display content of a satellite message that has been sent by the terminal 100 to the satellite network device 200. Herein, the message box 2501 displays "X (00)". The sending prompt 2502 may be used to prompt a user that the terminal 100 has sent, to the satellite network device 200, the content displayed in the message box 2501. For specific descriptions of the message detail interface 2500, refer to the embodiment shown in FIG. 15D. Details are not described herein again. The terminal 100 may update the value of the message ID to "01" after generating a data packet based on the current message ID field A.

S2403: The receiving device generates an authentication code B based on context information B and the data packet 1, where a value of the context information B is X.

S2404: The receiving device determines that the authentication code A is the same as the authentication code B, updates the value of the context information B to X+i, and determines that a value of a message ID field B is y1.

The receiving device determines that the authentication code A is the same as the authentication code B, and determines that the data packet is successfully received. The receiving device may add i to the value of the information B, that is, update the value of the information B to X+i.

The receiving device may determine the value of the message ID field B based on a value of the message ID field A of the data packet 1, that is, determine that the value of the message ID field B is y1.

S2405: The receiving device fails to send a success application receipt to the sending device.

S2406: The sending device updates the value of the context information A to X+i.

The sending device may further adjust the value of the message ID to y1.

For example, in the inbound process, after receiving the success application receipt, the terminal 100 may display a success prompt 2511 shown in FIG. 25B. The success prompt 2511 may be used to prompt the user that the terminal 100 successfully sends the content displayed in the message box 2501. For specific descriptions of a message detail interface 2500, refer to the embodiment shown in FIG. 15D. Details are not described herein again.

S2407: The sending device obtains a data packet 2 based on the message ID, the context information A, and original data, where the value of the context information A is X+i, and the value of the message ID is y1.

S2408: The sending device sends the data packet 2 to the receiving device, where the data packet 2 includes a message ID field A and an authentication code A.

After sending the data packet 2 to the receiving device, the sending device may update the value of the message ID to y2. y1 is different from y2.

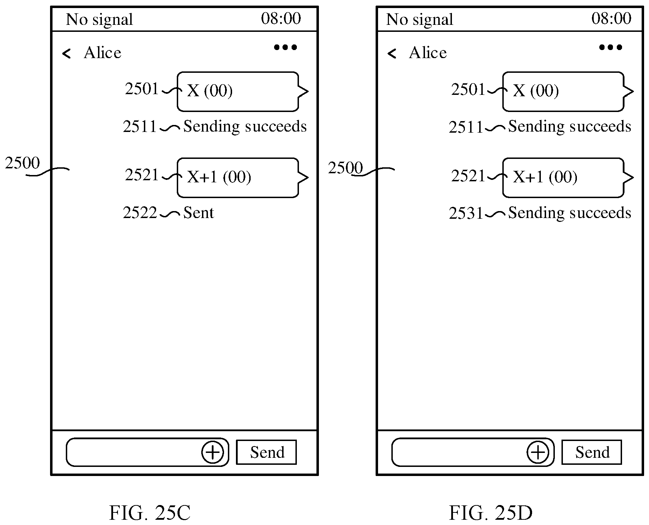

In the inbound process, after sending the data packet to the satellite network device 200, the terminal 100 may display a message box 2521 and a sending prompt 2522 shown in FIG. 25C. The message box 2521 may be used to display content of a satellite message that has been sent by the terminal 100 to the satellite network device 200. Herein, the message box 2521 displays "X+1 (00)". The sending prompt 2522 may be used to prompt the user that the terminal 100 has sent, to the satellite network device 200, the content displayed in the message box 2521. For specific descriptions of a message detail interface 2500, refer to the embodiment shown in FIG. 15D. Details are not described herein again.

S2409: The receiving device generates an authentication code B based on the context information B and the data packet 2, where the value of the context information B is X+i.

S2410: The receiving device determines that the authentication code A is the same as the authentication code B, updates the value of the context information B to X+2i, and determines that a value of a message ID field B is y1.

The receiving device may determine the value of the message ID field B based on a value of the message ID field A of the data packet 1, that is, determine that the value of the message ID field B is y1.

S2411: The receiving device sends a success application receipt to the sending device.

S2412: The sending device updates the value of the context information A to X+2i.

The sending device may further adjust the value of the message ID to y1.

After receiving the success application receipt, the terminal 100 may display success prompt information 2531 shown in FIG. 25D. The success prompt information 2531 may be used to prompt the user that the terminal 100 successfully sends the content in the message box 2521 to a recipient. The success prompt information 2531 may include but is not limited to text prompt information. For example, the success prompt information 2531 may include text prompt information "Sending succeeds".

The following describes, with reference to a scenario, a case in which data may be lost in a sending process in embodiments of this application.

1. Case in which a data packet is lost.

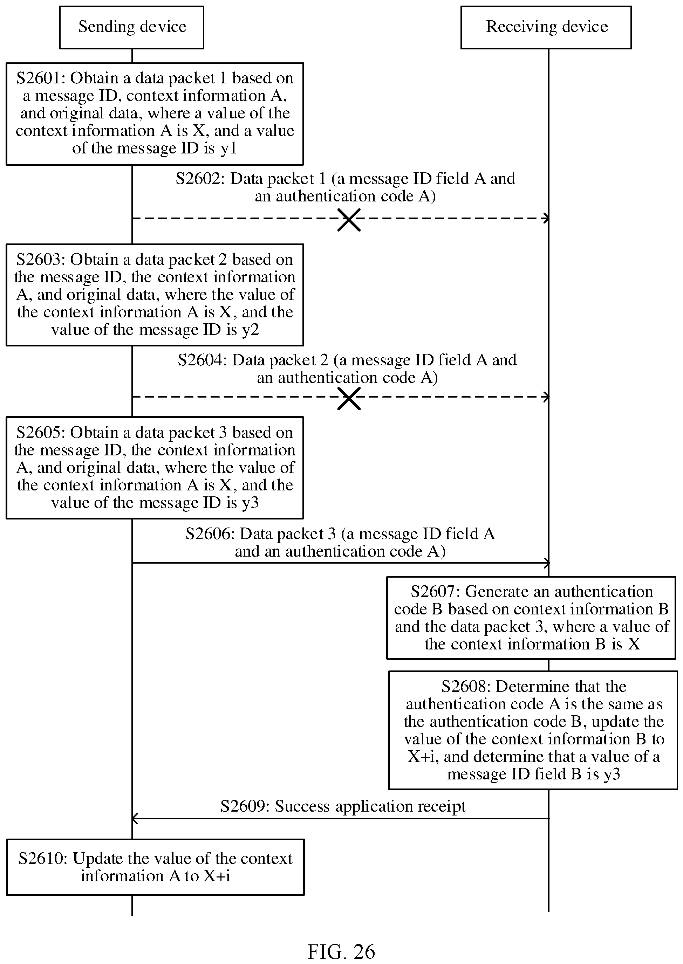

When a sending device sends a data packet to a receiving device, and the receiving device does not receive the data packet of the sending device, transmission of a next data packet between the sending device and the receiving device is not affected. This is shown in FIG. 26.

S2601: A sending device obtains a data packet 1 based on a message ID, context information A, and original data, where a value of the context information A is X, and a value of the message ID is y1.

The sending device may generate an authentication code A based on the context information A. The sending device may obtain a message ID field A based on the stored message ID. The sending device may obtain the data packet 1 based on the message ID field A, the original data, and the authentication code A.

S2602: The sending device fails to send the data packet 1 (including the message ID field A and the authentication code A) to a receiving device.

After sending the data packet 1 to the receiving device, the sending device may update the value of the message ID to y2. y1 is different from y2. For detailed descriptions of the message ID, refer to the foregoing embodiment shown in FIG. 21A and FIG. 21B. Details are not described herein again.

The data packet 1 is lost during sending, and therefore the receiving device cannot receive the data packet 1.

S2603: The sending device obtains a data packet 2 based on the message ID, the context information A, and original data, where the value of the context information A is X, and the value of the message ID is y2.

The receiving device cannot receive the data packet 1 sent by the sending device, and therefore does not update context information B of the receiving device. In addition, the receiving device does not send a success application receipt to the sending device, and therefore the value of the context information A of the sending device is still X.

S2604: The sending device sends the data packet 2 (including a message ID field A and an authentication code A) to the receiving device.

After sending the data packet 2 to the receiving device, the sending device may update the value of the message ID to y3. y3 is different from y2, and y3 is different from y1.

The data packet 2 is lost during sending, and therefore the receiving device cannot receive the data packet 2.

S2605: The sending device obtains a data packet 3 based on the message ID, the context information A, and original data, where the value of the context information A is X, and the value of the message ID is y3.

The receiving device cannot receive the data packet 2 sent by the sending device, and therefore does not update the context information B of the receiving device. In addition, the receiving device does not send a success application receipt to the sending device, and therefore the value of the context information A of the sending device is still X.

S2606: The sending device sends the data packet 3 (including a message ID field A and an authentication code A) to the receiving device.

After sending the data packet 3 to the receiving device, the sending device may update the value of the message ID to y4. y4 is different from y3, y2, and y1.

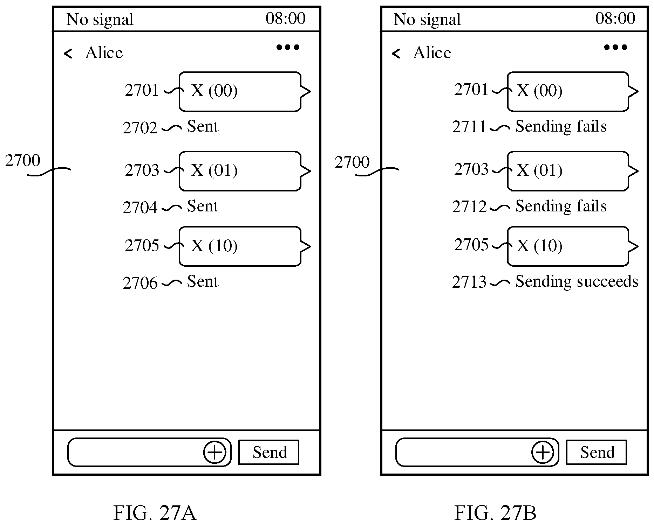

For example, in an inbound process, after sending the data packet 3 to a satellite network device 200, a terminal 100 may display a message detail interface 2700 shown in FIG. 27A. The message detail interface 2700 may include a message box 2701, a message box 2703, a message box 2705, a sending prompt 2702, a sending prompt 2704, and a sending prompt 2706. The message box 2701, the message box 2703, and the message box 2705 may be used to display content of satellite messages that have been sent by the terminal 100 to the satellite network device 200. For example, the message box 2701 displays message content "X (00)" entered by a user, the message box 2703 displays message content "X (01)" entered by the user, and the message box 2705 displays message content "X (10)" entered by the user.

The sending prompt 2702, the sending prompt 2704, and the sending prompt 2706 may be used to prompt the user that the terminal 100 has sent, to the satellite network device 200, the content displayed in the message boxes. For specific descriptions of the message detail interface 2700, refer to the embodiment shown in FIG. 15D. Details are not described herein again.

S2607: The receiving device generates an authentication code B based on the context information B and the data packet 3, where a value of the context information B is X.

S2608: The receiving device determines that the authentication code A is the same as the authentication code B, updates the value of the context information B to X+i, and determines that a value of a message ID field B is y3.

The receiving device determines that the authentication code A is the same as the authentication code B, and determines that the data packet 3 is successfully received. The receiving device may add i to the value of the context information B, that is, update the value of the information B to X+i.

The receiving device may determine the value of the message ID field B based on a value of the message ID field A in the data packet 3.

S2609: The receiving device sends a success application receipt to the sending device.

S2610: The sending device updates the value of the context information A to X+i.

The sending device may adjust the value of the message ID of the sending device to y1 after receiving the success application receipt. In this way, the sending device can determine a unique data packet based on both the context information A and a value of a message ID field A, so that a length of the message ID can be reduced, thereby saving an air interface resource used for transmission.

For example, in the inbound process, after receiving the success application receipt, the terminal 100 may display failure prompt information 2711, failure prompt information 2712, and success prompt information 2713 shown in FIG. 27B. The failure prompt information 2711 may be used to prompt the user that the terminal 100 fails to send the content in the message box 2701 to a recipient. The failure prompt information 2712 may be used to prompt the user that the terminal 100 fails to send the content in the message box 2703 to the recipient. The success prompt information 2713 may be used to prompt the user that the terminal 100 successfully sends the content in the message box 2705 to the recipient.

For specific descriptions of the foregoing steps, refer to the foregoing embodiment shown in FIG. 11A and FIG. 11B. Details are not described herein again.

In this way, when the sending device sends a data packet to the receiving device, the data packet is lost in a sending process, and therefore the receiving device cannot receive the data packet. However, because neither context information of the sending device nor context information of the receiving device is updated, transmission of a subsequent data packet is not affected.

2. Case in which an application receipt is lost.

When a sending device sends a plurality of data packets to a receiving device, after successfully receiving a data packet in the plurality of data packets, the receiving device may update a value of context information B. The receiving device may further determine a value of a message ID field B based on a message ID field A of the successfully received data packet, and send a success application receipt to the sending device.

The success application receipt sent by the receiving device to the sending device is lost in a sending process, and therefore the sending device cannot receive the success application receipt, and does not update a value of context information A. The sending device sends, to the receiving device, a data packet that is generated based on the un-updated context information A and that includes an authentication code A.

When determining that authentication codes are different, the receiving device may generate an authentication code C based on the context information B. When determining that the authentication code A is the same as the authentication code C, the receiving device may determine that the sending device does not receive the success application receipt. The receiving device may generate an indication application receipt (which may indicate a latest successfully received data packet) including the message ID field B, and send the indication application receipt to the sending device.

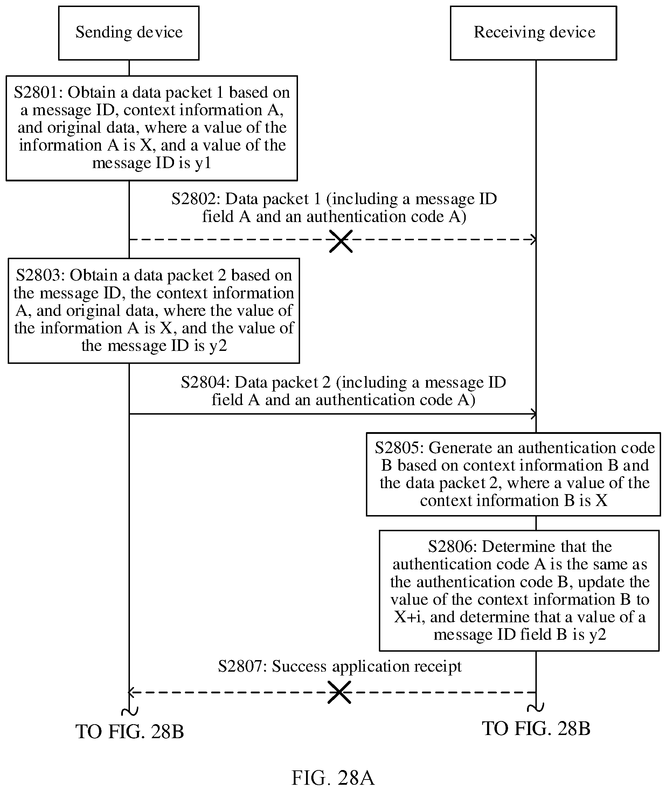

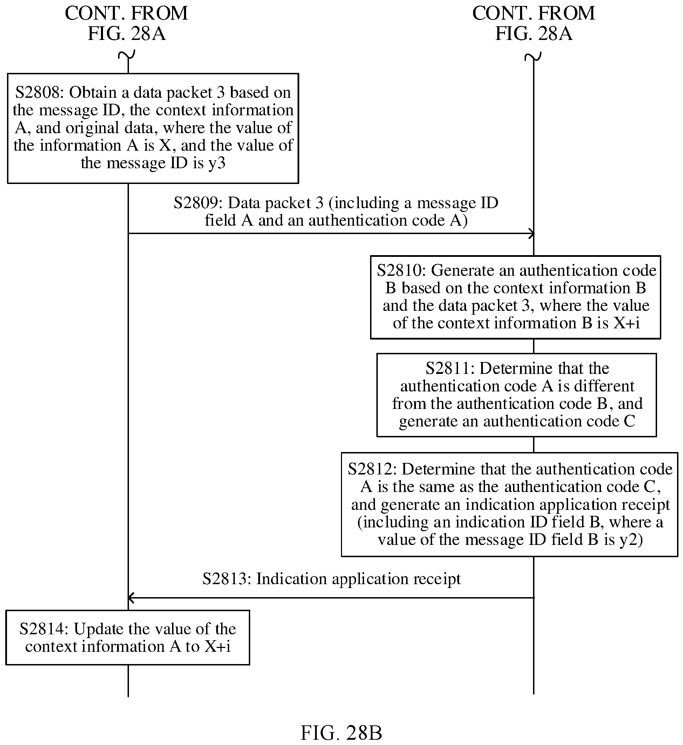

In this way, the sending device can determine, based on the indication application receipt, the successfully sent data packet and a data packet that fails to be sent, and may update the value of the context information A based on the indication application receipt, without affecting transmission of a subsequent data packet. Details are shown in FIG. 28A and FIG. 28B.

S2801: A sending device obtains a data packet 1 based on a message ID, context information A, and original data, where a value of the context information A is X, and a value of the message ID is y1.

S2802: The sending device sends a data packet 1 (including a message ID field A and an authentication code A) to a receiving device.

After sending the data packet 1 to the receiving device, the sending device may update the value of the message ID to y2. y1 is different from y2. For detailed descriptions of the message ID, refer to the foregoing embodiment shown in FIG. 21A and FIG. 21B. Details are not described herein again.

The data packet 1 is lost during sending, and therefore the receiving device cannot receive the data packet 1.

S2803: The sending device obtains a data packet 2 based on the message ID, the context information A, and original data, where the value of the context information A is X, and the value of the message ID is y2.

The receiving device cannot receive the data packet 1 sent by the sending device, and therefore does not update context information B of the receiving device. In addition, the receiving device does not send a success application receipt to the sending device, and therefore the value of the context information A of the sending device is still X.

S2804: The sending device sends the data packet 2 (including a message ID field A and an authentication code A) to the receiving device.

After sending the data packet 2 to the receiving device, the sending device may update the value of the message ID to y3. y3 is different from y2 and y1.

S2805: The receiving device generates an authentication code B based on the context information B and the data packet 2, where a value of the context information B is X.

S2806: The receiving device determines that the authentication code A is the same as the authentication code B, updates the value of the context information B to X+i, and determines that a value of a message ID field B is y2.

S2807: The receiving device fails to send a success application receipt to the sending device.

The success application receipt is lost during sending, and therefore the sending device cannot receive the success application receipt.

S2808: The sending device obtains a data packet 3 based on the message ID, the context information A, and original data, where the value of the context information A is X, and the value of the message ID is y3.

The sending device cannot receive the success application receipt sent by the receiving device, and therefore cannot determine a sending status of the data packet 2, and cannot update the context information A. Therefore, the value of the context information A is still X.

S2809: The sending device sends the data packet 3 (including a message ID field A and an authentication code A) to the receiving device.

After sending the data packet 3 to the receiving device, the sending device may update the value of the message ID to y4. y4 is different from y3, y2, and y1.

For example, in an inbound process, after sending the data packet 3 to a satellite network device 200, a terminal 100 may display a message detail interface 2700 shown in FIG. 27A. For detailed descriptions of the message detail interface 2700, refer to the foregoing embodiment shown in FIG. 26. Details are not described herein again.

S2810: The receiving device generates an authentication code B based on the context information B and the data packet 3, where the value of the context information B is X+i.

S2811: The receiving device determines that the authentication code A is different from the authentication code B, and generates an authentication code C.

After determining that the authentication code A is different from the authentication code B, the receiving device may generate context information C based on the context information B, and generate the authentication code C based on the context information C. The context information B is greater than the context information C by a preset value.

S2812: The receiving device determines that the authentication code A is the same as the authentication code C, and generates an indication application receipt (including an indication ID field B, where a value of the indication ID field B is y2).

After determining that the authentication code A is the same as the authentication code C, the receiving device may determine that the value of the context information A of the sending device is different from the value of the context information B, and the receiving device may generate the indication application receipt based on the message ID field B. The value of the message ID field B is y2, and the message ID field B may indicate the data packet 2 latest successfully received by the receiving device.

S2813: The receiving device sends the indication application receipt to the sending device.

S2814: The sending device updates the value of the context information A to X+i.

After receiving the indication application receipt, the sending device may determine, based on the indication application receipt, that the data packet 2 indicated by the message ID field B is successfully sent. The sending device may update the value of the context information A to X+i. The sending device may further adjust the value of the message ID to y1.

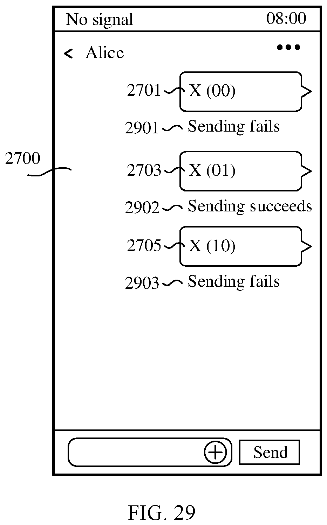

For example, in the inbound process, after receiving the indication application receipt, the terminal 100 may display failure prompt information 2901, success prompt information 2902, and failure prompt information 2903 shown in FIG. 29. The failure prompt information 2901 may be used to prompt a user that the terminal 100 fails to send the content in the message box 2701 to a recipient. The success prompt information 2902 may be used to prompt the user that the terminal 100 successfully sends the content in the message box 2703 to the recipient. The failure prompt information 2903 may be used to prompt the user that the terminal 100 fails to send the content in the message box 2705 to the recipient.

For specific descriptions of the foregoing steps, refer to the foregoing embodiment shown in FIG. 11A and FIG. 11B. Details are not described herein again.

In this way, the sending device can determine the successfully sent data packet by using the indication application receipt, and update the value of the context information A, so that the sending device and the receiving device can continue to transmit a subsequent data packet.

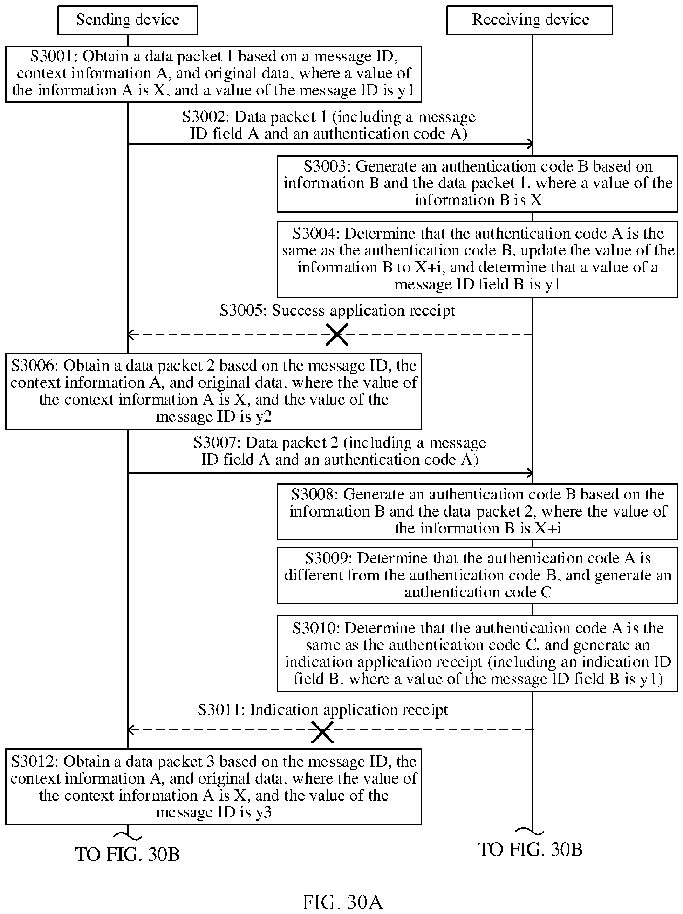

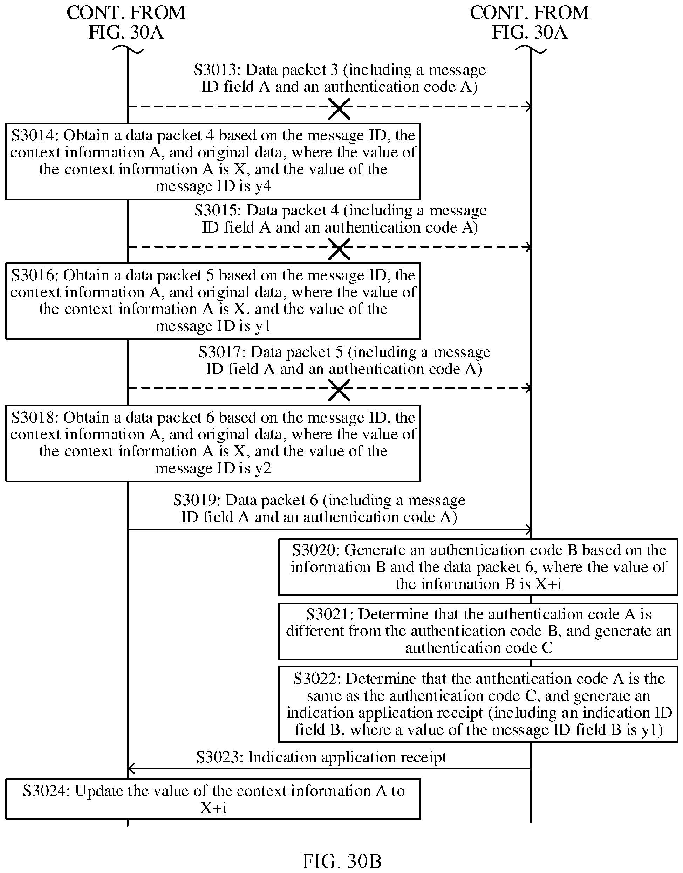

However, due to limitation of a length of a message ID field A, when a sending device sends a plurality of data packets that include a same message ID field A and that are generated based on a same value of context information A, if a quantity of data packets indicated by a message ID field B in an indication application receipt received by the sending device is greater than 1, the sending device cannot determine sending statuses of the data packets. This is shown in FIG. 30A and FIG. 30B.

S3001: A sending device obtains a data packet 1 based on a message ID, context information A, and original data, where a value of the context information A is X, and a value of the message ID is y1.

S3002: The sending device sends the data packet 1 (including a message ID field A and an authentication code A) to a receiving device.

After sending the data packet 1 to the receiving device, the sending device may update the value of the message ID to y2. y1 is different from y2. For detailed descriptions of the message ID, refer to the foregoing embodiment shown in FIG. 21A and FIG. 21B. Details are not described herein again.

S3003: The receiving device generates an authentication code B based on context information B and the data packet 1, where a value of the context information B is X.

S3004: The receiving device determines that the authentication code A is the same as the authentication code B, updates the value of the context information B to X+i, and determines that a value of a message ID field B is y1.

S3005: The receiving device fails to send a success application receipt to the sending device.

The success application receipt is lost during sending, and therefore the sending device cannot receive the success application receipt.

S3006: The sending device obtains a data packet 2 based on the message ID, the context information A, and original data, where the value of the context information A is X, and the value of the message ID is y2.

Because the sending device does not receive the success application receipt, the value of the context information A of the sending device is still X.

S3007: The sending device sends the data packet 2 (including a message ID field A and an authentication code A) to the receiving device.

After sending the data packet 2 to the receiving device, the sending device may update the value of the message ID to y3. y3 is different from y2 and y1.

S3008: The receiving device generates an authentication code B based on the context information B and the data packet 2, where the value of the context information B is X+i.

S3009: The receiving device determines that the authentication code A is different from the authentication code B, and generates an authentication code C.

After determining that the authentication code A is different from the authentication code B, the receiving device may generate context information C based on the context information B, and generate the authentication code C based on the context information C. The context information B is greater than the context information C by a preset value, that is, a value of the context information C is X.

S3010: The receiving device determines that the authentication code A is the same as the authentication code C, and generates an indication application receipt (including an indication ID field B, where a value of the indication ID field B is y1).

After determining that the authentication code A is the same as the authentication code C, the receiving device may determine that the value of the context information A of the sending device is different from the value of the context information B, and the receiving device may generate the indication application receipt based on the message ID field B. The value of the message ID field B is y1, and the message ID field B may indicate the data packet 1 latest successfully received by the receiving device.

S3011: The receiving device fails to send the indication application receipt to the sending device.

The indication application receipt is lost during sending, and therefore the sending device cannot receive the indication application receipt.

S3012: The sending device obtains a data packet 3 based on the message ID, the context information A, and original data, where the value of the context information A is X, and the value of the message ID is y3.

The sending device cannot receive the indication application receipt sent by the receiving device, and therefore cannot determine a sending status of the data packet 2, and cannot update the context information A. Therefore, the value of the context information A is still X.

S3013: The sending device fails to send the data packet 3 (including a message ID field A and an authentication code A) to the receiving device.

After sending the data packet 3 to the receiving device, the sending device may update the value of the message ID to y4. y4 is different from y3, y2, and y1.

The data packet 3 is lost in a sending transmission process, and therefore the receiving device cannot receive the data packet 3.

S3014: The sending device obtains a data packet 4 based on the message ID, the context information A, and original data, where the value of the context information A is X, and the value of the message ID is y4.

The sending device cannot receive an application receipt sent by the receiving device, and therefore cannot determine a sending status of the data packet 3, and cannot update the context information A. Therefore, the value of the context information A is still X.

S3015: The sending device fails to send the data packet 4 (including a message ID field A and an authentication code A) to the receiving device.

After sending the data packet 4 to the receiving device, the sending device may update the value of the message ID to y1. Because the sending device presets the value of the message ID to only y1, y2, y3, and y4, after the sending device generates more than four data packets based on the context information A that is X, the sending device may update a value of the message ID field A to y1 after generating and sending the fourth data packet.

The data packet 4 is lost in a sending transmission process, and therefore the receiving device cannot receive the data packet 4.

S3016: The sending device obtains a data packet 5 based on the message ID, the context information A, and original data, where the value of the context information A is X, and the value of the message ID is y1.

The sending device cannot receive an application receipt sent by the receiving device, and therefore cannot determine a sending status of the data packet 4, and cannot update the context information A. Therefore, the value of the context information A is still X.

S3017: The sending device fails to send the data packet 5 (including a message ID field A and an authentication code A) to the receiving device.

After sending the data packet 5 to the receiving device, the sending device may update the value of the message ID to y2. Because the sending device presets the value of the message ID to only y1, y2, y3, and y4, after the sending device generates more than four data packets based on the context information A that is X, the sending device may update the value of the message ID field A to y2 after generating and sending the fifth data packet.

The data packet 5 is lost in a sending transmission process, and therefore the receiving device cannot receive the data packet 4.

S3018: The sending device obtains a data packet 6 based on the message ID, the context information A, and original data, where the value of the context information A is X, and the value of the message ID is y2.

The sending device cannot receive an application receipt sent by the receiving device, and therefore cannot determine a sending status of the data packet 5, and cannot update the context information A. Therefore, the value of the context information A is still X.

S3019: The sending device sends the data packet 6 (including a message ID field A and an authentication code A) to the receiving device.

After sending the data packet 6 to the receiving device, the sending device may update the value of the message ID to y3. Because the sending device presets the value of the message ID to only y1, y2, y3, and y4, after the sending device generates more than four data packets based on the context information A that is X, the sending device may update the value of the message ID field A to y3 after generating and sending the sixth data packet.

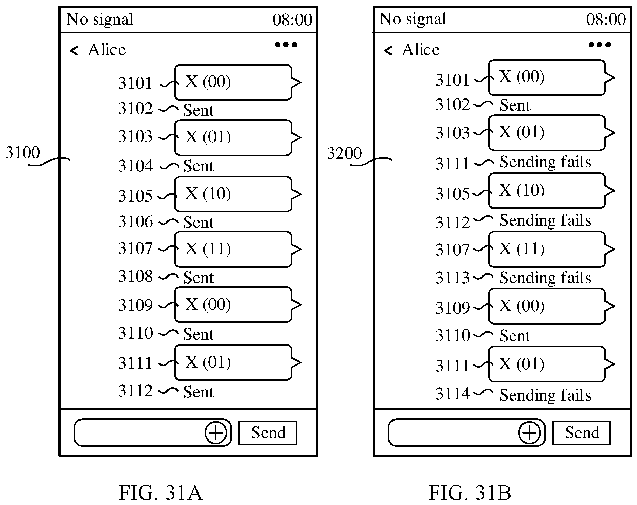

For example, in an inbound process, after sending the data packet 6 to a satellite network device 200, a terminal 100 may display a message detail interface 3100 shown in FIG. 31A. The message detail interface 3100 may include a message box 3101, a sending prompt 3102, a message box 3103, a sending prompt 3104, a message box 3105, a sending prompt 3106, a message box 3107, a sending prompt 3108, a message box 3109, a sending prompt 3110, a message box 3111, and a sending prompt 3112. The message box 3101, the message box 3103, the message box 3105, the message box 3107, the message box 3109, and the message box 3111 may be used to display content of satellite messages that have been sent by the terminal 100 to the satellite network device 200. For example, the message box 3101 displays message content "X (00)" entered by a user, the message box 3103 displays message content "X (01)" entered by the user, the message box 3105 displays message content "X (10)" entered by the user, the message box 3107 displays message content "X (11)" entered by the user, the message box 3109 displays message content "X (00)" entered by the user, and the message box 3111 displays message content "X (01)" entered by the user.

The sending prompt 3102, the sending prompt 3104, the sending prompt 3106, the sending prompt 3108, the sending prompt 3110, and the sending prompt 3106 may be used to prompt the user that the terminal 100 has sent, to the satellite network device 200, the content displayed in the message boxes. For detailed descriptions of the message detail interface 3100, refer to the embodiment shown in FIG. 26. Details are not described herein again.

S3020: The receiving device generates an authentication code B based on the context information B and the data packet 6, where the value of the context information B is X+i.

S3021: The receiving device determines that the authentication code A is different from the authentication code B, and generates an authentication code C.

After determining that the authentication code A is different from the authentication code B, the receiving device may generate context information C based on the context information B, and generate the authentication code C based on the context information C. The context information B is greater than the context information C by a preset value, that is, a value of the context information C is X.

S3022: The receiving device determines that the authentication code A is the same as the authentication code C, and generates an indication application receipt (including an indication ID field B, where a value of the indication ID field B is y1).

After determining that the authentication code A is the same as the authentication code C, the receiving device may determine that the value of the context information A of the sending device is different from the value of the context information B, and the receiving device may generate the indication application receipt based on the message ID field B. The value of the message ID field B is y1, and the message ID field B may indicate the data packet 1 latest successfully received by the receiving device.

S3023: The receiving device sends the indication application receipt to the sending device.

S3024: The sending device updates the value of the context information A to X+i.

After receiving the indication application receipt, the sending device may update the value of the context information A to X+i.

The sending device determines, based on the message ID field B in the indication application receipt, that a data packet whose message ID field A is y1 is successfully received. However, because the data packet whose message ID field A is y1 includes the data packet 1 and the data packet 5, the sending device cannot determine a successfully sent data packet.

For example, in the inbound process, after receiving the indication application receipt, the terminal 100 may display failure prompt information 3111, failure prompt information 3112, failure prompt information 3113, and failure prompt information 3114 shown in FIG. 31B. The failure prompt information 3111 may be used to prompt the user that the terminal 100 fails to send the content in the message box 3103 to a recipient. The failure prompt information 3112 may be used to prompt the user that the terminal 100 fails to send the content in the message box 3105 to the recipient. The failure prompt information 3113 may be used to prompt the user that the terminal 100 fails to send the content in the message box 3107 to the recipient. The failure prompt information 3114 may be used to prompt the user that the terminal 100 fails to send the content in the message box 3111 to the recipient.

It should be noted that the sending device cannot determine sending statuses of the data packet 1 and the data packet 5, and therefore still displays the sending prompt 3102 and the sending prompt 3110.

For specific descriptions of the foregoing steps, refer to the foregoing embodiment shown in FIG. 11A and FIG. 11B. Details are not described herein again.

Therefore, in a possible implementation, after a sending device and a receiving device return from a satellite network to a cellular network, the receiving device may send a set application receipt (also referred to as a second application receipt) to the sending device. The set application receipt may indicate a data packet successfully received by the receiving device. The set application receipt may include identification information of the data packet successfully received by the receiving device (for example, the identification information may include but is not limited to a message ID field, receiving time of the data packet, context information, and the like). The sending device may determine the successfully sent data packet based on the identification information of the data packet in the set application receipt.

This application is not limited to the foregoing embodiments, and further provides the following embodiments. It should be noted that the following embodiments may be used in mutual combination with any one or more of the foregoing embodiments.

In a possible implementation, information A of a sending device is context information A, and information B of a receiving device is context information B. The context information A may indicate a count value or a sequence number of a data packet sent by the sending device. The context information B may indicate a count value or a sequence number of a data packet received by the receiving device. In this way, after the receiving device receives a repeatedly sent data packet, because a count value or a sequence number of the received data packet changes, the receiving device can update a value of context information B. Because an updated value of the context information B is different from a value of context information A in the repeated data packet, the sending device cannot parse the repeated data packet, so that problems of repeated processing and charging do not occur. In addition, because the sending device updates the value of the context information A based on a quantity of sent data packets, even if the sending device does not receive a success application receipt of the receiving device, the sending device updates the value of the context information A, and generates a new data packet based on an updated value of the context information A, without affecting parsing of the receiving device for the new data packet.

In some embodiments, when context information indicates a count value of a data packet, an initial value of the context information A of the sending device is greater than an initial value of the context information B of the receiving device by a preset value. The sending device may generate a data packet based on the context information A. After sending, to the receiving device, the data packet including an authentication code A, the sending device may add the preset value to the value of the context information A. After receiving the data packet, the receiving device may add the preset value to the value of the context information B. The receiving device may generate an authentication code B based on the context information B, and determine a receiving status of the data packet based on the authentication code B.

For example, a length of the context information A and a length of the context information B may be 5 bits. The initial value of the context information A may be "00001 ", the initial value of the context information B may be "00000", and the sending device may generate a data packet 1 based on the context information A "00001". After sending the data packet 1 to the receiving device, the sending device may update the value of the context information A to "00010". After receiving the data packet 1, the receiving device may update the value of the context information B to "00001", and the receiving device may generate an authentication code B based on the context information B "00001". Then, the sending device may generate a data packet 2 based on the context information A "00010", and update the value of the context information A to "00011" after sending the data packet 2 to the receiving device. After receiving the data packet 2, the receiving device may update the value of the context information B to "00010", and the receiving device may generate an authentication code B based on the context information B "00010". The rest can be deduced from this.

In this way, the receiving device does not perform repeated processing.

In some embodiments, context information indicates a sequence number of a data packet. The context information A of the sending device includes a hyper frame number (hyper frame number, HFN) A and a sequence number (sequence number) A. The sending device may generate, based on the sequence number A, a data packet including a sequence number field A and an authentication code A, and send the data packet to the receiving device in a first transmission system. The receiving device may determine a value of a hyper frame number B based on the sequence number field A in the data packet, and obtain the context information B based on the sequence number field A and the hyper frame number B. The receiving device may generate an authentication code B based on the context information B and the data packet, and determine a receiving status of the data packet based on the authentication code B. Because a data length of the sequence number field A is limited, a value of the sequence number field A returns to an initial value as the value of the sequence number field A is updated. When an updated value of the sequence number A of the sending device is less than a value that is of the sequence number A and that exists before an update, the sending device updates a value of the hyper frame number A, that is, adds a preset value to the value of the hyper frame number A. When the value of the sequence number field A received by the receiving device is less than or equal to a value of a sequence number B, the receiving device may update the value of the hyper frame number B, that is, add the preset value to the value of the hyper frame number B. After updating the value of the hyper frame number B, the receiving device may update the value of the sequence number B to the value of the sequence number field A.

For example, a length of the context information A and a length of the context information B may be 5 bits. The sending device may store the context information A, and an initial value of the context information A may be "00000". In the context information A, the hyper frame number A is "0000", and the sequence number A is "0". The receiving device may store the context information B. In the context information B, an initial value of the hyper frame number B may be "0000", and an initial value of the sequence number B is smaller than an initial value of the sequence number A.

The sending device may generate a data packet 1 including the sequence number field A "0". After sending the data packet 1 to the receiving device, the sending device may update the value of the context information A to "00001". After receiving the data packet 1, the receiving device may determine, based on the sequence number field A, that the value of the hyper frame number B remains unchanged and is still "0000". The receiving device may update the value of the hyper frame number B to "0". The receiving device may concatenate the hyper frame number B and the sequence number field A, to obtain context information B "00000".

Then, the sending device may generate, based on the context information A "00001", a data packet 2 including a sequence number field A "1". After sending the data packet 2 to the receiving device, the sending device may update the value of the context information A to "00010". After receiving the data packet 2, the receiving device may determine, based on the sequence number field A, that the value of the hyper frame number B remains unchanged and is still "0000". The receiving device may update the value of the hyper frame number B to "1". The receiving device may concatenate the hyper frame number B and the sequence number field A, to obtain context information B "00001".

Then, the sending device may generate, based on the context information A "00010", a data packet 3 including a sequence number field A "0". After sending the data packet 3 to the receiving device, the sending device may update the value of the context information A to "00011". After receiving the data packet 3, because the value "0" of the sequence number field A is less than the value "1" of the sequence number B, the receiving device may determine, based on the sequence number field A "0", that the value of the hyper frame number B is changed to "0001". The receiving device may update the value of the hyper frame number B to "0". The receiving device may concatenate the hyper frame number B and the sequence number field A, to obtain context information B "00010". The rest can be deduced from this.

In this way, when context information indicates a sequence number of a data packet, the receiving device may determine a hyper frame number based on a sequence number in a data packet. Therefore, if the 1st data packet sent by the sending device is lost in a sending process, the receiving device can also determine a hyper frame number based on a sequence number of the 2nd data packet sent by the sending device, and can still successfully parse out the 2nd data packet.

In this way, when the receiving device does not receive the data packet 2, the receiving device can also update the hyper frame number B to "0001" based on the sequence number A of the data packet 3, and the receiving device can successfully parse the data packet 3. When the sending device does not receive an application receipt, the sending device may update the value of the context information A with a sent data packet, and the sending device may continue to send a next data packet. It is ensured that the receiving device does not process a repeatedly sent data packet, and data can be continued to be transmitted after a data packet is lost or an application receipt is lost.

For a manner in which a terminal 100 and a satellite network device 200 obtain an initial value of context information/a hyper frame number, refer to the foregoing embodiments. Details are not described herein again.

The following describes an inbound procedure of another transmission method according to an embodiment of this application.

In a possible implementation, in an inbound process, a terminal 100 may generate a first authentication code based on first information, a specified key, and original data. The first information is first context information, and indicates a sequence number of a first data packet. The terminal 100 may obtain, based on the first sequence number, the first authentication code, the specified key, and the original data, the first data packet including first indication information (also referred to as a first sequence number field). The terminal 100 may send the first data packet to a satellite network device 200. After receiving the first data packet, the satellite network device 200 may determine second information based on the first sequence number field, and generate a second authentication code based on the second information, the specified key, and the first data packet. The second information is second context information, and indicates a sequence number of the first data packet. The satellite network device 200 may determine a receiving status of the first data packet based on the second authentication code. In this way, a problem that the satellite network device 200 repeatedly receives a same data packet does not occur, and a next data packet can be further continued to be transmitted after an application receipt/a data packet is lost.

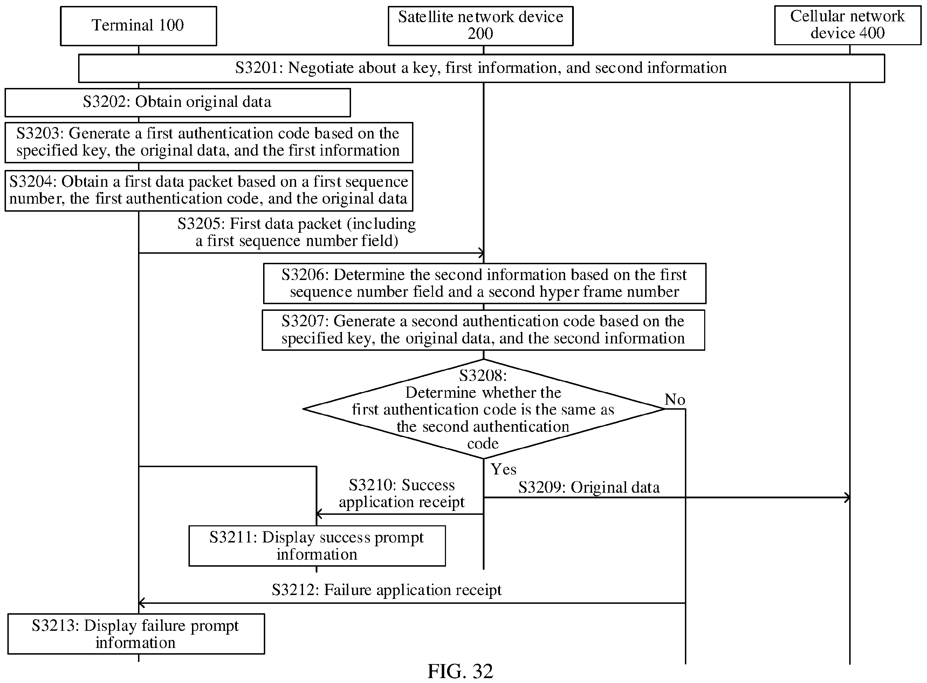

FIG. 32 is a schematic diagram of an inbound transmission procedure according to an embodiment of this application.

S3201: A terminal 100, a satellite network device 200, and a cellular network device 400 negotiate about a key, first information, and second information.

For descriptions of negotiating about the key, the first information, and the second information by the terminal 100, the satellite network device 200, and the cellular network device 400, refer to the foregoing embodiment shown in FIG. 11A and FIG. 11B. Details are not described herein again. After negotiating about the key, both the terminal 100 and the satellite network device 200 store the specified key. The terminal 100 stores a first sequence number and a first hyper frame number in the first information. The satellite network device 200 stores a second hyper frame number and a second sequence number in the second information. An initial value of the first hyper frame number in the first information is the same as an initial value of the second hyper frame number. An initial value of the first sequence number in the first information is greater than an initial value of the second sequence number in the second information.

S3202: The terminal 100 obtains original data.

S3203: The terminal 100 generates a first authentication code based on the specified key, the original data, and the first information.

The terminal 100 may obtain the first authentication code through calculation based on the stored first information, the specified key, and the original data by using a specified authentication algorithm (for example, an SM3 hash algorithm).

S3204: The terminal 100 may obtain a first data packet based on the first sequence number, the first authentication code, and the original data.

The first information of the terminal 100 includes the first hyper frame number and the first sequence number. The terminal 100 may generate first indication information (also referred to as a first sequence number field) based on the first sequence number. A value of the first sequence number field is the same as a value of the first sequence number. The terminal 100 may concatenate the first sequence number field, the first authentication code, and the original data, to obtain the first data packet.

In a possible implementation, the terminal 100 may further encrypt, by using the specified key, the first authentication code and the original data that are concatenated together, to obtain the first data packet. Optionally, the terminal 100 may encrypt, by using the specified key, the first sequence number field, the first authentication code, and the original data that are concatenated together, to obtain the first data packet.

S3205: The terminal 100 sends the first data packet to the satellite network device 200, where the first data packet includes the first sequence number field.

The terminal 100 may update the value of the first sequence number after sending the first data packet to the satellite network device 200. An updated value of the first sequence number is different from the value that is of the first sequence number and that exists before the update. It may be understood that, when the updated value of the first sequence number is less than the value that is of the first sequence number and that exists before the update, the terminal 100 may update a value of the first hyper frame number. The first information is updated as the first sequence number is updated.

Specifically, the terminal 100 may update a value of the first information by updating the first sequence number and the first hyper frame number. After the value of the first sequence number is updated from the initial value to a maximum value, the terminal 100 updates the value of the first sequence number to the initial value again. After determining that the updated value of the first sequence number is less than or equal to the value that is of the first sequence number and that exists before the update, the terminal 100 may update the value of the first hyper frame number, that is, add a preset value to the value of the first hyper frame number. Likewise, after the value of the first hyper frame number is updated from the initial value to a maximum value, the terminal 100 updates the value of the first hyper frame number to the initial value again, that is, updates the value of the first information to an initial value.

For example, a length of the first information is 5 bits, the first hyper frame number may be 4 bits in a header of the first information, and the first sequence number may be 1 bit behind the first hyper frame number in the first information. The initial value of the first information may be "00000", that is, the initial value of the first hyper frame number is "0000", and the initial value of the first sequence number is "0". After the terminal 100 sends, to the satellite network device 200, a first data packet generated based on a first sequence number whose value is "0", the terminal 100 may update the value of the first sequence number to "1", that is, update the value of the first information to "00001".

After the terminal 100 sends, to the satellite network device 200, a first data packet generated based on a first sequence number whose value is "1", the terminal 100 may update the value of the first sequence number to "0". The terminal 100 determines that the updated value "0" of the first sequence number is less than the value "1" existing before the update, and updates the value of the first hyper frame number to "0001 ", that is, updates the value of the first information to "00010". After sending, to the satellite network device 200, a first data packet generated based on a first sequence number whose value is "0", the terminal 100 updates the value of the first sequence number to "1". The rest can be deduced from this.

Likewise, when a length of the first information is 5 bits, the first hyper frame number is 3 bits in a header of the first information, and a length of the first sequence number is 2 bits behind the first hyper frame number in the first information, the initial value of the first information may be "00000", that is, the initial value of the first hyper frame number is "000", and the initial value of the first sequence number is "00". After the terminal 100 sends, to the satellite network device 200, a first data packet generated based on a first sequence number whose value is "00", the terminal 100 may update the value of the first sequence number to "01", that is, update the value of the first information to "00001".

After the terminal 100 sends, to the satellite network device 200, a first data packet generated based on a first sequence number whose value is "01", the terminal 100 may update the value of the first sequence number to "10", that is, update the value of the first information to "00010".

After the terminal 100 sends, to the satellite network device 200, a first data packet generated based on a first sequence number whose value is "10", the terminal 100 may update the value of the first sequence number to "11", that is, update the value of the first information to "00011".

After the terminal 100 sends, to the satellite network device 200, a first data packet generated based on a first sequence number whose value is "11", the terminal 100 may update the value of the first sequence number to "00". The terminal 100 determines that the updated value "00" of the first sequence number is less than the value "11" existing before the update, and updates the value of the first hyper frame number to "001", that is, updates the value of the first information to "00100".

In conclusion, the terminal 100 may update the first information by updating the first sequence number.

In a possible implementation, after sending the first data packet to the receiving device, the terminal 100 may display sending prompt information. The sending prompt information may be used to prompt a user that the terminal 100 has sent the first data packet to the satellite network device 200.

S3206: The satellite network device 200 may determine the second information based on the first sequence number field and the second hyper frame number.

The satellite network device 200 stores the second sequence number. A value of the second sequence number is a value of a first sequence number field of a previous first data packet received by the satellite network device 200.

In some embodiments, when the satellite network device 200 does not receive a first data packet of the terminal 100, the initial value of the second sequence number may be a null value. The satellite network device 200 may be preset to determine that the initial value of the second sequence number is less than any value. Optionally, the initial value of the second sequence number pre-stored in the satellite network device 200 is less than the initial value of the first sequence number of the terminal 100.

The satellite network device 200 may determine whether the value of the first sequence number field is greater than the value of the second sequence number. When the satellite network device 200 determines that the value of the first sequence number field is greater than the value of the second sequence number, the satellite network device 200 may concatenate a value of the second hyper frame number and the value of the first sequence number field, to obtain a value of the second information.

When the satellite network device 200 determines that the value of the first sequence number field is less than or equal to the value of the second sequence number, the satellite network device 200 may update a value of the second hyper frame number, that is, add a preset value to the value of the second hyper frame number. The satellite network device 200 may concatenate an updated value of the second hyper frame number and the value of the first sequence number field, to obtain a value of the second information.

After generating the second information, the satellite network device 200 may adjust the value of the second sequence number based on the value of the first sequence number field. An adjusted value of the second sequence number is equal to the value of the first sequence number.

For example, when a length of the second information of the satellite network device 200 is 5 bits, the second hyper frame number is 4 bits in a header of the second information, and a length of the second sequence number is 1 bit behind the second hyper frame number in the second information, the initial value of the second hyper frame number of the satellite network device 200 is "0000". After receiving the first data packet whose first sequence number field is "0", the satellite network device 200 may determine that the value of the second information is "00000", and the value of the second sequence number is "0".

After receiving the first data packet whose first sequence number field is "1", the satellite network device 200 may determine, based on the value of the second sequence number and the value of the first sequence number field, that the value of the second information is "00001 ", and the value of the second sequence number is " 1".

After receiving the first data packet whose first sequence number field is "0", the satellite network device 200 may determine, based on the value of the second sequence number and the value of the first sequence number field, that the value of the second hyper frame number is "0001", and then determine that the value of the second information is "00010", and the value of the second sequence number is "0". The rest can be deduced from this.

It should be noted that, if the satellite network device 200 does not receive the first data packet whose first sequence number is "1", after the satellite network device 200 receives the second data packet whose first sequence number is "0", because the value of the second sequence number is equal to the value of the first sequence number field, the satellite network device 200 can accordingly determine that the value of the second hyper frame number is "0001", and can successfully receive the second data packet whose first sequence number is "0". In this way, even if a data packet sent by the terminal 100 is lost in a sending process, the satellite network device 200 can successfully obtain the value of the second information corresponding to the first information.

In a possible implementation, the first hyper frame number pre-stored in the terminal 100 is greater than the second hyper frame number pre-stored in the satellite network device 200 by a preset value, and an initial value of the second sequence number pre-stored in the satellite network device 200 is greater than a maximum value of the first sequence number of the terminal 100. After the terminal 100 sends, to the satellite network device 200, the first data packet including the first sequence number field, the satellite network device 200 may add the preset value to a value of the second hyper frame number based on a fact that a value of the first sequence number field is less than a value of the second sequence number, so that the value of the second hyper frame number is the same as a value of the first hyper frame number of the terminal 100. Then, the satellite network device 200 may adjust the value of the second sequence number to be the same as the value of the first sequence number field.

S3207: The satellite network device 200 may generate a second authentication code based on the specified key, the original data, and the second information.

S3208: The satellite network device 200 determines whether the first authentication code is the same as the second authentication code.

The satellite network device 200 may determine a receiving status of the first data packet by determining, through comparison, whether the first authentication code is the same as the second authentication code. When the first authentication code is the same as the second authentication code, the satellite network device 200 may perform step S3209 and step S3210.

When the first authentication code is different from the second authentication code, the satellite network device 200 may perform step S3212.

S3209: The satellite network device 200 sends the original data to the cellular network device 400.

S3210: The satellite network device 200 sends a success application receipt to the terminal 100.

S3211: The terminal 100 displays success prompt information.

The terminal 100 displays the success prompt information. The success prompt information prompts the user that the first data packet is successfully sent.

S3212: The satellite network device 200 sends a failure application receipt to the terminal 100.

Optionally, after receiving the failure application receipt, the terminal 100 may further perform step S3213.

S3213: The terminal 100 displays failure prompt information.

The terminal 100 displays the failure prompt information. The failure prompt information prompts the user that the first data packet fails to be sent.

For specific descriptions of the foregoing steps, refer to the foregoing embodiment shown in FIG. 12. Details are not described herein again.

The following describes an outbound procedure of another transmission method according to an embodiment of this application.

In a possible implementation, in an outbound process, a satellite network device 200 may generate a fourth authentication code based on sixth information and original data. The sixth information is sixth context information, and may indicate a sequence number of a third data packet. The satellite network device 200 may obtain, based on a fourth sequence number field, the fourth authentication code, and the original data, the third data packet including the fourth sequence number field (also referred to as sixth indication information). The satellite network device 200 may send the third data packet to a terminal 100. After receiving the third data packet, the terminal 100 may determine fifth information based on the fourth sequence number field, and generate a third authentication code based on the fifth information and the third data packet. The fifth information is fifth context information, and indicates a sequence number of the third data packet. The terminal 100 may determine a receiving status of the third data packet based on the third authentication code. In this way, a problem that the terminal 100 repeatedly receives a same data packet does not occur, and the terminal 100 and the satellite network device 200 can further continue to transmit a next data packet after an application receipt/a data packet is lost.

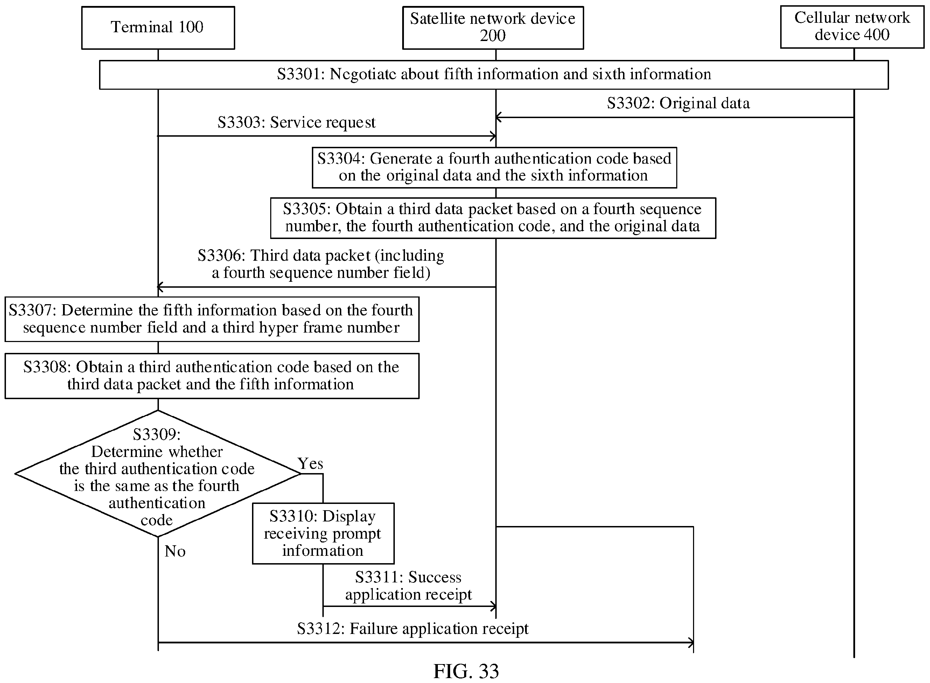

FIG. 33 is a schematic diagram of an outbound transmission procedure according to an embodiment of this application.

S3301: A terminal 100, a satellite network device 200, and a cellular network device 400 negotiate about fifth information and sixth information.

The terminal 100 and the satellite network device 200 may obtain an initial value of the sixth information and an initial value of the fifth information through negotiation by using the cellular network device 400. The satellite network device 200 stores a fourth hyper frame number and a fourth sequence number in the sixth information. The terminal 100 stores a third hyper frame number and a third sequence number in the fifth information. An initial value of the third hyper frame number in the fifth information is the same as an initial value of the fourth hyper frame number in the sixth information. An initial value of the third sequence number in the fifth information is less than an initial value of the fourth hyper frame number in the sixth information.

S3302: The satellite network device 200 receives original data sent by the cellular network device 400.

S3303: The satellite network device 200 receives a service request sent by the terminal 100.

S3304: The satellite network device 200 generates a fourth authentication code based on the original data and the sixth information.

The satellite network device 200 may generate the fourth authentication code based on the sixth information and the original data.

S3305: The satellite network device 200 obtains a third data packet based on the fourth sequence number, the original data, and the fourth authentication code.

The sixth information of the satellite network device 200 includes the fourth sequence number and the fourth hyper frame number. The satellite network device 200 may generate a fourth sequence number field (also referred to as sixth indication information) based on the fourth sequence number. A value of the fourth sequence number field is the same as a value of the fourth sequence number. The satellite network device 200 may concatenate the fourth sequence number field, the fourth authentication code, and the original data, to obtain the third data packet.

S3306: The satellite network device 200 sends the third data packet to the terminal 100, where the third data packet includes the fourth sequence number field.

The satellite network device 200 may update the value of the fourth sequence number after sending the third data packet to the terminal 100. An updated value of the fourth sequence number is different from the value that is of the fourth sequence number and that exists before the update. It may be understood that, when the updated value of the fourth sequence number is less than the value that is of the fourth sequence number and that exists before the update, the satellite network device 200 may update a value of the fourth hyper frame number. The sixth information is updated as the fourth sequence number is updated.

Specifically, the satellite network device 200 may update a value of the sixth information by updating the fourth sequence number. After the value of the fourth sequence number is updated from the initial value to a maximum value, the satellite network device 200 updates the value of the fourth sequence number to the initial value again. After determining that the updated value of the fourth sequence number is less than or equal to the value that is of the fourth sequence number and that exists before the update, the satellite network device 200 may update the value of the fourth hyper frame number, that is, add a preset value to the value of the fourth hyper frame number. Likewise, after the value of the fourth hyper frame number is updated from the initial value to a maximum value, the satellite network device 200 updates the value of the fourth hyper frame number to the initial value again, that is, updates the value of the sixth information to the initial value.

S3307: The terminal 100 determines the fifth information based on the fourth sequence number field and the third hyper frame number.

The terminal 100 stores the third sequence number. A value of the third sequence number is a value of a fourth sequence number field of a previous third data packet received by the terminal 100.

In some embodiments, when the terminal 100 does not receive a third data packet of the satellite network device 200, the initial value of the third sequence number may be a null value. The terminal 100 may be preset to determine that the initial value of the third sequence number is less than any value. Optionally, the initial value of the third sequence number pre-stored in the terminal 100 is less than the initial value of the fourth sequence number of the satellite network device 200.

The terminal 100 may determine whether the value of the fourth sequence number field is greater than the value of the third sequence number. When the terminal 100 determines that the value of the fourth sequence number field is greater than the value of the third sequence number, the terminal 100 may concatenate a value of the third hyper frame number and the value of the fourth sequence number field, to obtain a value of the sixth information.

When the terminal 100 determines that the value of the fourth sequence number field is less than or equal to the value of the third sequence number, the terminal 100 may update a value of the third hyper frame number, that is, add a preset value to the value of the third hyper frame number. The terminal 100 may concatenate an updated value of the third hyper frame number and the value of the fourth sequence number field, to obtain a value of the sixth information.

After generating the sixth information, the terminal 100 may adjust the value of the third sequence number based on the value of the fourth sequence number field. An adjusted value of the third sequence number is equal to the value of the fourth sequence number.

In a possible implementation, the third hyper frame number pre-stored in the satellite network device 200 is greater than the fourth hyper frame number pre-stored in the terminal 100 by a preset value, and an initial value of the third sequence number pre-stored in the terminal 100 is greater than a maximum value of the fourth sequence number pre-stored in the satellite network device 200. After the satellite network device 200 sends, to the terminal 100, the third data packet including the fourth sequence number field, the terminal 100 may add the preset value to a value of the third hyper frame number based on a fact that a value of the fourth sequence number field is the same as a value of the third sequence number, so that the value of the third hyper frame number is the same as a value of the second hyper frame number of the satellite network device 200. Then, the terminal 100 may update the value of the third sequence number to the value of the fourth sequence number field.

S3308: The terminal 100 obtains a third authentication code based on the third data packet and the fifth information.

S3309: The terminal 100 determines whether the third authentication code is the same as the fourth authentication code.

The terminal 100 may determine a receiving status of the third data packet by determining, through comparison, whether the third authentication code is the same as the fourth authentication code. When the third authentication code is the same as the fourth authentication code, the terminal 100 may perform step S3310 and step S3311.

When the third authentication code is different from the fourth authentication code, the terminal 100 may perform step S3312.

S3310: The terminal 100 displays receiving prompt information.

S3311: The terminal 100 sends a success application receipt to the satellite network device 200.

S3312: The terminal 100 sends a failure application receipt to the satellite network device 200.

For specific descriptions of the foregoing steps, refer to the foregoing embodiment shown in FIG. 13. Details are not described herein again.

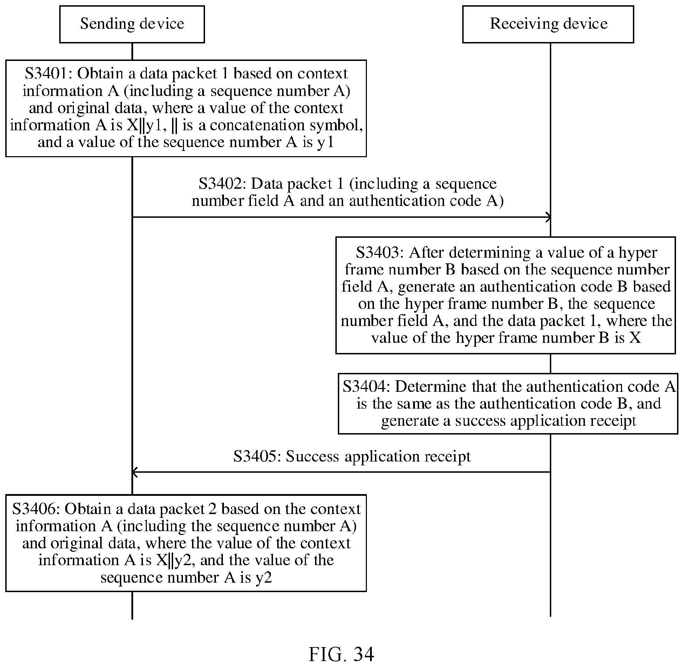

The following describes a procedure in which a sending device and a receiving device transmit a data packet based on a sequence number. Details are shown in FIG. 34.

S3401: A sending device obtains a data packet 1 based on context information A (including a sequence number A) and original data, where a value of the context information A is X‖y1, ‖ is a concatenation symbol, and a value of the sequence number A is y1.

The sending device may obtain a sequence number field A based on the sequence number A in the context information A. The sending device may generate an authentication code A based on the context information A and the original data. The sending device may obtain the data packet 1 based on the sequence number field A, the authentication code A, and the original data. The context information A includes the sequence number A and a hyper frame number A. A value of the hyper frame number A is X, and the value of the sequence number A is y1. The context information A is a data segment obtained by concatenating the hyper frame number A and the sequence number A together.

S3402: The sending device sends the data packet 1 to a receiving device, where the data packet 1 includes the sequence number field A and the authentication code A.

After sending the data packet 1 to the receiving device, the sending device may update the value of the sequence number A to y2. y2 is greater than y1. That is, the sending device updates the value of the context information A to X‖y2.

It should be noted that, when the value of the sequence number A includes only y1 and y2, the sending device may add a preset value to the value of the hyper frame number A when updating the value of the sequence number A to y1 again after updating the value of the sequence number A to y2.

S3403: After determining a value of a hyper frame number B based on the sequence number field A, the receiving device generates an authentication code B based on the hyper frame number B, the sequence number field A, and the data packet 1, where the value of the hyper frame number B is X.

The receiving device may determine the value of the hyper frame number B based on a value of the sequence number field A. Specifically, when determining that the value of the sequence number field A is less than or equal to a value of a sequence number B, the receiving device may add a preset value to the value of the hyper frame number B.

When the receiving device receives the 1st data packet of the sending device, the value of the sequence number B is an initial value, and the initial value of the sequence number B is less than an initial value of the sequence number A. After generating context information B, the receiving device may update the value of the sequence number B to the value of the sequence number A. When the receiving device receives the 2nd data packet sent by the sending device, the value of the sequence number B is the same as a value of a sequence number field A of the 1st data packet.

The receiving device may concatenate the value of the hyper frame number B and the value of the sequence number field A, to obtain context information B that is X‖y1. After obtaining the context information B, the receiving device may further update the value of the sequence number B to the value of the sequence number field A. For specific descriptions, refer to the foregoing embodiments. Details are not described herein again.

The receiving device may generate the authentication code B based on the context information B and the original data in the data packet 1. Herein, the value of the hyper frame number B is X, and an updated value of the sequence number B is y1. The value that is of the sequence number B and that exists before the update is smaller than y1.

S3404: The receiving device determines that the authentication code A is the same as the authentication code B, and generates a success application receipt.

S3405: The receiving device sends the success application receipt to the sending device.

S3406: The sending device obtains a data packet 2 based on the context information A (including the sequence number A) and original data, where the value of the context information A is X‖y2, and the value of the sequence number A is y2.

In this way, the sending device and the receiving device can resolve, based on context information indicating a sequence number, a problem of repeatedly receiving a same data packet.

The following describes a case in which data may be lost in a sending process in embodiments of this application.

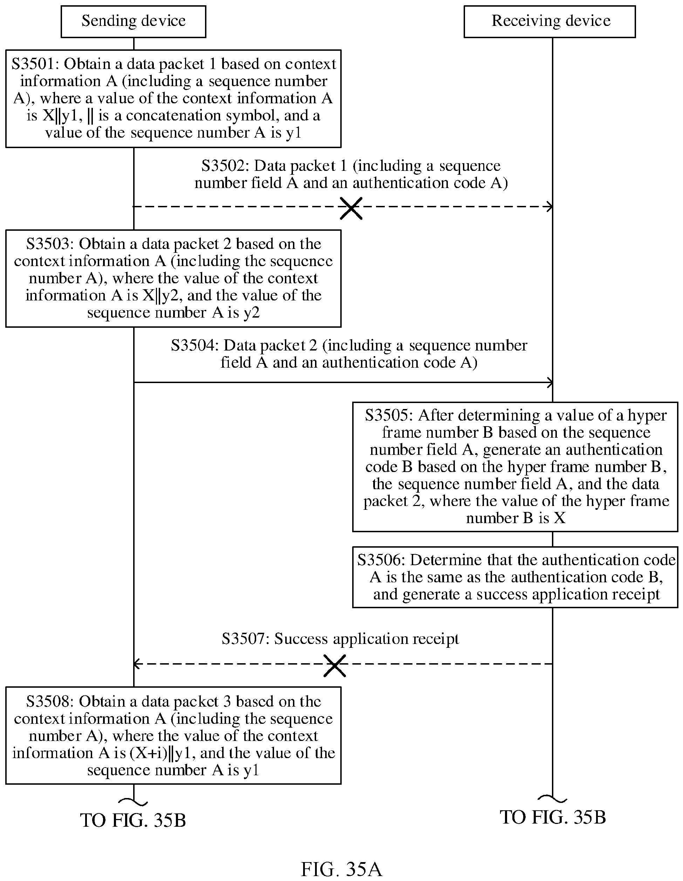

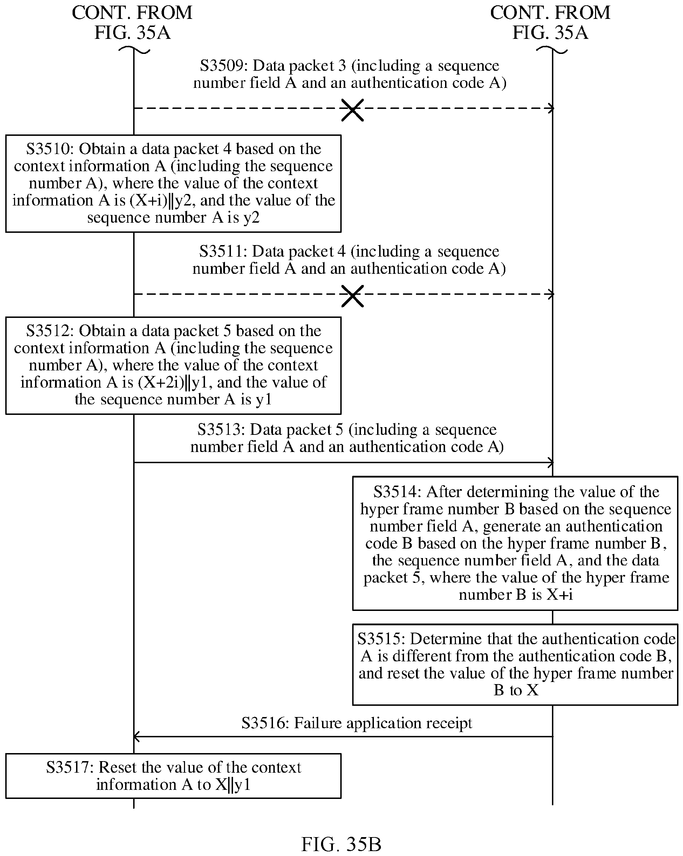

A data packet/a success application receipt may be lost in a transmission process of a sending device and a receiving device. Details are shown in FIG. 35A and FIG. 35B.

S3501: A sending device obtains a data packet 1 based on context information A (including a sequence number A), where a value of the context information A is X‖y1, ‖ is a concatenation symbol, and a value of the sequence number A is y1.

S3502: The sending device fails to send the data packet 1 to a receiving device, where the data packet 1 includes a sequence number field A and an authentication code A.

The data packet 1 is lost in a transmission process, and therefore the receiving device does not receive the data packet 1.

After sending the data packet 1 to the receiving device, the sending device may update the value of the sequence number A to y2. y2 is greater than y1. That is, the sending device updates the value of the context information A to X‖y2.

S3503: The sending device obtains a data packet 2 based on the context information A (including the sequence number A), where the value of the context information A is X‖y2, and the value of the sequence number A is y2.

S3504: The sending device sends the data packet 2 to the receiving device, where the data packet 2 includes a sequence number field A and an authentication code A.

After sending the data packet 2 to the receiving device, the sending device may update the value of the sequence number A to y1. Because the value of the sequence number A is updated to y1 again, the sending device may update a value of a hyper frame number A to X+i. That is, the sending device updates the value of the context information A to $(X+i)\|y1$.

S3505: After determining a value of a hyper frame number B based on the sequence number field A, the receiving device generates an authentication code B based on the hyper frame number B, the sequence number field A, and the data packet 2, where the value of the hyper frame number B is X.

The receiving device may determine, based on a value of the sequence number field A, that the value of the hyper frame number B is X. The receiving device may concatenate the value of the hyper frame number B and the value of the sequence number field A, to obtain context information B that is $X\|y2$. The receiving device may generate the authentication code B based on the context information B and the data packet 2.

After obtaining the context information B, the receiving device may further update a value of a sequence number B to the value of the sequence number field A. For specific descriptions, refer to the foregoing embodiments. Details are not described herein again. Herein, an updated value of the sequence number B is y2. The value that is of the sequence number B and that exists before the update is smaller than y 1.

S3506: The receiving device determines that the authentication code A is the same as the authentication code B, and generates a success application receipt.

S3507: The receiving device fails to send the success application receipt to the sending device.

In a sending process, a data packet may be lost and an application receipt may be lost. When the sending device sends a data packet to the receiving device, and the receiving device does not receive the data packet of the sending device, transmission of a next data packet between the sending device and the receiving device is not affected.

S3508: The sending device obtains a data packet 3 based on the context information A (including the sequence number A) and original data, where the value of the context information A is $(X+i)\|y1$, and the value of the sequence number A is y1.

S3509: The sending device fails to send the data packet 3 to the receiving device, where the data packet 3 includes a sequence number field A and an authentication code A.

The data packet 3 is lost in a transmission process, and therefore the receiving device does not receive the data packet 3.

After sending the data packet 3 to the receiving device, the sending device may update the value of the sequence number A to y2. That is, the sending device updates the value of the context information A to $(X+i)\|y2$.

S3510: The sending device obtains a data packet 4 based on the context information A (including the sequence number A) and original data, where the value of the context information A is $(X+i)\|y2$, and the value of the sequence number A is y2.

S3511: The sending device fails to send the data packet 4 to the receiving device, where the data packet 4 includes a sequence number field A and an authentication code A.

The data packet 4 is lost in a transmission process, and therefore the receiving device does not receive the data packet 4.

After sending the data packet 4 to the receiving device, the sending device may update the value of the sequence number A to y1. Because the value of the sequence number A is updated to y1 again, the sending device may update the value of the hyper frame number A to X+2i. That is, the sending device updates the value of the context information A to $(X+2i)\|y1$.

S3512: The sending device obtains a data packet 5 based on the context information A (including the sequence number A) and original data, where the value of the context information A is $(X+2i)\|y1$, and the value of the sequence number A is y1.

S3513: The sending device sends the data packet 5 to the receiving device, where the data packet 5 includes a sequence number field A and an authentication code A.

After sending the data packet 3 to the receiving device, the sending device may update the value of the sequence number A to y2. That is, the sending device updates the value of the context information A to $(X+2i)\|y2$.

S3514: After determining the value of the hyper frame number B based on the sequence number field A, the receiving device generates an authentication code B based on the hyper frame number B, the sequence number field A, and the data packet 5, where the value of the hyper frame number B is (X+i).

A current value of the hyper frame number of the receiving device is X, and a current value of the sequence number B is y2. The receiving device determines that the value of the sequence number field A is y1. y1 is less than y2. The receiving device updates the value of the hyper frame number B to X+i, and obtain, based on the value of the hyper frame number B and the value of the sequence number field A, the value of the context information B: $(X+i)\|y1$. The receiving device generates an authentication code B based on the context information B.

When the receiving device does not receive data packets of the sending device for a plurality of consecutive times, because the hyper frame number B may be inconsistent with the hyper frame number A, the receiving device cannot successfully receive a data packet of the sending device.

In a possible implementation, when determining that the authentication code A is different from the authentication code B, the receiving device may adjust the value of the hyper frame number B and the value of the sequence number B to initial values, and sends a failure application receipt to the sending device. The sending device may adjust the value of the context information A to an initial value based on the failure application receipt. In this way, the sending device and the receiving device can transmit a data packet based on reset context information.

S3 515: The receiving device determines that the authentication code A is different from the authentication code B, and resets the value of the hyper frame number B to X.

The value of the context information B of the receiving device is $(X+i)\|y1$ and is different from the context information A "$(X+2i)\|y1$" used by the sending device to generate the data packet 5. Therefore, the authentication code A is different from the authentication code B. The receiving device fails to receive the data packet 5, and the receiving device may reset the value of the hyper frame number B to an initial value, for example, the initial value X. The receiving device may further reset the value of the sequence number B to an initial value.

S3516: The receiving device sends a failure application receipt to the sending device.

After determining that the authentication code A is different from the authentication code B, the receiving device may generate the failure application receipt. The failure application receipt indicates that the receiving device fails to receive the data packet 5. The receiving device sends the failure application receipt to the sending device.

S3517: The sending device resets the value of the context information A to $X\|y1$.

The sending device may determine, based on the failure application receipt, that the value of the context information A is not synchronized with the value of the context information B. The sending device may reset the value of the context information A to the initial value, for example, the initial value $X\|y1$.

For specific descriptions of the foregoing steps, refer to the embodiment shown in FIG. 34. Details are not described herein again.

This application is not limited to the foregoing embodiments, and further provides the following embodiments. It should be noted that the following embodiments may be used in mutual combination with any one or more of the foregoing embodiments.

In a possible implementation, a sending device may obtain, based on a retransmission indication field, information A, and original data, a data packet including an authentication code A and the retransmission indication field. The information A is sending time information or context information A. The retransmission indication field indicates that the data packet is a retransmitted data packet or a newly transmitted data packet. A receiving device may obtain an authentication code B based on information B and the data packet. The information B is receiving time information or context information B. When the authentication code A is different from the authentication code B, when determining, based on the retransmission indication field, that the data packet is a newly transmitted data packet, the receiving device may send a failure application receipt to the sending device. When determining, based on the retransmission indication field, that the data packet is a retransmitted data packet, the receiving device may generate an authentication code C. When the authentication code A is the same as the authentication code C, the receiving device may determine that the data packet is a retransmitted data packet corresponding to a data packet latest successfully received by the receiving device. The receiving device sends a success application receipt to the sending device.

In this way, when determining that the authentication code B is different from the authentication code A of the newly transmitted data packet, the receiving device determines that the receiving device fails to receive the newly transmitted data packet, and directly sends the failure application receipt. When the receiving device determines that the authentication code C is the same as the authentication code A of the retransmitted data packet, the receiving device may determine that the data packet is the retransmitted data packet corresponding to the latest successfully received data packet, that is, the receiving device may determine that the sending device fails to receive a success application receipt of the latest successfully received data packet, and the receiving device may send the success application receipt to the sending device again. The sending device may determine, based on the success application receipt, that original data in the retransmitted data packet is successfully sent, and no longer perform a retransmission operation, thereby saving a transmission resource of a satellite network.

The following describes an inbound procedure of another transmission method according to an embodiment of this application.

In a possible implementation, in an inbound process, a terminal 100 may generate a first authentication code based on first information, a specified key, and original data. The first information is sending time information or first context information. The terminal 100 may obtain a first data packet based on a first retransmission indication field (also referred to as third indication information), the first authentication code, the specified key, and the original data. The terminal 100 may send the first data packet to a satellite network device 200 in a first transmission system. After receiving the first data packet, the satellite network device 200 may generate a second authentication code based on second information, the specified key, and the first data packet. The second information is receiving time information or second context information. When the first authentication code is different from the second authentication code, when determining, based on the first retransmission indication field, that the first data packet is a retransmitted data packet, the satellite network device 200 may generate a temporary authentication code, and when determining that the first authentication code is the same as the temporary authentication code, send a success application receipt to the terminal 100. In this way, the satellite network device 200 can notify, based on the success application receipt, the terminal 100 that the satellite network device 200 has successfully received the original data in the retransmitted data packet, and the terminal 100 does not need to retransmit the data packet again.

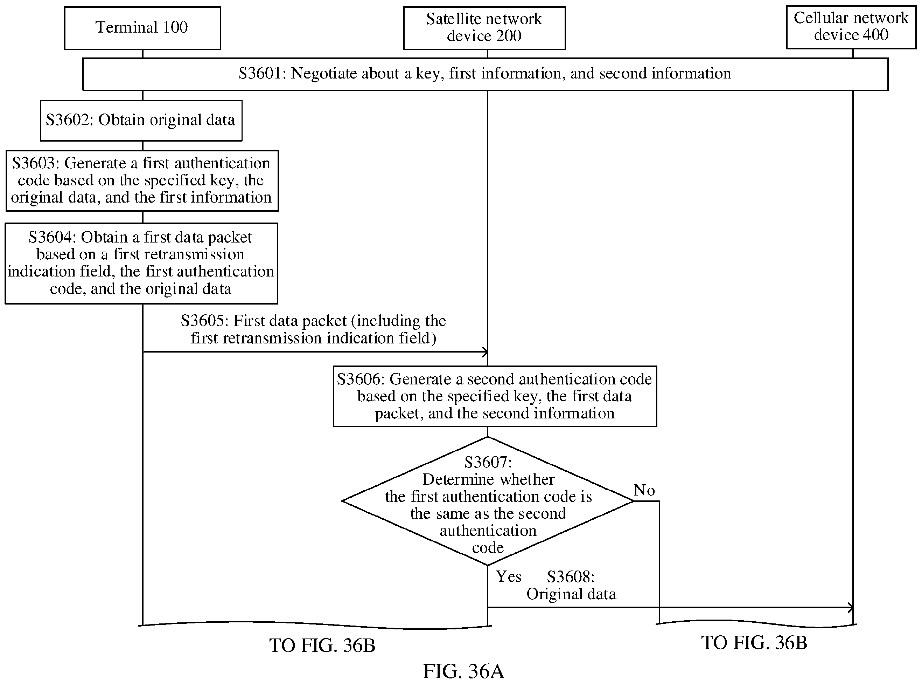

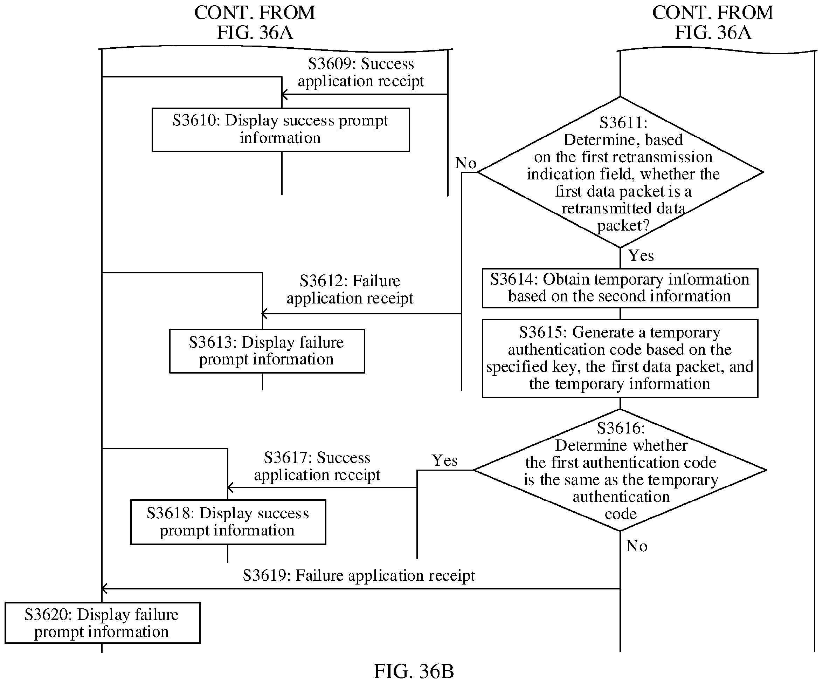

FIG. 36A and FIG. 36B are a schematic diagram of an inbound transmission procedure according to an embodiment of this application.

S3601: A terminal 100, a satellite network device 200, and a cellular network device 400 negotiate about a key, first information, and second information.

For descriptions of negotiating about the key, the first information, and a second hyper frame number by the terminal 100, the satellite network device 200, and the cellular network device 400, refer to the foregoing embodiment shown in FIG. 11A and FIG. 11B. Details are not described herein again. After negotiating about the key, both the terminal 100 and the satellite network device 200 store the specified key. The terminal 100 stores the first information. The satellite network device 200 stores the second information. An initial value of the first information is the same as an initial value of the second information.

S3602: The terminal 100 obtains original data.

S3603: The terminal 100 generates a first authentication code based on the specified key, the original data, and the first information.

The terminal 100 may obtain the first authentication code through calculation based on the stored first information, the specified key, and the original data by using a specified authentication algorithm (for example, an SM3 hash algorithm).

S3604: The terminal 100 may obtain a first data packet based on a first retransmission indication field, the first authentication code, and the original data.

The terminal 100 may concatenate the first retransmission indication field, the first authentication code, and the original data, to obtain the first data packet.

For example, when a length of the first retransmission indication field is 1 bit, if a value of the first retransmission indication field is "0", the first retransmission indication field may indicate that the first data packet is a newly transmitted data packet. If a value of the first retransmission indication field is "1", the first retransmission indication field may indicate that the first data packet is a retransmitted data packet.

In a possible implementation, when receiving input of a satellite message retransmitted by a user, the terminal 100 may generate original data and a first retransmission indication field based on the satellite message. The first retransmission indication field indicates that a data packet generated based on the original data in the satellite message is a retransmitted data packet.

In a possible implementation, the terminal 100 may detect whether current original data is the same as original data in a previous data packet. When determining that the current original data is the same as the original data in the previous data packet, the terminal 100 generates a first retransmission indication field indicating that a data packet including the current original data is a retransmitted data packet. When determining that the current original data is different from the original data in the previous data packet, the terminal 100 generates a first retransmission indication field indicating that a data packet including the current original data is a newly transmitted data packet.

In a possible implementation, the terminal 100 may further encrypt, by using the specified key, the first authentication code and the original data that are concatenated together, to obtain the first data packet. Optionally, the terminal 100 may encrypt, by using the specified key, the first retransmission indication field, the first authentication code, and the original data that are concatenated together, to obtain the first data packet.

S3605: The terminal 100 sends the first data packet to the satellite network device 200, where the first data packet includes the first retransmission indication field.

In a possible implementation, after sending the first data packet to the receiving device, the terminal 100 may display sending prompt information. The sending prompt information may be used to prompt the user that the terminal 100 has sent the first data packet to the satellite network device 200.

S3606: The satellite network device 200 may generate a second authentication code based on the specified key, the first data packet, and second information.

S3607: The satellite network device 200 determines whether the first authentication code is the same as the second authentication code.

The satellite network device 200 may determine a receiving status of the first data packet by determining, through comparison, whether the first authentication code is the same as the second authentication code. When the first authentication code is the same as the second authentication code, the satellite network device 200 may perform step S3608 and step S3609.

When the first authentication code is different from the second authentication code, the satellite network device 200 may perform step S3611.

S3608: The satellite network device 200 sends the original data to the cellular network device 400.

S3609: The satellite network device 200 sends a success application receipt to the terminal 100.

Optionally, after receiving the success application receipt, the terminal 100 may further perform step S3610.

S3610: The terminal 100 displays success prompt information.

After receiving the success application receipt sent by the satellite network device 200, the terminal 100 may further display the success prompt information. The success prompt information prompts the user that the first data packet is successfully sent.

S3611: The satellite network device 200 determines, based on the first retransmission indication field, whether the first data packet is a retransmitted data packet.

When determining, based on the first retransmission indication field, that the first data packet is a newly transmitted data packet, the satellite network device 200 may perform step S3612.

When determining, based on the first retransmission indication field, that the first data packet is a retransmitted data packet, the satellite network device 200 may perform step S3614 to step S3616.

S3612: The satellite network device 200 sends a failure application receipt to the terminal 100.

Optionally, after receiving the failure application receipt, the terminal 100 may further perform step S3613.

S3613: The terminal 100 displays failure prompt information.

The terminal 100 displays the failure prompt information. The failure prompt information prompts the user that the first data packet fails to be sent.

S3614: The satellite network device 200 obtains temporary information based on the second information.

The satellite network device 200 may subtract a preset value from a value of the second information, to obtain the temporary information.

S3615: The satellite network device 200 may generate a temporary authentication code based on the specified key, the first data packet, and the temporary information.

S3616: The satellite network device 200 may determine whether the first authentication code is the same as the temporary authentication code.

When the first authentication code is the same as the temporary authentication code, the satellite network device 200 may perform step S3617.

When the first authentication code is different from the temporary authentication code, the satellite network device 200 may perform step S3619.

S3617: The satellite network device 200 sends a success application receipt to the terminal 100.

When determining that the first authentication code is the same as the temporary authentication code, the satellite network device 200 may determine that the satellite network device 200 has received a newly transmitted data packet corresponding to the retransmitted data packet. The satellite network device 200 may determine that the terminal 100 does not receive a success application receipt indicating that the receiving device successfully receives the newly transmitted data packet corresponding to the retransmitted data packet, and the satellite network device 200 may send the success application receipt to the terminal 100. The success application receipt may indicate that the satellite network device 200 successfully receives the original data in the retransmitted data packet.

Optionally, after receiving the success application receipt, the terminal 100 may further perform step S3618.

S3618: The terminal 100 displays success prompt information.

After receiving the success application receipt sent by the satellite network device 200, the terminal 100 may further display the success prompt information. The success prompt information prompts the user that the first data packet is successfully sent.

S3619: The satellite network device 200 sends a failure application receipt to the terminal 100.

Optionally, after receiving the failure application receipt, the terminal 100 may further perform step S3620.

S3620: The terminal 100 displays failure prompt information.

The terminal 100 displays the failure prompt information. The failure prompt information prompts the user that the first data packet fails to be sent.

For specific descriptions of the foregoing steps, refer to the foregoing embodiment shown in FIG. 12. Details are not described herein again.

The following describes an outbound procedure of another transmission method according to an embodiment of this application.

In a possible implementation, in an outbound process, a satellite network device 200 may generate a fourth authentication code based on sixth information and original data. The sixth information is sending time information or sixth context information. The satellite network device 200 may obtain a third data packet based on a second retransmission indication field (also referred to as fourth indication information), a fourth authentication code, and original data.

The satellite network device 200 may send the third data packet to a terminal 100 in a first transmission system. After receiving the third data packet, the terminal 100 may generate a third authentication code based on fifth information and the third data packet. The fifth information is receiving time information or fifth context information. When the third authentication code is different from the fourth authentication code, when determining, based on the second retransmission indication field, that the third data packet is a retransmitted data packet, the terminal 100 may generate a temporary authentication code, and when determining that the fourth authentication code is the same as the temporary authentication code, send a success application receipt to the satellite network device 200. In this way, the terminal 100 may notify, based on the success application receipt, the satellite network device 200 that the terminal 100 has successfully received the original data in the retransmitted data packet, and the satellite network device 200 does not need to retransmit the data packet again.

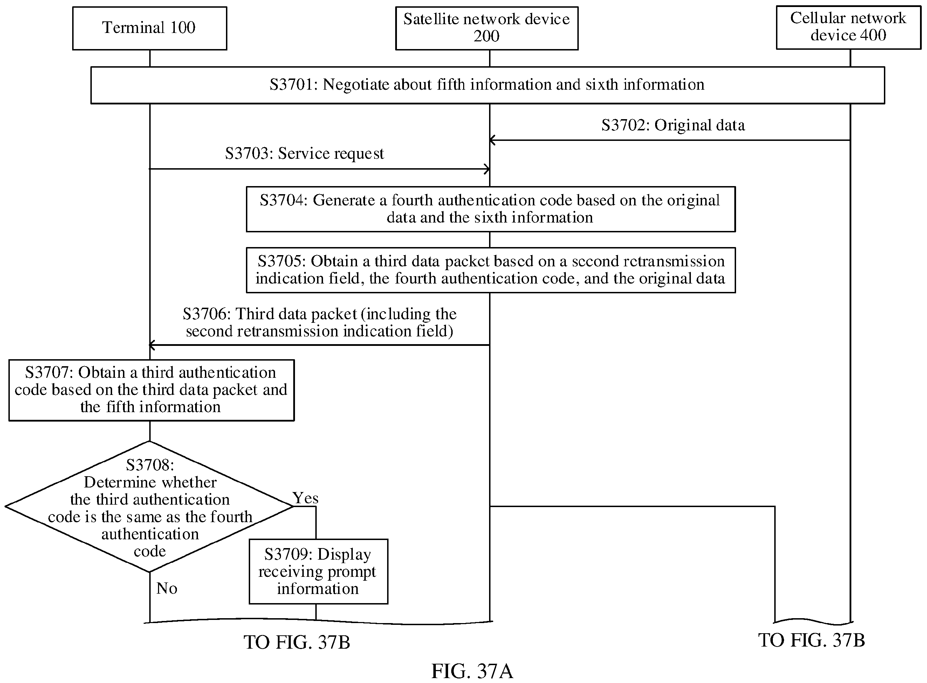

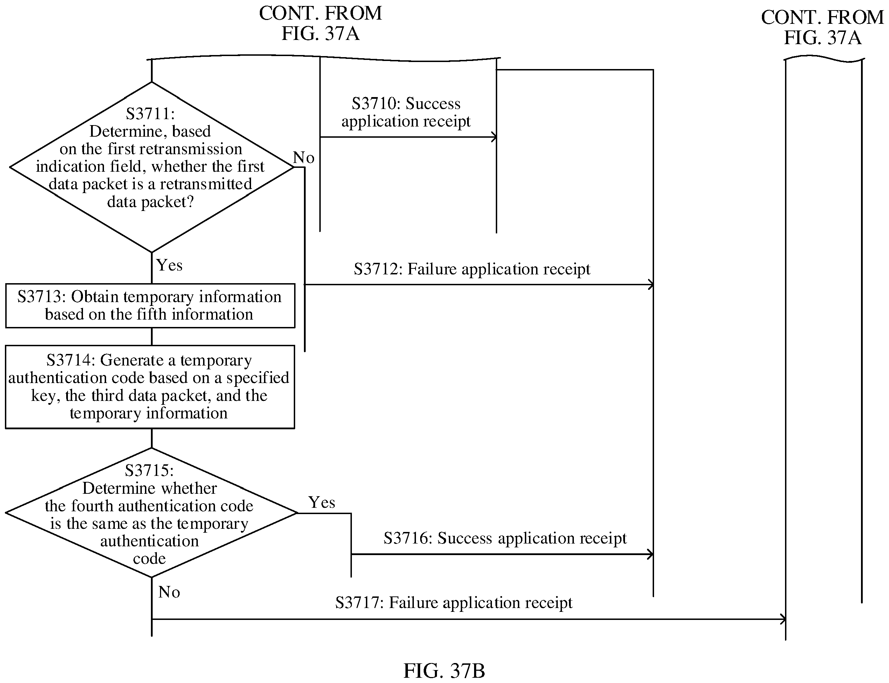

FIG. 37A and FIG. 37B are a schematic diagram of an outbound transmission procedure according to an embodiment of this application.

S3701: A terminal 100, a satellite network device 200, and a cellular network device 400 negotiate about fifth information and sixth information.

For a process in which the terminal 100 and the satellite network device 200 obtain the sixth information and the fifth information through negotiation, refer to the foregoing embodiment shown in FIG. 11A and FIG. 11B. Details are not described herein again. The satellite network device 200 stores the sixth information. The terminal 100 stores the fifth information. An initial value of the fifth information is the same as an initial value of the sixth information.

S3702: The satellite network device 200 receives original data sent by the cellular network device 400.

S3703 : The satellite network device 200 receives a service request sent by the terminal 100.

S3704: The satellite network device 200 generates a fourth authentication code based on the original data and the sixth information.

The satellite network device 200 may generate the fourth authentication code based on the stored sixth information and the original data.

S3705: The satellite network device 200 obtains a third data packet based on a second retransmission indication field, the original data, and the fourth authentication code.

The satellite network device 200 may concatenate the second retransmission indication field, the fourth authentication code, and the original data, to obtain the third data packet.

For example, when a length of the second retransmission indication field is 1 bit, if a value of the second retransmission indication field is "0", the second retransmission indication field may indicate that the third data packet is a newly transmitted data packet. If a value of the second retransmission indication field is "1", the second retransmission indication field may indicate that the third data packet is a retransmitted data packet.

In a possible implementation, the satellite network device 200 may detect whether current original data is the same as original data in a previous data packet. When determining that the current original data is the same as the original data in the previous data packet, the satellite network device 200 generates a first retransmission indication field indicating that a data packet including the current original data is a retransmitted data packet. When determining that the current original data is different from the original data in the previous data packet, the satellite network device 200 generates a first retransmission indication field indicating that a data packet including the current original data is a newly transmitted data packet.

S3706: The satellite network device 200 sends the third data packet to the terminal 100, where the third data packet includes the second retransmission indication field.

S3707: The terminal 100 obtains a third authentication code based on the third data packet and the fifth information.

S3708: The terminal 100 determines whether the third authentication code is the same as the fourth authentication code.

The terminal 100 may determine a receiving status of the third data packet by determining, through comparison, whether the third authentication code is the same as the fourth authentication code. When the third authentication code is the same as the fourth authentication code, the terminal 100 may perform step S3709 and step S3710.

When the third authentication code is different from the fourth authentication code, the terminal 100 may perform step S3711.

S3709: The terminal 100 displays receiving prompt information.

S3710: The terminal 100 sends a success application receipt to the satellite network device 200.

S3711: The terminal 100 determines, based on the second retransmission indication field, whether the second data packet is a retransmitted data packet.

When determining, based on the second retransmission indication field, that the first data packet is a newly transmitted data packet, the terminal 100 may perform step S3712.

When determining, based on the second retransmission indication field, that the first data packet is a retransmitted data packet, the terminal 100 may perform step S3713 to step S3715.

S3712: The terminal 100 sends a failure application receipt to the satellite network device 200.

S3713: The terminal 100 obtains temporary information based on the fifth information.

The terminal 100 may subtract a preset value from a value of the fifth information, to obtain the temporary information.

S3714: The terminal 100 may generate a temporary authentication code based on the specified key, the third data packet, and the temporary information.

S3715: The terminal 100 may determine whether the fourth authentication code is the same as the temporary authentication code.

When the fourth authentication code is the same as the temporary authentication code, the terminal 100 may perform step S3716.

When the fourth authentication code is different from the temporary authentication code, the terminal 100 may perform step S3717.

S3716: The terminal 100 sends a success application receipt to the satellite network device 200.

When determining that the fourth authentication code is the same as the temporary authentication code, the terminal 100 may determine that the terminal 100 has received a newly transmitted data packet corresponding to the retransmitted data packet. The terminal 100 may determine that the satellite network device 200 does not receive a success application receipt indicating that the receiving device successfully receives the newly transmitted data packet corresponding to the retransmitted data packet, and the terminal 100 may send the success application receipt to the satellite network device 200. The success application receipt may indicate that the terminal 100 successfully receives the original data in the retransmitted data packet.

S3717: The terminal 100 sends a failure application receipt to the satellite network device 200.

For specific descriptions of the foregoing steps, refer to the foregoing embodiment shown in FIG. 13. Details are not described herein again.

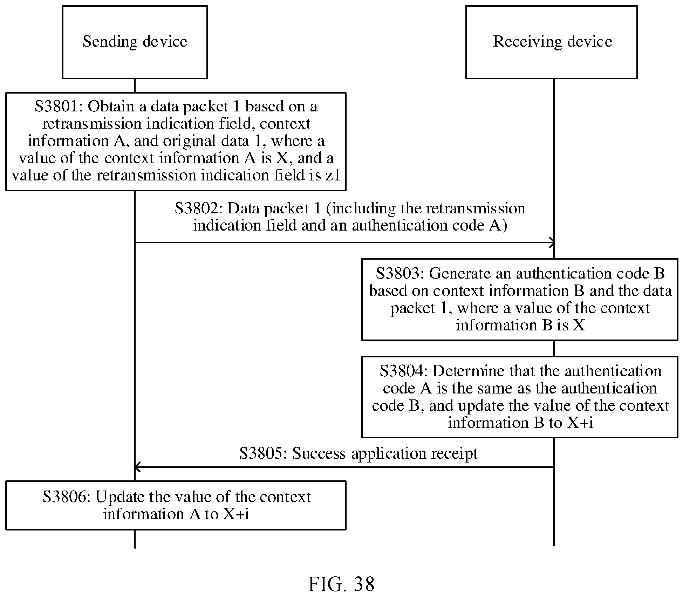

The following describes, with reference to a method in which context information indicates information about a quantity of data packets, a transmission procedure of a data packet including a retransmission indication field. Details are shown in FIG. 38.

S3801: A sending device obtains a data packet 1 based on a retransmission indication field, context information A, and original data 1, where a value of the context information A is X, and a value of the retransmission indication field is z1.

The sending device obtains an authentication code A based on the context information A and the original data 1. The sending device concatenates the retransmission indication field, the authentication code A, and the original data 1, to obtain the data packet 1.

The retransmission indication field whose value is z1 indicates that the data packet 1 is a newly transmitted data packet.

S3802: The sending device sends the data packet 1 (including the retransmission indication field and the authentication code A) to a receiving device.

S3803: The receiving device generates an authentication code B based on context information B and the data packet 1, where a value of the context information B is X.

S3804: The receiving device determines that the authentication code A is the same as the authentication code B, and updates the value of the context information B to X+i.

S3805: The receiving device sends a success application receipt to the sending device.

S3806: The sending device updates the value of the context information A to X+i.

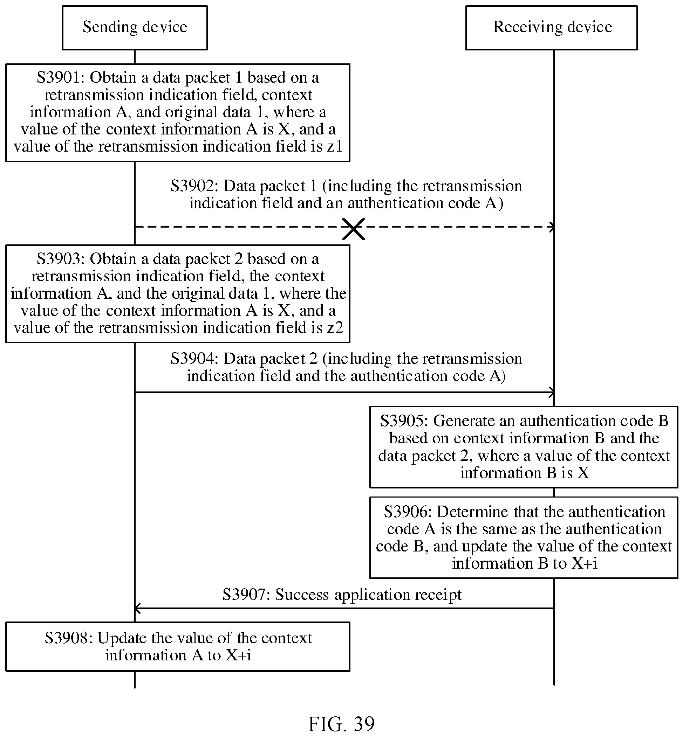

The following describes, with reference to a method in which context information indicates information about a quantity of data packets, another transmission procedure of a data packet including a retransmission indication field. Details are shown in FIG. 39.

S3901: A sending device obtains a data packet 1 based on a retransmission indication field, context information A, and original data 1, where a value of the context information A is X, and a value of the retransmission indication field is z1.

The sending device obtains an authentication code A based on the context information A and the original data 1. The sending device concatenates the retransmission indication field, the authentication code A, and the original data 1, to obtain the data packet 1.

The retransmission indication field whose value is z1 indicates that the data packet 1 is a newly transmitted data packet.

S3902: The sending device fails to send the data packet 1 (including the retransmission indication field and the authentication code A) to a receiving device.

The data packet 1 is lost in a transmission process, and therefore the receiving device cannot receive the data packet 1.

S3903: The sending device obtains a data packet 2 based on a retransmission indication field, the context information A, and the original data 1, where the value of the context information A is X, and a value of the retransmission indication field is z2.

The sending device obtains the authentication code Abased on the context information A and the original data 1. The sending device concatenates the retransmission indication field, the authentication code A, and the original data 2, to obtain the data packet 2.

The retransmission indication field whose value is z2 indicates that the data packet 2 is a retransmitted data packet.

S3904: The sending device sends the data packet 2 (including the retransmission indication field and the authentication code A) to the receiving device.

S3905: The receiving device generates an authentication code B based on context information B and the data packet 2, where a value of the context information B is X.

S3906: The receiving device determines that the authentication code A is the same as the authentication code B, and updates the value of the context information B to X+i.

S3907: The receiving device sends a success application receipt to the sending device.

S3908: The sending device updates the value of the context information A to X+i.

In this way, if a data packet is lost in a transmission process, transmission of a next data packet between the sending device and the receiving device is not affected.

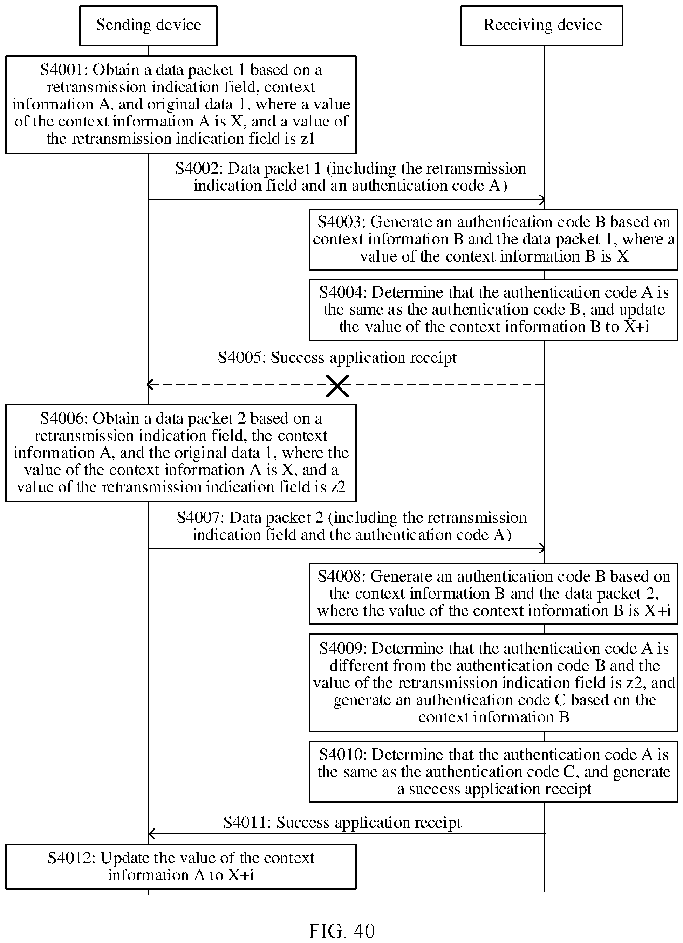

The following describes, with reference to a method in which context information indicates information about a quantity of data packets, another transmission procedure of a data packet including a retransmission indication field. Details are shown in FIG. 40.

S4001: A sending device obtains a data packet 1 based on a retransmission indication field, context information A, and original data 1, where a value of the context information A is X, and a value of the retransmission indication field is z1.

The sending device obtains an authentication code A based on the context information A and the original data 1. The sending device concatenates the retransmission indication field, the authentication code A, and the original data 1, to obtain the data packet 1.

The retransmission indication field whose value is z1 indicates that the data packet 1 is a newly transmitted data packet.

S4002: The sending device sends the data packet 1 (including the retransmission indication field and the authentication code A) to a receiving device.

S4003: The receiving device generates an authentication code B based on context information B and the data packet 1, where a value of the context information B is X.

S4004: The receiving device determines that the authentication code A is the same as the authentication code B, and updates the value of the context information B to X+i.

S4005: The receiving device fails to send a success application receipt to the sending device.

The success application receipt is lost in a transmission process, and therefore the sending device cannot receive the success application receipt.

S4006: The sending device obtains a data packet 2 based on a retransmission indication field, the context information A, and the original data 1, where the value of the context information A is X, and a value of the retransmission indication field is z2.

The sending device obtains the authentication code Abased on the context information A and the original data 1. The sending device concatenates the retransmission indication field, the authentication code A, and the original data 1, to obtain the data packet 2.

The retransmission indication field whose value is z2 indicates that the data packet 2 is a retransmitted data packet.

S4007: The sending device sends the data packet 2 (including the retransmission indication field and the authentication code A) to the receiving device.

S4008: The receiving device generates an authentication code B based on the context information B and the data packet 2, where the value of the context information B is X+i.

S4009: The receiving device determines that the authentication code Ais different from the authentication code B and the value of the retransmission indication field is z2, and the receiving device generates an authentication code C based on the context information B.

When the authentication code A is different from the authentication code B, the receiving device determines, based on the retransmission indication field, that the data packet 2 is a retransmitted data packet, and the receiving device subtracts a preset value from the value of the context information B, to obtain context information C that is X. The receiving device generates the authentication code C based on the context information C.

S4010: The receiving device determines that the authentication code A is the same as the authentication code C, and generates a success application receipt.

S4011: The receiving device sends a success application receipt to the sending device.

S4012: The sending device updates the value of the context information A to X+i.

In this way, when a success application receipt is lost in a transmission process, after receiving a retransmitted data packet, the receiving device may send the success application receipt to the sending device again, to prevent the sending device from sending the retransmitted data packet again.

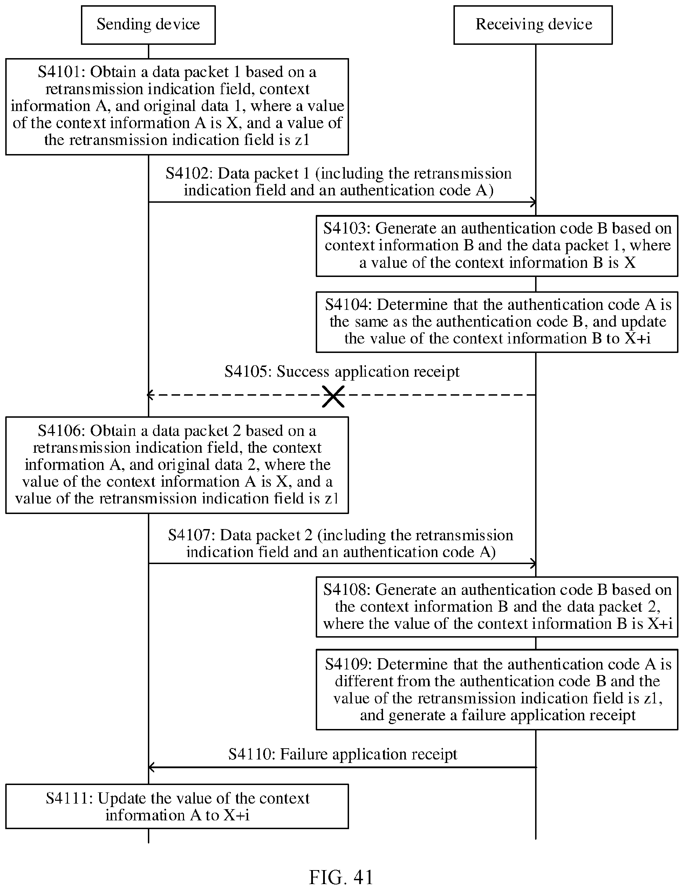

The following describes, with reference to a method in which context information indicates information about a quantity of data packets, another transmission procedure of a data packet including a retransmission indication field. Details are shown in FIG. 41.

S4101: A sending device obtains a data packet 1 based on a retransmission indication field, context information A, and original data 1, where a value of the context information A is X, and a value of the retransmission indication field is z1.

The sending device obtains an authentication code A based on the context information A and the original data 1. The sending device concatenates the retransmission indication field, the authentication code A, and the original data 1, to obtain the data packet 1.

The retransmission indication field whose value is z1 indicates that the data packet 1 is a newly transmitted data packet.

S4102: The sending device sends the data packet 1 (including the retransmission indication field and the authentication code A) to a receiving device.

S4103: The receiving device generates an authentication code B based on context information B and the data packet 1, where a value of the context information B is X.

S4104: The receiving device determines that the authentication code A is the same as the authentication code B, and updates the value of the context information B to X+i.

S4105: The receiving device fails to send a success application receipt to the sending device.

The success application receipt is lost in a transmission process, and therefore the sending device cannot receive the success application receipt.

S4106: The sending device obtains a data packet 2 based on a retransmission indication field, the context information A, and original data 2, where the value of the context information A is X, and a value of the retransmission indication field is z1.

The sending device obtains an authentication code A based on the context information A and the original data 2. The sending device concatenates the retransmission indication field, the authentication code A, and the original data 2, to obtain the data packet 2.

The retransmission indication field whose value is z1 indicates that the data packet 2 is a newly transmitted data packet.

S4107: The sending device sends the data packet 2 (including the retransmission indication field and the authentication code A) to the receiving device.

S4108: The receiving device generates an authentication code B based on the context information B and the data packet 2, where the value of the context information B is X+i.

S4109: The receiving device determines that the authentication code A is different from the authentication code B and the value of the retransmission indication field is z1, and the receiving device generates a failure application receipt.

S4110: The receiving device sends the failure application receipt to the sending device.

S4111: The sending device updates the value of the context information A to X+i.

In this way, when a success application receipt is lost in a transmission process, the receiving device may send a failure application receipt to the sending device after receiving a newly transmitted data packet. The sending device may update the value of the context information A based on the failure application receipt.

This application is not limited to the foregoing embodiments, and further provides the following embodiments. It should be noted that the following embodiments may be used in mutual combination with any one or more of the foregoing embodiments.

In a possible implementation, after a sending device and a receiving device return from a first transmission system to a second transmission system, the receiving device may send a set application receipt to the sending device. The set application receipt may indicate a data packet successfully received by the receiving device. The set application receipt may include identification information of the successfully received data packet (for example, the identification information may include but is not limited to a message ID field, receiving time of the data packet, context information, a sequence number SN, and the like). The sending device may determine a successfully sent data packet based on the identification information of the data packet.

Specifically, in an inbound process, after a terminal 100 and a satellite network device 200 return to a second transmission system, the satellite network device 200 may generate and send, to the terminal 100, a set application receipt. The set application receipt may include but is not limited to one or more of identification information such as a message ID field of a successfully received data packet, receiving time of the data packet, context information of the data packet, and a sequence number of the data packet. The terminal 100 may determine, based on the set application receipt, a successfully sent data packet and a data packet that fails to be sent. The terminal 100 may further display success prompt information corresponding to the successfully sent data packet. The success prompt information may be used to prompt a user that a satellite message corresponding to the success prompt information is successfully sent.

The terminal 100 may further display failure prompt information corresponding to the data packet that fails to be sent. The failure prompt information may be used to prompt the user that a satellite message corresponding to the failure prompt information is successfully sent. Herein, the set application receipt generated by the satellite network device 200 is also referred to as a second application receipt.

Specifically, in an outbound process, after the terminal 100 and the satellite network device 200 return to the second transmission system, the terminal 100 may generate and send, to the satellite network device 200, a set application receipt. The set application receipt may include but is not limited to one or more of identification information such as a message ID field of a successfully received data packet, receiving time of the data packet, context information of the data packet, and a sequence number of the data packet. The satellite network device 200 may determine, based on the set application receipt, a successfully sent data packet and a data packet that fails to be sent. The satellite network device 200 may delete the successfully sent data packet. Herein, the set application receipt generated by the terminal 100 is also referred to as a fourth application receipt.

Optionally, the satellite network device 200 may further retransmit, through the second transmission system, the data packet that fails to be sent.

This application is not limited to the foregoing embodiments, and further provides the following embodiments. It should be noted that the following embodiments may be used in mutual combination with any one or more of the foregoing embodiments.

In a possible implementation, in an inbound process, after sending a first data packet to a satellite network device 200, a terminal 100 may further display first sending time prompt information. The first sending time prompt information may be used to prompt a user time at which the terminal 100 sends the first data packet to the satellite network device 200. The first data packet may include a first authentication code generated based on first information, and the first information may be sending time information or first context information.

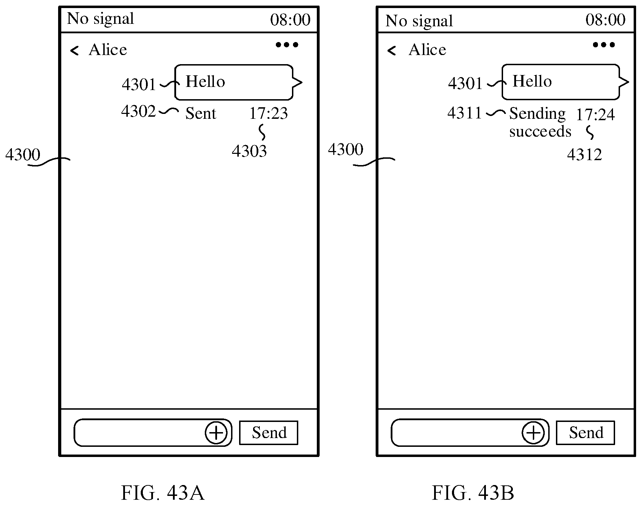

For example, the terminal 100 may display a message detail interface 4300 shown in FIG. 43A. The message detail interface 4300 may include but is not limited to a message box 4301, a sending prompt 4302, and a sending time prompt 4303. The message box 4301 may be used to display content of a satellite message that has been sent by the terminal 100 to the satellite network device 200. Herein, the message box 4301 displays "Hello". The sending prompt 4302 may be used to prompt the user that the terminal 100 has sent, to the satellite network device 200, the content displayed in the message box 4301. For example, the sending prompt 1543 may be a character string "Sent". The sending time prompt 4303 may be used to display the time at which the terminal 100 sends the first data packet to the satellite network device 200, for example, "17:23". For specific descriptions of the message detail interface 4300, refer to the embodiment shown in FIG. 15D. Details are not described herein again.

Optionally, after receiving a success application receipt, the terminal 100 may further display second sending time prompt information while displaying success prompt information. The second sending time prompt information may be used to prompt the user time at which the satellite message is successfully sent.

For example, as shown in FIG. 43B, after receiving the success application receipt, the terminal 100 may display a success prompt 4311 and a sending time prompt 4312. The success prompt 4311 may be used to prompt the user that the terminal 100 has successfully sent the message content in the message box 4301. The sending time prompt 4312 may be used to prompt the user the time at which the terminal 100 successfully sends the satellite message.

Optionally, after receiving a failure application receipt, the terminal 100 may further display second sending time prompt information while displaying failure prompt information. The second sending time prompt information may be used to prompt the user time at which the data packet fails to be sent.

In a possible implementation, in an outbound process, the terminal 100 may further display receiving prompt information and receiving time prompt information after successfully receiving a third data packet sent by the satellite network device 200. The receiving prompt information may be used to prompt the user that a satellite message is received. The receiving time prompt information may be used to prompt the user time at which the satellite message is received.

The following describes a terminal 100 according to an embodiment of this application.

The terminal 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not specially limited in this embodiment of this application.

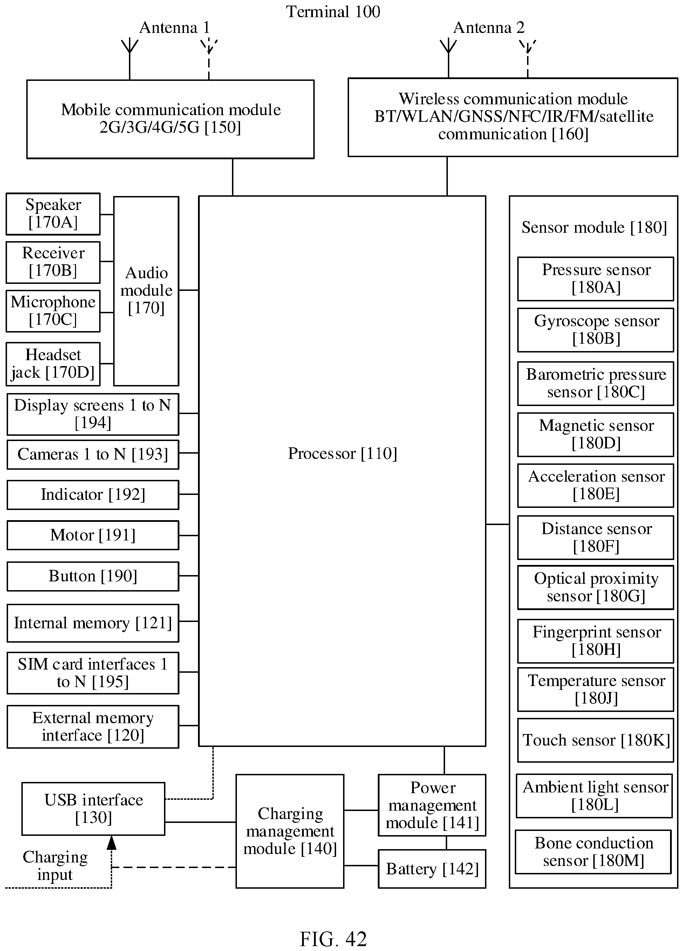

FIG. 42 is a schematic diagram of a hardware structure according to an embodiment of this application.

The following uses the terminal 100 as an example to specifically describe this embodiment. It should be understood that the terminal 100 shown in FIG. 42 is merely an example. The terminal 100 may have more or fewer components than those shown in FIG. 42, may combine two or more components, or may have a different component configuration. Components shown in FIG. 42 may be implemented in hardware including one or more signal processing and/or application-specific integrated circuits, software, or a combination of hardware and software.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of the present invention does not constitute a specific limitation on the terminal 100. In some other embodiments of this application, the terminal 100 may include more or fewer components than those shown in the figure, may combine some components, may split some components, or may have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A wireless communication function of the terminal 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the terminal 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert an amplified signal into an electromagnetic wave through the antenna 1 for radiation. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then a processed signal is transmitted to the application processor. The application processor outputs a sound signal through an audio device (not limited to the speaker 170A, the receiver 170B, and the like), or displays an image or a video through the display screen 194. In some embodiments, the modem processor may be an independent component. In some other embodiments, the modem processor may be independent of the processor 110, and disposed in a same component as the mobile communication module 150 or another functional module.

The wireless communication module 160 may provide a wireless communication solution that is applied to the terminal 100 and that includes a wireless local area network (such as a wireless fidelity (wireless fidelity, Wi-Fi) network), Bluetooth (bluetooth, BT), a global navigation satellite system (global navigation satellite system, GNSS), a satellite communication module, frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a modulated and amplified signal into an electromagnetic wave through the antenna 2 for radiation.

The satellite communication module may be configured to communicate with a satellite network device. In a satellite communication system, the satellite communication module may communicate with a satellite network device 200, and the satellite communication module can support data packet transmission with the satellite network device 200. For example, when the satellite communication system is a BeiDou communication system, the satellite network device 200 is a BeiDou network device 200, the satellite communication module may communicate with the BeiDou network device 200, and the satellite communication module can support BeiDou short packet (a data packet in the BeiDou communication system) transmission with the BeiDou network device 200.

In some embodiments, the antenna 1 of the terminal 100 is coupled to the mobile communication module 150, and the antenna 2 is coupled to the wireless communication module 160, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The terminal 100 implements a display function through the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs, and execute program instructions to generate or change display information.

The display screen 194 is configured to display an image, a video, or the like. The display screen 194 includes a display panel. In some embodiments, the terminal 100 may include one or N display screens 194, where N is a positive integer greater than 1. The pressure sensor 180A is configured to sense a pressure signal, and can convert the pressure signal into an electrical signal. In some embodiments, the pressure sensor 180A may be disposed on the display screen 194. The touch sensor 180K is also referred to as a "touch panel". The touch sensor 180K is configured to detect a touch operation acting on or near the touch sensor. The touch sensor may transfer the detected touch operation to the application processor to determine a touch event type. Visual output related to the touch operation may be provided through the display screen 194.

The SIM card interface 195 is configured to be connected to a SIM card. The SIM card may be inserted into the SIM card interface 195 or pulled out from the SIM card interface 195, to implement contact with or separation from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external storage card. The terminal 100 interacts with a network through the SIM card, to implement functions such as calling and data communication. In some embodiments, the terminal 100 uses an eSIM, namely, embedded SIM card. The eSIM card may be embedded in the terminal 100, and cannot be separated from the terminal 100.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

It may be understood that the foregoing embodiments may be used in mutual combination. For example, when the information A of the sending device is context information A and the information B of the receiving device is context information B, and the context information A and the context information B of the sending device and the receiving device are inconsistent, the sending device may set the information A to sending time information, and the receiving device may set the information B to receiving time information. In this way, the sending device and the receiving device may continue to communicate with each other in the first transmission system. It should be further noted that a combination manner is not limited to the foregoing described combination manner, and the combination manner is not limited in embodiments of this application.

**Claims**

1. A transmission method, comprising:

generating, by a first device, a first authentication code based on first information, a first key, and first data, wherein the first information is sending time information or first context information;
generating, by the first device, a first data packet based on the first authentication code and the first data; and
sending, by the first device, the first data packet to a second device in a first transmission system.

2. The method according to claim 1, wherein before the generating, by a first device, a first authentication code based on first information, a first key, and first data, the method further comprises:
obtaining, by the first device, the first key, wherein the first key is obtained by the first device through negotiation with the second device in a second transmission system, and the first transmission system is different from the second transmission system.

3. The method according to claim 1, wherein before the generating, by a first device, a first authentication code based on first information, a first key, and first data, the method further comprises:

establishing, by the first device, a communication connection to a fourth device; and
obtaining, by the first device, the first key through the fourth device.

4. The method according to claim 1, wherein the first key is a key preset by the first device.

5. The method according to claim 2, wherein the second transmission system is a cellular transmission system or a wireless local area network WLAN transmission system, and the first transmission system is a satellite transmission system.

6. The method according to claim 2 or 5, wherein the first device obtains the first key by negotiating with the second device by using a generic bootstrapping architecture GBA procedure in the second transmission system.

7. The method according to any one of claims 1 to 5, wherein the sending, by the first device, the first data packet to a second device in a first transmission system specifically comprises:
after processing the first data packet into at least one second data packet at a message data convergence protocol MDCP layer of the first device and/or a satellite link control SLC layer of the first device, sending the at least one second data packet to the second device through a third device.

8. The method according to any one of claims 1 to 7, wherein the sending time information indicates sending time of the first data packet.

9. The method according to claim 8, wherein time at which the first device sends the first data packet is time at which an application AP layer of the first device sends the first data packet to the message data convergence protocol MDCP layer, or is time estimated by the first device for sending the first data packet to the second device.

10. The method according to any one of claims 1 to 9, wherein the first device obtains the sending time information through positioning timing.

11. The method according to any one of claims 1 to 10, wherein the first device obtains the first information based on the sending time information and a specified time granularity in a preset coding manner.

12. The method according to any one of claims 1 to 11, wherein after the sending, by the first device, the first data packet, the method further comprises:
receiving, by the first device, a first application layer receipt sent by the second device, wherein the first application layer receipt indicates a status of receiving the first data packet by the second device.

13. The method according to any one of claims 1 to 7, wherein the first information is the first context information, and the first context information indicates information about a quantity of first data packets successfully sent by the first device, information about a quantity of application receipts successfully received by the first device, or a count value or a sequence number of the first data packet sent by the first device.

**14.** The method according to any one of claims 1 to 7 or claim 13, wherein the first data packet further comprises first indication information, and the first indication information indicates a first message ID of the first data packet, or the first indication information indicates a first count value or a first sequence number of the first data packet.

**15.** The method according to any one of claims 1 to 7, claim 13, or claim 14, wherein the method further comprises: associating, by an AP layer of the first device, the first message ID, the first count value, or the first sequence number with the first data packet, and adding, by the first device, a preset value to a value of the first message ID, the first count value, or the first sequence number.

**16.** The method according to any one of claims 1 to 4 or claims 13 to 15, wherein the first data packet further comprises third indication information, and the third indication information indicates that the first data packet is a newly transmitted data packet or a retransmitted data packet.

**17.** The method according to any one of claims 13 to 16, wherein before the generating, by a first device, a first authentication code based on first information, a first key, and first data, the method further comprises:

obtaining, by the first device, an initial value of the first information in the second transmission system; or
obtaining, by the first device, an initial value of the first information through the fourth device.

**18.** The method according to any one of claims 13 to 17, wherein after the sending, by the first device, the first data packet, the method further comprises:
receiving, by the first device, a first application layer receipt sent by the second device, wherein the first application layer receipt indicates a status of receiving the first data packet by the second device.

**19.** The method according to claim 18, wherein after the receiving, by the first device, a first application layer receipt sent by the second device, the method further comprises:
adding, by the first device, a preset value to a value of the first information, wherein an adjusted value of the first information is different from the value of the first information.

**20.** The method according to claim 19, wherein after the receiving, by the first device, a first application layer receipt sent by the second device, the method further comprises:
when the first application receipt indicates that the second device fails to receive the first data packet, adjusting, by the first device, the value of the first information to the initial value.

**21.** The method according to claim 20, wherein after the adjusting, by the first device, the value of the first information to the initial value, the method further comprises:
sending, by the first device, third information to the second device, wherein a value of the third information is the same as the adjusted value of the first information.

**22.** The method according to any one of claim 12 or claims 18 to 21, wherein after the receiving, by the first device, a first application layer receipt sent by the second device, the method further comprises:
when the first application receipt indicates that the first data packet is successfully sent, displaying, by the first device, success prompt information, wherein the success prompt information prompts a user that a message corresponding to the first data packet is successfully sent.

**23.** The method according to any one of claim 12 or claims 18 to 21, wherein after the receiving, by the first device, a first application layer receipt sent by the second device, the method further comprises:
when the first application receipt indicates that the first data packet fails to be sent, displaying, by the first device, failure prompt information, wherein the failure prompt information prompts a user that a message corresponding to the first data packet fails to be sent.

**24.** The method according to any one of claim 12 or claims 18 to 21, wherein after the receiving, by the first device, a first application layer receipt sent by the second device, the method further comprises:
when the first application receipt comprises second message ID information, displaying, by the first device, success prompt information, wherein the success prompt information prompts a user that a data packet indicated by the second message ID information is successfully sent.

**25.** The method according to any one of claims 1 to 24, wherein the generating, by the application layer of the first device, a first data packet based on the first authentication code and the first data specifically comprises:
encrypting, by the application layer of the first device, the first authentication code and the first data based on the first key, to generate the first data packet, wherein the first data packet comprises an encrypted first authentication code and encrypted first data.

26. The method according to any one of claims 1 to 25, wherein after the sending, by the first device, the first data packet to a second device in a first transmission system, the method further comprises:
receiving, by the first device, second application receipt information in the second transmission system, wherein the second application receipt information indicates a status of sending the first data packet by the first device in the first transmission system.

27. The method according to any one of claims 1 to 26, wherein after the sending, by the first device, the first data packet to a second device in a first transmission system, the method further comprises:
displaying, by the first device, sending prompt information, wherein the sending prompt information prompts the user that the first device has sent the first data packet to the second device.

28. A secure transmission method, comprising:

receiving, by a second device in a first transmission system, a first data packet sent by a first device;
generating, by the second device, a second authentication code based on second information, a first key, and the first data packet, wherein the second information is receiving time information or second context information; and
determining, by the second device, a receiving status of the first data packet based on the second authentication code.

29. The method according to claim 28, wherein before the generating, by the second device, a second authentication code based on second information, a first key, and the first data packet, the method further comprises:
obtaining, by the second device, the first key, wherein the first key is obtained by the second device through negotiation with the first device in a second transmission system, and the second transmission system is different from the first transmission system.

30. The method according to claim 29, wherein the second transmission system is a cellular transmission system or a WLAN transmission system, and the first transmission system is a satellite transmission system.

31. The method according to claim 29 or 30, wherein the second device obtains the first key by negotiating with the first device by using a generic bootstrapping architecture GBA procedure in the second transmission system.

32. The method according to claim 28, wherein the first key is a key preset by the first device.

33. The method according to any one of claims 28 to 32, wherein the receiving, by a second device in a first transmission system, a first data packet specifically comprises:
receiving, by the second device in the first transmission system, the first data packet sent by a third device.

34. The method according to any one of claims 28 to 33, wherein the second device determines a first authentication code based on the first data packet.

35. The method according to any one of claims 28 to 34, wherein the receiving time information indicates receiving time of the first data packet.

36. The method according to any one of claims 28 to 35, wherein before the generating, by the second device, a second authentication code based on second information, a first key, and the first data packet, the method further comprises:
receiving, by the second device, the second information sent by the third device.

37. The method according to any one of claims 28 to 35, wherein before the generating, by the second device, a second authentication code based on second information, a first key, and the first data packet, the method further comprises:

receiving, by the second device, third information sent by the third device; and
generating, by the second device, the second information based on the third information.

**38.** The method according to any one of claims 28 to 34, wherein the second context information indicates information about a quantity of first data packets successfully received by the second device, or a count value or a sequence value of the first data packet received by the second device.

**39.** The method according to any one of claims 28 to 34 or claim 38, wherein the first data packet comprises first indication information, and the first indication information indicates a first message ID/a first sequence number/a first count value of the first data packet.

**40.** The method according to any one of claims 28 to 34, claim 38, or claim 39, wherein the first data packet comprises third indication information, and the third indication information indicates that the first data packet is a newly transmitted data packet/a retransmitted data packet.

**41.** The method according to any one of claims 28 to 34 or claims 38 to 40, wherein before the generating, by the second device, a second authentication code based on second information, a first key, and the first data packet, the method further comprises:
obtaining, by the second device, an initial value of the second information in the second transmission system.

**42.** The method according to any one of claims 28 to 41, wherein the determining, by the second device, a receiving status of the first data packet based on the second authentication code specifically comprises:
determining, by the second device, the receiving status of the first data packet based on whether the first authentication code is the same as the second authentication code.

**43.** The method according to claim 42, wherein when the second device determines, based on the second authentication code, that the first data packet is successfully received, the method further comprises:
sending, by the second device, a first application receipt to the first device, wherein the first application receipt indicates that the first data packet is successfully received.

**44.** The method according to claim 42, wherein when the second device determines, based on the second authentication code, that the first data packet fails to be received, the method further comprises:
sending, by the second device, a first application receipt to the first device, wherein the first application receipt further comprises a second message ID field, and the second message ID field indicates a message ID corresponding to a latest successfully transmitted data packet.

**45.** The method according to claim 42, wherein when the second device determines, based on the second authentication code, that the first data packet fails to be received, the method further comprises:
sending, by the second device, a first application receipt to the first device, wherein the first application receipt indicates that the first data packet fails to be received.

**46.** The method according to claim 42, wherein when the second device determines, based on the second authentication code, that the first data packet is successfully received, the method further comprises:
adding, by the second device, a preset value to a value of the second information, wherein an adjusted value of the second information is different from the value of the second information.

**47.** The method according to claim 42, wherein when the second device determines, based on the second authentication code, that the first data packet fails to be received, the method further comprises:
adjusting, by the second device, a value of the second information to a preset value.

**48.** The method according to claim 42, wherein when the second device determines, based on the second authentication code, that the first data packet fails to be received, the method further comprises:

receiving, by the second device, the third information sent by the first device; and
adjusting, by the second device, a value of the second information to a value of the third information.

**49.** The method according to any one of claims 28 to 48, wherein after the determining, by the second device, a receiving status of the first data packet based on the second authentication code, the method further comprises:
sending, by the second device, second application receipt information to the first device in the second transmission system, wherein the second application receipt information indicates a status of receiving the first data packet by the second device in the first transmission system.

**50.** A transmission method, comprising:

receiving, by a third device, at least one second data packet sent by a first device;
generating, by the third device, a first data packet based on the at least one second data packet; and
sending, by the third device, the first data packet to a second device.

**51.** The method according to claim 50, wherein the method further comprises:
sending, by the third device, second information or fourth information to the second device, wherein the second information or the fourth information is receiving time information.

**52.** The method according to claim 51, wherein the receiving time information indicates corresponding time at which the third device receives the 1st data packet in the at least one second data packet.

**53.** A communication apparatus, comprising one or more processors and one or more memories, wherein the one or more memories are configured to store computer program code, the computer program code comprises computer instructions, and when the one or more processors execute the computer instructions, the communication apparatus is enabled to perform the method according to any one of claims 1 to 52.

**54.** A computer-readable storage medium, wherein the computer-readable storage medium stores instructions, and when the instructions are run on a computer, the computer is enabled to perform the method according to any one of claims 1 to 52.

FIG. 1A

**Satellite communication system 20**

Satellite 21

Satellite network device 200

Cellular network device 400

Home location register 28

Ground central station 31

Converged communication platform 24

Registration

Telecommunication business and operation support system 29

Terminal 100

Terminal 100

Short message service center 25

Cellular network

Terminal 300

FIG. 1B

EP 4 369 631 A1

**Terminal 100**

Application (AP) layer

| First authentication code | Original data |

Encryption ⟱

| Packet header | | | |
|---|---|---|---|
| ... | Encryption indication | Encrypted data | |

Message data convergence protocol (MDCP) layer

| Redundant length indication | MDCP SDU | Padding data |

Packet division ⟱

| Successor indication | M_segment | | Successor indication | M_segment | | Successor indication | M_segment |
|---|---|---|---|---|---|---|---|
| MDCP PDU 0 | | | MDCP PDU 1 | | | MDCP PDU 2 | |

TO FIG. 2A(2)          TO FIG. 2A(2)          TO FIG. 2A(2)

FIG. 2A(1)

EP 4 369 631 A1

CONT. FROM
FIG. 2A(1)

CONT. FROM
FIG. 2A(1)

CONT. FROM
FIG. 2A(1)

| SLC SDU 0 | SLC SDU 1 | SLC SDU 2 |

Satellite
link control
(SLC) layer

Frame division

| Frame header | S_segment | Frame header | S_segment | Frame header | S_segment | Frame header | S_segment |
| SLC PDU 0 | | SLC PDU 1 | | SLC PDU 2 | | SLC PDU 3 | |

Physical
(PHY)
layer

| User frame | User frame | User frame | User frame |

Sending

FIG. 2A(2)

**BeiDou network device 200**

Application
(AP) layer

| First authentication code | Original data |
|---|---|

| Packet header | | Decryption |
|---|---|---|
| ... | Encryption indication | Encrypted data |

Message data
convergence
protocol
(MDCP)
layer

| Redundant length indication | MDCP SDU | Padding data |
|---|---|---|

Packet assembly

| Successor indication | M_segment | Successor indication | M_segment | Successor indication | M_segment |
|---|---|---|---|---|---|
| MDCP PDU 0 | | MDCP PDU 1 | | MDCP PDU 2 | |

TO FIG. 2B(2)          TO FIG. 2B(2)          TO FIG. 2B(2)

FIG. 2B(1)

CONT. FROM
FIG. 2B(1)

CONT. FROM
FIG. 2B(1)

CONT. FROM
FIG. 2B(1)

Satellite
link control
(SLC)
layer

| SLC SDU 0 | SLC SDU 1 | SLC SDU 2 |

Frame
assembly

| Frame header | S_segment | | Frame header | S_segment | | Frame header | S_segment | | Frame header | S_segment |

SLC PDU        SLC PDU        SLC PDU        SLC PDU

Physical
(PHY)
layer

Receiving

| User frame | User frame | User frame | User frame |

100

EP 4 369 631 A1

FIG. 2B(2)

Application
(AP) layer

| Fourth authentication code | Original data |
|---|---|

Encryption

| Packet header | | |
|---|---|---|
| ... | Encryption indication | Encrypted data |

BeiDou network device 200

TO FIG. 3A(2)

TO FIG. 3A(2)

TO FIG. 3A(2)

FIG. 3A(1)

CONT. FROM
FIG. 3A(1)

CONT. FROM
FIG. 3A(1)

CONT. FROM
FIG. 3A(1)

Message data
convergence
protocol
(MDCP)
layer

MDCP SDU

Packet division

| Successor indication | M_segment | | Successor indication | M_segment | | Successor indication | M_segment |

MDCP PDU 0 — MDCP PDU 1 — MDCP PDU 2

SLC SDU 0 — SLC SDU 1 — SLC SDU 2

Satellite
link control
(SLC)
layer

Frame division

| Frame header | S_segment | | Frame header | S_segment | | Frame header | S_segment | | Frame header | S_segment |

SLC PDU — SLC PDU — SLC PDU — SLC PDU

TO FIG. 3A(3)        TO FIG. 3A(3)        TO FIG. 3A(3)

FIG. 3A(2)

EP 4 369 631 A1

102

CONT. FROM
FIG. 3A(2)

CONT. FROM
FIG. 3A(2)

CONT. FROM
FIG. 3A(2)

Physical
(PHY)
layer

| User frame (universal data frame) | User frame (universal data frame) | User frame (universal data frame) | User frame (universal data frame) |

Scheduling

S2C_d tributary:

| Reserved segment | Version number | User frame Terminal 100 | ... | User frame | Check bit | Reserved segment | Version number | User frame | ... | User frame | Check bit |

11 ms — Physical frame (114 ms)    11 ms — Physical frame (114 ms)

125 ms    125 ms

S2C_p tributary:

| Secondary code | Secondary code |

Sending

EP 4 369 631 A1

FIG. 3A(3)

EP 4 369 631 A1

Terminal 100

Application
(AP) layer

| Fourth authentication code | Original data |
|---|---|

Decryption

| Packet header | | |
|---|---|---|
| ... | Encryption indication | Encrypted data |

TO FIG. 3B(2)    TO FIG. 3B(2)    TO FIG. 3B(2)

FIG. 3B(1)

CONT. FROM FIG. 3B(1)

CONT. FROM FIG. 3B(1)

CONT. FROM FIG. 3B(1)

TO FIG. 3B(3)

TO FIG. 3B(3)

TO FIG. 3B(3)

Packet assembly

Frame assembly

MDCP SDU

| Successor indication | M_segment |
| MDCP PDU 0 |

| Successor indication | M_segment |
| MDCP PDU 1 |

| Successor indication | M_segment |
| MDCP PDU 2 |

SLC SDU 0

SLC SDU 1

SLC SDU 2

| Frame header | S_segment |
| SLC PDU |

Message data convergence protocol (MDCP) layer

Satellite link control (SLC) layer

FIG. 3B(2)

CONT. FROM
FIG. 3B(2)

CONT. FROM
FIG. 3B(2)

CONT. FROM
FIG. 3B(2)

Physical
(PHY)
layer

| User frame (universal data frame) | User frame (universal data frame) | User frame (universal data frame) | User frame (universal data frame) |

Frame
extraction

S2C_d
tributary:

| Reserved segment | Version number | User frame Terminal 100 | ⋯ | User frame ACK frame | Check bit | Reserved segment | Version number | User frame | ... | User frame | Check bit |

11 ms    Physical frame (114 ms)    11 ms    Physical frame (114 ms)

Receiving

125 ms    125 ms

S2C_p
tributary:

| Secondary code | Secondary code |

FIG. 3B(3)

EP 4 369 631 A1

Terminal 100 | Satellite network device 200 | Cellular network device 400

S401: Negotiate about a specified key

S402: Obtain original data

S403: Generate a first authentication code based on the specified key and the original data

S404: Generate a first data packet based on the first authentication code and the original data

S405: First data packet

S406: Generate a second authentication code based on the specified key and the first data packet

S407: Determine whether the first authentication code is the same as the second authentication code

Yes

No

S408: Failure application receipt

S409: Original data

S410: Success application receipt

FIG. 4

FIG. 5

Satellite 21

Satellite network device 200

Central station 23

Interception

Inbound data 1

N pieces of inbound data 1

Terminal 100

Terminal 500 (attack terminal)

Ground transceiver station 22

Converged communication platform 24

FIG. 6

FIG. 7A

Receiving device

Data packet

| Authentication code A | Original data |

Original data

Receiving time of the data packet

Information B

Original data

Information B → Specified authentication algorithm

Authentication code A

Authentication code B

Whether the authentication code A is the same as the authentication code B?

Same → Generate a success application receipt

Different

Information B

Subtract a preset value

Original data

Information C

Original data + Information C → Specified authentication algorithm

Authentication code A

Authentication code C

Whether the authentication code A is the same as the authentication code C?

Same → Generate a success application receipt

Different → Generate a failure application receipt

CONT. FROM FIG. 7A

FIG. 7B

FIG. 8A

Receiving device

Data packet

| Packet header | Encrypted data |

Encrypted data · · · · · Specified key

Specified decryption
algorithm

Concatenated data

| Authentication code A | Original data |

Receiving
time of the
data packet

| Original data | Information B |
Plaintext

CONT.
FROM
FIG. 8A

Specified key

Specified
authentication
algorithm

| Authentication code A |

| Authentication code B |

TO FIG. 8C

TO FIG. 8C

TO FIG. 8C

FIG. 8B

FIG. 8C

Terminal 100

Satellite network device 200

Cellular network device 400

S901: Negotiate about a key

S902: Obtain original data

S903: Generate a first authentication code based on the specified key, the original data, and first information

S904: Obtain a first data packet based on the first authentication code and the original data

S905: First data packet

S906: Obtain receiving time of the first data packet, and generate second information based on the receiving time

S907: Generate a second authentication code based on the specified key, the original data, and the second information

S908: Determine whether the first authentication code is the same as the second authentication code

No

S910: Application receipt, indicating that the first data packet is successfully sent

Yes

S909: Original data

S911: Application receipt, indicating that the first data packet fails to be sent

FIG. 9

| Terminal 100 | Satellite network device 200 | Cellular network device 400 |
|---|---|---|

S1001: Original data

S1002: Service request

S1003: Generate a fourth authentication code based on the original data and sixth information

S1004: Obtain a third data packet based on the fourth authentication code and the original data

S1005: Third data packet

S1006: Record receiving time of the third data packet, and generate fifth information based on the receiving time

S1007: Obtain a third authentication code based on the third data packet and the fifth information

S1008: Determine whether the third authentication code is the same as the fourth authentication code

Yes

No

S1009: Display receiving prompt information

S1010: Application receipt, indicating that the third data packet is successfully received

S1011: Application receipt, indicating that the third data packet fails to be received

FIG. 10

FIG. 11A

FIG. 11B

| Terminal 100 | Satellite network device 200 | Cellular network device 400 |
|---|---|---|

S1201: Negotiate about a key, first information, and second information

S1202: Obtain original data

S1203: Generate a first authentication code based on the specified key, the original data, and the first information

S1204: Obtain a first data packet based on the first authentication code and the original data

S1205: First data packet

S1206: Generate a second authentication code based on the specified key, the original data, and the second information

S1207: Determine whether the first authentication code is the same as the second authentication code

No

Yes

S1208: Update a value of the second information

S1209: Original data

S1210: Success application receipt

S1211: Update a value of the first information

S1212: Display success prompt information

S1213: Failure application receipt

S1214: Display failure prompt information

FIG. 12

| Terminal 100 | Satellite network device 200 | Cellular network device 400 |
|---|---|---|

S1301: Negotiate about fifth information and sixth information

S1302: Original data

S1303: Service request

S1304: Generate a fourth authentication code based on the original data and the sixth information

S1305: Obtain a third data packet based on the fourth authentication code and the original data

S1306: Third data packet

S1307: Obtain a third authentication code based on the third data packet and the fifth information

S1308: Determine whether the third authentication code is the same as the fourth authentication code

Yes

No

S1309: Display receiving prompt information

S1310: Update a value of the fifth information

S1311: Success application receipt

S1312: Update a value of the sixth information

S1313: Failure application receipt

FIG. 13

| Sending device | | Receiving device |
|---|---|---|

**S1401:** After generating an authentication code A based on information A, obtain a data packet based on the authentication code A and original data, where a value of the information A is X in this case

S1402: Data packet →

**S1403:** Generate an authentication code B based on information B and the data packet, where a value of the information B is X in this case

**S1404:** Determine that the authentication code A is the same as the authentication code B, and update the value of the information B to X+i

← S1405: Success application receipt

**S1406:** Update the value of the information A to X+i

**S1407:** After generating an authentication code A based on the information A, obtain a data packet based on the authentication code A and original data, where the value of the information A is X+i in this case

S1408: Data packet →

**S1409:** Generate an authentication code B based on the information B and the data packet, where the value of the information B is X+i in this case

**S1410:** Determine that the authentication code A is the same as the authentication code B, and update the value of the information B to X+2i

← S1411: Success application receipt

**S1412:** Update the value of the information A to X+2i

FIG. 14

No signal                    08:00

1501

Clock    Settings    Map    Messaging

1500

● ○ ○

Phone    Contacts    Camera

FIG. 15A

No signal                    08:00

< Satellite    1511    +    •••
  message

Henry                            7/16

Where are you?

Billy                            7/15

The weather is good today...

1510

FIG. 15B

FIG. 15C

FIG. 15D

FIG. 15E

FIG. 15F

FIG. 15G

FIG. 15H

| Sending device | Receiving device |
| --- | --- |

S1601: After generating an authentication code A based on information A, obtain a data packet based on the authentication code A and original data, where a value of the information A is X in this case

S1602: Data packet

S1603: After generating an authentication code A based on the information A, obtain a data packet based on the authentication code A and original data, where the value of the information A is X in this case

S1604: Data packet

S1605: Generate an authentication code B based on information B and the data packet, where a value of the information B is X in this case

S1606: Determine that the authentication code A is the same as the authentication code B, and update the value of the information B to X+i

FIG. 16A

```
┌─────────────────┐                              ┌─────────────────┐
│ Sending device  │                              │ Receiving device│
└─────────────────┘                              └─────────────────┘
```

┌──────────────────────────────────────┐
│ S1611: After generating an            │
│ authentication code A based on        │
│ information A, obtain a data packet    │
│ based on the authentication code A     │
│ and original data, where a value of the│
│ information A is X in this case        │
└──────────────────────────────────────┘

S1612: Data packet →

┌──────────────────────────────────────┐
│ S1613: Generate an authentication     │
│ code B based on information B and      │
│ the data packet, where a value of the  │
│ information B is X in this case        │
└──────────────────────────────────────┘

┌──────────────────────────────────────┐
│ S1614: Determine that the             │
│ authentication code A is the same as   │
│ the authentication code B, and update  │
│ the value of the information B to X+i   │
└──────────────────────────────────────┘

S1615: Success application receipt ←---------✕---------

┌──────────────────────────────────────┐
│ S1616: After generating an            │
│ authentication code A based on the     │
│ information A, obtain a data packet     │
│ based on the authentication code A     │
│ and original data, where the value of  │
│ the information A is X in this case     │
└──────────────────────────────────────┘

S1617: Data packet →

┌──────────────────────────────────────┐
│ S1618: Generate an authentication     │
│ code B based on the information B       │
│ and the data packet, where the value   │
│ of the information B is X+i in this      │
│ case                                   │
└──────────────────────────────────────┘

┌──────────────────────────────────────┐
│ S1619: Determine that the             │
│ authentication code A is different      │
│ from the authentication code B         │
└──────────────────────────────────────┘

FIG. 16B

```
┌─────────────────┐                              ┌─────────────────┐
│  Sending device │                              │ Receiving device│
└─────────────────┘                              └─────────────────┘
```

S1701: After generating an
authentication code A based on
information A, obtain a data packet
based on the authentication code A
and original data, where a value of
the information A is X in this case

S1702: Data packet

S1703: Generate an authentication
code B based on information B and
the data packet, where a value of the
information B is Y in this case

S1704: Determine that the
authentication code A is different
from the authentication code B, and
update the value of the information B
to Z

S1705: Failure application receipt

S1706: Update the value of the
information A to Z

FIG. 17A

```
┌─────────────────┐                              ┌─────────────────┐
│  Sending device │                              │ Receiving device│
└─────────────────┘                              └─────────────────┘
```

S1711: After generating an
authentication code A based on
information A, obtain a data packet
based on the authentication code A
and original data, where a value of the
information A is X in this case

S1712: Data packet

S1713: Generate an authentication
code B based on information B and
the data packet, where a value of the
information B is Y in this case

S1714: Determine that the
authentication code A is different
from the authentication code B

S1715: Failure application receipt

S1716: Update the value of the
information A to Z

S1717: Value of the information A

S1718: Update the value of the
information B to Z

FIG. 17B

```
┌─────────────────────┐                              ┌─────────────────────┐
│   Sending device    │                              │  Receiving device   │
└─────────────────────┘                              └─────────────────────┘
```

┌────────────────────────────────────────┐
│ S1721: After generating an              │
│ authentication code A based on          │
│ information A, obtain a data packet      │
│ based on the authentication code A and  │
│ original data, where a value of the     │
│ information A is X in this case          │
└────────────────────────────────────────┘

S1722: Data packet ⟶

┌────────────────────────────────────────┐
│ S1723: Generate an authentication       │
│ code B based on information B and the   │
│ data packet, where a value of the       │
│ information B is X in this case          │
└────────────────────────────────────────┘

┌────────────────────────────────────────┐
│ S1724: Determine that the               │
│ authentication code A is the same as    │
│ the authentication code B, and update   │
│ the value of the information B to X+i    │
└────────────────────────────────────────┘

S1725: Success application receipt  ⟵ ----✕----

┌────────────────────────────────────────┐
│ S1726: After generating an              │
│ authentication code A based on the      │
│ information A, obtain a data packet      │
│ based on the authentication code A and  │
│ original data, where the value of the   │
│ information A is X in this case          │
└────────────────────────────────────────┘

S1727: Data packet ⟶

┌────────────────────────────────────────┐
│ S1728: Generate an authentication       │
│ code B based on the information B and    │
│ the data packet, where the value of the │
│ information B is X+i in this case        │
└────────────────────────────────────────┘

┌────────────────────────────────────────┐
│ S1729: Determine that the               │
│ authentication code A is different from │
│ the authentication code B               │
└────────────────────────────────────────┘

S1730: Failure application receipt ⟵

┌────────────────────────────────────────┐
│ S1731: Update the value of the          │
│ information A to X+i                     │
└────────────────────────────────────────┘

FIG. 17C

No signal                    08:00

< Alice                        ● ● ●

1801 ⌐ [ X                    ]

1802 ⌐ Sent

1800

[                    ⊕ ] [ Send ]

FIG. 18A

No signal                    08:00

< Alice                        ● ● ●

1801 ⌐ [ X                    ]

1802 ⌐ Sent

1800

1811 ⌐ [ X                    ]

1812 ⌐ Sent

[                    ⊕ ] [ Send ]

FIG. 18B

No signal                    08:00

< Alice                      ● ● ●

1801 ⌐ X                ⟩

1821 ⌐ Sending succeeds

1800 ⌐

1811 ⌐ X                ⟩

1822 ⌐ Sending fails

[_____ ⊕ ] [ Send ]

FIG. 18C

Sending device

Receiving device

S1901: After generating an
authentication code A based on
information A, obtain a data packet
based on the authentication code A
and original data, where a value of the
information A is X in this case

S1902: Data packet

S1903: After generating an
authentication code A based on the
information A, obtain a data packet
based on the authentication code A
and original data, where the value of
the information A is X in this case

S1904: Data packet

S1905: Generate an authentication
code B based on the information B
and the data packet, where a value of
the information B is X in this case

S1906: Determine that the
authentication code A is the same as
the authentication code B, and update
the value of the information B to X+i

S1907: Success application receipt

S1908: Update the value of the
information A to X+i

FIG. 19

FIG. 20

Sending device

Information about a quantity of sent data packets

Original data

Information A

Specified authentication algorithm

Authentication code A

| Message ID field A | Authentication code A | Original data |

Data packet

TO
FIG. 21B

FIG. 21A

Receiving device

Data packet

| Message ID field A | Authentication code A | Original data |

Information about a quantity of received data packets

Original data

Information B

Specified authentication algorithm

Authentication code A

Authentication code B

CONT.
FROM
FIG. 21A

Whether the authentication code A is the same as the authentication code B?

Same

Different

Generate a success application receipt

Information B

Subtract a preset value

Original data

Information C

Specified authentication algorithm

Authentication code A

Authentication code C

Whether the authentication code A is the same as the authentication code C?

Same

Different

Generate a failure application receipt

Generate an application receipt including a message ID field B

FIG. 21B

| Terminal 100 | Satellite network device 200 | Cellular network device 400 |
|---|---|---|

S2201: Negotiate about a key, first information, and second information

S2202: Obtain original data

S2203: Generate a first authentication code based on the specified key, the original data, and the first information

S2204: Obtain a first data packet based on a first message ID, the first authentication code, and the original data

S2205: First data packet (including a first message ID field)

S2206: Generate a second authentication code based on the specified key, the first data packet, and the second information

S2207: Determine whether the first authentication code is the same as the second authentication code

No

Yes

S2208: Update a value of the second information, and determine a value of a second message ID field

TO FIG. 22B

TO FIG. 22B

FIG. 22A

CONT. FROM
FIG. 22A

CONT. FROM
FIG. 22A

S2210: Success
application
receipt

S2209: Original data

S2211: Update a value of
the first information

S2213: Obtain temporary
information based on the second
information

S2212: Display success
prompt information

S2214: Generate a temporary
authentication code based on the
specified key, the first data
packet, and the temporary
information

S2216: Indication
application
receipt (including
a second message
ID field)

Yes

S2215:
Determine
whether the first
authentication code is
the same as the
temporary
authentication
code

S2217: Update a value
of the first information

S2218: Display success
prompt information and
failure prompt
information

No

S2219: Failure application receipt

S2220: Display
failure prompt
information

FIG. 22B

| Terminal 100 | Satellite network device 200 | Cellular network device 400 |
|---|---|---|

S2301: Negotiate about fifth information and sixth information

S2302: Original data

S2303: Service request

S2304: Generate a fourth authentication code based on the original data and the sixth information

S2305: Obtain a third data packet based on a fourth message ID, the fourth authentication code, and the original data

S2306: Third data packet (including a fourth message ID field)

S2307: Obtain a third authentication code based on the third data packet and the fifth information

TO FIG. 23B

TO FIG. 23B

TO FIG. 23B

FIG. 23A

CONT. FROM FIG. 23A

CONT. FROM FIG. 23A

CONT. FROM FIG. 23A

S2308: Determine whether the third authentication code is the same as the fourth authentication code — Yes / No

S2309: Display receiving prompt information

S2310: Update a value of the fifth information, and determine a value of a fourth message ID field

S2311: Success application receipt

S2313: Obtain temporary information based on the fifth information

S2314: Generate a temporary authentication code based on a specified key, the third data packet, and the temporary information

S2312: Update a value of the sixth information

S2315: Determine whether the fourth authentication code is the same as the temporary authentication code — Yes / No

S2316: Indication application receipt (including a third message ID field)

S2317: Update a value of the sixth information

S2318: Failure application receipt

FIG. 23B

Sending device

Receiving device

S2401: Obtain a data packet 1 based on a message ID, context information A, and original data, where a value of the context information A is X, and a value of the message ID is y1

S2402: Data packet 1 (including a message ID field A and an authentication code A)

S2403: Generate an authentication code B based on context information B and the data packet 1, where a value of the context information B is X

S2404: Determine that the authentication code A is the same as the authentication code B, update the value of the context information B to X+i, and determine that a value of a message ID field B is y1

S2405: Success application receipt

S2406: Update the value of the context information A to X+i

S2407: Obtain a data packet 2 based on the message ID, the context information A, and original data, where the value of the context information A is X+i, and the value of the message ID is y1

TO FIG. 24B

TO FIG. 24B

FIG. 24A

CONT. FROM
FIG. 24A

CONT. FROM
FIG. 24A

S2408: Data packet 2 (including a message
ID field A and an authentication code A)

S2409: Generate an authentication code B
based on the context information B and the
data packet 2, where the value of the context
information B is X+i

S2410: Determine that the authentication
code A is the same as the authentication
code B, update the value of the context
information B to X+2i, and determine that
a value of a message ID field B is y1

S2411: Success application receipt

S2412: Update the value of the context
information A to X+2i

FIG. 24B

No signal                    08:00

< Alice                        • • •

2501 — X (00)

2502 — Sent

2500

(+)   Send

FIG. 25A

No signal                    08:00

< Alice                        • • •

2501 — X (00)

2511 — Sending succeeds

2500

(+)   Send

FIG. 25B

No signal                08:00

< Alice                    •••

2501 ⌐ X (00)

2511 ⌐ Sending succeeds

2500

2521 ⌐ X+1 (00)

2522 ⌐ Sent

⊕ Send

FIG. 25C

No signal                08:00

< Alice                    •••

2501 ⌐ X (00)

2511 ⌐ Sending succeeds

2500

2521 ⌐ X+1 (00)

2531 ⌐ Sending succeeds

⊕ Send

FIG. 25D

```
┌─────────────────────┐                    ┌─────────────────────┐
│   Sending device    │                    │  Receiving device   │
└─────────────────────┘                    └─────────────────────┘
```

S2601: Obtain a data packet 1 based on a message ID, context information A, and original data, where a value of the context information A is X, and a value of the message ID is y1

S2602: Data packet 1 (a message ID field A and an authentication code A)

S2603: Obtain a data packet 2 based on the message ID, the context information A, and original data, where the value of the context information A is X, and the value of the message ID is y2

S2604: Data packet 2 (a message ID field A and an authentication code A)

S2605: Obtain a data packet 3 based on the message ID, the context information A, and original data, where the value of the context information A is X, and the value of the message ID is y3

S2606: Data packet 3 (a message ID field A and an authentication code A)

S2607: Generate an authentication code B based on context information B and the data packet 3, where a value of the context information B is X

S2608: Determine that the authentication code A is the same as the authentication code B, update the value of the context information B to X+i, and determine that a value of a message ID field B is y3

S2609: Success application receipt

S2610: Update the value of the context information A to X+i

FIG. 26

No signal                    08:00

< Alice                    ● ● ●

2701 ─ X (00)

2702 ─ Sent

2700

2703 ─ X (01)

2704 ─ Sent

2705 ─ X (10)

2706 ─ Sent

⊕  Send

FIG. 27A

No signal                    08:00

< Alice                    ● ● ●

2701 ─ X (00)

2711 ─ Sending fails

2700

2703 ─ X (01)

2712 ─ Sending fails

2705 ─ X (10)

2713 ─ Sending succeeds

⊕  Send

FIG. 27B

```
┌─────────────────────┐                    ┌─────────────────────┐
│   Sending device    │                    │  Receiving device   │
└─────────────────────┘                    └─────────────────────┘
```

┌──────────────────────────────────┐
│ S2801: Obtain a data packet 1 based on │
│ a message ID, context information A,    │
│ and original data, where a value of the │
│ information A is X, and a value of the  │
│ message ID is y1                        │
└──────────────────────────────────┘

S2802: Data packet 1 (including a message ID
field A and an authentication code A)
- - - - - - - - - - - - ✕ - - - - - - - - - - - ->

┌──────────────────────────────────┐
│ S2803: Obtain a data packet 2 based on │
│ the message ID, the context information │
│ A, and original data, where the value of │
│ the information A is X, and the value of │
│ the message ID is y2                     │
└──────────────────────────────────┘

S2804: Data packet 2 (including a message ID
field A and an authentication code A)
───────────────────────────────────────>

┌──────────────────────────────────┐
│ S2805: Generate an authentication code │
│ B based on context information B and    │
│ the data packet 2, where a value of the │
│ context information B is X               │
└──────────────────────────────────┘

┌──────────────────────────────────┐
│ S2806: Determine that the              │
│ authentication code A is the same as    │
│ the authentication code B, update the   │
│ value of the context information B to    │
│ X+i, and determine that a value of a     │
│ message ID field B is y2                 │
└──────────────────────────────────┘

S2807: Success application receipt
<- - - - - - - - - - - ✕ - - - - - - - - - - -

TO FIG. 28B                              TO FIG. 28B

FIG. 28A

CONT. FROM
FIG. 28A

CONT. FROM
FIG. 28A

S2808: Obtain a data packet 3 based on the message ID, the context information A, and original data, where the value of the information A is X, and the value of the message ID is y3

S2809: Data packet 3 (including a message ID field A and an authentication code A)

S2810: Generate an authentication code B based on the context information B and the data packet 3, where the value of the context information B is X+i

S2811: Determine that the authentication code A is different from the authentication code B, and generate an authentication code C

S2812: Determine that the authentication code A is the same as the authentication code C, and generate an indication application receipt (including an indication ID field B, where a value of the message ID field B is y2)

S2813: Indication application receipt

S2814: Update the value of the context information A to X+i

FIG. 28B

FIG. 29

| Sending device | | Receiving device |
|---|---|---|

**S3001:** Obtain a data packet 1 based on a message ID, context information A, and original data, where a value of the information A is X, and a value of the message ID is y1

**S3002:** Data packet 1 (including a message ID field A and an authentication code A)

**S3003:** Generate an authentication code B based on information B and the data packet 1, where a value of the information B is X

**S3004:** Determine that the authentication code A is the same as the authentication code B, update the value of the information B to X+i, and determine that a value of a message ID field B is y1

**S3005:** Success application receipt

**S3006:** Obtain a data packet 2 based on the message ID, the context information A, and original data, where the value of the context information A is X, and the value of the message ID is y2

**S3007:** Data packet 2 (including a message ID field A and an authentication code A)

**S3008:** Generate an authentication code B based on the information B and the data packet 2, where the value of the information B is X+i

**S3009:** Determine that the authentication code A is different from the authentication code B, and generate an authentication code C

**S3010:** Determine that the authentication code A is the same as the authentication code C, and generate an indication application receipt (including an indication ID field B, where a value of the message ID field B is y1)

**S3011:** Indication application receipt

**S3012:** Obtain a data packet 3 based on the message ID, the context information A, and original data, where the value of the context information A is X, and the value of the message ID is y3

TO FIG. 30B                                        TO FIG. 30B

FIG. 30A

CONT. FROM
FIG. 30A

CONT. FROM
FIG. 30A

S3013: Data packet 3 (including a message
ID field A and an authentication code A)

S3014: Obtain a data packet 4 based on the message ID, the
context information A, and original data, where the value of
the context information A is X, and the value of the
message ID is y4

S3015: Data packet 4 (including a message
ID field A and an authentication code A)

S3016: Obtain a data packet 5 based on the message ID, the
context information A, and original data, where the value of
the context information A is X, and the value of the
message ID is y1

S3017: Data packet 5 (including a message
ID field A and an authentication code A)

S3018: Obtain a data packet 6 based on the message ID, the
context information A, and original data, where the value of
the context information A is X, and the value of the
message ID is y2

S3019: Data packet 6 (including a message
ID field A and an authentication code A)

S3020: Generate an authentication code B based on the
information B and the data packet 6, where the value of
the information B is X+i

S3021: Determine that the authentication code A is
different from the authentication code B, and generate an
authentication code C

S3022: Determine that the authentication code A is the
same as the authentication code C, and generate an
indication application receipt (including an indication ID
field B, where a value of the message ID field B is y1)

S3023: Indication application receipt

S3024: Update the value of the context information A to
X+i

FIG. 30B

151

No signal                    08:00

< Alice                         •••

3101 ⌁ X (00)
3102 ⌁ Sent
3103 ⌁ X (01)
3104 ⌁ Sent
3100
3105 ⌁ X (10)
3106 ⌁ Sent
3107 ⌁ X (11)
3108 ⌁ Sent
3109 ⌁ X (00)
3110 ⌁ Sent
3111 ⌁ X (01)
3112 ⌁ Sent

⊕ | Send

FIG. 31A

No signal                    08:00

< Alice                         •••

3101 ⌁ X (00)
3102 ⌁ Sent
3103 ⌁ X (01)
3111 ⌁ Sending fails
3200
3105 ⌁ X (10)
3112 ⌁ Sending fails
3107 ⌁ X (11)
3113 ⌁ Sending fails
3109 ⌁ X (00)
3110 ⌁ Sent
3111 ⌁ X (01)
3114 ⌁ Sending fails

⊕ | Send

FIG. 31B

EP 4 369 631 A1

| Terminal 100 | Satellite network device 200 | Cellular network device 400 |
|---|---|---|

S3201: Negotiate about a key, first information, and second information

S3202: Obtain original data

S3203: Generate a first authentication code based on the specified key, the original data, and the first information

S3204: Obtain a first data packet based on a first sequence number, the first authentication code, and the original data

S3205: First data packet (including a first sequence number field)

S3206: Determine the second information based on the first sequence number field and a second hyper frame number

S3207: Generate a second authentication code based on the specified key, the original data, and the second information

S3208: Determine whether the first authentication code is the same as the second authentication code

No

Yes

S3210: Success application receipt

S3209: Original data

S3211: Display success prompt information

S3212: Failure application receipt

S3213: Display failure prompt information

FIG. 32

EP 4 369 631 A1

| Terminal 100 | Satellite network device 200 | Cellular network device 400 |
|---|---|---|

S3301: Negotiate about fifth information and sixth information

S3302: Original data

S3303: Service request

S3304: Generate a fourth authentication code based on the original data and the sixth information

S3305: Obtain a third data packet based on a fourth sequence number, the fourth authentication code, and the original data

S3306: Third data packet (including a fourth sequence number field)

S3307: Determine the fifth information based on the fourth sequence number field and a third hyper frame number

S3308: Obtain a third authentication code based on the third data packet and the fifth information

S3309: Determine whether the third authentication code is the same as the fourth authentication code

Yes

No

S3310: Display receiving prompt information

S3311: Success application receipt

S3312: Failure application receipt

FIG. 33

Sending device

Receiving device

S3401: Obtain a data packet 1 based on context information A (including a sequence number A) and original data, where a value of the context information A is X‖y1, ‖ is a concatenation symbol, and a value of the sequence number A is y1

S3402: Data packet 1 (including a sequence number field A and an authentication code A)

S3403: After determining a value of a hyper frame number B based on the sequence number field A, generate an authentication code B based on the hyper frame number B, the sequence number field A, and the data packet 1, where the value of the hyper frame number B is X

S3404: Determine that the authentication code A is the same as the authentication code B, and generate a success application receipt

S3405: Success application receipt

S3406: Obtain a data packet 2 based on the context information A (including the sequence number A) and original data, where the value of the context information A is X‖y2, and the value of the sequence number A is y2

FIG. 34

```
┌─────────────────────┐                          ┌─────────────────────┐
│   Sending device    │                          │  Receiving device   │
└─────────────────────┘                          └─────────────────────┘
```

S3501: Obtain a data packet 1 based on context information A (including a sequence number A), where a value of the context information A is X‖y1, ‖ is a concatenation symbol, and a value of the sequence number A is y1

S3502: Data packet 1 (including a sequence number field A and an authentication code A)

S3503: Obtain a data packet 2 based on the context information A (including the sequence number A), where the value of the context information A is X‖y2, and the value of the sequence number A is y2

S3504: Data packet 2 (including a sequence number field A and an authentication code A)

S3505: After determining a value of a hyper frame number B based on the sequence number field A, generate an authentication code B based on the hyper frame number B, the sequence number field A, and the data packet 2, where the value of the hyper frame number B is X

S3506: Determine that the authentication code A is the same as the authentication code B, and generate a success application receipt

S3507: Success application receipt

S3508: Obtain a data packet 3 based on the context information A (including the sequence number A), where the value of the context information A is (X+i)‖y1, and the value of the sequence number A is y1

TO FIG. 35B                                      TO FIG. 35B

FIG. 35A

CONT. FROM
FIG. 35A

CONT. FROM
FIG. 35A

S3509: Data packet 3 (including a sequence
number field A and an authentication code A)

S3510: Obtain a data packet 4 based on the
context information A (including the sequence
number A), where the value of the context
information A is $(X+i)\|y2$, and the value of the
sequence number A is $y2$

S3511: Data packet 4 (including a sequence
number field A and an authentication code A)

S3512: Obtain a data packet 5 based on the
context information A (including the sequence
number A), where the value of the context
information A is $(X+2i)\|y1$, and the value of
the sequence number A is $y1$

S3513: Data packet 5 (including a sequence
number field A and an authentication code A)

S3514: After determining the value of the
hyper frame number B based on the sequence
number field A, generate an authentication
code B based on the hyper frame number B,
the sequence number field A, and the data
packet 5, where the value of the hyper frame
number B is $X+i$

S3515: Determine that the authentication code
A is different from the authentication code B,
and reset the value of the hyper frame number
B to X

S3516: Failure application receipt

S3517: Reset the value of the context
information A to $X\|y1$

FIG. 35B

Terminal 100

Satellite network device 200

Cellular network device 400

S3601: Negotiate about a key, first information, and second information

S3602: Obtain original data

S3603: Generate a first authentication code based on the specified key, the original data, and the first information

S3604: Obtain a first data packet based on a first retransmission indication field, the first authentication code, and the original data

S3605: First data packet (including the first retransmission indication field)

S3606: Generate a second authentication code based on the specified key, the first data packet, and the second information

S3607: Determine whether the first authentication code is the same as the second authentication code

No

Yes  S3608: Original data

TO FIG. 36B

TO FIG. 36B

FIG. 36A

S3609: Success
application receipt

S3610: Display success prompt
information

S3611:
Determine, based
on the first retransmission
indication field, whether the
first data packet is a
retransmitted data
packet?

No

Yes

S3612: Failure
application receipt

S3613: Display failure
prompt information

S3614: Obtain temporary information
based on the second information

S3615: Generate a temporary
authentication code based on the
specified key, the first data packet, and
the temporary information

S3616:
Determine whether
the first authentication code
is the same as the temporary
authentication
code

Yes

S3617: Success
application receipt

S3618: Display success
prompt information

No

S3619: Failure application receipt

S3620: Display failure
prompt information

FIG. 36B

EP 4 369 631 A1

EP 4 369 631 A1

| Terminal 100 | Satellite network device 200 | Cellular network device 400 |
|---|---|---|

S3701: Negotiate about fifth information and sixth information

S3702: Original data

S3703: Service request

S3704: Generate a fourth authentication code based on the original data and the sixth information

S3705: Obtain a third data packet based on a second retransmission indication field, the fourth authentication code, and the original data

S3706: Third data packet (including the second retransmission indication field)

S3707: Obtain a third authentication code based on the third data packet and the fifth information

S3708: Determine whether the third authentication code is the same as the fourth authentication code

Yes

No

S3709: Display receiving prompt information

TO FIG. 37B

TO FIG. 37B

FIG. 37A

S3710: Success
application receipt

S3711:
Determine, based
on the first retransmission
indication field, whether the first
data packet is a retransmitted
data packet?

No

Yes

S3712: Failure application receipt

S3713: Obtain temporary information
based on the fifth information

S3714: Generate a temporary
authentication code based on a specified
key, the third data packet, and the
temporary information

S3715:
Determine whether
the fourth authentication code
is the same as the temporary
authentication
code

Yes

S3716: Success application receipt

No

S3717: Failure application receipt

FIG. 37B

EP 4 369 631 A1

```
┌──────────────────┐                              ┌──────────────────┐
│  Sending device  │                              │ Receiving device │
└──────────────────┘                              └──────────────────┘
         │                                                  │
┌────────┴──────────────────────────┐                       │
│ S3801: Obtain a data packet 1 based on a │                 │
│  retransmission indication field, context │               │
│ information A, and original data 1, where a │              │
│  value of the context information A is X, and a │          │
│ value of the retransmission indication field is z1 │       │
└────────┬──────────────────────────┘                       │
         │  S3802: Data packet 1 (including the retransmission │
         │      indication field and an authentication code A)  │
         │ ─────────────────────────────────────────────────▶ │
         │                                    ┌───────────────┴──────────────┐
         │                                    │ S3803: Generate an authentication code B │
         │                                    │ based on context information B and the data │
         │                                    │   packet 1, where a value of the context   │
         │                                    │        information B is X                   │
         │                                    └───────────────┬──────────────┘
         │                                    ┌───────────────┴──────────────┐
         │                                    │ S3804: Determine that the authentication │
         │                                    │ code A is the same as the authentication │
         │                                    │ code B, and update the value of the context │
         │                                    │       information B to X+i                  │
         │                                    └───────────────┬──────────────┘
         │        S3805: Success application receipt            │
         │ ◀───────────────────────────────────────────────── │
┌────────┴──────────────────────────┐                       │
│ S3806: Update the value of the context │                   │
│        information A to X+i          │                      │
└────────┬──────────────────────────┘                       │
         │                                                  │
```

FIG. 38

```
┌─────────────────────┐                          ┌─────────────────────┐
│   Sending device    │                          │  Receiving device   │
└─────────────────────┘                          └─────────────────────┘
```

S3901: Obtain a data packet 1 based on a
retransmission indication field, context
information A, and original data 1, where a
value of the context information A is X, and a
value of the retransmission indication field is z1

S3902: Data packet 1 (including the retransmission
indication field and an authentication code A)

S3903: Obtain a data packet 2 based on a
retransmission indication field, the context
information A, and the original data 1, where the
value of the context information A is X, and a
value of the retransmission indication field is z2

S3904: Data packet 2 (including the retransmission
indication field and the authentication code A)

S3905: Generate an authentication code B
based on context information B and the
data packet 2, where a value of the context
information B is X

S3906: Determine that the authentication
code A is the same as the authentication
code B, and update the value of the context
information B to X+i

S3907: Success application receipt

S3908: Update the value of the context
information A to X+i

FIG. 39

163

Sending device

Receiving device

S4001: Obtain a data packet 1 based on a retransmission indication field, context information A, and original data 1, where a value of the context information A is X, and a value of the retransmission indication field is z1

S4002: Data packet 1 (including the retransmission indication field and an authentication code A)

S4003: Generate an authentication code B based on context information B and the data packet 1, where a value of the context information B is X

S4004: Determine that the authentication code A is the same as the authentication code B, and update the value of the context information B to X+i

S4005: Success application receipt

S4006: Obtain a data packet 2 based on a retransmission indication field, the context information A, and the original data 1, where the value of the context information A is X, and a value of the retransmission indication field is z2

S4007: Data packet 2 (including the retransmission indication field and the authentication code A)

S4008: Generate an authentication code B based on the context information B and the data packet 2, where the value of the context information B is X+i

S4009: Determine that the authentication code A is different from the authentication code B and the value of the retransmission indication field is z2, and generate an authentication code C based on the context information B

S4010: Determine that the authentication code A is the same as the authentication code C, and generate a success application receipt

S4011: Success application receipt

S4012: Update the value of the context information A to X+i

FIG. 40

| Sending device | | Receiving device |
|---|---|---|

S4101: Obtain a data packet 1 based on a retransmission indication field, context information A, and original data 1, where a value of the context information A is X, and a value of the retransmission indication field is z1

S4102: Data packet 1 (including the retransmission indication field and an authentication code A)

S4103: Generate an authentication code B based on context information B and the data packet 1, where a value of the context information B is X

S4104: Determine that the authentication code A is the same as the authentication code B, and update the value of the context information B to X+i

S4105: Success application receipt

S4106: Obtain a data packet 2 based on a retransmission indication field, the context information A, and original data 2, where the value of the context information A is X, and a value of the retransmission indication field is z1

S4107: Data packet 2 (including the retransmission indication field and an authentication code A)

S4108: Generate an authentication code B based on the context information B and the data packet 2, where the value of the context information B is X+i

S4109: Determine that the authentication code A is different from the authentication code B and the value of the retransmission indication field is z1, and generate a failure application receipt

S4110: Failure application receipt

S4111: Update the value of the context information A to X+i

FIG. 41

Terminal 100

FIG. 42

No signal                08:00

< Alice                    •••

4301 ⌐ Hello

4302 ⌐ Sent        17:23

4300                        ⌐ 4303

⊕ | Send

No signal                08:00

< Alice                    •••

4301 ⌐ Hello

4311 ⌐ Sending  17:24
          succeeds
                        4312

4300

⊕ | Send

FIG. 43A                    FIG. 43B

<div align="center">**INTERNATIONAL SEARCH REPORT**</div>

| International application No. |
| --- |
| **PCT/CN2022/109226** |

| A. | CLASSIFICATION OF SUBJECT MATTER |
| --- | --- |
| | H04B 7/185(2006.01)i |

According to International Patent Classification (IPC) or to both national classification and IPC

| B. | FIELDS SEARCHED |
| --- | --- |

Minimum documentation searched (classification system followed by classification symbols)

H04B7/-

Documentation searched other than minimum documentation to the extent that such documents are included in the fields searched

Electronic data base consulted during the international search (name of data base and, where practicable, search terms used)

CNABS; CNTXT; CNKI: 鉴权, 时间, 密钥, utc, wlan, gba, mdcp, gmt, 卫星, 上下文, 协商; WPABS; DWPI; USTXT; EPTXT; WOTXT; 3GPP: auc, authentic, key, utc, wlan, gba, mdcp, gmt, satellite, context, negotiate, agree, generic bootstrapping architecture, layer

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 106304046 A (CHEN XIAOHUA) 04 January 2017 (2017-01-04) description, paragraphs [0091]-[0099] | 1-54 |
| A | US 2015052360 A1 (HUGHES NETWORK SYSTEMS LLC.) 19 February 2015 (2015-02-19) entire document | 1-54 |
| A | US 2018372878 A1 (HERE GLOBAL B.V.) 27 December 2018 (2018-12-27) entire document | 1-54 |
| A | CN 102594555 A (HUAWEI TECHNOLOGIES CO., LTD.) 18 July 2012 (2012-07-18) entire document | 1-54 |
| A | CN 112243235 A (XIDIAN UNIVERSITY) 19 January 2021 (2021-01-19) entire document | 1-54 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 October 2022** | **28 October 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| INTERNATIONAL SEARCH REPORT<br>Information on patent family members | | International application No.<br>**PCT/CN2022/109226** |
|---|---|---|

| Patent document<br>cited in search report | | | Publication date<br>(day/month/year) | Patent family member(s) | | | Publication date<br>(day/month/year) |
|---|---|---|---|---|---|---|---|
| CN | 106304046 | A | 04 January 2017 | CN | 106304046 | B | 07 January 2020 |
| US | 2015052360 | A1 | 19 February 2015 | WO | 2014179367 | A1 | 06 November 2014 |
| | | | | EP | 2992696 | A1 | 09 March 2016 |
| | | | | MX | 2015016228 | A | 28 June 2017 |
| | | | | MX | 378540 | B | 11 September 2020 |
| | | | | EP | 2992696 | A4 | 02 November 2016 |
| | | | | US | 9722789 | B2 | 01 August 2017 |
| | | | | EP | 2992696 | B1 | 03 October 2018 |
| US | 2018372878 | A1 | 27 December 2018 | US | 2020280856 | A1 | 03 September 2020 |
| | | | | EP | 3646550 | A1 | 06 May 2020 |
| | | | | WO | 2019002235 | A1 | 03 January 2019 |
| | | | | US | 10694382 | B2 | 23 June 2020 |
| CN | 102594555 | A | 18 July 2012 | WO | 2012097723 | A1 | 26 July 2012 |
| | | | | US | 2013305386 | A1 | 14 November 2013 |
| | | | | EP | 2658299 | A1 | 30 October 2013 |
| | | | | EP | 2658299 | A4 | 25 December 2013 |
| | | | | CN | 102594555 | B | 29 April 2015 |
| | | | | US | 9189632 | B2 | 17 November 2015 |
| | | | | EP | 2658299 | B1 | 13 November 2019 |
| CN | 112243235 | A | 19 January 2021 | CN | 112243235 | B | 28 December 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110878362

- CN 202111166937